(19) Europäisches Patentamt
European Patent Office
Office européen des brevets

(11) EP 2 113 838 A1

(12) EUROPEAN PATENT APPLICATION

(43) Date of publication:
**04.11.2009 Bulletin 2009/45**

(51) Int Cl.:
***G06F 9/44*** *(2006.01)*

(21) Application number: **08380266.0**

(22) Date of filing: **09.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.04.2008 EP 08380135**

(71) Applicant: **Accenture Global Services GmbH**
**8200 Schaffhausen (CH)**

(72) Inventors:
- **Nicolau Molina, Jorge**
  **08021 Barcelona (ES)**
- **Olmos Lopez, Pedro**
  **28010 Madrid (ES)**
- **Juanals Pastor, Albert**
  **08013 Barcelona (ES)**
- **Lopez Gracia, Rafael**
  **28029 Madrid (ES)**
- **Quiroga Serret, Jose Ignacio**
  **08320 El Masnou (ES)**

(74) Representative: **Müller-Boré & Partner Patentanwälte**
**Grafinger Strasse 2**
**81671 München (DE)**

Remarks:
Amended claims in accordance with Rule 137(2) EPC.

# (54) Computer implemented method for adapting and using a computing environment, computer program product and computer based system

(57) As a summary, the present invention relates to a computer implemented method for adapting and using a computing environment, wherein the computing environment comprises
- a set of executable files,
- a repository structure,
- a table structure, wherein the repository structure and the table structure are associated with each other, and
- a graphical user interface (GUI 101) which is adapted to initiate
-- execution of the executable files,
-- reading of data from and/or writing of data into the table structure, and
-- providing of output data as human readable text,
the computer implemented method having the steps of:
- providing a definition of a change of the computing environment at a client side,
- adapting the executable files according to the definition of the change of the computing environment at a server side,
- introducing at least one additional repository element into the repository structure at the server side, wherein the at least one additional repository element corresponds to the adaptation of the executable files,
- adapting the table structure at the server side, corresponding to the additional repository element of the repository structure, and
- accessing the adapted table structure at the server side by said GUI (101) and/or executing one or more of the executable files at the server side by said GUI (101), while substantially maintaining the visual layout of said GUI (101) as well as a computer program product and a computer system.



Printed by Jouve, 75001 PARIS (FR)

(Cont. next page)

Figure 1a

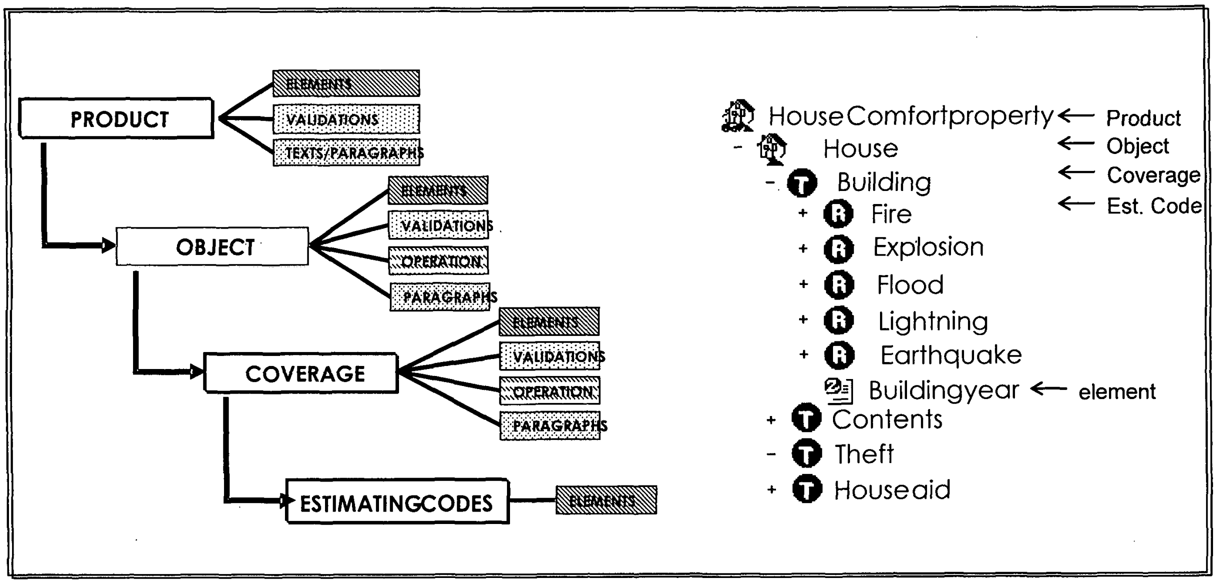
PRODUCT
ELEMENTS
VALIDATIONS
TEXTS/PARAGRAPHS
OBJECT
ELEMENTS
VALIDATIONS
OPERATION
PARAGRAPHS
COVERAGE
ELEMENTS
VALIDATIONS
OPERATION
PARAGRAPHS
ESTIMATINGCODES
ELEMENTS
HouseComfortproperty ← Product
- House ← Object
- Building ← Coverage
+ Fire ← Est. Code
+ Explosion
+ Flood
+ Lightning
+ Earthquake
Buildingyear ← element
+ Contents
- Theft
+ Houseaid

## Description

The present invention relates to a computer implemented method for adapting and using a computing environment, a computer program product and a computer based system.

At present, in most fields of industry, computing environments are used. Although there exist a large number of computer programs which are available on the market for a variety of specific applications, such as many industrial applications and many fields of business, companies also rely on customized computing environments. Such customization might involve adaptation of a conventionally available system e.g. by an in-house administration team. However, given the specific needs, it is also possible to provide individual solutions for any kind of product a company wants to establish and sell or to provide individual solutions for logistic reasons, maintenance reasons, etc. Typically, a team of technical experts is applied, in order to provide such customized solutions. Moreover, when said company wants to explore further fields of business, in a conventional scenario, an additional customized computing environment typically will be established, in order to also provide products on such a new field of the market.

It is an object of the present invention, to improve the flexibility, with which a computing environment can be provided reflecting the individual requirements of the user of such a computing environment.

Said object is solved according to the independent claims. Preferred embodiments are subject to the dependent claims.

Computer implemented method for adapting and using a computing environment

An aspect of the present invention relates to a computer implemented method for adapting and using a computing environment, wherein the computing environment comprises

- a set of executable files,
- a repository structure,
- a table structure, wherein

    -- the repository structure and the table structure are associated with each other, and

- a graphical user interface (GUI) which is adapted to initiate

    -- execution of the executable files,
    -- reading of data from and/or writing of data into the table structure, and
    -- providing of output data as human readable text,
    the computer implemented method having the steps of:

- providing a definition of a change of the computing environment at a client side,
- adapting the executable files according to the definition of the change of the computing environment at a server side,
- introducing at least one additional repository element into the repository structure at the server side, wherein the at least one additional repository element corresponds to the adaptation of the executable files,
- adapting the table structure at the server side, corresponding to the additional repository element of the repository structure, and
- accessing the adapted table structure at the server side by said GUI and/or executing one or more of the executable files at the server side by said GUI, while substantially maintaining the visual layout of said GUI.

The term "repository structure", as it is used in the present application may comprise one or more templates and/or one or more data bases. In particular, the repository structure may comprise, even more particularly consist of one or more templates and/or one or more data bases. The templates might be organized in one or more data bases. A "data base" may be a hardware data base. It is also possible, that the data base is a software data base, by e.g. defining a partition, etc. of an existing memory space.

The term "associated" as used in the present application may comprise that one or more elements of the repository structure, which can also be referred to as repository elements, may be correlated to one or more elements of the table structure, which can also be referred to as table elements. In particular, for each repository element there might be provided a correlated table element. As an example, in the repository structure, by means of the repository elements, one or more parameters/variables, as used by the executable files, may be defined. In the table structure, by means of the respective table elements, specific values of said repository elements may be defined. Following that, the repository elements may point to one or more table elements. Moreover, there may be specific pointers, which connect one or more repository elements with one or more table elements, in particular which may connect each of the repository elements with a respective table element. In other words, the number of repository elements and the number of table elements may be identical.

The term "human readable text", as contained in the present application, may comprise written text, such as contract policies, in particular insurance policies, etc. Said human readable text may be printed on a printer and/or provided as a data file, such as a PDF file, a Microsoft Word® file, etc., which can be visualised on a display device, such as a computer display, a PDA, etc.

The term "in a definition of a change of a computing environment at the client side" may comprise defining a new product for the user of the computer implemented method. Further, said term "providing a definition of a change ..." might comprise using a pending definition of a computing environment and changing specific elements/parameters of said environment. As an example, additional and/or new parameters/variables may be introduced. It is also possible that existing parameters/variables are changed. It is also possible that existing parameters/variables are multiplied. The foregoing might also comprise that additional machine readable code is provided. Alternatively, or additionally already existing code might be changed.

Taking into account all said changes, executable files may be adapted at the server side. Adapting the executable files may comprise that one or more executable files, in particular a set of executable files, even more particular all of the executable files are newly created. Creation of the adapted/new executable files might be carried out by compiling the adapted machine readable code at the server side. In other words, by providing a definition of a change of the computing environment at the client side, adapted/new executable files may be created at the server side.

In line with the adaptation of the executable files, at least one additional repository element is introduced into the repository structure at the server side. In other words, the executable files may be changed in a manner that one or more additional parameters, in particular one or more additional variables may be handled using said executable files. As a consequence, one or more elements are introduced into the repository structure, reflecting said additional parameters/variables. Said new elements in the repository structure may comprise the specific definition of said new parameters/variables.

Similar changes may be carried out to the table structure. That means, one or more additional tables may be introduced. The term "adapting the table structure" may comprise maintaining the general table definition but adding additional elements into the tables. Hence, it may also be possible, that the existing tables are enlarged, in particular by introducing or by allowing to introduce values reflecting the elements newly added to the repository structure. In other words, the repository structure may comprise one or more additional parameters. Therefore, as an example, the table structure is amended to allow storing and/or reading specific values of said new parameters/variables.

"Maintaining the visual layout of said GUI" may comprise that the majority of elements of the GUI is unchanged, while only a minor number of elements of the GUI is amended, thereby considering the change of the executable files and/or the change of the repository elements, i.e. the change of the repository structure and/or the change of the table elements, i.e. the change of the table structure.

In other words, although one or more of the elements of the GUI may be amended regarding the adaptation of the executable files and/or the adaptation of the repository structure and/or the adaptation of the table structure, nevertheless, the cognitive appearance of the GUI, as understood by the user, might substantially be the same.

Accordingly, the above computer implemented method allows a very intuitive and easy understandable use of the computing environment by the user, even when the computing environment has been adapted. That means, the computing environment may be changed, such that one or more further products might be included and/or may be created by using said GUI. This may comprise to obtain a human readable text, which has not been able to be obtained before the adaptation of the computing environment. Nevertheless, the use of the computing environment substantially maintains identical as compared to the use before the adaptation of the computing environment.

Further to that, the above described method allows an efficient use and/or adaptation of the computing environment, while particularly conserving the use of resources. This is among others the case, since an already existing structure, in particular an already existing repository structure and/or table structure can be easily amended according to the needs of the adapted computing environment, substantially without providing a completely new repository structure and/or table structure. Rather, the existing repository structure may be used and may only be further increased, e.g. by adding additional elements. Accordingly, also the existing table structure may be used and may only be increased. Hence, the flexibility of the computing environment is increased, since it is easily adaptable to different needs of the user.

As a further advantage, according to the above described method, an existing computing environment can be enlarged in a simply and intuitive manner, within a very short period of time.

In the method according to the present application, the adaptation of the executable files may be carried out similar to the definition and creation of the executable files as described in further detail below.

In the method according to the present application, the adaptation of the table structure at the server side and the accessing of the table structure at the server side by said GUI may be carried out simultaneously. In other words, the repository structure might be amended and/or an amended repository structure might be provided, upon creation of the amended and/or additional executable files at the server side. The amended table structure, which might comprise introducing additional table elements into the existing table structure and/or deleting of existing table elements from the existing table structure and/or creating of new tables in the existing table structure might be carried out, upon execution of one or more executable files by using the GUI.

In that respect, the GUI might be run on a further client of the server. That means, there may be provided a very complex client server structure comprising a server device and at least two client devices, wherein in one client device, the definition of the change of the executable files is carried out, at the server device the executable files are changed and in the further client device, the GUI might be run. It is also possible that at least a part or all of the executable files are executed at a client which also runs the GUI. It might also be possible to comprise further clients and several executable files might be executed at several clients while the GUI is run at one client. Similarly, at least one or further executable files might be executed at the server and/or a first client and/or a second client and/or a third client, etc. The GUI might be run on the server or on one of the clients.

The term "adapted to initiate" may comprise that the GUI may be connected in a functional to one or instances which may carry out the task initiated by the GUI. As an example, the GUI may trigger the execution of an executable file by selecting a button or the like in the GUI. Hence, the GUI is adapted to initiate the execution of an executable file.

The above method may also be referred to as policy administration.

<u>Specific embodiments of the computer implemented method</u>

Exemplary, the executable files and said GUI access the same table structure, wherein accessing comprises writing data in and/or reading data from the same table structure.

Advantageously, it is not necessary that data is sent and received between the specific entities such as a file server and a terminal server. Rather, the executable files may access simultaneously or successively a subset or all of the tables of the tables structure. Access in that sense may comprise reading and/or writing of data in and/or from the table structure. As an example, the GUI may have a field for entering data. Said data may be written into a specific table. Moreover, the GUI may have a field, such as a button for triggering the receipt of data which may be displayed in the GUI or which may be introduced into an output product, such as a insurance policy or the like. Therefore, data can be read from the table structure by use of said GUI, in particular by executing an executable file, using said GUI. The execution of the executable file my be triggered by selecting said button. Additionally or alternatively, the GUI may directly read data from one or more of the tables, such that information may be displayed within the GUI on a computer screen for information of the user of the GUI.

Exemplary, the adaptation of the computing environment is substantially free of copying the repository structure and/or the table structure.

Advantageously, in a very fast and efficient manner, further products may be introduced into the existing computing environment. In other words, the existing computing environment can, in a very time and resource efficient manner, be increased by adding and/or deleting of repository elements and/or table elements in the given repository structure and/or table structure.

In a conventional method, when a company wants to explore a new field of business, the entire computing environment usually is duplicated and the duplicate of the computing environment is amended to the new field of business. In essence, this means that conventionally "two" computing environments are provided. According to the above described method, on the other hand, the existing environment, in a simple and efficient manner, may be enlarged, in particular to provide and/or be adapted to products which are not included before. Moreover advantageously, since the existing environment is enlarged, computing resource, in particular storage space is conserved, by avoiding duplicating of data base structures, in particular including repository structures and/or table structures.

Exemplary, when adapting of the computing environment, the repository structure is substantially maintained.

In the above description, the term "structure" essentially means the general definition of the repository. This might comprise a number of templates and/or how one or more subsets of the number of templates interact and/or are connected with each other. Moreover this may also comprise how one or more subsets of the templates may be connected with one or more subsets of the table structure, e.g. one or more tables. Consequently, the general repository structure is substantially maintained, that means the definition of the repositories and/or the number of repositories is substantially unchanged. However, one or more repository elements might be added to the repository structure and/or one or more repository elements might be deleted from the repository structure. In other words, an additional template might be introduced. Accordingly, it might be possible that an additional line in a database might be introduced, comprising one or more values of said template. It is also possible, that one or more parameters and/or variables of a template might be changed and/or introduced. Accordingly, in one or more tables of the table structure, specific values and/or place holders might be provided, such that specific values of said additional parameters/variables might be stored.

Exemplary,

- using said GUI, output data is generated by the computing environment,
  and
- after the adaptation of the computing environment, using said GUI, additional output data is generated by said adapted computing environment.

Advantageously, after the adaptation of the computing environment, output data may be generated, which generation was not possible before the adaptation. As an example, before the adaptation, the computing environment might have been able to compute output data referring to one or more products, such as a car insurance policy and a real estate insurance policy. After the adaptation, additionally, the computing environment can generate and output, as an example, a health insurance policy.

Conventionally, in order to adapt an existing computing environment, which may provide car insurance policies and health insurance policies, the existing computing environment has to be duplicated and adapted for the health insurance policy. Moreover, an isolated computing environment has to be provided for creating the car insurance policies and an isolated computing environment has been provided for creating the real estate insurance policies. Isolated computing environment in that sense means that each computing environment comprises its own set of executable files, its own repository structure, its own table structure and its own graphical user interface.

Advantageously, such isolated computing environments may be avoided according to the above described method. Rather, the existing environment may be amended to use the existing executable files, if necessary amended, the existing repository structure, if necessary amended, the existing table structure, if necessary amended, and the existing GUI, if necessary amended but still having the substantially identical visual layout.

Exemplary, the method further comprises the step of

- adapting said GUI according to the at least one additional repository element in the repository structure by introducing at least one display element in a dynamic input/output entity of said GUI, while maintaining the remaining input/output entities of said GUI substantially unchanged.

Advantageously, according to the above method, when providing the definition of a change of the computing environment, this might involve adding one or more repository elements. Adding of said repository element(s) may be reflected by adding display element(s) in the GUI, in particular in a specific window of the GUI. The remaining windows, buttons, etc. of the GUI might substantially maintain unamended. In other words, an exemplary input/output entity can be a window of the GUI.

Exemplary, by introducing the at least one additional display element in said dynamic input/output entity of said GUI, the size of said dynamic input/output entity is maintained.

Exemplary, said dynamic input/output entity of the GUI is implemented as a scroll down list, if the size of said dynamic input/output entity is smaller than the common size of all display elements of said input/output entity.

Advantageously, in case the number of added display elements is too large, in order to display all of said elements simultaneously in said window, as scroll bar can be provided, in order to scroll through said display elements.

In other words, when adapting the computing environment and in particular when introducing a large number of repository elements, this might be reflected by the introduction of a large number of display elements in the GUI. It is possible that for each repository element that is newly introduced into the repository structure, a single display element may be included in said window in the GUI. Although the number of elements can be too large, in order to be displayed simultaneously in said window, by means of the scroll bar, all of the elements can be displayed to the user.

Exemplary,

- for displaying a display element in the dynamic input/output entity the content of said display element is read from an associated table element
  and/or
- for storing the content of a display element of the dynamic input/output entity, the content of said display element is written to an associated table element.

Exemplary,

- table elements stored in said table structure are stored in a predetermined table order,

wherein

- display elements displayed in the dynamic input/output entity are displayed in a predetermined display order,
  and wherein

- the predetermined table order is different from the predetermined display order.

In other words, in the table structure the table elements may included in one or more of the tables of the table structure. The table elements may be stored in a given order, namely the table order. The information associated with each of the table elements may be displayed in the above described window of the GUI as display elements. Following that, the same data might be referred to by different names, namely by the name of a table element and by the name of a display element.

Moreover, the order in which the data is displayed as display elements in the GUI (i.e. the display order) can differ from the order in which said data is stored as the table element(s) in said tables (i.e. the table order). Exemplary, the table structure may comprise N table elements, wherein N is a natural number. The window may display M display elements, wherein M is a natural number. N and M can be identical. N and M can also differ from each other. As a further example, N may be identical to M, i.e. there might be an identical number of table elements and display elements. However, the order of at least two table elements in the table structure might be reversed as compared to the order of the respective display elements, as displayed in the GUI. This can already be considered as a different order.

Exemplary, an element ordering device is used

- to read the content of a table element to the associated display element in the display order, and
- to write the content of a display element to the associated table element in the table order.

Advantageously, in spite of a different order of the table elements in the table structure and the display elements, as displayed in the GUI, using the ordering device, the information is provided to the user of the computing environment in the correct form/order. As an example, the ordering device may be a JAVA Tool. As an example, the Java Tool may be the software that supports the front-end with the user. It may allow to the user interacting with the business processes coded and located with the mainframe. Moreover, it may support the interface with the user throughout screens, and the data entered is processed by Java Classes. The classes may be one or more range(s) of fields ordered with a certain criteria, that sends or receives specific data for said fields. The Java Tool/Software may use the classes to communicate and/or process the data entered by the user. The above description, in particular referring to the ordering of the table elements and the display elements applies, in similar manner, to the ordering of the repository elements and the table elements as well as to the ordering of the repository elements and the display elements.

<u>Computer program product according to one aspect</u>

An aspect of the present invention relates to a computer program product, stored on a computer readable medium or provided as data signal, comprising computer readable instructions, which when loaded in the memory of a computer and executed by the computer achieve that the computer carries out the method according to the invention.

<u>Computer based system for generating output data according to one aspect</u>

An aspect of the present invention relates to a computer based system for generating output data in particular in the form of human readable text, comprising

- a set of executable files,
- a repository structure and
- a table structure, wherein

  -- the repository structure and the table structure are associated with each other, and

- a graphical user interface (GUI) which is adapted to

  -- execute the executable files,
  -- read data from and/or write data into the table structure, and
  -- provide output data as human readable text,
  the computer based system further comprising:

- a client interface for defining a change of the executable files at a client side,

- a server device for

    -- adapting the executable files according to the definition of the change at a server side,
    -- introducing at least one additional repository element into the repository structure at the server side, wherein the at least one additional repository element corresponds to the adaptation of the executable files
    and
    -- adapting the table structure at the server side, corresponding to the additional repository element of the repository structure,
    and wherein

- said GUI is adapted for accessing the adapted table structure at the server side and/or for executing one or more of the executable files at the server side, while the visual layout of said GUI is substantially maintained.

Further to the above, the present application may also describe a computer-implemented method for generating interrelated computer executable files at a server side comprising the steps of:

- providing at a client side a graphical user interface associated with machine readable code in a machine language, wherein the graphical user interface displays data substantially in clear text;

- selecting and associating two or more sections of machine readable code in machine language at said client side using said graphical user interface;

- computer implemented verification of a coherence of said selected machine readable code at the client side before, preferably without compiling said selected machine readable code at the client side and outputting the result of said coherence verification substantially in clear text, wherein
  verifying the coherence of said selected machine readable code comprises

    -- computer implemented verification of the coherence of said selected sections of machine readable code and/or
    -- computer implemented verification of the coherence of said associations of said selected sections of machine readable code; and
    - upon approval of the coherence, compiling the selected and associated two or more sections of machine readable code at a server side to create and/or adapt and/or amend two or more interrelated executable files which are executable by the server.

Advantageously, computer executable files for a server side can be produced and/or adapted and/or amended by a person, substantially without any specific computer programming skills. Rather, using the graphical user interface (GUI) by means of clear text, the user can collect two or more sections of machine readable code in machine language without reading such machine readable code or machine language and in particular without having to know machine readable code or machine language. The user can choose sections such as "elements", "validations", "texts/paragraphs"..., which are associated with specific sections of machine readable code in machine language. As an example a validation can be associated with machine readable code comprising an evaluation, whether one variable and/or parameter is larger than another variable and/or parameter. The variables and/or parameters as well can be specified using the GUI, wherein the specific value of the variable and/or parameter is computed, when the program is executed.

In other words, the user can substantially create a validation by entering two or more variables and/or parameters and also entering the type of validation, e.g. an operation such as "larger as", "smaller as", "equal to", etc. Moreover, the user can enter the consequence of the validation, i.e. what will be done when a condition of the validation is fulfilled or said condition is not fulfilled. As an example, when a condition is fulfilled, the computer implemented method moves to a next step.

In other words, using the GUI, complex machine readable code in machine language can be assembled, without the user having specific knowledge of the machine readable code or of coding in particular. Rather, the user can be a person having different skills, such as a mechanical engineer, an economist, etc., who needs to use the computer executable files and therefore wants to provide computer executable files according to his needs. Consequently, there is advantageously as little information loss, since the user does not have to explain to a developer the need of the executable files.

Further preferably, the computer implemented verification of a coherence of said selective machine readable code at the client side before compiling said selected machine readable code allows the user in a very fast and efficient way, to verify the usability of the executable files produced at a later step. In particular, even if not connected to a server side and or if the server side is not available to the user for any other reason, the user can verify already at the client side, without producing the executables, whether the two or more executable files will be working properly at the server side. This verification can particularly be done, even though the user has no specific programming skills, since said verification of the coherence is computer implemented. In other words, at the client side, the computer examines the selected sections of machine readable code. Thereby the computer can examine each of the sections separately. The computer can also examine the selected sections in their entirety. Preferably, the computer can examine any interrelation between selected sections of code. As an example, the computer can examine the output of one section of code which is input to another section of code, as if the code was compiled.

In other words, the computer can examine, without compiling, whether a possible output of a first section is suitable as input of another section. Therefore, also associations between sections of selected code can be examined in a computerized, at least partially automatic way. Thereby, the computer can apply specific rules, such as mathematic rules and/or specific logic, such as mathematic logic to the machine readable code. Also, the computer may use rules and/or logic of the machine readable code, such as rules and/or logic of specific coding language in order to examine the selected sections and/or the associations between the selected sections of the code.

Moreover, the computer at the client side (i.e. a client computer or processor) may examine the selected sections of code and/or the associations for completeness. As an example, if one section is associated with another section such that the output of one section is input of the other section, wherein the other section needs e.g. one, two or more input variables, the computer may examine any incoherence, e.g. if the output variable of one section of code meets the requirements of the input of the other section(s) of code. Moreover, the computer may estimate the runtime behavior of the code, even without compiling, by e.g. using mathematical logic. As an example, if the code comprises a fraction and the denominator of said fraction is a variable which may become very small during runtime due to mathematical reasons of the provided variable/parameter ranges, the computer at the client side may find out that as a result a buffer overflow or the like will occur in case the executable is run at the server side. In particular, the computer at the client side may recognize the a buffer overflow will occur, even without creating the executable (i.e. without compiling) and even without running the executable. Consequently, the computer can provide respective coherence output.

The coherence output can be an error message or an approval message, particularly in clear text. As an example, mathematical errors or the like, which can be provided when verifying coherence of the selected and the composed code in machine language, such as a programming language, can be translated into clear text, in particular human readable text, even more particular according to human readable and understandable semantics and language rules. Consequently, the user, who is not an expert in coding, can verify, whether the sections of machine readable code, which were selected using the GUI, can successfully be run at the server side, without

a) the necessity to compile the selected sections of code at the server side and/or without

b) the necessity of the user to have specific programming skills, since the GUI provides an output readable and understandable by a user not having programming skills.

As an example, a translator can be provided connected and/or using one or more tables comprising messages in mathematical logic and/or machine readable language logic, etc. which are linked/associated with clear text covering the respective meaning in human readable language/logic.

The term "clear text" relates to a display of text according to human semantics, human grammar, human language, particularly independent/different from machine readable language. As an example, clear text can be provided in English, Spanish, German, etc. Clear text particularly is text that can be read and understood by a person, without having specific skills in programming, as an example without having specific skills in any programming language. Clear text may be provided using also figures, pictures, pictorials, different colors and/or colorschemes, highlighting of words, in particular blinking display of words, etc.

The term "machine readable code in machine language" (contrary to clear text) can relate to any conventional programming language which can be e.g. COBOL, FORTRAN, C, C++, PASCAL, JAVA, etc. Machine readable code in machine language can comprise elements, which can also be comprised by clear text in human readable language. As an example, a machine readable code in machine language can comprise words of a human language, particular words in the English language, such as "and", "if", "then", etc. However, machine readable code in machine language is based on mathematical logic, particular as a mathematical tool as compared to clear text, that is based on grammar of a human language as its intrinsic logic. Hence, the term "machine language" is not necessarily limited to the meaning of a low level programming language.

The term "computer-implemented verification of coherence" describes the computer-implemented examination of the selected code sections and or the associations between the selected code sections, as described above. In particular, the selected code sections can be examined separately. It is also possible that sets of sections can be examined. It is also possible that the entirety of the selected sections can be examined. It is possible that the associations between two or more sections of code are examined. Associations can e.g. comprise that the output of one section is the input of another section. Associations can e.g. comprise that two or more sections share one or more further sections, variables/parameters etc.

Contrary to "computer-implemented verification of a coherence", the term "compiling" describes the translation of text written in a computer readable language which can also be referred to as source language, into another computer readable language which can also be referred to as the target language. The original sequence is usually called the source code and the output may be called object code. Commonly the output has a form suitable for processing by other programs (e.g., a linker).

By compiling, source code may be translated into an executable program or executable file. In particular, source code from a high-level programming language may be translated to a lower level language such as e.g., assembly language.

The term "approval of the coherence" describes that a verification of coherence can be approved by the client computer, in particular automatically, e.g. if a specific result is obtained by the computer implemented verification of the coherence. It is possible that, if a specific result is not obtained, an error message can be output. Nevertheless, even in case of such an error message, a user can alternatively or additionally approve the coherence manually, e.g. if the output of the computerized approval provides a specific meaning in clear text, such as e.g. that certain variables have not been considered or not been considered properly by the executables to be generated, etc.

The term "interrelated executable files" describes that two or more executable files, when executed, work together, e.g. share common resources, variables/parameters, etc. Also, the term "interrelated executable files" may describe that one or more executable files execute(s) one or more other executable files. It is also possible, that the output of one or more executable files is/are input of one or more executable files. Thus, such files are interrelated.

The term a "graphical user interface is associated with machine readable code" describes that the GUI has a relation to machine readable code, such as access to a date base, wherein machine readable code is stored in tables, etc.

Following that, according to this aspect, generating interrelated computer executable files at the server side can be easily carried out and/or maintained. In particular, advantageously, machine readable code in machine language can be provided and composed in a very easy and sufficient manner by a person not being skilled in the art of programming. Further advantageously, such a composition of machine readable code in machine language can be obtained in a very short time, since typically very lengthy compilations need not necessarily be carried out often. Rather, the selected sections of machine readable code need only be compiled once, after a successful approval of the coherence. In that respect, the computer-implemented verification of a coherence can be carried out iteratively, particularly, as long, until the coherence is approved.

In other words, in case an error message is created, using the GUI, the selection of the two or more sections of machine readable code may be changed and/or the associations between the two or more sections of machine readable code may be changed. The step of selecting and associating two or more sections of machine readable code may also include setting variables/parameters used by said two or more sections of machine readable code. Consequently, in case no approval of the coherence is yet established, instead of selecting and associating further sections of machine readable code and/or unselecting and/or unassociating one or more sections of machine readable code, variables/parameters of the two or more selected sections of machine readable code may be changed, deleted, newly set, etc. It is possible, that the step of changing, deleting, resetting, etc., of the parameters/variables is carried out iteratively in combination with the computer-implemented verification of a coherence, until successful approval of the coherence.

Selecting and associating two or more sections of code may preferably comprise one or more of the following:

- input one or more rules, such as mathematical conditions, operations, etc. using the GUI, wherein said one or more rules, such as mathematical conditions, operations, etc are input in clear text as;
- storing the input in one or more specific definition table(s);
- storing the one or more rules, such as mathematical conditions, operations, etc. in a specific conditions table, preferably different to the definition table(s);
- storing in the definition table(s) and/or the condition table(s) one or more indicator(s), such as e.g. ">", "<", "=>", "=<", "=", etc., indicating the mathematical nature of the one or more rules;
- reading, e.g. using a creator, from the definition table(s) and/or the condition table(s) the one or more rules and/or the one or more indicator(s);
- providing, e.g. using said creator, in one or more code table(s) code in machine readable language;
- generating, e.g. using said creator, one or more interrelated executable files from said machine readable code. It is possible that from each code table one executable file is generated. It is also possible, that from one code table two or more executable files are generated.

Exemplary, selecting and associating two or more sections of machine readable code in machine language comprises inputting rules in clear text using said graphical user interface and providing, e.g. using said creator, machine readable code in machine language equivalent to said clear text using a generator.

The term "equivalent" in the context of the present application comprises that e.g. a rule, mathematical condition, etc. is input in clear text (which can be easily understood by the user who is not skilled in programming in a programming language) and is then transformed into machine readable language which can interpreted by e.g. a computer.

Exemplary, the step of a computer-implemented verification of the coherence comprises a computer implemented verification of the compatibility of the first section of the code used for generating a first executable file with a second section of code used for generating a second executable file.

In other words, advantageously, it is easily possible to examine, whether two executable files will be working together properly, i.e. whether the interrelation of said two executable files is correct, without the necessity of the user to have specific programming skills in machine readable code in machine language.

Exemplary, the step of computer-implemented verification of the coherence comprises:

- based on the selected machine readable code estimating at the client's side run time parameters before compiling the selected sections of machine readable code,
  wherein the run time parameters are associated with the executable files when executing the executable files at the server side.

In other words, by analysing the selected machine readable code, in particular by analysing the association between the selected machine readable code, using e.g. program language logic and/or mathematical logic, run time parameters can be estimated before/without compiling the selected sections of machine readable code. The run time parameters can be variables/parameters used by or within the executable file(s) at the server side. In case said run time parameters are incompatible with the system, in particular incompatible with the hardware configurations at the server side, a respective message can automatically and computerised be generated. Therefore, even without specific programming skills, the user can in a simple manner verify whether the selected machine readable code will perform properly at the server side.

As examples, the step of computer implemented verification of the coherence may comprise:

- When in a conditional logic (also referred to as validation) an element defined as numeric is compared with an alphanumeric element, an error message is provided, advising about an incompatibility.

- When a format of one or more calculations is not matching/compatible with the format of its operands, an error message is provided. Exemplary, an error message may be provided, when the operation X is defined as Dec(6,2), i.e. a variable having 6 entries and 2 decimals and this operation is the result of the operation to summarize variables Y and Z where Y is defined as Dec(15,2) and Z as Dec(15,2). In other words, the result of that sum "Y+Z" would not fit in the element defined in X as "X = Y + Z".

Exemplary, one or more of the sections of machine readable code are reused for compiling the two or more interrelated executable files.

In other words, similar or identical sections of machine readable code can be used for the compilation. Selecting of sections of machine readable code can therefore comprise copying said sections. However, even though similar or identical sections of machine readable code are used for compiling different executable files, said files can perform differently, e.g. in case variables/parameters are set differently.

In other words, there can be provided clusters of machine readable code, wherein said clusters can be joined together by using the GUI in order to provide a set of clusters which can be compiled to one executable file at the server side. Said set of clusters can comprise similar, particularly identical sections of machine readable code. The clusters can also comprise different sets of machine readable code. In other words, the GUI can be used to construct machine readable code for compiling two or more executable files, wherein the machine readable code for each executable file can be composed similar to a construction kit, wherein the user uses clear text provided by and input into the GUI.

Exemplary, at least one first level executable file is compiled which is interrelated with at least one i-level executable file, wherein the at least one i-level executable file is interrelated with at least one (i+1)-level executable file, wherein i is a natural number greater than 1.

Exemplary, the at least one i-level executable file and the at least one (i+1)-level executable file are compiled from one or more sections of a machine readable code, wherein the one or more of the sections of machine readable code comprise similar, preferably substantially identical machine readable code.

In other words, a hierarchical set of executable files can be created, wherein executable files may be associated with executable files, which, again may be associated with further executable files. Different sets of executable files can be created, wherein each set can have said hierarchical/tree structure. Each level can have one or more executable files. Each level can comprise executable files, which may be similar, even identical to executable file(s) one ore more levels higher up in the hierarchy or one ore more levels lower down in the hierarchy. The executable files within one level can be interrelated. One or more of the executable files within one level can be interrelated to one or more executable files in one or more higher hierarchical level and/or one or more lower hierarchical level. Different sets of executable files can have similar, even identical hierarchical structure. Different sets of executable files can have different hierarchical structures. The value of i can be 2, 3, 4, 5, 6, 7, 8, 9, 10, etc.

Exemplary, the method comprises the further step of verifying the integrity of the execution of all the executable files by executing all the executable files at the server side and comparing the performance at the server side with a predetermined specification at the client side.

The performance at the server side can be computerised compared with a predetermined specification at the client side. As an example, one or more outputs of the executable files at the server side can be compared with a set of variables/parameter provides at the client side.

Exemplary the steps at the client side are carried out at the client computer remote from the server and the steps at the server side are carried out at the server computer remote from the client.

In other words, the steps at the client side are carried out at a client computer which may be a computer in a network. The client computer may be connected with a server computer through the network. After carrying out the steps at the client computer, in particular upon approval of the coherence, the selected and associated two or more sections of a machine readable code can be transferred to the server side, in particular to a server computer, e.g. through said network. The selected and associated two or more sections of machine readable code can also be transferred to the server by any other means, such as by storing the selected and associated two or more sections of machine readable code on a storage device, such as a CD, a flash drive, a hard drive, etc. and copying said selected and associated two or more sections of machine readable code from said storage device onto the server. On the server, then, the selected and the associated two or more sections of machine readable code can then be compiled.

The storage device can also be part of an intermediate computer, which is connected with the client computer and the server computer. In other words, the selected two or more sections of machine readable code can be transferred from the client computer to the server computer by another computer or another computerised device, such as a mobile device, to the server.

Alternatively, the steps at the client side and the steps at the server side can all be carried out at one computer, which incorporates the server and the client.

Further to the above, the present application may also describe a computerised system for generating interrelated computer executable files at a server side comprising:

- a graphical user interface at a client side, wherein

    -- the graphical user interface is associated with machine readable code,
    -- the graphical user interface displays data substantially in clear text
    -- the graphical user interface is adapted to select two or more sections of machine readable code at a client side;

- a coherence verifier which is adapted for

    -- verifying a coherence of said selected machine readable code at the client side and
    -- outputting the result of said coherence verification substantially in clear text; and

- a compiler for compiling the selected two or more sections of machine readable code at a server side to create and/or adapt and/or amend two or more interrelated executable files which are executable by the server.

For selecting two or more sections of machine readable code at a client side, the GUI may be connected to a selector. The selector may comprise one or more specific links which point to code sections in machine readable language. In other words, the selector may be adapted to select two or more sections of code, upon input of the user via the GUI, thereby, the user may communicate with the GUI in clear text in human readable language and the GUI, via the selector may select the two or more code sections representing the clear text in machine readable code. In the context of the present application clear text also may comprise that the GUI displays fields, in particular buttons and/or other kind of menus, which are constructed, such that the user intuitively may understand the meaning of said fields and/or buttons and/or other kind of menus. As a simple example, in order to create a validation, the menu may comprise buttons having symbolized thereon mathematical operators, such as ">", "<", "=", which the user would understand to represent the operations in a validation of "bigger", "smaller" and "equal to".

In view of the term sections of code, the above details as carried out in view of the method are equally applicable.

Exemplary, the graphical user interface comprises a generator which is adapted to provide machine readable code in machine language equivalent to said clear text as input through the graphical user interface.

Exemplary, the computerised system may comprise an estimator which is adapted to estimate at the client side based on the selected machine readable code runtime parameters before compiling the selected sections of machine readable code, wherein the runtime parameters are associated with the executable files when executing the executable files at the server side.

Further to the above, the present application may also describe a computer program product, stored on a data storage device or provided as signal, which when loaded in the memory of a computer and executed by the computer achieves that the computer carries out a method as described above.

The preceding description of the aspects is not limited to the respective aspects. Rather, the description of the respective aspects can be applied for the remaining aspects. In particular, the description regarding to the method can be applied for the computer system and the computer program product and the respective specific embodiments, accordingly, so that by combining individual features of specific aspects or embodiments, new aspects and/or embodiments may be created. Moreover, the above described aspects and/or embodiments are not restricted one application, such as the generation of interrelated computer executable files which may be insurance products or be related to insurance products, and/or related to application(s) of insurance claim management, and/or related to the generation of insurance documents, and/or related to the generation of further products, such as real estate products, financial service products and/or documents in one or more of the above mentioned fields.

Description of the Figures

In the following specific examples are described by way of exemplary figures, wherein individual features of the figures may be combined to further examples, not explicitly stated within the description of the figures. With reference to the figures, there is shown in

Figure 1a: a schematic overview of exemplary configurations of sections of machine readable code;
Figure 1b: a schematic overview;
Figure 1c: a screenshot of a GUI;
Figure 2: a schematic detailed overview of an element according to figure 1 a;
Figure 3: a screenshot of a GUI comprising highlighting;
Figure 4: a screenshot comprising highlighting;
Figure 5a: a screenshot comprising highlighting;
Figure 5b: a screenshot comprising highlighting;
Figure 6: a screenshot comprising highlighting;
Figure 7a: a screenshot of a GUI comprising highlighting;
Figure 7b: a screenshot of a GUI comprising highlighting;
Figure 8a a screenshot of a GUI comprising highlighting;
Figure 8b a screenshot of a GUI comprising highlighting;
Figure 9: a screenshot comprising highlighting;
Figure 10a: a screenshot comprising highlighting;
Figure 10b: a screenshot comprising highlighting;
Figure 11a: a screenshot comprising highlighting;
Figure 11b: a screenshot comprising highlighting;
Figure 12a: a screenshot comprising highlighting;
Figure 12b: a screenshot comprising highlighting;
Figure 12c: a screenshot comprising highlighting;
Figure 12d: a screenshot comprising highlighting
Figure 13: a schematic overview of an element according to figure 1a;
Figure 14a: a screenshot of a GUI comprising highlighting;

Figure 14b: a screenshot of a GUI comprising highlighting;
Figure 14c: a screenshot of a GUI;
Figure 14d: a screenshot of a GUI;
Figure 15: a screenshot comprising highlighting;
Figure 16a: a screenshot comprising highlighting;
Figure 16b: a screenshot comprising highlighting;
Figure 17a: a screenshot comprising highlighting;
Figure 17b: a screenshot comprising highlighting;
Figure 18a: a screenshot comprising highlighting;
Figure 18b: a screenshot;
Figure 18c: a screenshot comprising highlighting;

Figure 19: a schematic overview of an element according to figure 1 a;
Figure 20a: a screenshot;
Figure 20b: a screenshot;
Figure 20c: a screenshot;
Figure 21a: a screenshot;
Figure 21b: a screenshot;
Figure 22: a screenshot;
Figure 23: a schematic overview showing the execution of the two or more interrelated executable files;
Figure 24: a flow diagram;
Figure 25: a screenshot of a GUI;
Figure 26: a screenshot of a GUI;
Figure 27a: a screenshot of a GUI;
Figure 27b: a screenshot of a GUI;
Figure 27c: a screenshot of a GUI;
Figure 28: a screenshot of a GUI;
Figure 29: a screenshot of a GUI;
Figure 30: a flow diagram;
Figure 31: an overview;
Figure 32: an overview;
Figure 33: an overview;
Figure 34: an overview;
Figure 35: an overview;
Figure 36: an overview and
Figure 37: a computer-based system.

Specific examples of the method and the system described in the following may also be referred to the "Info2000 Product Factory" or "Info2000 Product Factory module" or "Policy Administration". Advantageously, the Info2000 Product Factory module provides a common development methodology for all Lines of Business, wherein substantially all products i.e. two or more interrelated executable files are created, supported and handled the same way, using the same screens and a common data dictionary for data storage. Further advantageously, it also allows for an extensive product component re-use, such as the re-use of sections of code in machine readable language. In the context of this application, the term "re-use" particularly means that a specific code section may be copied one or more times for use in one or more compositions of code, which are then used for creating the two or more interrelated executable files. In other words, the term "selecting" in the context of this application means that the selected section of code is copied for creating the two or more interrelated executable files. In particular, the term "selecting and associating" in the context of the present application may mean that the code is copied into tables. Advantageously, "Policy Administration" may allow the creation and/or maintenance of policy data and/or specific policies in a simple and intuitive manner. In particular, a common system may be easily adapted, while "Policy Administration" interface substantially maintain identical.
Once the Product is defined, i.e. once all the sections of machine readable code have been selected and associated, possibly also all the necessary parameters/variables have been set, Product Factory will generate an Executable program comprising two or more interrelated executable files, callable from standard Policy Administration interfaces.

1. Product Structure

**Figure 1a** provides a diagram showing the basic product structure defined in the Product Factory. In other words, figure 1a shows an overview of the functionality of the two or more interrelated executable files, once they are executed on the server side.
The product developer will define the different components that are needed to build the Product, such as

- Insured Objects (e.g. car, home)
- Coverages (e.g. building)
- Estimating Codes (for Claims; e.g. Fire)

These components can be reused among products. Hence, the product developer may select the components using a GUI, wherein in the GUI the components are available using clear text, preferably in that the GUI comprises respective buttons, such as e.g. a button for "insured objects", which may e.g. provide a drop down list of possible choices which may then be selected by e.g. simply highlighting using a pointing device like a mouse or something equivalent. These buttons are associated with respective machine readable code in machine language.

Elements may also be defined and assigned at the appropriate level (e.g. building year). Elements may be used to capture data or to set rules. Elements may be simple entry fields or related to a set of reference values which may be held or stored in a corporate table.

As an example, in figure 1a, the product to be created relates to "House comfort property" insurance. In other words, the interrelated executable files will provide, when executed on the server side, as a result insurance documents, such as a contract of an insurance of a house. The method according to the present application allows the computerized generation of two or more interrelated executable files which, when executed, create or aid when creating said insurance documents.

In other words, figure 1 a shows one or more of the following components:

- **Product** refers to two entities:

    • Technical Product: It contains the technical specifications. It is the reference framework that is used to create commercial products that are actually distributed.

    • Commercial Products: Based on technical products and limited to their area of application. They may feature restrictions that limit some of the characteristics of the technical product. Each policy as used in the method/ system described in the present application is clearly linked to a single technical - commercial product.

- **Object type** refers to the specific risk or risks covered by the product. The method according to this application allows products to be:

    • **Multi- object:** containing different types of insurance needs (person, auto, home, etc.);
    • **Multi-situation** in order to repeat the same type of object as many times as required on a policy. This enables e.g. the management of collective policies according to the present application.

- **Premium class** identifies the insurable risk (guarantee) for the estimation of a premium. Important characteristic of premium classes according to the present application are:

    • They are the minimum level of the product structure for which economic results are calculated (premiums, tax, discounts, etc.)
    • An object type (or insurance need) can be associated to as many premium classes as desired. The same premium class can be assigned to different objects types.
    • Premium classes can be grouped into Packages (or Insurances) for marketing and sales reasons (e.g. "Full omnium").

- **Estimating code** is used to classify reserves for a claim. A premium class can have as many estimating codes as required, and a same Estimating code can be assigned to different Premium classes.

- **Elements** may be information units that identify the characteristics of the components of the product. For instance, in case of the insured object Person, the elements may include gender, age, profession, etc. In the case of Premium class for life insurance or fire insurance, the sum insured, etc. may be considered.

The following types of elements exist:

- Internal elements: They are common to all products, can be modified by users of the Product Factory and are transparent for end users (e.g. allowance to reinstate policies of that product).
- Essential elements: They are common to all products, can be modified by users of the Product Factory and are displayed in Policy administration screens, such as the GUI shown in figures 28 and 29 since end user has to enter/ confirm the value selected (e.g. payment frequency).
- Additional elements: Specific to each product, can be modified by users of the Product Factory and are displayed in Policy administration screens, such as the GUI shown in figures 28 and 29 since end user has to enter/ confirm the value selected (e.g. license plate of insured vehicle)

The computer implemented method particularly allows a person not skilled in the art of programming to configure the source code in a simple an efficient manner so that the said two or more interrelated executable files may be created at the server side and may be executed at the server side.

In particular, the executables, when executed, provide a means for individually creating documents by allowing to set through a GUI all necessary variables/parameters, boundary conditions, circumstances, elements, etc.

According to figure 1a, for the general product as well as for each component of the product, the developer may choose one or more of elements, validations, operations and texts/paragraphs. Exemplary, the object of the product "House comfort property" may be a "house". Additionally, further objects could be introduced, such as e.g. "apartment".

Moreover, a coverage is selected which may be "building". Further to that, coverages "contents", "theft" and "house aids" are selected in the example according to figure 1a. For the coverage "building", the estimation codes "fire", "explosion", "flood", "lightning" and "earthquake" and the element "building year" are selected.

2. Product Factory Modules

The Info2000 Product Factory comprises four basic modules, namely product definitions, validations, rating rules and text/paragraphs. Additionally to the four basic modules, further modules may be integrated. An exemplary overview of the modules and their relationship is shown in **figure 1b.**

- <u>Product Definition</u>

This module allows the product developer to set-up the product definition, as described above with respect to figure 1 a. All the information regarding the product definition is stored in the Product Factory data model, together with the information entered in the next modules.

In other words, the objective of this module is to define the product structure and allow entry of product data and its different constituting elements (objects, Premium classes, Estimating codes, and elements):

- Type of object and of the multi-situation characteristics and/or
- Premium classes assigned to each type of object and/or
- Estimating codes assigned to each type of premium class and/or
- Elements required for each component of the product structure:
    - Definition of components (name, description, type and size) by using a common dictionary for all the products and/or
    - Assignment of elements to product components and/or
    - Relationship with the product components (possible and default values, visibility, modifiability, etc.).

One or more of the following elements - related to the product definition - can be added :

• Groupings - all the Product Factory components can be grouped (product, object, premium class, estimating code, element). A defined treatment shows the grouping objective (e.g. reinsurance).

• Modalities - created for premium classes and allowing the selection of elements of original premium class to be included in the modality.

Characteristics of featured elements (default value, minimum, maximum) are specified by establishing relation between the premium class and the modality.

• Options - Options definition has a double purpose: facilitate the underwriting and establish predefined modalities / premium classes.

Options are created at the object level.

- <u>Validations</u>

This module allows the product developer to set-up rules to be executed and validated during the product life-cycle in policy administration, i.e. when executing the two or more interrelated executable files in order to produce e.g. an insurance document. A possible validation can be defined to e.g. validate if a driver is older than 18, when executing the two or more executable files, wherein a variable is the age of a driver. The Product Factory allows to define variables/parameters, such as age, when defining a validation which will be carried out during runtime of the two or more interrelated executable files (i.e. during runtime of the product). These validations as any other product components are reusable among products. In other words, the validation is to verify whether the age of a driver as an exemplary variable used when defining e.g. an object of the product is greater than a given threshold value. Said validation may also be used, when defining a different object of the product and/or the coverage and/or the product itself.

In other words, the objective of this module is to allow the introduction of necessary validations associated to a product (technical or commercial).

A validation is composed of one or several logical condition(s), linked together by means of Boolean operators where each logical condition is made of operand(s) and a logical operator. The validation's outcome is either TRUE or FALSE.

One or more of the following components may be found in a validation:

- Name and description of one or more validation(s).
- Operands such as element values, operation results, access to corporate tables, etc.
- Operators of comparison (greater than, less than, equal), compatibility, compulsory, etc.
- Logic connectors for validations which may comprise AND and/or OR.
- Sense of validation which may comprise True and/or False.

Similar to elements, validations should be associated to the product, object, premium class, etc. once they are defined. Once a validation is defined, it can be reused in other components of a product or in different products.

An example of a validation is shown in the screenshot included in figure 1c, which shows an exemplary GUI. In this example (in pseudo code):

IF
Trade is Excavation (10030)
OR
Road Surfacing(10028)
AND
Activities include pumping / pouring concrete
THEN ... (validation result)

Consequently, using the method according to this application, a product developer can develop this without a single line of code being written. Thereby advantageously, technical design, coding and/or unit test may be eliminated from the product development lifecycle.

**Figure 2** shows an overview over possible configurations of validations. In particular, figure 2 shows the possible configuration of each validation, using N logic conditions, where N may be a natural number, in particular 2, 3, 4, 5, 6, 8, 10, 15, 20, etc. Moreover, exemplary in figure 2 there are shown possible components of each logical condition. Each of the N logical conditions may comprise M operands, where M may be a natural number, in particular 2, 3, 4, 5, 6, 8, 10, 15, 20, etc. Moreover, for each logical condition, the M logical operands may be connected by one of the logic operators. Consequently, there are provided for each logical condition M-1 logic operators. The logic operands may comprise one or more of the following: Elements, Access, Operations, Predefined functions, Object type, Premium class, Numeric constant, Alphanumeric constant, Routine, etc. The logic operator may comprise one or more of the following: EQ=equal, NE=not equal, GT=greater than, GE=greater than or equal to, LT=lesser than, LE=lesser or equal to, TC=coverage contracted, TNC=coverage not contracted, TI=incompatible coverage, TD=coverage depending on, etc.

The N logic conditions may be connected by one Boolean operator, such as "AND", "OR" "(", ")", etc.

Also in figure 2 a further example is shown of a possible validation, namely to verify, whether the age of a person for whom the insurance documents are created has an age older than 100 years. If said validation discovers that the age, as a preferred parameter is greater than 100 years a specific action is carried out, e.g. monthly charges from 7.50 EURO will be changed.

The module "Validations" can be accessed when using the system according to the present application, following the path *System>Prod. Conf.>Validations.* From here, new validations can be added, modified or erased.

**Figure 3** shows a screenshot of an exemplary graphical user interface (GUI) of the computer-based system according to the present application, when adding or modifying a validation, which was created for illustration purposes. In other words, the screenshot according to figure 3 shows a validation which basically states that the validation should occur if sum of contents exceeds the figure of 2,500,000. The top part of this screenshot may contain the name, description, date and operators. The highlighted rectangle is where the actual validation is displayed. This module will be used to validate the policy data as a trigger of a calculation inside an operation or as a trigger of paragraphs. If this validation does not take place, then it will launch an error message. In other words, figure 3 shows a GUI 1 displaying clear text, in particular having e.g. fields 2a, 2b, 4a, 4b, etc for entering text, wherein the user can select specific operators. This selection through the GUI is associated with machine readable code in machine language. Moreover, the user may specify variables and/or parameters which are subject to e.g. the operators. Through the GUI the variables and/or parameters are set in machine readable language. In figure 3, a condition is displayed in clear text. In particular, the fields 2a, 2b, are used for entering a time period during which the validation is applicable. As an example the start date entered via field 2a is chosen in figure 3 to January 01, 1900 and the end date entered via field 2b is December 31, 9999. During this time, the validation will be carried out, when the two or more interrelate executable files are executed.

The name and a short description of the validation are entered using fields 4a, 4b, wherein said filed are used to briefly describe the validation and, thus, allow a simple identification of the validation, e.g. in the definition table as shown in figure 4 (see below). Further to that, the GUI 1 according to figure 3 contains fields 6a, 6b for entering the operands defining the validation as well as the operator in field 8. The so configured and defined validation is shown in the GUI 1, in window 10, wherein the line defining the validation has been highlighted by a box 12 (not shown when displaying the GUI) for an easy visibility. The GUI 1 comprises the definition of one operation which is called OP_ DEFAULT_8 and is using the validation SUM CONTENTS 4 > LIM as a trigger of calculation 01 and 05 which means that calculation will be performed depending on the outcome of this validation. So inside the calculation, depending on the outcome, C1 or C2 could be triggered. C3 is always triggered. Moreover, the above description holds, where applicable, similarly for the GUIs, as shown in the other figures.

As an example, all validations are stored in table KTPM34T. In other words, table KTPM34T is an exemplary definitions table. **Figure 4** shows a screenshot comprising the definition of the validation as selected with the GUI according to figure 3. Highlighted with a box (not shown when displaying the GUI) are the lines containing the unique code of the validation, in this example "0000006619", valid dates, in this example from "19000101" to "99991231" which have been entered via the fields 12a, 12b of the GUI 1 and the definition of the validation. Also in the following figures the boxes used for highlighting are normally not displayed by the GUI of the computerized system.

The validation will only be executed if the summation of contents is > 2,500,000. These values without which the validation will not fire are stored in table KTPA78T. In other words, table KTPA78T is an exemplary conditions table. Figures 5a and 5b, which are two screenshots, highlight the condition, defined with the GUI 1 according to figure 3 and also said before mentioned values. The screenshots show two separate lines referred to as R1 and R2 which cannot fit into just one screenshot, such that they are displayed in figures 5a and 5b.

Hence, the contents are read from the previous table KTPA78T, an excerpt of which is shown in figures 5a and 5b, so that if the summation is over 2,500,000 then the program is executed. This is what the content of the validation represents.

In other words, through the GUI 1 shown in figure 3, definitions of the validation are created in the one or more tables, in the present example, entries are created in the tables shown in figures 4, 5a and 5b, wherein in one definition table (figure 4) the definition of the validation in general is provided and in another table, i.e. the condition table (figures 5a and 5b) the condition itself and values of variables/parameters used by the validation are defined.

A custom made generator (COBOL source KTPLP007), in order to automatically generate the code into copybooks will access that table KTPA78T as shown in figures 5a, 5b and perform the following instructions represented into pseudo-code. The following logic in pseudo code represents the way in which the program operates and converts into COBOL source what is configured into the mentioned tables:

Step 1: Read first record from KTPA78T (R1) and do
Step 2: Perform

  Step 2.1: Write new line with the information of KTPA78T
  Step 2.2: Read next record from KTPA78T
  Until end of KTPA78T.

Step 3: Write new "End Lines".

The process according to substeps 2.1 and 2.2 is iterative/repeated, i.e. said process ends when it reaches the end of rows. In the present example according to figures 3, 4, 5a and 5b two iterations will be performed.

Regarding the mathematical nature of the rules inserted in KTPA78T, in said table components are defined inside validation(s) and/or operation(s).

Exemplary, as shown in figures 5a and 5b a new rule coded by 000000619 is created which is a CONDITIONAL LOGIC (hence a validation), by the value "CL" in field TCTCP78T which is the first operand (field CDORD78T with value "01 ") and the operand is 0000006178 (field CDCCH78T which is a predefined function) must be greater (field TCOBH78T with value ">") to the second operand (second row in the fig 5a) which is numeric (field TCTCH78T with value N) and its value is 2500000.

So, in here the mathematical nature of this coded rule is the field TCOBH78T with the value ">" where the machine readable code defines that one value derived from variable 0000006178 must be compared with a fixed value, namely 2,500,000.

Possible indicators may be ">", "<", "=>", "=<", "=", etc.

The custom made generator is designed and adapted to recognize specific conditions. As an example, table KTPA78T comprises in field TCTCP78T the value "CL" which means Condition Logic and is equal to the operation "IF". In other words, exemplary; in the table(s) one or more parameters may be stored which comprise information about logical conditions. The custom made generator is adapted to read the parameter(s), identify the logic of the parameter (s) and use the parameter(s) to create cobol source code (or source code in any other machine readable language, such as FORTRAN, C, C++, PASCAL, JAVA, etc.

As a result, the validation is generated in computer readable language, e.g. in COBOL source code. The screenshot shown in **figure 6** contains the source code of the result program, which may at a later step be used when generating the executable file(s). In other words, the table shown in figure 6 is an exemplary code table, wherein the source code is equivalent to the condition, as input via the GUI shown in figure 3.

Therefore, using the computer-based system according to the present application, the developer of a product, i.e. two or more interrelated executable files, may define one or more validations in clear text using the GUI 1 as shown in figure 3. The content of the GUI shown in figure 3 is transferred into a definition table, as shown in figure 4. The numeric values and/or mathematical conditions of the validation are stored in a condition table, as shown in figures 5a and 5b. Using the mathematical conditions and the numeric values, as stored in the condition table according to figure 5a and 5b, source code is automatically generated. The source code is stored in a code table, as shown in figure 6. It is possible, that the conditions generally are stored in one or more condition tables and that numeric values, e.g. of variables/parameters used in the conditions stored in the condition table(s), are stored in one or more value table(s) and/or one or more variable/parameter table.

- <u>Accesses</u>

This component of Product Factory, i.e. the computer based system/method according to the present application for creating two or more interrelated executable files, which is part of a module, allows through key fields for the search of data on a corporate table. Accesses are also reusable among products, i.e. different computer based methods/systems comprising two or more interrelated executable files.

It is possible to add, modify or erase an Access by following the path *System>Prod. Conf.>Accesses.* The screenshots as shown in **figures 7a, 7b, 8a, 8b and 9** contain the example of an Access to a table with all of its keys and economic results. Each Access has a set of key(s) and result(s) associated. The following is an example of an Access "ACC_SIC_2ND". The keys are highlighted in the two screenshots according to figures 7a and 7b, as there are too many to fit into one single screenshot.

The aforementioned economic results are highlighted in the two screenshots according to figures 8a and 8b.

Accesses are stored in table KTPM38T. The screenshot according to figure 9 contains the definition of the above example in a definition table. Highlighted are the relevant elements including its unique code "0000001280".

The economic results of this Access, such as relevant economic data which may be considered when producing the source code and later on the executable files, are stored in table KTPA30T. These are the same ones that appear in the example of the computer implemented system/method, as shown by the figures. They are highlighted on the screenshots as shown in **figures 10a and 10b,** representing a variable/parameter table.

Table KTPA37T, with the keys for this particular Access, are displayed in the two screenshots according to **figures 11a and 11b,** showing a condition table.

The code for the program is displayed in the four screenshots according to **figures 12a - 12d**,showing a code table. The results and the keys are selected and then the Access is executed. The result is the generation of an Access.

The generator (COBOL source KTPLP007), in order to automatically generate the code into copybooks will access both tables (KTAP30T and KTPA37T)) and perform the following instructions represented into pseudo-code. The following instructions in pseudo code represent how the program operates and converts into COBOL source what is configured into the mentioned tables:

**Step 1**

```
Step 1.1 -. Read first record from KTPA30T (R1) and do
Step 1.2 -. Perform
       Step 1.2.1- .Write new line with the information of KTPA30T (L1)
       Step 1.2.2-. Read next record from KTPA30T (R2)
   Until end of KTPA30T.
Step 1.3 -. Write new "Fixed Lines"
```

**Step 2**

```
Step 2.4 -. Read first record from KTPA37T (R1) and do
```

```
Step 2.5 -. Perform
       Step 2.5.1 - .Write new line with the information of KTPA37T (L1)
       Step 2.5.2 -. Read next record from KTPA37T (R2)
   Until end of KTPA37T.
Step 2.6 -. Write new "Fixed Lines"
```

**Step 3**

```
Step 3.7 -. Read first record from KTPA30T (R1) and do
Step 3.8 -. Perform
       Step 3.8.1 - .Write new line with the information of KTPA30T (L1)
       Step 3.8.2 -. Read next record from KTPA30T (R2)
   Until end of KTPA30T.
Step 3.8 -. Write new "Fixed Lines" handling error, etc...
```

In the above pseudo code the "fixed lines" are using information of KTPM38T table code and access code.
Substeps 1.2.1 and 1.2.2 may be iterative/repeated. Also substeps 2.5.1 and 2.5.2 may be iterative/repeated. Also substeps 3.8.1 and 3.8.2 may be iterative/repeated.
The above pseudo coded is reflected in the code as shown in figures 12a - 12d, wherein figure 12a represents step 1, figure 12b represents step 2 and figures 12c and 12d represent step 3, which already starts in line 061946 in figure 12b.

- <u>Rating rules</u>

Through the module "rating rules", the product developer defines the operations (made up of one or more calculations) used to calculate the product rate (premiums are calculated at the coverage level). Not just elements can be used in calculations, but values (e.g. factors) stored in corporate tables can be used also through "Accesses". External rating programs can be "hooked" into these calculations as well. A schematic overview is shown in **figure 13,** which is similar to figure 2. In particular, figure 13 shows an operation which can comprise a group of calculations, such as n calculations, wherein n is a natural number. In particular n is equal to 1, 2, 3, 4, 5, 6, 8, 10, 15, 20, etc. A calculation may be a previous validation comprising operands and operators as described with reference to figure 3.
Screenshots of a graphic example are shown in **figures 14a - 14d,** which can be created by the example of the computer implemented system/method, as shown by the figures, when following the path *System>Prod. Conf.>Calculations.* From here, operations can be added, modified or erased. For example, figures 14a - 14c represent a compound of calculations for an operation named "OP_DEFAULT_8". Each line is highlighted separately in a respective figure. The first line (in figure 14a) contains the calculation "C1". The second line (in figure 14b) contains the next calculation, "C2" and the last line (in figure 14c) contains the last calculation "C3".
Hence; the rating module allows to perform all necessary financial operations for the creation of a technical or commercial product as well as the access to tables needed to perform any of the said operations.
An access enables the inquiry of the values stored in a table and the setting of the conditions for the particular inquiry. The following may be specified:

- Key(s), which may comprise field(s) of the table upon which an access condition is established.
- Operator(s), which may comprise equal, larger than, less or equal than, etc.
- Operand(s) which may comprise constant(s) by which the key is compared.
- Table field(s) that correspond(s) to the result of access.

One or more of the following components may be found in an operation:

- Name and description of a operation.
- Calculations which contain
    - operands that may be numeric constants, numeric values of elements, results of other calculations or operations, numeric results of access to tables, routines, etc. and/or

- operators: +, -, *, / and/or
- loops and sum functions and/or
- pre-defined functions that may comprise standardised calculation groups that give a numeric result according to parameters of an entry.

It is also possible that at least one validation may be added prior to an operation. Operations may be assigned to a premium class and/or an object and/or for specific economic concepts. Once an operation is registered, it can be reused in other components of a product or in different products

Another example of rating is shown in the screenshot included in figure 14d, which shows an exemplary GUI. In this example (in pseudo code):

Insurance Premium Tax =
Premium Before Tax *
Insurance Premium Tax Rate / 100

The exemplary GUI allows to directly type the operation into the specified field, using the correct syntax. Said operation may be validated using '...' button. It is also possible to lookup the operand and extract the operand to be used by using the "Operand" button. Hence, it is ensured that an existing operation is used.

In the above content of the calculations 3 levels have been defined:

- C1 (referred to as line 01 in figure 14a) is a calculation based on a validation which is run if the validation is FALSE, i.e. the calculation C1 is carried out if the result of the validation "SUM CONTENTS 4 > LIM" is "false". The validation "SUM CONTENTS 4 > LIM" has been exemplary defined with figure 3 above.

- C2 (referred to as line 05 in figure 14b) is a calculation based on validation "SUM CONTENTS 4 > LIM". The calculation C2 is run if said validation is "true".

- C3 (referred to as line 10 in figure 14c) is a calculation that is always run.

The actual operation is defined for the product developer and stored in table KTPM56T, i.e. the definition table. This table is where all operations are stored. Table KTPM56T is shown in the screenshot according to **figure 15.**

The definitions of this calculation are contained in table KTPA57T, as an exemplary condition table, which is exemplary shown in the two screenshots according to **figures 16a and 16b.** For each line (R1, R2, R3), which is stored in table KTPA57T (figures 16a and 16b), the format of the calculation and any associated variables are defined.

The content of the calculation is stored in table KTPA78T, as an exemplary variable/parameter table, which is exemplary shown in the two screenshots according to **figures 17a and 17b.** Summarizing, table KTPA78T keeps the mathematical relationships between the operands and the operators, so at the end said table stores how the elements or components are related into a mathematical rule.

The code of the program is exemplary shown in the table according to the screenshots in **figures 18a - 18c,** which is an exemplary code table. From the following instructions in pseudo-code it can be seen what happens for each line. As with validations and accesses, the generator (COBOL source KTPLP007) generates a code automatically into copybooks that will in turn access the tables (KTPA57T and KTPA78T) and will then inform these pseudo-code instructions. This is how the program turns the content of a table into cobol source (in pseudo code):

STEP 1:

```
1.1-. Read first record from KTPA57T and write
1.2-. Perform
       1.2.1- .If there is a validation associated to the calculation:
              1.2.1.1-. Write the PERFORM sentence to run the validation.
              1.2.1.2-. Write the IF to evaluate the validation outcome (True or
       False)
       1.2.2-. Write the PERFORM to run the calculation. (C)
       1.2.3- .If there is a validation associated to the calculation:
             2.3.1-. Write End of lines and exit
```

```
        1.2.2-. Read next record from KTPA57T
    Until end of KTPA57T.
```

As a result of the above loop the generator generates the format of the calculation based on what is read from KTPA57T, and the code is generated into the copybook TP3CCYAU as it is shown in the screenshot according to figure 18a.

The level 01 calculation (see definition of the levels above) is performed, when the validation is "false", then the second level 05 is performed when the validation is "true" and the third level 10 will be executed not subject to any validation. The levels are indicated in figure 18a by the respective boxes labeled "F" (level 01 calculation), "T" (level 05 calculation) and "Calculation" (level 10 calculation).

Finally, also the content of the 3 levels of the calculation (C1, C2 and C3) or level 01, 05 and 10 is written into the same copybook TP3CCYAU. The pseudo code or the instructions that the programs follows, in order to write the content are the following one (pseudo code for table KTPA78T access):

STEP 2:

```
2.1-. Read first record from KTPA78T and do
2.2-. Perform
        2.2.1- .Write new line with the information of KTPA78T
        2.2.2-. Read next record from KTPA78T
    Until end of KTPA78T.
Substeps 2.2.1 and 2.2.2 may be iterative/repeated.
```

As a result of that loop (steps 2.2.1 and 2.2.2) in this mentioned copybook the CONTENT of these calculations (C1, C2 and C3 or the levels 01, 05 and 10) is also written. In the screenshot according to figures 18b and 18c, it is shown how the calculations are carried out in each level. It means that the PERFORM (Cobol instruction that executes what is defined inside) which is called in the STEP 1 are defined here at this point in the STEP 2 as shown in figures 18b and 18c.

- Texts/Paragraphs

**[0171]** The module "texts/paragraphs" allows the definition of the texts (document templates) to be generated for each product, i.e. for each set of two or more interrelated executable files, as well as the triggering rules for the paragraphs (e.g. if coverage A is selected, clause XXX will be printed). A schematic overview is shown in figure 19 (which is similar to figures 2 and 13). In figure 19 the creation according to the module texts/paragraphs is shown. As an example, the "text" can comprise a number of paragraphs, such as 1, 2, 3, 4, 5, 6, 10, 15, 20, etc paragraphs, each of which can be individually addressed and individually associated with to e.g. at least one product and/or at least one insured object and/or at least one coverage, etc. In figure 19, the "Insured Object" is associated with "Paragraph 1". It is also possible that 2 or more paragraphs are associated with said "Insured Object". Moreover, "Coverage 1" is associated with one paragraph, namely "Paragraph 2". "Coverage 2" is associated with one paragraph, namely "Paragraph 3". It is possible that each coverage is associated with two or more paragraphs and/or that each coverage is associated with an identical paragraph. As an example, "Coverage 1" may be associated with "Paragraph 1" and "Coverage 2" may be associated with "Paragraph 2" and "Paragraph 3". It is also possible in this example, that "Coverage 1" is associated with "Paragraph 1" and "Paragraph 2".

As with validations, accesses and operations, tables are used for defining and storing variables. Table KTPA65T, the basis for documents generated for a product.

The paragraphs have a fixed code, which means that in that table there are paragraphs that are associated to each coverage code and also to each product, i.e. for each set of two or more interrelated executable files.

For triggering paragraphs there are also validations which are associated to them, it means that a text paragraph could be triggered based on the fact that the coverage which is associated is contracted and also if it has a validation associated to it.

Hence, this module allows the assignment/unassignment of specific clauses and the texts needed in product definition. It allows assignment of text(s) to the corresponding paragraphs at any level of the product definition. It allows to show if a paragraph is optional or compulsory and also to associate logical conditions to paragraphs.

The screenshots according to **figures 20a - 20c** represent an example of this table KTPA65T definition.

The screenshots according to **figures 21a and 21b** contain the part of the COBOL program that accesses the fields of table KTPA65T and reads the values that documentation is intended to be generated for. As a result of accessing the table KTPA65T, the program can generate the required documentation.

Here the process is not really the same as the other levels explained as the executable that is called in order to trigger paragraphs (and obviously documents) reads the registers associated to a particular paragraph and move all the information stored into an internal variable through a Cobol Instruction called CURSOR as shown in the screenshots according to figures 21 a and 21 b.

Finally, after reading the information stored for each paragraph, in the same copybook (executable) TPSTCDBD is checked if a certain paragraph has to be triggered or not despite the fact of being contracted. This is also checked by automated code generated based in the validations associated to the paragraphs which have been also downloaded into that copybook as shown in the screenshot according to **figure 22.**

Further to the above, one or more of the following support modules may be included:

- <u>Simulation (Simulator)</u>

The objective of this module is to enable the user to check operations and/or calculations associated to the product definition and to use portfolio data to simulate results of changes on the product definition (e.g. simulate impact on premium cash in view of a change in product pricing).

- <u>Coherence</u>

The main objective of this module is to ensure that the product definition performed from definition, validation and rate/rating modules offer integrity enough

- to allow product generation (executable object) and/or
- that Policy Administration and Claims applications can perform operations based on the defined product.

- <u>Utilities</u>

This module provides one or more of the following facilities:

- Copy of products.
- Introduction and use of biometric tables (e.g. mortality tables).
- Creation of life variables (commutation symbols).
- Automatic generation of description in corporate tables.

Further to the above, a competence management module may be included.

- <u>Competence Management</u>

Competence parameters for elements and/or for validations may be defined from the Product Factory application. By defining an element and/or validation as a competence parameter, its behaviour can be modified according to the role and/or geographic location and/or user access of the element in policy administration, wherein authorisation levels may be taken into account. This module may be connected with the common components application, which ultimately manages competencies.

Additionally, an underwriting module may be provided.

- <u>Underwriting</u>

This module may allow quick adaptations of commercial products at local level and enable to close negotiation details and to change characteristics of a commercial product according to predetermined parameters. This module can apply to customer/affinity group /target segment /intermediary.

3. Product Generator

After setting-up the product using the previous modules, i.e. after composing a combination of machine readable code in machine language by selecting and associating two or more sections of code using the GUI, the Product Factory Generator transforms said data, which may be configured from tables, into COBOL executable files that contain the basis of a product, i.e. all the product information and rules (except for those values held in corporate tables). In the context of the present application, the term "executable program" may be synonymous for the term "executable file" or the term "executable program" may comprise two or more interrelated executable files. Through the Policy Administration modules, policies, data validations, etc. can be generated for the product.

This Product Executable is called from the Policy Administration services through standard interfaces, as exemplary shown in **figure 23.** According to figure 23, there is one Policy Admin service which is the KCILMZ06 which can call the executables when the user or when the action is VALIDATE or RATE.

Both actions can be triggered in three different levels:

- Policy
- Object
- Coverage.

Now, the Policy Admin service is always the same (KCILMZ06) but the executables from Product Factory that perform the action of VALIDATING or RATING are dynamic. This means that the service KCILMZ06 is accessing one or more tables where the name of the executable(s) that need(s) to use in each level and in each action are stored. This table is e.g. KTPM01T.

4. Product Factory Process Flows Summary

**Figure 24** shows a flow diagram summarizing the main process flows described throughout the entire document. Figure 24 describes the functionality of "Product Factory", namely to particularly generate programs of high complexity from an initial data input.

Steps S1 to S3 are preferably carried out on the client side. Steps S4 to S6 are preferably carried out on the server side.

In step S1 relevant data for defining the two or more interrelated executable files is entered by a user of the computer based system/method according to the present application. The computer based system/method may also be referred to as "Product Factory". In particular, the data is entered using a GUI, as exemplary shown in the figures, such as figure 3.

In step S2, the entered data is stored in one or more table(s), as also shown in the respective figures, such as figures 4, 5a and 5b. Steps 1 and 2 can be carried out in a repeated manner, wherein subsequently data may be entered (step 1) and said data may be stores in one or more table(s) (step 2).

In step S3 the computer implemented verification of the coherency is carried out, wherein a coherency tool may be used. The coherency tool may comprise a GUI for communication with the user of the system. In particular, the coherency tool may be adapted to output a result of the coherency test in clear text. Advantageously, the coherency of the code in machine readable language can be verified in its entirety at the client side, particularly without compilation. The two or more executable files may then be created at the server side (see steps S4 to S6) and run, with minimized risk of runtime errors.

In step S4 processes comprising e.g. validations, accesses, etc may be generated and in particular the two or more interrelated executable files are compiled using a compiler and thus,

in step S5 the two or more interrelated executable files (referred to as e.g. result programs) are generated.

In step S6, the two or more interrelated executable files are tested by executing them at the server side.

In the following, advantages of the computer implemented method/system according to the present application are described:

5.1. Avoid connection problems

This advantage will be explained by way of an example, where operation 1 has been designed as follows:

$$\text{Operation 1} = \text{Element 1} + \text{Element2}$$

In a specific database, Operation 1 may be connected to the Technical Product (i.e. to each set of two or more interrelated executable files) it corresponds to, in order to indicate to the system where it may retrieve the values for the components of the operation (element 1 and element 2 in this example). Connecting the operation means that first the operands should be connected, in that case, Element 1 and Element 2 where those elements should be assigned at the level desired that could be product, object or coverage (levels are indicated in the figure 1 a). Then, once the elements are connected, the system knows where the values related to them are stored. The same happens with the operation.

As a result of this operation, the fact of being connected means that the system will know where the values related with it are stored.

When generating the product, i.e. the two or more interrelated executable files, the generator will check if all the connections have been efficiently established. If not, the process fails, and an error description will be written in the issue log.

In order to avoid failure, the operation can be properly connected prior to the generation. Moreover, according to the present application, the coherency tool is used prior to the generation, in order to find out whether the connections have been efficiently made. In case an incorrect connection has been made, the coherency tool provides an error message, pointing out the inconsistency and/or an incorrect connection. The coherency tool is the capability that enables to check (before the generation) the coherency of the Product Factory components definition and their relationships. So this tool validates not only the definition but also if the relationships built is also consistent. In other words, the coherency tool may verify, whether validations, elements and operations are correctly related and offer integrity. The coherency tool is in particular adapted to be executed using the GUI. Exemplary, a user may define and create one or more sets of source code using the GUI, as shown in **figure 25.** By selecting button 16, a design or association step of selecting and associating the two or more sections of interrelated machine readable code is carried out. Advantageously, one or more designs/products may be chosen from the list of available, predefined products. According to the example shown in figure 25, the template "Core_Motor" is selected. The template "Core_Motor" may represent a definition of two or more selected sections of machine readable code. By selecting the button 16, source code of the template "Core_Motor" is created, in particular, the associations of the two or more sections of machine readable code are established.

As a next step, using said GUI, which now provides a button 18, as shown in **figure 26**, the coherence tool is activated, which now checks the selected and associated two or more sections of machine readable code, i.e. the computer implemented verification of the associations of the two or more selected and associated machine readable code is carried out. In other words, the coherence of the two or more selected and associated sections of machine readable code is verified using the coherence tool by selecting the button 18. The coherence tool may be executed in the background and provide a message e.g. when the coherence verification is negative, particularly providing details to the nature of the negative coherence. The coherence tool may also provide a positive message, in case of a positive verification of the coherence.

It is also possible that the coherence tool provides an individual window in the GUI or is displayed as a window in the GUI, as shown in **figures 27a, 27b and 27c.** As shown is these figures, specific parameters may be selected, such as "Elements coherency", "Validations coherency" and/or "ratings coherency". Also the GUI/coherency tool may be adapted to provide details of the coherence validation, as also shown in figures 27a, 27b and 27c.

5.2. Avoid format problems

Two examples are given in order to describe this advantage:

a) Validations

it is possible to have the following validation defined:
'If E1 > Op1 then ....'
Where:
E1= element value
Op1= result of a calculation

If element E1 is defined with 'Alphanumeric format' and the result of the Operation 1 is defined as 'numeric format', the generator will not be able to compare their values and, consequently, no error message will be created by the generator generating the interrelated executable files. At runtime, the process will fail and an error description will be written in the issue log.

Advantageously, the coherency tool may verify the inconsistencies and output a respective message, upon which the inconsistency can be corrected. In the example, E1 will be defined as 'Numeric'. In other words, even if the generator does not provide any warning and/or error message, the coherency tool is able to determine the inconsistency and output in clear text a warning and/or error message, upon which the validation can be corrected.

In other words, the if clause comprising two variables is a section of code. By verifying, whether the variables "E1" and "Op1" may be compared using the mathematical operator ">", the coherence of the section of code is verified, in particular, whether said section of code is able to produce a consistent output. This coherence can particularly be verified using the coherence tool.

b) Operations

it is possible to have the following operation defined:

$$\text{Operation 1} = \text{Calculation 1} + \text{Calculation2}$$

$$\text{Calculation 1} = \text{Element 1} + \text{Element 2}$$

$$\text{Calculation 2} = \text{Operation 2}$$

Where:

Operation 1 is defined as: Dec (15, 3)
Calculation 1 is defined as: Dec (15, 3)
Calculation 2 is defined as: Dec (11, 6)
Operation 2 is defined as: Dec (15, 3)

Normally, those results of operations that are economical imports, are defied as Dec (15, 3) while percentages are defined as Dec (11, 6).

In this example, Operation 2 is defined as Dec (15, 3), but calculation 2 is defined as Dec (11, 6). Operation 2 is defined with a numeric format higher than Calculation 2. In this case the generator would generate a 'Warning error'. Generation and compilation will finish, but the user will be warned about this fact.

During execution time (also referred to as runtime), if all the results of operation 2 fit in the format defined for Calculation 2, nothing will happen. But there is a risk, in the case of results of operation 2 not fitting into Calculation 2 format (ex: 123456789, 122). In this case, during execution time, system will generate an error.

Advantageously, in order to avoid a possible error during runtime, the format of Calculation 2 may be changed to Dec (15, 3), wherein the format (15, 3) means that the value can have as maximum 3 decimals and 12 integers; format (11, 6) means that the value can have as maximum 6 decimals and 5 integers. Particularly using the coherency tool, the warning created by the creator/compiler will be translated and output in clear text for the developer who needs not know the machine readable language, in which the generator also outputs the warning. Consequently, the user also understands the warning and can adapt the system by correcting the inconsistency. In other words, according to the present application, the coherence of the associations of the sections of code advantageously is verified, wherein the "Operation 1" represents a first section of code and "Operation 2" represents a second section of code and the association between the two code sections is carried out by defining

$$\text{Operation 1} = \text{Calculation 1} + \text{Calculation2},$$

wherein "Calculation 2 = Operation 2".

It is also possible that "Operation 1" is used to generate an executable file. "Operation 2" may be used to generate a further executable file. Consequently, both executable files are interrelated, since the output of one executable file (e.g. the output of "Operation 2") is used as input of the other executable filed (e.g. of "Operation 1 ").

5.3. Avoid system problems

Advantageously, compiler parameters are adapted and optimized, and the rating program may be split, so that the processor, even when having limited capacity (other possible processes may be running at the same time), the interrelated executable files may be generated without failing of generation. In particular, the generator may be split into different programs attending to the functionalities (Operations, Validations, texts and documentation) thereby providing a reliable generation of interrelated executable files.

Consequently, according to the above method, a set of technical conditions that is to be presented to insurance regulatory authorities and which cannot be commercialized as such may be used. Further conditions may be added to said set of technical conditions. These conditions may be created for a specific part of an organisation such as company, business line, geographic area, distribution channel.

All that can be applicable to be a product may be defined and said further conditions may be created by selecting from the set of technical conditions what is and is not applicable to the further conditions.

The further conditions may be mapped to only one specific set of technical conditions and may also restrict the set of technical conditions. The further conditions may define the product as it is known by customers and sold by intermediaries. The further conditions may be specific to who sells it and / or to whom it is sold to:

- Commercial discounts and/or
- Mandatory / Optional risk components and/or
- Element limitations

**Figure 28** shows an exemplary screen shot of a graphical user interface (GUI) 101. The GUI 101 comprises an number of input/output entities, such as drop down lists 110, buttons 112, input fields 114 and input/output window 116. Exemplary, even if the GUI 101 is used for providing different products, i.e. for creating car insurance policies and/or insurance policies and/or health insurance policies, etc., the drop down lists 110 and the buttons 112 may substantially be maintained. It is also possible, that the input fields 114 may substantially be maintained. As an example, an input field 114a the specific product can be defined, for which human readable text, e.g. a policy should be created. In the exemplary GUI 101, as shown in figure 28 as the specific product, building insurance is chosen.

Input/output window 116 may particularly be used for defining parameters of the product, i.e. specific parameters and/or values of the building insurance policy. Exemplary, nine display elements 118a - 118i are shown. The display elements 118a - 118i reflect repository elements, as defined when defining the product and/or when defining the change of the product. As an example, in input field 114a, the term "car" can be introduced, thereby choosing, as the exemplary product car insurance and as the exemplary human readable text car insurance policies.

For different products, i.e. different kind of possible policies, the elements of the input/output window 116 might be different, that means that different display elements might be shown in various input/output windows 116. Thereby more or less display elements may be displayed and/or at least one of the display elements might be different. As an example, instead of display element 118c "type of building construction" a display element might relate to "manufacturer of the car".

As can be seen from figure 28, for each display element 118a - 118i, there is provided an input field 120a -120i. The input fields 120a - 120i can be used in order to write data into a table and/or read data from a table. As an example, input field 120a is used to specify the value of the display element 118a "year of construction of building" to "less or equal than 1940". In other words, it is possible that, when defining the product, i.e. when the executable files are created, a repository element may be introduced which is the "year of construction of building". In a related table, a table element may be defined, which holds the value of said repository element. In this exemplary case, the value is "smaller or equal to 1940"

In the exemplary GUI 101 as shown in figure 28, the input fields 120a - 120e can only be filled by using predefined values. However, it is also possible that the input fields do not have any predefined values but, rather, may be filled in individually, as shown with input fields 120f - 120i. In other words, the input fields 120a - 120i or the values of the input fields 120a - 120i, which may either be introduced manually by a user or be retrieved semi-automatically e.g. by means of a drop down list or automatically, may be referred to as content of the respective display elements 118a - 118i.

Moreover, the GUI 101 comprises as scrollbar 122. Therefore, the input/output window 116 may comprise a number of additional display elements 118 and, accordingly additional input fields 120, which are not shown in figure 28.

GUI 101 relates to providing a new quote, as can be seen from headline 124. Hence, the human readable text that is created according to the above described method is a quote of a rate of a defined insurance policy. Although GUI 101, as shown in figure 28, relates to establishing a new quote, e.g. for a specific insurance, a similar GUI might be used for other purposes, wherein the visual layout of the GUI substantially maintains. This is exemplary shown in the GUI 101 in **figure 29.**

As can be seen in figure 29, the drop-down list 110 and the buttons 112 are identical to the GUI 101, as shown in figure 28. The GUI 101 comprises a headline 126 indicating that the GUI 101 relates to creating a new policy. Consequently, input output window 116 comprises display elements 118a' and 118b'. Accordingly, for each display element 118a' - 118b', there exists a corresponding input field 120a', 120b'. As shown in figure 29, both input fields 120a', 120b' are still empty but may be filled in e.g. by a user of the GUI and/or automatically.

Consequently, there is provided a very efficient and easily understandable interface, for providing a large number of different human readable text. Such human readable text may be a quote of insurance policy and/or an insurance policy itself and/or parts of an insurance policy. However, said interface, i.e. GUI 101, is so flexible, that it allows adaptation of the underlying computing environment, e.g. in order to introduce further products. Nevertheless, the visual layout substantially maintains unchanged such that the user of the GUI, substantially without having to require any further knowledge of use and/or maintenance, can access and use a GUI even when the computing environment has been adapted.

**Figure 30** shows a further flow diagram, giving an overview of process steps, which may be carried out, in particular when adapting the computing environment.

In step S1', requirements definitions may be provided, which meet the needs of the user of the computing environment. In particular, said requirements definitions may comprise, as human readable text and/or instructions, the changes that have to be made to the computing environment. Such requirements definitions might be as simple as defining that the computing environment may be able to generate a new product. The requirements definitions may be further detailed, in particular comprising all the elements that the new product has to cover. As an example, the requirement's definition may comprise that the new product relates to health insurance and the requirements definition might also comprise, which specific parameters/variables have to be set by the user of the GUI. Such parameters might be gender, age, person, etc.

In step S2', the product definition is made. Product definition comprises the complete set of parameters/variables that are necessary, in order to fulfil the requirements, as defined in step S1'.

In step S3', the product is configured. Configuring the product may particularly comprise to define the product in machine readable text. In other words, as described above, the code of the product may be configured, wherein such configuration may be carried out substantially in human readable text, as defined above.

In step S4' the executable files are generated. Such generation, as described above, particularly is carried out by compiling the machine readable code on the server side.

In step S5', the software is deployed at the server side. This may comprise that the software is installed at a server engine or at one or more client computers, connected to the server engine.

In step S6', a test of the product is carried out by the user. This test might particularly be carried out by the user that also made the requirements definition in step S1'.

In step S7', it is verified, whether the user accepts the product. In the affirmative, the method is ended in step S10'. Otherwise, in step S8', it is decided, whether the product configuration has to be changed. This might particularly be the case, if parameters/variables have to be changed and/or introduced and/or deleted. The reason for that might be that further business rules may be covered and/or that business rules have changed. In that case, the method is repeated from step S3'.

Otherwise, i.e. if no change of the product configuration is necessary, from step S8' any new requirements might be implemented in step S9'. Such implementation particularly does not comprise any change of the executable files. As an example, such an implementation might comprise e.g. correcting the GUI by correcting parts of the visual appearance of the GUI. Specifically, the term company name in field 118a' in figure 29 might be replaced by the term "business part".

After implementing all the requirements in step S9', the method is ended in step S10'.

As a summary, the steps S1', S4', S5', S6', S7', S8' and S9' might be carried out at the server side or at any further computer which is connected to the server side. The steps S2' and S3' are carried out at a client's side.

Given the description above, the present application may allow to carry out the following procedure in parts or in total. Thereby, it is also possible that parts of the procedure are carried out repeatedly and/or that parts of the procedure or the entire procedure is carried out in different order.

The method, as described in this application, advantageously provides a unified solution for many, particularly all policy transactions (new business, endorsements) and for many, particularly all types of products, such as General Insurance and/or Auto and Property & Casualty and/or Life & Pensions, etc.

This exemplary method may comprise common functions for many or even all products:

- Quotes
- New Business and policy modifications (endorsements, back to date & temporary endorsements,...)
- Policy Cancellations
- Policy Reinstatements
- Policy Screening
- Portfolio Renewal
- ...

Additionally, the method may also comprise specific functions for some types of products, such as Life & Pensions, Auto, Property &Casualty.

Advantageously, the above described method allows the product definition by the specialist users with the minimum IT department intervention.

Further advantageously, systems design and functionality may allow creation and modification of a product in a quick and costless manner, specifically, Policy Administration screens can be automatically generated from the product definition in the Product Factory.

Advantageously, consistent processes for individual and/or multi-object and/or group policies may be catered.

Moreover advantageously, a common methodology is defined to create products within an insurance company, in particular allowing determination of the risk boundaries and financial conditions a company wants to face/ offer in their insurance activity.

In the following, an example life cycle of a policy is described, wherein successive steps are described and the life cycle may start at any one of said steps:

**Step: Request/Quote**

The client contacts the company and requests insurance cover information. A quote is given with no risk cover.

**Step: New business**

Registration of a new business on the basis of a product, a policy, a quote or a model is carried out.

**Step: Cancellation**

If the policy is active, policy cancellation may occur at any point in the policy's life.

**Step: Modifications/Endorsements**

This step may relate to economic endorsements and/or non economic endorsements.

**Step: Reinstatement**

Reactivation of an inactive policy is carried out.

**Step: Portfolio**

Current policies renewal is carried out.

The above order of method steps may continue with the step Request/Quote.

In the following, further details to the above steps are provided.

**Step: Request/Quote**

The New Quote function, which may be embedded in the request/quote function enables the user to enter quoting data, thereby

- the system offers several rating options and/or
- quotes are automatically stored and numbered when all the necessary data is entered (customer identification, object, etc.) and/or
- quotes can be made from existing quotes and policies, or be based on a product or a model and/or
- the data required for a new quote are fewer than the data required for a new business and/or
- quoting of several insurance and payment options within the same product is allowed.
  The Quote-to-policy function, which may be embedded in step request/quote enables to select an existing quote and request a new business. The system will open the new business by transferring all quote data to the application form. If a quote has been made for several options, the system will request a single choice for the new business.

The term "model" refers to a policy outline from which policies are created. It includes details of the insured object and the premium class taken out. Its main use is to process new businesses swiftly without having to enter details of the choice of premium class or the insured object.

**Step: New Business**

Advantageously, in the described method, the same flow of windows may be used for all new business set ups whatever the product. Hence, the method is easy usable by the user.

New business registrations can be made on the basis of Product, Quote, Model, Policy. Advantageously, new business registration may be possible on the basis of policy, quote or model. Hence the policy issue process is easier because pre-stored data may be used. Special Product conditions may be defined for some clients, businesses or intermediaries.

Advantageously, the above method provides a unique navigation flow and the same screens may be used in the process of registration of a new business.

The following information/data may be used for defining new business:

- Policy duration, can be cancellable/temporary/decennial and/or
- beginning and end dates and/or
- receipt issue level and/or
- form of payment and/or
- type of co-insurance or re-insurance and/or
- type of regularization and/or
- policy holder and data collector and/or
- intermediaries and comissions data and/or
- ...

Co-insurance and re-insurance in new business

If a policy contains either co-insurance or re-insurance data this data may be entered along with general policy details. When co-insurance and re-insurance details are entered, it may be specified whether this is accepted or transferred co-insurance, and/or optional and/or compulsory re-insurance.

In the case of co-insurance cessions, the companies to which part of the risk is ceded may enter the following information:

- % participation of the insurance company and/or
- name/registered name of the company/companies accepting the risk and/or
- % participation of the accepting company and/or
- percentage of the consortium that corresponds to the accepting company, which is automatically entered at 4% and/or
- percentage of administrative expenses of the policy established by the company making the cession. This is automatically entered at 1%.

A single receipt or one receipt for each company may be issued when the policy is a co-insurance cession.

- In the case of accepted co-insurance the following details about the company in charge may be entered :
    - % participation of the insurance company and/or
    - % consortium to be paid by the insurance company and/or
    - % administrative expenses in policy management established by the transferring company and/or
    - % commission paid by the insurance company to the intermediary and/or
    - name/registered name of company in charge of the risk and/or
    - the policy number, as assigned by the company in charge.

Policy control (as part of step: New Business)

The policy control screen is exemplary structured as follows:

- header that identifies the policy and/or
- policy tree and/or
- buttons related to the policy tree: New object, object modification, premium class selection, premium class modification, etc and/or
- other functions such as setting policy beneficiaries, clause,...

The new insured object function may be accessed from the above mentioned screen. The number of insured objects determines the type of policy. In Insurance Solution this could be:

• Individual/Collective, e.g. as a function of the number of insured objects
and/or
• multi-object, e.g. a policy may have more than just one insured object.
For example: a car and a house and/or
• multi-situation, e.g. a policy may have more than one instance of an object with different risks, as an example 2 cars may be comprised in the same policy.

Object Insured (as part of step: New Business)

A general new insured object screen, similar to the screenshot of the GUI 101, as shown in figures 28 and 29 may be displayed if no specific object screen already exists. A specific new insured object screen related to the type of object being insured may be shown if this specific screen already exists. Specific screens may be developed for those products with objects requiring specific development in order to register the object information. For example if the object being insured is a car, the owner/driver information will be asked for as exemplary display elements. However, if the object being insured is a house, as exemplary display elements risk information, type of house, etc. will be asked for. And for a Unit Link product information about the person being insured will be asked for as exemplary display elements. The input may be specific table element(s) that may be filled in accordingly.

Premium Class (as part of step: New Business)

The premium class selection may be made using a specific GUI, wherein the premium class for the selected commercial product may be shown in such as GUI. It is possible that either a premium class or a premium class pack can be selected. Once selected, the premium classes may have values assigned to them.

Values (as part of step: New Business)

The types of premium class depend on which product screen is shown. The specific screen (also referred to as GUI) may prompt entry of the value of the premium class related to that product.

Advantageously, specific screens have been developed for certain products. However a standard screen is available for various products that has different values depending on the product. The screen(s) may have one or more of the following fields:

- Premium class, e.g. showing the premium class selected that has been agreed in the contract.
- Elements, e.g. containing a description of the elements that describe each premium class.
- Values, e.g. containing the fields for each element of the premium class.

Similar to the screenshots as shown in figures 28 and 29, the display elements and/or the input fields may be defined or comprise one or more of the above mentioned fields.

Policy Tree (as part of step: New Business)

The policy tree shows the relationship between the existing elements in a policy, in particular displaying one or more of the following:

- Policy that is a new business.
- Types of objects that can be insured by the product.
- Objects insured in the policy grouped in the tree by types of object.
- Premium class by which each object is insured. On the policy tree, the premium class covered in the policy is shown for each insured object.

These elements can be consulted, modified and in case of insured object the elements can be duplicated and cancelled.

Rating Results (as part of step: New Business)

A rating result screen shows the premium that the customer will pay. Further, the instalment period is a program that determines how to divide the premium into a number of receipts, according to both the form of payment selected in the annual movement premium and information provided by product factory. Details of the resulting premiums can be accessed.

Instalment Period (as part of step: New Business)

The following validations may be performed by the instalment period:

- Fractional items: This determines which items should be charged in the first receipt and which items should be split among subsequent receipts (a tax being an example of an item that cannot be split and should be charged in the first receipt).
- Refundable items : In the event that a premium class is underwritten, or a policy cancelled, this function determines whether an item can be returned to the customer or not (consortium being an example of a non-refundable item in life products).
- Non Pro-rateable items: This determines whether the full annuity should be collected even when premium is not taken out on an annual basis (an example being auto travel cover).

Beneficiaries (as part of step: New Business)

Insurance Solution allows different beneficiaries to be assigned at different levels of the policy, namely policy and/or object and/or premium class.

To assign beneficiaries, an element of the policy tree may be selected on the Policy Control screen and then the 'Beneficiaries' button is selected. Following this the Beneficiaries Mantainance screen is accessed.

Commissions (as part of step: New Business)

If the commission selected from the intermediaries sheet on the individual policy data screen is 'Referenced' or 'Distributed' then the system does not allow policy issue until the commissions are set on the 'Manual Commissions' screen. This screen can be reached by using the 'Commissions' button (from the Policy Control screen)

Documentation (as part of step: New Business)

The particular conditions associated with a product being underwritten and the paragraphs that form the document may appear as text in the document composition window. All text may comprise paragraphs. The paragraphs can be

- compulsories, e.g. paragraph(s) necessary for the text or
- non compulsories, e.g. non-necessary paragraph(s) for the text.

Moreover, the following paragraphs may be distinguished:

- Fixed paragraphs: The user cannot modify, add or eliminate any text to the paragraph. Some fixed paragraphs have "variables" that the user should fill in.
- Free paragraphs: Some text offers this paragraph type, allowing the user to include paragraphs with content which is entirely entered by the user.

When all the paragraphs of the text are completed, it is possible to display the first draft of the document before saving the data. To do so, the 'Preview' button may be activated. After veryfying that all the conditions displayed are correct, the data is saved by acitvating the global window button 'Accept'.

Moreover, printing the documentation attached to the policy or endorsement may be allowed in a centralized and/or distributed way. Alternatively or additionally the documentation may be sent by fax and/or e-mail, without leaving the application.

Competence Administration (as part of step: New Business)

Competence administration is a function that establishes limits to the users when contracting a policy, creating a quote or making an endorsement. The system may generate competence administration incidences when, during the creation process of a policy, quote or endorsement, the user carries out an action that exceeds the competencies to which he has assigned.

As an example, when the user is developing an underwriting operation (policy, endorsement, etc.) and an incidence related to an excess competence is generated, the operation may not be issued until the causes of the incidence are corrected or authorized. The process may be completed, once all errors have been authorized. A modification may be required concerning the reason for the error (for example, excess capital). Issue cannot be completed until any unauthorized errors have been modified.

The competence administration may comprise the following steps:

**I.** A user issues a policy with a capital greater to the one he is authorized to.
**II.** A competence administration incidence is generated that prevents issuing being continued.
**III.** Using notes, authorisation is requested to the responsible user or the user with the appropriate authorisation level.
**IV.** The user may or may not authorize the issuing of the policy or endorsement through the Policy authorisation operation.
**V.** Using notes, the user that was developing the operation is informed whether or not he can continue.

Exit Selection (as part of step: New Business)

The described method may allow documentation joined to the policy or endorsement to be printed in a centralized or distributed way. It also may allow the documentation to be sent by either fax or electronic mail without leaving the application. Once the exit type for a specific documentation has been selected, the issuing process will finish.

**Step: Issue**

An issue process may consist of a series of common sub-processes and other sub-processes that will be executed according to given parameters. Exemplary processes that are common to all products and issue steps (new business, endorsements,...) may be:

- Issue of receipts and/or
- consolidation of new business tables and/or
- documentation

Exemplary sub-processes that can be executed according to given parameters may be:

- According to product and SBU

    -- casualty: List of insured and/or

    -- companies and SMEs: PML sheet and/or

    -- diverse: FIC.

- According to step cancellation movement: FICO.

**Step: Endorsements**

The creation of endorsements may allow modifications to be included in the policy or in any of its elements or entities. Endorsements can be

- non-economic endorsements: the premium is not modified and/or
- economic endorsements: involve a modification of the premium. The system compares the premium from the base movement with the new endorsement. If there are differences in the premium, the endorsement is an economic endorsement.

Preferably, the flow of an endorsement is the same as that of a new business. Typically, it may be necessary to identify the reason behind a modification to an endorsement. A corporate table may list the reasons and may assign the values according to the policy product. Depending on the reason certain screen fields may be activated or deactivated. Every modification in the policy creates a new version, but not all the modifications entail a new endorsement. The type and the reason behind the modification will determine if the modification generates an endorsement or not.

A new endorsement will be generated if the modification requires the policy holder to receive new documentation. The system will compare the base movement premiums to those of the new endorsement. Any premium differential will result in an economic endorsement (as opposed to non-economic endorsements). An endorsement should specify an identified reason for modification. A corporate table lists the reasons and assigns the values according to the policy product. The reasons may activate or deactivate certain screen fields.

Date of effect, expiration (with effect after the portfolio renewal) or date of policy coverage endorsements are allowed. If endorsements are desired for a date prior to that of another endorsement, they shall be broken down into as many parts as there are policy versions. Policy extension endorsements are allowed for temporary policy. The following steps may be carried out:

**I.** Issue of a new annual policy, e.g. Policy 1234567890 Version 0 Endorsement 0.

**II.** If the policy holder wants to include a new premium class with effect 1/06/2002, an endorsement is operated with effect 01/06/2002, e.g. Policy 1234567890 Version 1 Endorsement 1.

**III.** If an error in the intermediary commission has been discovered, 2 endorsements are operated. The first will correspond to the version 2 Endorsement 1 and the Second to the Version 3 Endorsement 1.

**IV.** If the client wants to pay by instalments with effect from next year, an endorsement will be operated at expiration, that is opon renewal of the policy, e.g. Policy 1234567890 Version 4 Endorsement 2.

An endorsement is operated on the latest version of the policy or on any previous version. When operated on the latest version, the actualized movement will be that currently existing in the policy portfolio.

The rating is also fixed in product factory. The receipts and returns are issued based on the results generated by the factory. The positive annual premium is deducted from the negative pro rata premium of the previous movement.

Modifications may be recorded in all cases, however those beyond their authorisation level cannot be issued and will be pending until authorisation is given from the appropriate level. The authorisations system functionality is identical to the one operating for new business.

By calling product factory, when requesting endorsement issues, all product, competence and subscription validations will be performed. Product factory will provide the errors upon which issue may or may not be possible. When an endorsement is issued, adjustments in the re-insurance and co-insurance cessions will be made if the endorsement application results in a variation in cessions. An endorsement cannot be issued if cessions remain pending (non-defined, facultative re-insurance)

**Step: Maintenance of Pending Policies**

The status of a new policy or a endorsement can be completed or pending. A movement that is not yet issued is a pending movement. Policy administration exemplary has 2 databases: one for the completed and one for the incompleted policies. Policy issue may be recorded in a Database of incomplete policies until the issue is completed. Consolidated data may then be stored in the database of completed policies.

When a movement on an existing policy is made (for instance, an endorsement) this may be stored in the database of incomplete policies while the policy number is kept. User wishing to retrieve a policy by means of this function should have reached the policy control step. If the users quit before this, the policy may not be retrieved. The policy will be blocked whenever it has a pending movement (for instance, a non-issued endorsement) and it will remain blocked until the issue of the pending movement is completed. Policies will remain pending when they show competence management errors and until error is authorized. The policy will then be retrievable from maintenance of pending policies.

**Step: Cancellation**

This function/step allows cancellation/annulment of a valid policy. The reasons for annulment are defined for each product/object. Some reasons are common to all products and others are specific, as grounds for cancellation may vary.

Policy cancellations are allowed at any date within validity of the policy:

- In the case of pending receipts, it is possible to cancel policies either with or without return. In the case of cancellation with return, the unused portion of the policy premium will be refunded.
- Policies may be cancelled at due date. In this case no premium is refunded and the policy retains its cover - for claims purposes - throughout its validity and without transfer to portfolio.
  Once all the data of the identified cancellable policy has been entered, it can be directly cancelled or the movement rating data may be accessed in order to obtain any existing return amount. Finally, all the cancellation documents are generated.

Advantageously, the above method provides **rewrite** capabilities "out-of-the-box". This functionality may include the ability to have a new policy (replacing) underwritten in place of an old policy (the one being replaced). The process may entail annulations by the users (cancellation of the policy being replaced) and/or new business (underwriting a replacement policy).

**Step: Reinstatements**

Reinstatements allow previously cancelled policies to have their validity restored. The policies may be completed, validated and registered in order to be reinstated. The date of reinstatement is usually the same as that of effective cancellation of the policy, but it can be at a later time.

Reinstatement may entail the payment of returns, the restoration of surrenders or the payment of interest by the policyholder in order to reinstate the policy in the same condition as when it was cancelled. In all these cases the necessary validations may be carried out, as well as the ratings (product factory) for estimation of the new premium.

A policy reinstatement process may also be accompanied by policy modifications. These modifications can be made in the same reinstatement operation without any further endorsements.

Finally, all reinstatement documents (reinstatement notes, receipts, etc.) are issued and mailed.

**Step: Policy Screening**

Policy Screening allows the policy portfolio to be reviewed based on frequency of accidents and negative profitability criteria. A batch process analysis of the portfolio policies may be carried out based on predefined tables/criteria, which leads to detection of reorganisation needs. The system then generates a (support) database of policies in need of remediation-with their corresponding remediation criteria-, and assigns a proposed generic solution. The users analyse from the database each individual policy and propose specific remediation measures for each of them.

Once policies in need of remediation are detected, the users may inform the client/intermediary of the definitive sanitation decision to be executed:

- Maintenance: The policy maintains its current status for various reasons, for instance: good customer global performance, claims, etc.
- Correction: An endorsement to the actual policy is created by modifying some of its details, for instance: increase of premiums, change of cover conditions, etc.
- Cancellation: The system will cancel the policy automatically once policy screening is completed and the decision to cancel is made. Every month a batch process cancels all policies that the users have decided to cancel.

**Step: Portfolio**

<u>Manual Portfolio Renewal (as part of step: Portfolio)</u>

This function allows manual policy renewal, without being included in the automatic portfolio process. Users may select those policies they wish to renew on an individual basis. Users may select and/or set the premiums to be renewed. All kinds of modifications are allowed: change of rate, cancellation of premium class, etc. In addition to the receipt, the system will issue the corresponding endorsement by linking to the endorsements process. If the modification was registered before the portfolio process, that is, because there was future endorsement (effective on the date of policy expiration), the user only has to decide on the renewal of registered conditions.

The manual portfolio does not carry out updating as in the automatic renewal process, such as bonus/penalty change of level, portfolio renewal actions, appreciation of sums insured or premiums, etc.

<u>Automatic Portfolio Renewal (as part of step: Portfolio)</u>

The portfolio process is a monthly renewal process for all policies expiring on a specific month (parameters established by product), generally on the following month of the process.

The process entails

- updating of intermediaries, bonus penalty, appreciation and portfolio renewal and/or
- rating of the premiums of the next annuity and/or
- issuing of the policy with the new dates of renewal and/or
- printing of the expiration notes.

Policy Selection (as part of step: Portfolio/Portfolio Renewal)

Product Factory validation for products with automatic renovation policies. Selected policies may be

- in vigour and/or
- with the expiry date as shown in the parameter and/or
- with automatic renewal.

The policy is marked with a warning to users that renewal is in process. The policy is blocked and no movement can be made.

Value update (as part of step: Portfolio/Portfolio Renewal)

This step may comprise one or more of the following:

- Intermediary udates and/or
- Bonus Penalty and/or
- Portfolio renewal actions and/or
- Appreciation and/or
- Renewal of dates.

Rating (as part of step: Portfolio/Portfolio Renewal)

Policy premiums are obtained for the next annuity after values are appraised by the product factory executable. Some products have a minimum premium defined on the basis of the following options:

- Minimum premium by policy and/or
- Minimum premium by object and/or
- Minimum premium by premium class and/or
- Combined minimum premium (by object and premium class).

For the policies not exceeding the minimum premium, the difference between all premium policies will be shared out (in proportion to its premiums), or its entirely will be applied to the first premium class, as indicated by product factory.

Policiy Issue/Policies (as part of step: Portfolio/Portfolio Renewal)

This is a validation and consolidation process (for both complete an incomplete policies) of the data updating of the policy renewal. A series of routines within a modular structure is called for the issue process. Each routine is in charge of validation or consolidation. It also includes two additional modules that

- estimate(s) the intermediary comissions and/or
- enter(s) policy data in the receipts interface.

Policiy Issue/Green Cards (as part of step: Portfolio/Portfolio Renewal)

The intermediary collector of the first receipt defines inclusion of the green card in the portfolio renewal.

Policiy Issue/Receipts (as part of step: Portfolio/Portfolio Renewal)

A receipts data model is completed with the data supplied by the interface. Payments are fractionated by quarters, semesters or single annual payments, as indicated in the policy.
The following receipts are issued:

- Annual payments and/or
- First quarterly or six-month payment and/or
- Successive payments of policies previously expired that are due in the current month.

The rest of the receipts are kept as 'Pending Issue'. A Postscript (*.ps) file is created to store all information on receipts issued and is redirected to the company's central printer. For ease of distribution, the information is classed by office and intermediary.

Expiration Notes (as part of step: Portfolio/Portfolio Renewal)

Process by which all necessary information is collected to complete expiration notes. The note informs the client of the premiums applied to policy renewal.

Reconciliation (as part of step: Portfolio/Portfolio Renewal)

The process extracts all updated data in the automatic policy renewal process and transfer them to an Excel file. The file shows a breakdown by SBU of the following information:

- Total renewed policies and/or
- Total invoiced and/or
- Total invoiced for pending issue payments due in the current month and/or
- Percentage of commissions of Intermediaries over total invoicing and/or
- Total of premiums for co-insurance.

A list of policies not renewed accompanied by a reason for it:

- Cancelled and/or
- Not renewable and/or
- Blocked at the start of the process due to a movement done during selection and/or
- Error during the process (an identifying error code and a description is displayed).

Portfolio Pre-Renewal (as part of step: Portfolio)

The portfolio pre-renewal is launched one month or two months before the portfolio renewal for the products that require it. The pre-renewal process is launched two months before the policy expiration covering the following:

- It updates the policy values and it rates the premiums for the next period and/or
- Bonus/Penalty, Sum Insured, Automated Updates and Other Automated Processes (discounts and extra charges) and/or
- It processes the expiration notes but does not issue the movement and/or
- This process freezes the policies during its execution (only renewal quotes can be made to this policy, however the policies can be manually unfrozen by an authorized user).

As an example, the company sends information about policy renewal to the customer, in order to let him/her know the new renewal conditions or the cancellation of the contract (due to claims issues). After that, quotes based on pre-renewal can be made.

The above method may also comprise a step related to commissions.

**Step: Commissions**

Commissions can be assigned to carry out one or more of the following steps and/or comprise one or more of the following features/effects:

- Retrieving table values from Distribution channels module (product - premium class, affinity group, agent, etc.).
- Manually within pre-defined boundaries.
- Distributing commissioning between different agents within pre-defined boundaries.

Different commission levels can be set depending on

- the first and successive annuities and/or

- for the role of the agent, producer (s) or collector.

Additionally, the above method may allow and/or comprise one or more of the following:

- A rating result screen as a specific GUI may be provided, which allows to display the premium amounts, discounts, surcharges and/or taxes at policy, object and/or premium class level.

- The first and successive instalment periods are determined according to both the form of payment, and the information provided by product factory.

- Details of the resulting premiums are available by object or premium class.

- In case of manual or semiautomatic rating of a product, this can be done in the Policy administration screens.

**Main programs**

In the following steps of the policy issue process are summarized:

From complete to incomplete policy

The New Business, endorsements and reinstatements movements are made by the program KCILMS01. In case of cancellations, it is done by the program KCILMM03.

Data entry

Data entry is carried out by programs to get information of the policy at a policy level (KCILMQ03), object (KCILMB03) and premium class (KCILMD03). The programs to modify this information are KCILMQ02 (policy general data), KCILMQ04 (additional data), KCILMB04 (object) and KCILMD04 (premium class). These members use the program KCILMZ06 to call the Product Factory executable to validate all the data with the product specifications, to introduce the competence management, etc.

Validation/Rating

Once the validation is done for each level (policy, object, premium class), the system calls again the executable to do a general validation with all the levels (it is done by the program KCILMZ06 again). After the data validations the product executable is used again to rate (obtaining the premium). Finally, there is a call to the Instalment Program (KCILMZ00), to divide the premium in each of the resulting receipts according to both the form of payment selected in the annual premium of a movement and information provided by product factory.

Policy Issue

The issue process validates and consolidates all the data introduced changing the status of the policy from incompleted to completed. The process is started by the program KCILMQ05 calling dinamically to several sub-programs depending on the product, the movement and other parameters.
One or more of the following tasks maybe comprised in the issue process:

- Validation the paragraphs and/or receipt issue and/or reinsurance, etc. with the product factory.
- Carry out additional operations (calculate comissions and/or clause composition etc.).
- Consolidate the policy with all of the releases. This process is done by the program KCILMZ05.
- Provide/generate reinsurance and/or coinsurance interfaces.
- Related Economic Process such as receipt issue.

Advantageously, the Product Factory is fully integrated with Policy Administration, so that changes made by product developers are readily made available to users. More specifically,

- the product structure is defined in the product factory. The policy administration application is able to interpret it and adapt screens such as the GUI shown in figures 28 and 29 and databases in order to store the required information, with no need for a knowledge of IT;

• the product validations and the action to be taken when incidents occur are defined in the product factory, and policy administration presents the appropriate error message which may be defined in product factory to the user;

• the calculations may be defined in the product factory and the financial data is saved in an economic information database, from which policy administration shows the detailed results to the user.

**Figure 31** is a schematic overview how the product factory and the policy administration are integrated with each other. As can be seen, the structure of a contract / policy is directly linked to the product structure as defined in the Product Factory. A contract may be a group of policies that may be grouped in different levels. Mainly, these groupings can be used to group the issue of receipts and to generate reports and aggregate statistics. Division and subdivision groupings in contract policies are optional. The policies of a contract can be directly grouped with the contract.

The available risk objects and the guarantees (Premium Class in the present terminology) are the ones defined in the product factory under the product which the policy is based on. In other words, the above described method advantageously allows to manage all new business acquisitions and policy portfolio maintenance needs of an insurance company, according to rules predefined in the Product Factory

In particular, the most common business transactions can be included:

• Quotes and/or
• New business and/or
• Endorsements and/or
• Renewals and/or
• Cancellation and/or
• Reinstatements and/or
• Declarations and/or
• Policy sanitization and/or
• Competency management and/or
• Others...

**Figure 32** shows a conceptual model of an technical architecture overview 200 for implementing the above described method. As shown, user architecture 202 provides usability and interaction. Applications architecture 204 represents an integrated vision of systems for solving business problems. Development architecture 206 provides/defines one or more of the following:

- Methodology
- Standards
- Procedures
- Tools.

Operations architecture 208 provides/defines one or more of the following:

- Operations support
- Security
- Availability.

Data architecture 210 provides/defines one or more of the following:

- Definition
- Logical and physical views
- Administration.

Execution architecture 212 provides/defines a set of modules and/or programs and/or objects and/or API's that may isolate technical aspects.

Printing architecture 214 provides/defines a set of tools and/or procedures to manage the printing facilities.

In the following, as an overview, the repository structure and the table structure is described, as it may be applied according the method/system described in this application.

According to the present application, in Policy Admin the values are stored dynamically, which means that depending on how the elements have been defined in the product, they can be stored (within the same database) in one field or in another one.

This feature the Policy Admin database with the flexibility for ADDITIONAL ELEMENTS (the ones defined at Policy Level, Object Level and Coverage Level), because it allows increasing or decreasing the number of additional elements to be implemented in each client without impacting the database. Hence, once the repository structure is defined, additional elements may be included into the repository without changing the structure of the repository.

The following example is for the purpose of illustrating how the values entered for additional elements (at policy level, object level and/or coverage level) are stored in the Policy Admin database:

Once the product, i.e. the set of interrelated executable files is generated, in the table KTPA82T all the element assignments are stored, i.e. KTPA82T defines/incorporates the exact physical place where the value of the elements will be stored within the Policy Admin tables. In that table ALL the vectors related with ALL the levels are stored. Hence, before retrieving any value for a certain element, it is mandatory to access this table in order to know the physical place where the values remain. In the following example(s) for each level are described:

*POLICYADDITIONAL ELEMENT:*

KTPA82T: Database with the element assignment. The following example shows how said database may be accessed to retrieve the vector for an element at policy level. In case the value for an exemplary element CDPOSTCO (post code) should be retrieved. The database may comprise the following entry:

| CDPRODTE | CDPRODCO | CDOBJTP | CDMCT | CDELEME | NOCAMPFI | NURELREC |
|---|---|---|---|---|---|---|
| MOTOR | MOTOR_1 | 000000000 | 00000000 | CDPOSTCO | **TXCAOP1** | **1** |

Then with NOCAMFI=TXCAOP1 and NURELREC=1 the following tables are accessed:

- KCIM52T (Incomplete)
- KCIM16T (Complete).

These tables KCIM52T and KCIM16T are exactly the same and depending on whether with an issued policy (complete) or with a non-issued policy that is pending (incomplete) is worked. Hence, KCIM16T or KCIM52T respectively, are accessed, but the tables will be accessed in the same way as both are identical tables.

In order to access and retrieve the value the information is retrieved from the following fields (NURELREC=1 means that for the range of records found, only the first one will be selected, i.e. only the first line will be used):

| CDNUMPOL | CTVRSPOL .......... | TXCAOP1 | TXCAOP2 |
|---|---|---|---|
| 99788888801 | **1** | **VALUE 1** | **0000000** |
| 99788888801 | 1 | VALUE 2 | 0000000 |
| 99788888801 | 2 | VALUE 3 | 0000000 |
| So "VALUE 1" is the specific value for the element CDPSTCO. | | | |

Using the terminology of the above example, the repository structure may comprise the database KTPA82T. Repository elements may be the lines defines above:

| CDPRODTE | CDPRODCO | CDOBJTP | CDMCT | CDELEME | NOCAMPFI | NURELREC |
|---|---|---|---|---|---|---|
| MOTOR | MOTOR_1 | 000000000 | 00000000 | CDPOSTCO | **TXCAOP1** | **1** |

The tables KCIM52T and KCIM16T may be comprised by the table structure.

*OBJECT ADDITIONAL ELEMENT:*

KTPA82T: Database with the element assignment. The following example shows how said database may be accessed to retrieve the vector for an element at policy level. In case the value for an exemplary element CDLOCAT (location) should be retrieved. The database may comprise the following entry:

| CDPRODTE | CDPRODCO | CDOBJTP | CDMCT | CDELEME | NOCAMPFI | NURELREC |
|---|---|---|---|---|---|---|
| MOTOR | MOTOR_1 | 000005000 | 00000000 | CDLOCAT | **IMCAOP1** | **3** |
| Then with NOCAMFI=IMCAOP1 and NURELREC=3 the following tables are accessed: | | | | | | |

- KCIM54T (Incomplete)
- KCIM18T (Complete).

These tables KCIM54T and KCIM18T are exactly the same and depending on whether with an issued policy (complete) or with a non-issued policy that is pending (incomplete) is worked. Hence, KCIM18T or KCIM54T respectively, are accessed but the tables will be accessed in the same way, as both are identical tables.

In order to access and retrieve the value the information is retrieved from the following fields (NURELREC=3 means that for the range of records found, only the third one will be selected, i.e. only the third line will be selected).

| CDNUMPOL | CTVRSPOL ..... | IMCAOP1 | IMCAOP2 |
|---|---|---|---|
| 99788888801 | 1 | VALUE 1 | 0000000 |
| 99788888801 | 1 | VALUE 2 | 0000000 |
| **99788888801** | **2** | **VALUE 3** | **0000000** |
| So "VALUE 3" is the specific value for the element CDLOCAT. | | | |

*COVERAGE ADDITIONAL ELEMENT:*

KTPA82T: Database with the element assignment. The following example shows how said database may be accessed to retrieve the vector for an element at policy level. In case the value for the element IMLIMIT (Limit Amount) should be retrieved. The database may comprise the following entry:

| CDPRODTE | CDPRODCO | CDOBJTP | CDMCT | CDELEME | NOCAMPFI | NURELREC |
|---|---|---|---|---|---|---|
| MOTOR | MOTOR_1 | 000005000 | 00000000 | IMLIMIT | **IMCAOP5** | **2** |

Then with NOCAMFI=IMCAOP5 and NURELREC=2 the following tables are accessed:

- KCIM53T (Incomplete)
- KCIM23T (Complete).

These tables KCIM53T and KCIM18T are exactly the same and depending on whether with an issued policy (complete) or with a non-issued policy that is pending (incomplete) is worked. Hence, KCIM23T or KCIM53T respectively, are addressed but the tables will be accessed in the same way as both are identical tables.

In order to access and retrieve the value the information is retrieved from the following fields (NURELREC=2 means that for the range of records found, only the second one will be selected, i.e. only the second line will be used).

| CDNUMPOL | CTVRSPOL | ... IMCAOP1 | IMCAOP2 | IMCAOP3 | IMCAOP4 | IxMCAOP5 |
|---|---|---|---|---|---|---|
| 99788888801 | 1 | 0000000 | 0000000 | ..... | ..... | VALUE 1 |
| **99788888801** | 1 | **0000000** | **0000000** | ..... | ..... | **VALUE 2** |
| 99788888801 | 2 | 0000000 | 0000000 | ..... | ..... | VALUE 3 |
| So "VALUE 2" is the specific value for the element IMLIMIT. | | | | | | |

A schematic overview of the processes and interrelations, for generating documents and for distributing printing is shown in **figure 33.**

Given the above, the following design principles may be applied and realized:

- Multi-channel 3-tier architecture.

- "Component-based" architecture: application of enterprise application integration principles for inter-component communication.
- Portability: services layer shields the application from the underlying software implementation.
- Multi-language (User Interface and all document output), multi-currency, multi-company.
- Central document generation & flexible publishing architecture (centrally & distributed, on-line & batch).

An exemplary overview of a possible 3-tier system is shown in **figure 34,** which shows specific elements of the 3-tier architecture and their connection.
Table 1 provides an overview of an exemplary, specific implementation, listing the components used. Other technical configuration may be possible, which can be based on different platforms. Optional components can be replaced by existing application components and/or interfaces. In table 1, terms are used, which my be registered trademarks of third party companies.

Table 1

| | |
|---|---|
| Client | • Internet: HTML, Javascript (Thin Client) • Intranet: Java (Fat Client with automatic pull update system) |
| WebServer | • Apache webserver (for webpage publishing) on winNT -Current configuration at the "Mexican" solution • Located in demilitarized zone between firewalls |
| Security & Access Mgmt | • Standard SSL over VPN network |
| Application Server | • Websphere on WinNT (compatible with standard J2EE) • JAVA, EJB, JSP, SERVLET |
| Middleware | • CICS Transaction Server (IMS scenario to be analysed) |
| Back-end server | • Highest range OS/390 • Languages: Cobol, DB2 |
| Document Management & Imaging (optional) | • FileNet for imaging and storage • DocOne: document generation |
| Datawarehouse (optional) | • Data warehouse: IBM AIX, DB2 UDB 6.0 |
| Accounting (optional) | • SAP |

In **figure 35** an overview 300 of an exemplary technical architecture is shown, in particular comprising the relation of specific components of the architecture. As an example, a HTML client 302 and a Java client 304 are provided. The HTML client 302 comprises a client workstation 306. The Java client 304 comprises a client workstation 308. The client workstation 306 of the HTML client 304 may be connected to a web server 310 and/or an application server 312. The web server 310 may be adapted to host and/or legacy service calls. Moreover, the web server 310 may comprise basic edit logic and/or navigation logic. The web server 310 may also be adapted to generate presentation(s). If applicable, this might also apply for the application server 312. Moreover, the application server 312 may be adapted to receive and/or store and/or generate replicated reference data. If applicable, this might also apply for the web server 310. This may particularly be the case, if web server 310 and application server 312 are combined in one entity.
The application server 312 is connected to an integration server 314. The integration server 314 may comprise integration logic. If applicable, also the web server 312 may be connected to the integration server 314. The integration server may be connected to one or more legacy systems 316. Each legacy system 316 may comprise legacy business logic.
The client workstation 308 of the Java client 304 is connected to a host 318. The host may comprise one or more of the following logic components:

- edit logic
- business logic
- data access logic
- interface logic
- batch logic.

Moreover, the host 318 may receive and/or store and/or generate transaction data and/or reference data.
In the following the elements, as shown in figure 35 are described with further details:

- HOST: This represents the mainframe. In the host, the entire database may be defined and all the business logic implemented into cobol programs may remain. Those programs may access to the database(s) to update and/or maintain data that may also be used to do calculations etc.

- APPLICATION SERVER (windows, UNIX...): In that environment the Thin Client logic may be run. In other words, the application server defines the location for remaining the order in which the web pages should be launched. This application can set the order in which the screens appear or even need to appear.

- WEB SERVER: Is the server that allows providing the physical pages to the application server. The application server (based on the order) may request the pages to the web server that is the provider of those pages.

- CLIENT WORKSTATION: This is the PC from where the user may access to system according to the present application. This may be the terminal from where someone wants to log into said system, e.g. to execute one or more executable files from the set of executable files through the above described GUI.

- INTEGRATION SERVER & LEGACY SERVER: In some cases some clients may want to keep their legacy data not integrated with the above system according to the present application, but stored in a different server which is what is called LEGACY SYSTEMS. Then through an integration server the data stored in the legacy system may be retrieved and sent to the application server, when needed.

**Figure 36** provides an overview of the technical architecture for automatic interface generation. The shown execution architecture provides an automatic generation mechanism for many, particularly all the components which intervene in the communication starting from an IDL (Interface Definition Language). Advantageously, this automatic generation allows that the applications only have to deal with the definition of the input and/or output messages in a data dictionary, but not with their physical generation (in code form).

In the following the elements, as shown in figure 36 are described with further details. In particular, figure 36 shows how the FRONT END is communicating DATA to the BACK END. In other words, and using an example, the front end in the form of a workstation may be in a bank. A user of the workstation may receive and enter a loan demand/request. The back end would be represented by the operations that are done e.g. in the back office in order to determine if the bank approves the loan or not. So in accordance with the schematic overview shown in figure 36, the terms as used may be defined as follows:

- WORKSTATION: The PC from where the user may access to the screens, i.e. the GUI/GUIs as described in this application. The user may use the AIS screen(s) to send and process data (located in the fields) throughout classes.

- CLASS OUT: A range of fields (data) that are sent to the MIDDLEWARE for being processed by the programs.

- CLASS IN: A range of fields (data) that are received by the MIDDLEWARE (normally calculations or results of accessing to databases) that are previously sent by the executable files, which may be cobol programs to be displayed into the screens.

- STUB: Order(s) from which the fields are packaged for being sent.

- MIDDELEWARE: Software that communicates the data sent by the screens, i.e. the GUI to the back end, in other words, software that communicates the data entered in the screens with the programs located in the mainframe. The most used one is the CTG (CICS TRANSACTION GATEWAY).

- OS390: The mainframe or the host where all the programs and database are located.

- DATABASE: Data structure where all the information related with the screens and/or result of calculations is stored.

- DATA ACCESS ROUTINE: Executable files, such as cobol programs where all the business logic about the application remains.

- COPY OUT: Similar, even exactly the same as the Java Classes but for cobol. In other words, this may be the range of fields that are sent to the middleware in order to be sent to the screen and/or may be the result of some program calculation and/or access.

- COPY IN: The same as the "COPY OOUT", but the other way around. It represents the range of data that is received for the cobol programs in order to perform some calculation or database access.

- SKELETON: Similar, even the same as the STUB, that is the order from which the fields are packaged for being sent.

In order to verify that the above described process/method may be carried out properly, the definition of the CLASSES and the COPYBOOKS should match, in particular should match exactly with each other. Therefore, a data dictionary is provided, which is a database where all the fields are defined (such as length, format etc...). From that point there is a process called IDL that automatically generates in identical format and length the Java Classes and Cobol Copies, in order to guarantee the coherence. Advantageously, by using this, the programmer does not have to manually generate said identical formats.

Generally, when the above described method is executed, as a security service username and password are authenticated, allowing access to the system. The system may retrieve the user's security profile, that defines what functions the user can access. The functions may define the access needed to approach business functionality, such as

• access to scenarios: areas of business procedures and/or
• access to control: access buttons to specific windows or services and/or
• access to logical resources: to disable/enable access to specific tables

Accesses (inquiry & modification) and competence parameters are set following the business structures (roles and location).

Further to the above, the automatic generation of different application packages in several languages out of a single version of the application code may be provided.

With reference to **figure 37,** an exemplary system for implementing the invention includes a general purpose computing device in the form of a conventional computing environment 20 (e.g. personal computer), including a processing unit 22, a system memory 24, and a system bus 26, that couples various system components including the system memory 24 to the processing unit 22. The processing unit 22 may perform arithmetic, logic and/or control operations by accessing system memory 24. The system memory 24 may store information and/or instructions for use in combination with processing unit 22. The system memory 24 may include volatile and non-volatile memory, such as random access memory (RAM) 28 and read only memory (ROM) 30. A basic input/output system (BIOS) containing the basic routines that helps to transfer information between elements within the personal computer 20, such as during start-up, may be stored in ROM 30. The system bus 26 may be any of several types of bus structures including a memory bus or memory controller, a peripheral bus, and a local bus using any of a variety of bus architectures.

The personal computer 20 may further include a hard disk drive 32 for reading from and writing to a hard disk (not shown), and an external disk drive 34 for reading from or writing to a removable disk 36. The removable disk may be a magnetic disk for a magnetic disk driver or an optical disk such as a CD ROM for an optical disk drive. The hard disk drive 34 and external disk drive 34 are connected to the system bus 26 by a hard disk drive interface 38 and an external disk drive interface 40, respectively. The drives and their associated computer-readable media provide nonvolatile storage of computer readable instructions, data structures, program modules and other data for the personal computer 20. The data structures may include relevant data of the implementation of the method as described in more detail above. The relevant data may be organized in a database, for example a relational or object database.

Although the exemplary environment described herein employs a hard disk (not shown) and an external disk, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk, ROM 30 or RAM 28, including an operating system (not shown), one or more application programs 44, other program modules (not shown), and program data 46. The application programs may include at least a part of the functionality as detailed in Figs. 1 to 36.

A user may enter commands and information, as discussed below, into the personal computer 20 through input devices such as keyboard 48 and mouse 50. Other input devices (not shown) may include a microphone (or other sensors), joystick, game pad, scanner, or the like. These and other input devices may be connected to the processing unit 22 through a serial port interface 52 that is coupled to the system bus 26, or may be collected by other interfaces, such as a parallel port interface 54, game port or a universal serial bus (USB). Further, information may be printed using printer 56. The printer 56, and other parallel input/output devices may be connected to the processing unit 22 through parallel port interface 54. A monitor 58 or other type of display device is also connected to the system bus 26 via an interface, such as a video input/output 60. In addition to the monitor, computing environment 20 may include other peripheral output devices (not shown), such as speakers or other audible output.

The computing environment 20 may communicate with other electronic devices such as a computer, telephone (wired or wireless), personal digital assistant, television, or the like. To communicate, the computer/computing environment 20 may operate in a networked environment using connections to one or more electronic devices. Figure 37 depicts the computer environment networked with remote computer 62. The remote computer 62 may be another computing environment such as a server, a router, a network PC, a peer device or other common network node, and may include many or all of the elements described above relative to the computing environment 20. The logical connections depicted in figure 37 include a local area network (LAN) 64 and a wide area network (WAN) 66. Such networking environments are commonplace in offices, enterprise-wide computer networks, intranets and the Internet.

When used in a LAN networking environment, the computing environment 20 may be connected to the LAN 64 through a network I/O 68. When used in a WAN networking environment, the computing environment 20 may include a modem 70 or other means for establishing communications over the WAN 66. The modem 70, which may be internal or external to computing environment 20, is connected to the system bus 26 via the serial port interface 52. In a networked environment, program modules depicted relative to the computing environment 20, or portions thereof, may be stored in a remote memory storage device resident on or accessible to remote computer 62. Furthermore; other data relevant to the computer implemented method for generating interrelated computer executable files which may be insurance products or be related to insurance products, and/or related to application(s) of the insurance claim management (described in more detail above), and/or related to the generation of insurance documents, and/or related to the generation of further products, such as real estate products, financial service products and/or documents, may be resident on or accessible via the remote computer 62. The data may be stored for example in an object or a relation database. It will be appreciated that the network connections shown are exemplary and other means of establishing a communications link between the electronic devices may be used.

The above-described computing system is only one example of the type of computing system that may be used to implement the above described computer implemented method.

**List of Reference Numerals**

| | |
|---|---|
| 1 | GUI |
| 2a | field |
| 2b | field |
| 4a | field |
| 4b | field |
| 6a | field |
| 6b | field |
| 8 | field |
| 10 | window |
| 12 | box |
| 16 | button |
| 18 | button |
| 20 | conventional computing environment |
| 22 | processing unit |
| 24 | system memory |
| 26 | system bus |

| | |
|---|---|
| 28 | random access memory (RAM) |
| 30 | read only memory (ROM) |
| 32 | hard disk drive |
| 34 | external disk drive |
| 36 | removable disk |
| 38 | hard disk drive interface |
| 40 | external disk drive interface |
| 44 | one or more application programs |
| 46 | program data |
| 48 | keyboard |
| 50 | mouse |
| 52 | serial port interface |
| 54 | parallel port interface |
| 56 | printer |
| 58 | monitor |
| 60 | video input/output |
| 62 | remote computer |
| 64 | local area network (LAN) |
| 66 | wide area network (WAN) |
| 68 | network I/O |
| 70 | a modem |
| 101 | GUI |
| 110 | drop down lists |
| 112 | buttons |
| 114 | input fields |
| 114a | input field |
| 116 | input/output window |
| 118a - 118i | display elements |
| 118'a - 118'b | display elements |

| | |
|---|---|
| 120a - 120i | input fields |
| 120'a - 120'b | input fields |
| 122 | scroll bar |
| 124 | headline |
| 126 | headline |
| 200 | technical architecture overview |
| 202 | user architecture |
| 204 | applications architecture |
| 206 | development architecture |
| 208 | operations architecture |
| 210 | data architecture |
| 212 | execution architecture |
| 214 | printing architecture |
| 300 | overview |
| 302 | HTML client |
| 304 | Java client |
| 306 | client workstation |
| 308 | client workstation |
| 310 | web server |
| 312 | application server |
| 314 | integration server |
| 316 | legacy systems |
| 318 | host |

**Claims**

**1.** Computer implemented method for adapting and using a computing environment, wherein the computing environment comprises

- a set of executable files,
- a repository structure,
- a table structure, wherein

  -- the repository structure and the table structure are associated with each other, and

- a graphical user interface (GUI 101) which is adapted to initiate

-- execution of the executable files,
-- reading of data from and/or writing of data into the table structure, and
-- providing of output data as human readable text,
the computer implemented method having the steps of:

- providing a definition of a change of the computing environment at a client side,
- adapting the executable files according to the definition of the change of the computing environment at a server side,
- introducing at least one additional repository element into the repository structure at the server side, wherein the at least one additional repository element corresponds to the adaptation of the executable files,
- adapting the table structure at the server side, corresponding to the additional repository element of the repository structure, and
- accessing the adapted table structure at the server side by said GUI (101) and/or executing one or more of the executable files at the server side by said GUI (101), while substantially maintaining the visual layout of said GUI (101).

**2.** Computer implemented method according to claim 1, wherein the executable files and said GUI (101) access the same table structure, wherein accessing comprises writing data in and/or reading data from the same table structure.

**3.** Computer implemented method according to claim 1 or claim 2, wherein the adaptation of the computing environment is substantially free of copying the repository structure and/or the table structure.

**4.** Computer implemented method according to at least one of the preceding claims, wherein when adapting of the computing environment, the repository structure is substantially maintained.

**5.** Computer implemented method according to at least one of the preceding claims, wherein

- using said GUI (101), output data is generated by the computing environment,
and wherein
- after the adaptation of the computing environment, using said GUI (101), additional output data is generated by said adapted computing environment.

**6.** Computer implemented method according to at least one of the preceding claims, further comprising the step of

- adapting said GUI (101) according to the at least one additional repository element in the repository structure by introducing at least one display element (118a - 118i) in a dynamic input/output entity (116) of said GUI (101), while maintaining the remaining input/output entities (110, 112, 114) of said GUI (101) substantially unchanged.

**7.** Computer implemented method according to claim 6, wherein by introducing the at least one additional display element (118a - 118i) in said dynamic input/output entity (116) of said GUI (101), the size of said dynamic input/output entity (116) is maintained.

**8.** Computer implemented method according to claim 7, wherein said dynamic input/output entity (116) of the GUI (101) is implemented as a scroll down list, if the size of said dynamic input/output entity (116) is smaller than the common size of all display elements (118a - 118i) of said input/output entity (116).

**9.** Computer implemented method according to at least one of the claims 6 to 8,
wherein

- for displaying a display element (118a - 118i) in the dynamic input/output entity (116) the content of said display element (118a - 118i) is read from an associated table element
and/or
- for storing the content (120a - 120i) of a display element (118a - 118i) of the dynamic input/output entity (116), the content (120a - 120i) of said display element (118a - 118i) is written to an associated table element.

**10.** Computer implemented method according to at least one of the claims 6 to 9,

wherein

- table elements stored in said table structure are stored in a predetermined table order,

wherein

- display elements (118a - 118i) displayed in the dynamic input/output entity (116) are displayed in a predetermined display order,
and wherein
- the predetermined table order is different from the predetermined display order.

**11.** Computer implemented method according to claim 10, wherein an element ordering device is used

- to read the content of a table element to the associated display element (118a - 118i) in the display order, and
- to write the content (120a - 120i) of a display element (118a - 118i) to the associated table element in the table order.

**12.** Computer program product, comprising computer readable instructions, which when loaded in the memory of a computer and executed out by the computer achieve that the computer carries out the method according to at least one of the previous claims.

**13.** Computer based system for generating output data in particular in the form of human readable text, comprising

- a set of executable files,
- a repository structure and
- a table structure, wherein

  -- the repository structure and the table structure are associated with each other, and

- a graphical user interface (GUI, 101) which is adapted to

  -- execute the executable files,
  -- read data from and/or write data into the table structure, and
  -- provide output data as human readable text,
  the computer based system further comprising:

- a client interface for defining a change of the executable files at a client side,
- a server device for

  -- adapting the executable files according to the definition of the change at a server side,
  -- introducing at least one additional repository element into the repository structure at the server side, wherein the at least one additional repository element corresponds to the adaptation of the executable files and
  -- adapting the table structure at the server side, corresponding to the additional repository element of the repository structure,
  and wherein

- said GUI (101) is adapted for accessing the adapted table structure at the server side and/or for executing one or more of the executable files at the server side, while the visual layout of said GUI (101) is substantially maintained.

**Amended claims in accordance with Rule 137(2) EPC.**

**1.** Computer implemented method for adapting and using a computing environment, wherein the computing environment comprises

- a set of executable files,
- a repository structure,
- a table structure, wherein

  -- the repository structure and the table structure are associated with each other,

and
- a graphical user interface (GUI 101) which is adapted to initiate

  -- execution of the executable files,
  -- reading of data from and/or writing of data into the table structure, and
  -- providing of output data as human readable text,

the computer implemented method having the steps of:

- providing a definition of a change of the computing environment at a client side,
- adapting the executable files according to the definition of the change of the computing environment at a server side,
- introducing at least one additional repository element into the repository structure at the server side, wherein the at least one additional repository element corresponds to the adaptation of the executable files,
- adapting the table structure at the server side, corresponding to the additional repository element of the repository structure, and
- accessing the adapted table structure at the server side by said GUI (101) and executing one or more of the executable files at the server side by said GUI (101), while maintaining the visual layout of said GUI (101).

**2.** Computer implemented method according to claim 1, wherein the executable files and said GUI (101) access the same table structure, wherein accessing comprises writing data in and/or reading data from the same table structure.

**3.** Computer implemented method according to claim 1 or claim 2, wherein the adaptation of the computing environment is free of copying the repository structure and/or the table structure.

**4.** Computer implemented method according to at least one of the preceding claims, wherein when adapting of the computing environment, the repository structure is maintained.

**5.** Computer implemented method according to at least one of the preceding claims, wherein

- using said GUI (101), output data is generated by the computing environment,
and wherein
- after the adaptation of the computing environment, using said GUI (101), additional output data is generated by said adapted computing environment.

**6.** Computer implemented method according to at least one of the preceding claims, further comprising the step of

- adapting said GUI (101) according to the at least one additional repository element in the repository structure by introducing at least one display element (118a - 118i) in a dynamic input/output entity (116) of said GUI (101), while maintaining the remaining input/output entities (110, 112, 114) of said GUI (101) unchanged.

**7.** Computer implemented method according to claim 6, wherein by introducing the at least one additional display element (118a - 118i) in said dynamic input/output entity (116) of said GUI (101), the size of said dynamic input/output entity (116) is maintained.

**8.** Computer implemented method according to claim 7, wherein said dynamic input/output entity (116) of the GUI (101) is implemented as a scroll down list, if the size of said dynamic input/output entity (116) is smaller than the common size of all display elements (118a - 118i) of said input/output entity (116).

**9.** Computer implemented method according to at least one of the claims 6 to 8,
wherein

- for displaying a display element (118a - 118i) in the dynamic input/output entity (116) the content of said display element (118a - 118i) is read from an associated table element
and/or
- for storing the content (120a - 120i) of a display element (118a - 118i) of the dynamic input/output entity (116), the content (120a - 120i) of said display element (118a - 118i) is written to an associated table element.

**10.** Computer implemented method according to at least one of the claims 6 to 9,
wherein

- table elements stored in said table structure are stored in a predetermined table order,

wherein

- display elements (118a - 118i) displayed in the dynamic input/output entity (116) are displayed in a predetermined display order,
and wherein
- the predetermined table order is different from the predetermined display order.

**11.** Computer implemented method according to claim 10, wherein an element ordering device is used

- to read the content of a table element to the associated display element (118a - 118i) in the display order, and
- to write the content (120a - 120i) of a display element (118a - 118i) to the associated table element in the table order.

**12.** Computer program product, comprising computer readable instructions, which when loaded in the memory of a computer and executed out by the computer achieve that the computer carries out the method according to at least one of the previous claims.

**13.** Computer based system for generating output data in particular in the form of human readable text, comprising

- a set of executable files,
- a repository structure and
- a table structure, wherein

-- the repository structure and the table structure are associated with each other,
and

- a graphical user interface (GUI, 101) which is adapted to

-- execute the executable files,
-- read data from and/or write data into the table structure, and
-- provide output data as human readable text,

the computer based system further comprising:

- a client interface for defining a change of the executable files at a client side,
- a server device for

-- adapting the executable files according to the definition of the change at a server side,
-- introducing at least one additional repository element into the repository structure at the server side, wherein the at least one additional repository element corresponds to the adaptation of the executable files and
-- adapting the table structure at the server side, corresponding to the additional repository element of the repository structure,

and wherein
- said GUI (101) is adapted for accessing the adapted table structure at the server side and for executing one or more of the executable files at the server side, while the visual layout of said GUI (101) is maintained.

Figure 1a

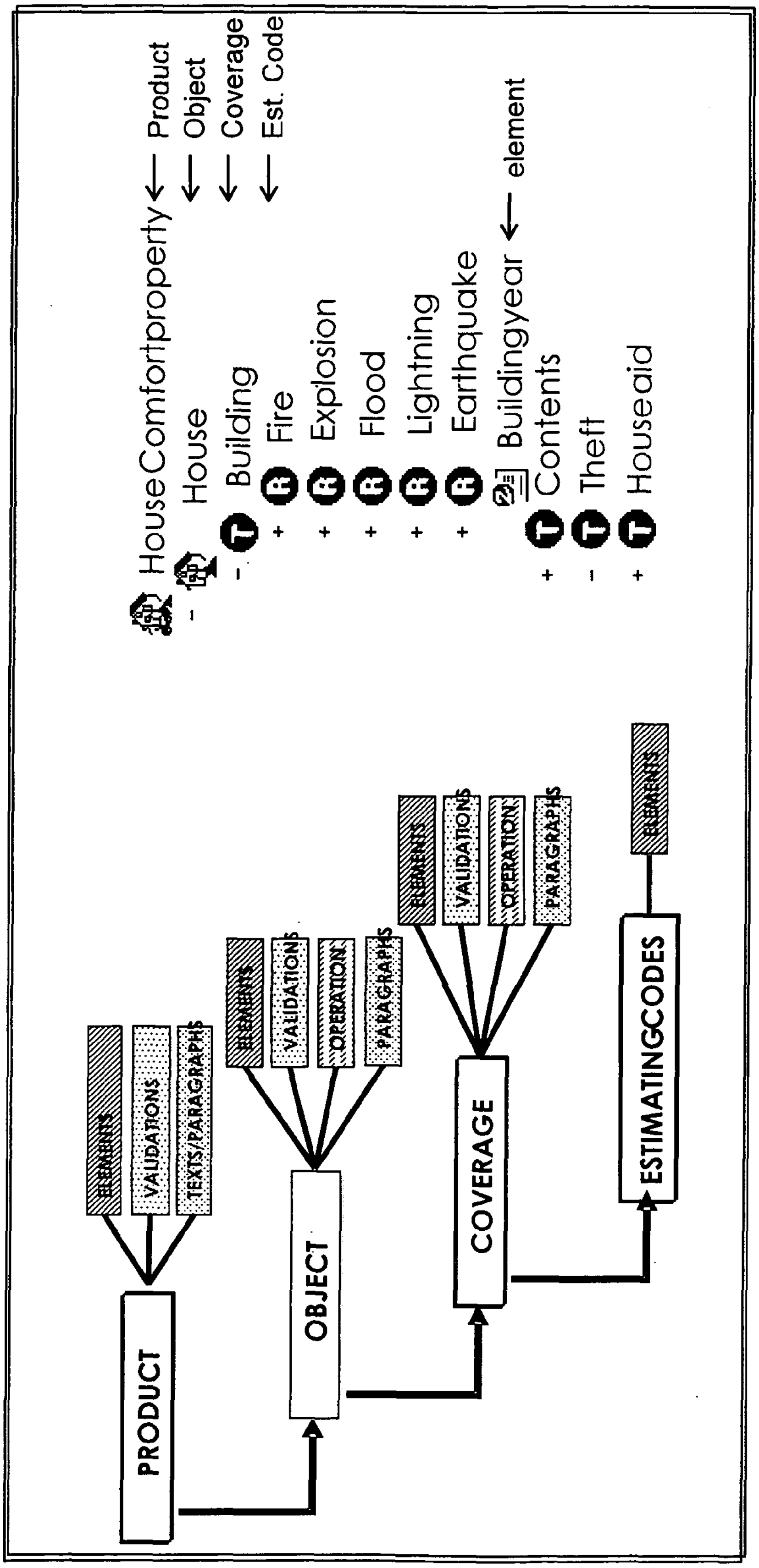
PRODUCT
ELEMENTS
VALIDATIONS
TEXTS/PARAGRAPHS
OBJECT
ELEMENTS
VALIDATIONS
OPERATION
PARAGRAPHS
COVERAGE
ELEMENTS
VALIDATIONS
OPERATION
PARAGRAPHS
ESTIMATINGCODES
ELEMENTS
HouseComfortproperty
House
Building
Fire
Explosion
Flood
Lightning
Earthquake
Buildingyear
Contents
Theft
Houseaid
Product
Object
Coverage
Est. Code
element

Figure 1b

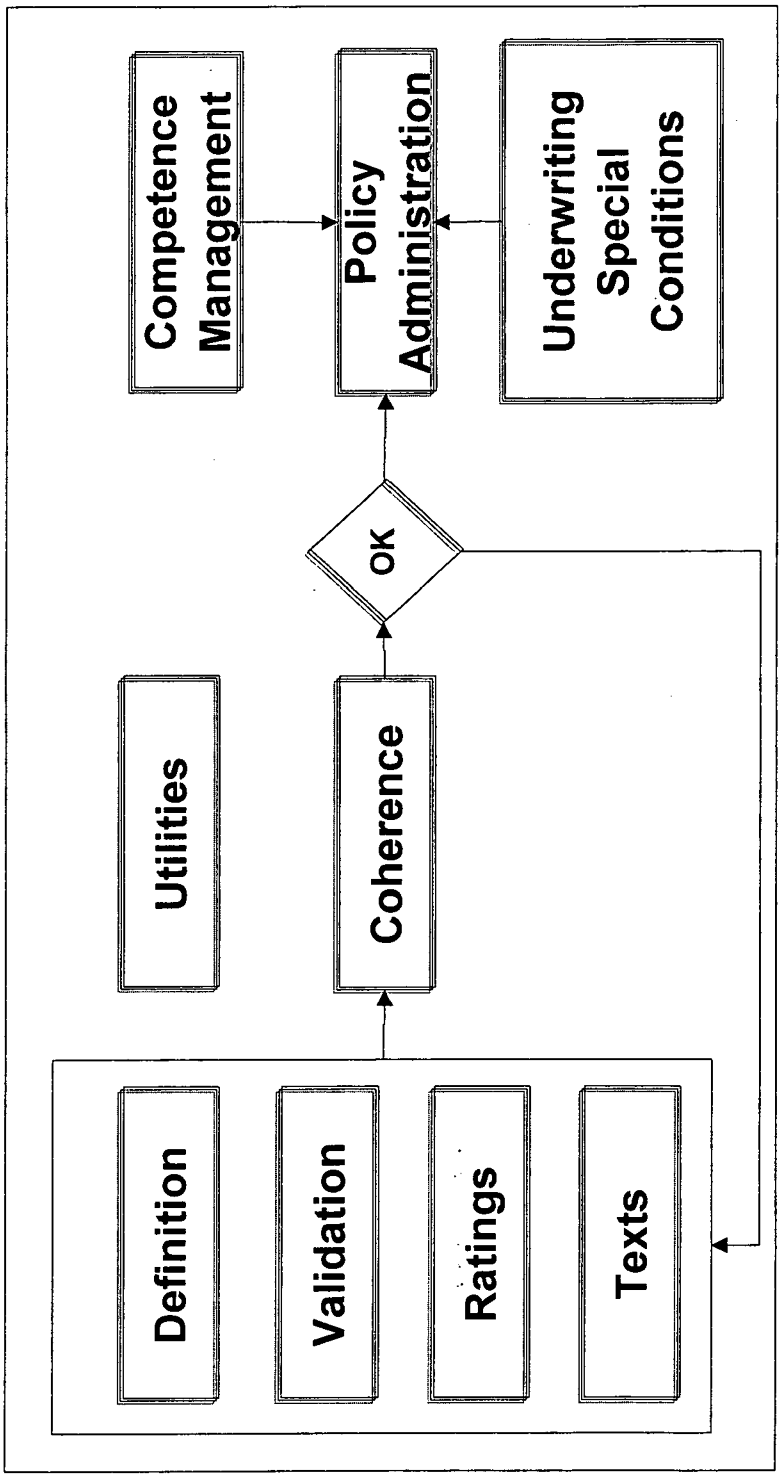
Competence Management
Policy Administration
Underwriting Special Conditions
OK
Utilities
Coherence
Definition
Validation
Ratings
Texts

Figure 1c

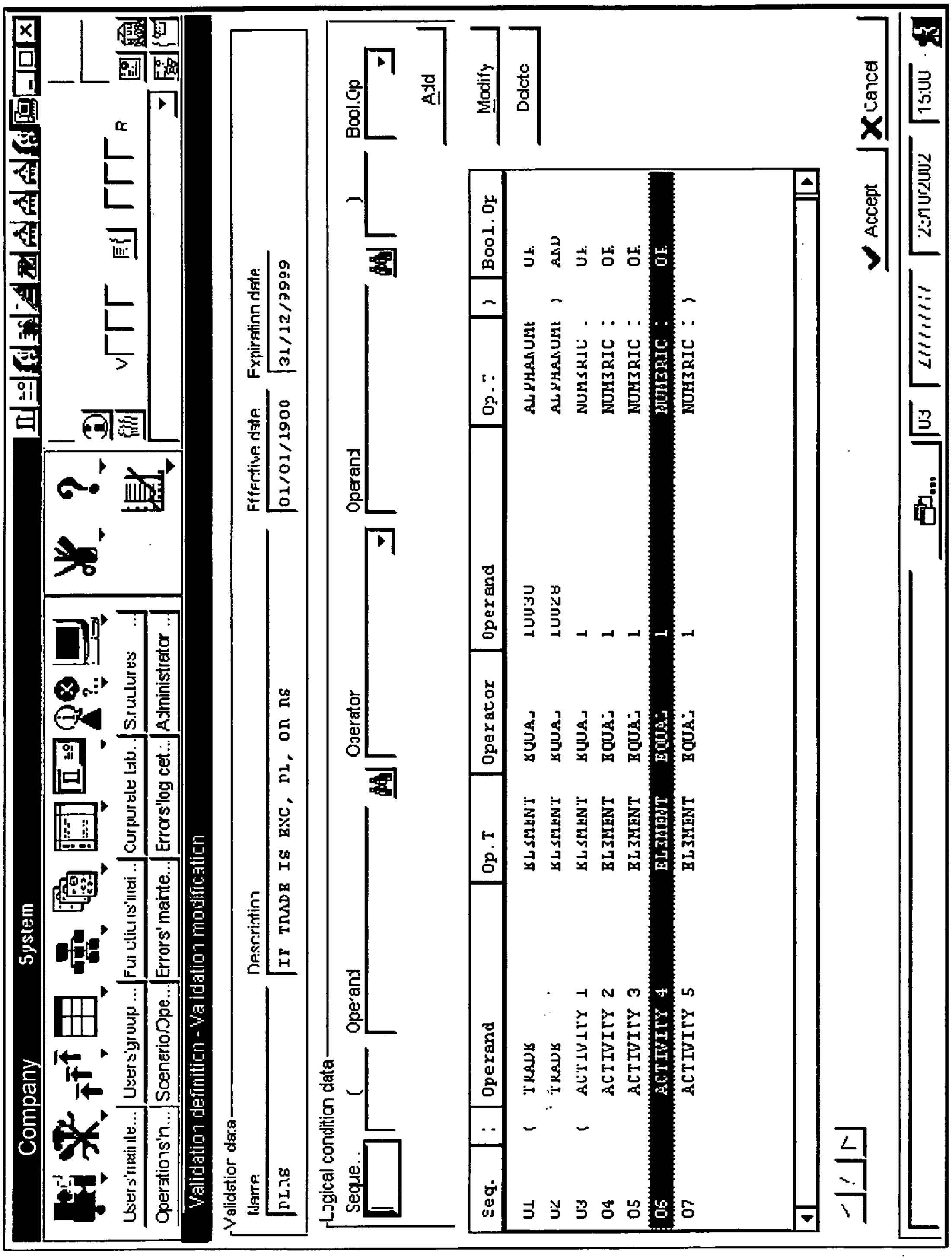
Company
System
Validation definition - Validation modification
Validation data
Name
Description
IF TRADE IS EXC, P1, OR NS
Effective date
01/01/1900
Expiration date
31/12/9999
Logical condition data
Operand
Operator
Operand
Bool.Op
Add
Modify
Delete
Seq.
Op.T
Operator
Bool.Op
Accept
Cancel

Figure 2

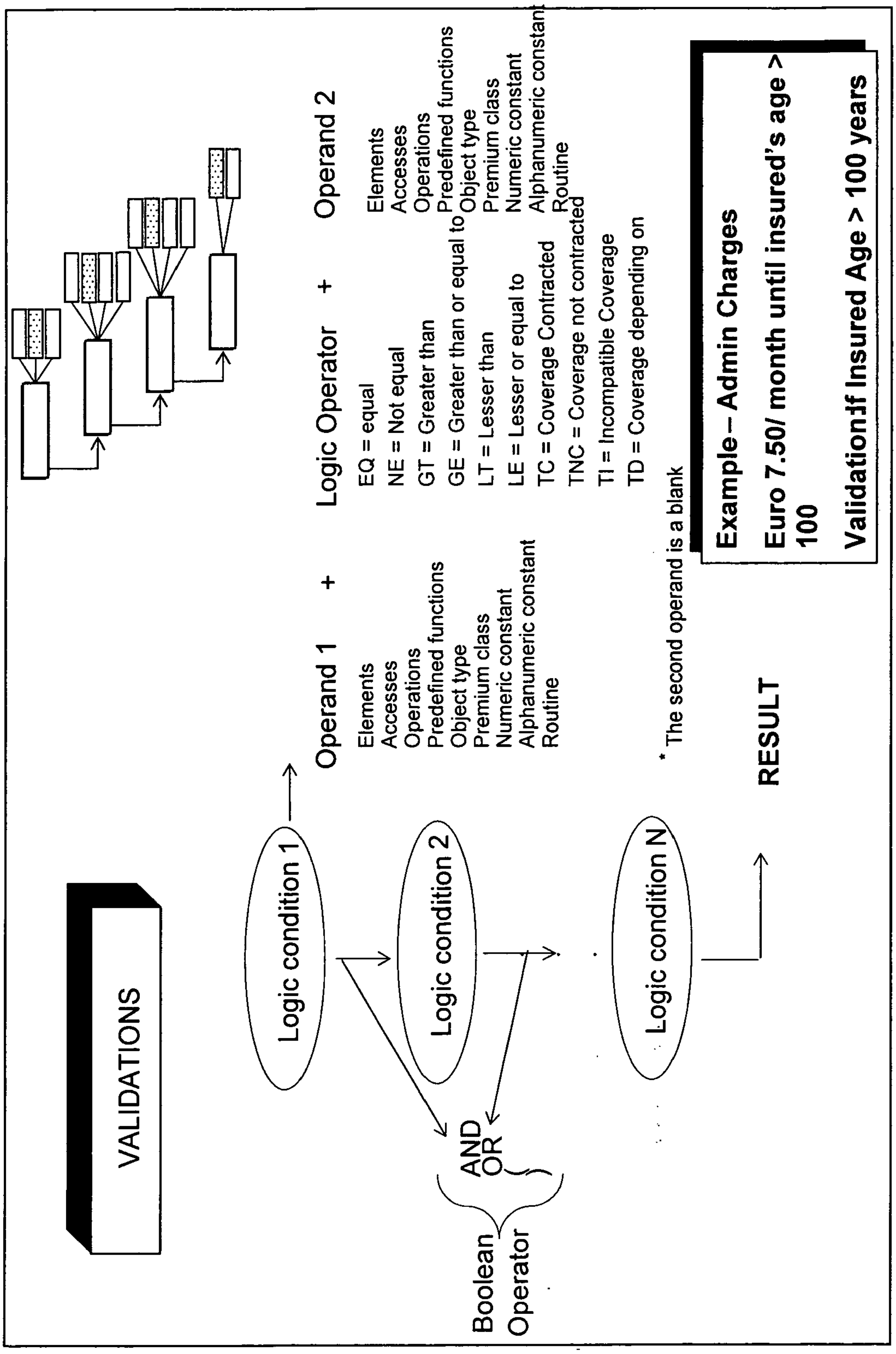
VALIDATIONS
Logic condition 1
Logic condition 2
Logic condition N
Boolean Operator
AND
OR
RESULT
Operand 1
Elements
Accesses
Operations
Predefined functions
Object type
Premium class
Numeric constant
Alphanumeric constant
Routine
+
Logic Operator
EQ = equal
NE = Not equal
GT = Greater than
GE = Greater than or equal to
LT = Lesser than
LE = Lesser or equal to
TC = Coverage Contracted
TNC = Coverage not contracted
TI = Incompatible Coverage
TD = Coverage depending on
+
Operand 2
Elements
Accesses
Operations
Predefined functions
Object type
Premium class
Numeric constant
Alphanumeric constant
Routine
* The second operand is a blank
Example – Admin Charges
Euro 7.50/ month until insured's age > 100
Validation: If Insured Age > 100 years

Figure 3

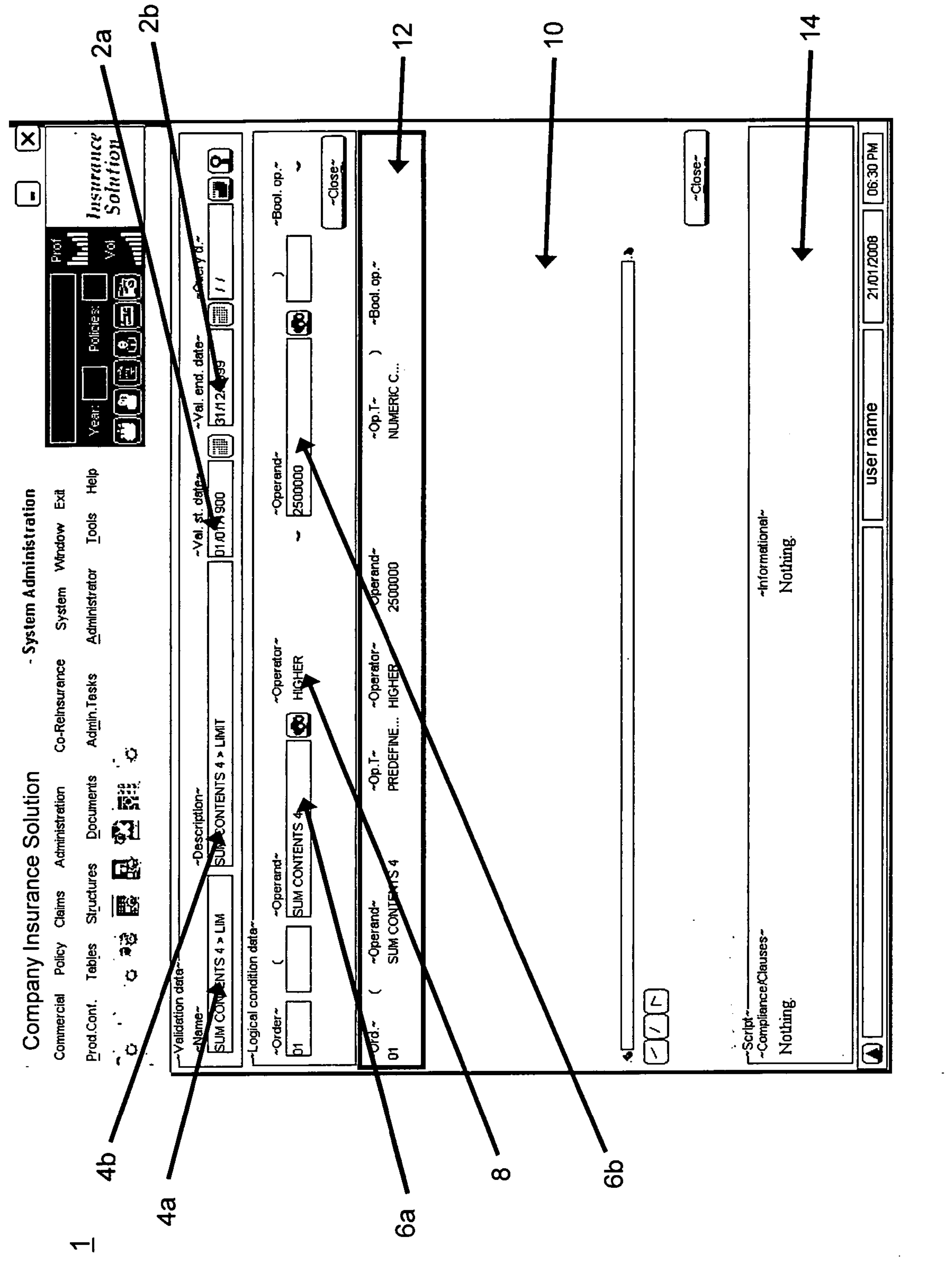
1
2a
2b
4a
4b
6a
6b
8
10
12
14
Company Insurance Solution
- System Administration
Validation data
Name
SUM CONTENTS 4 > LIM
Description
SUM CONTENTS 4 > LIMIT
Val. st. date
01/01/1900
Val. end. date
31/12/2099
Logical condition data
Order
01
Operand
SUM CONTENTS 4
Operator
HIGHER
2500000
Bool. op.
Close
Ord.
Op.T
PREDEFINE...
NUMERIC C...
Script
Compliance/Clauses
Nothing.
Informational
Nothing.
user name
21/01/2008
06:30 PM

Figure 4

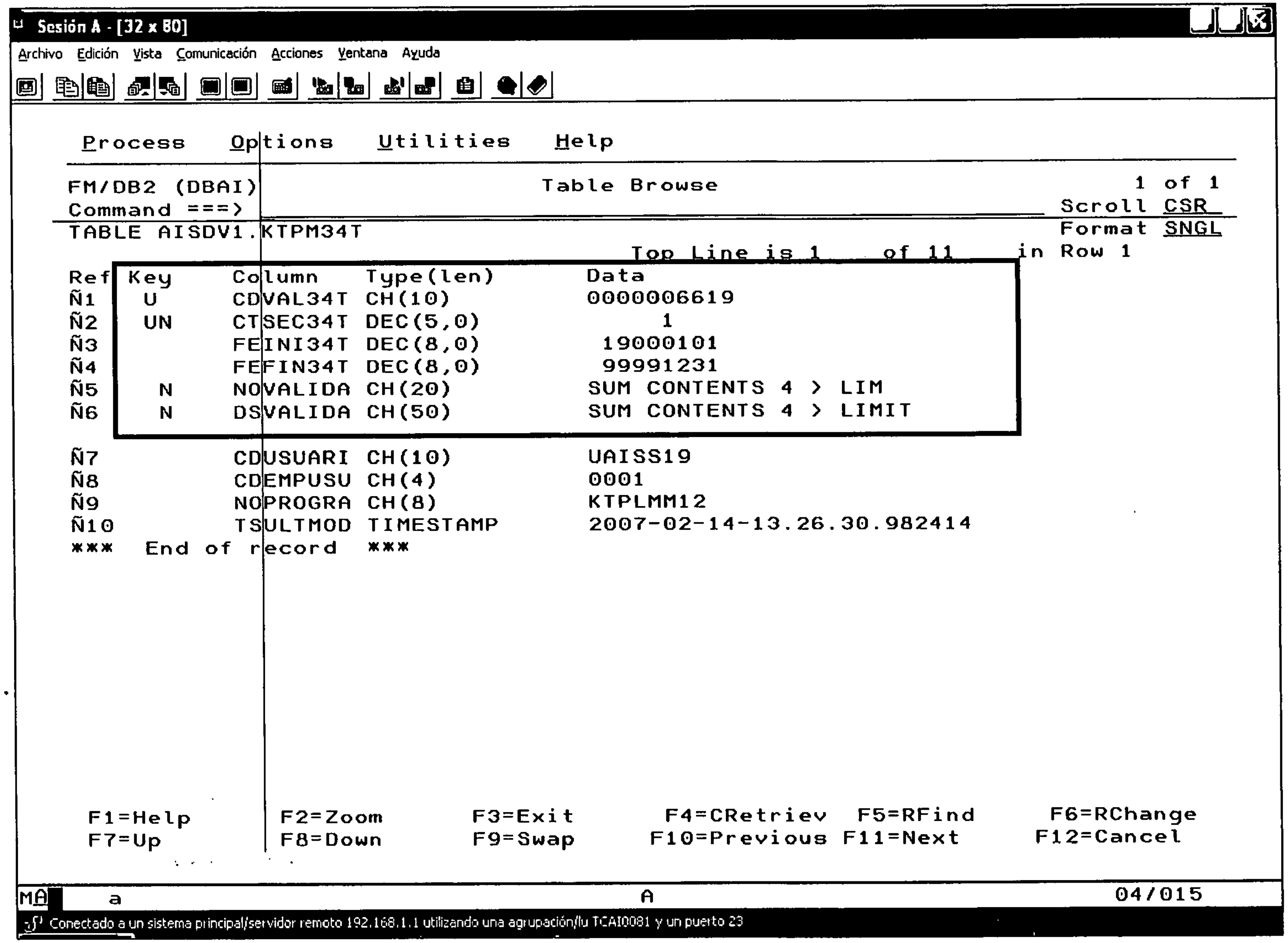
Sesión A - [32 x 80]
Archivo Edición Vista Comunicación Acciones Ventana Ayuda
Process Options Utilities Help
FM/DB2 (DBAI) Table Browse 1 of 1
Command ===> Scroll CSR
TABLE AISDV1.KTPM34T Format SNGL
Top Line is 1 of 11 in Row 1
Ref Key Column Type(len) Data
Ñ1 U CDVAL34T CH(10) 0000006619
Ñ2 UN CTSEC34T DEC(5,0) 1
Ñ3 FEINI34T DEC(8,0) 19000101
Ñ4 FEFIN34T DEC(8,0) 99991231
Ñ5 N NOVALIDA CH(20) SUM CONTENTS 4 > LIM
Ñ6 N DSVALIDA CH(50) SUM CONTENTS 4 > LIMIT
Ñ7 CDUSUARI CH(10) UAISS19
Ñ8 CDEMPUSU CH(4) 0001
Ñ9 NOPROGRA CH(8) KTPLMM12
Ñ10 TSULTMOD TIMESTAMP 2007-02-14-13.26.30.982414
*** End of record ***
F1=Help F2=Zoom F3=Exit F4=CRetriev F5=RFind F6=RChange
F7=Up F8=Down F9=Swap F10=Previous F11=Next F12=Cancel
MA a A 04/015
Conectado a un sistema principal/servidor remoto 192.168.1.1 utilizando una agrupación/lu TCAI0081 y un puerto 23

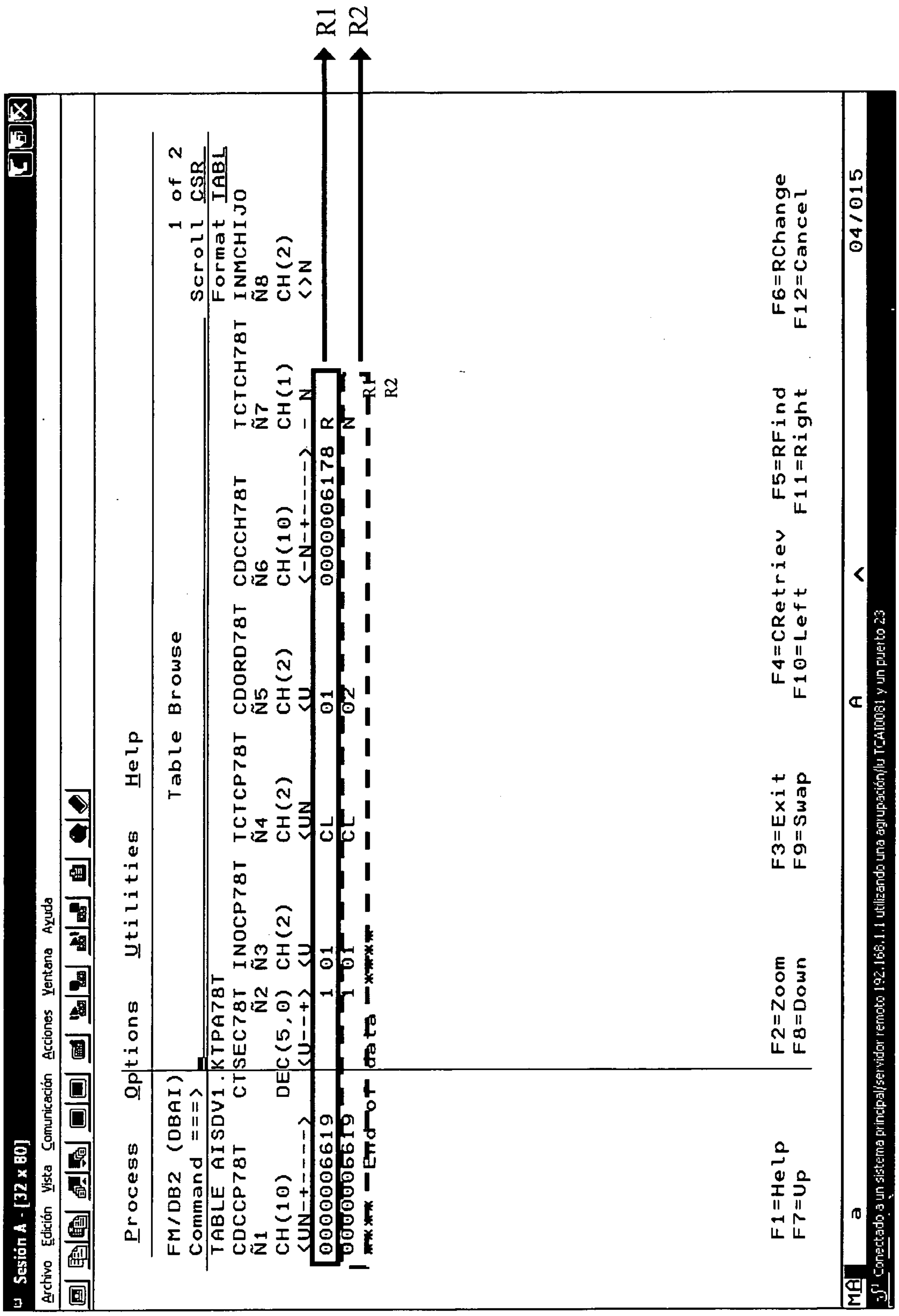
Sesión A - [32 x 80]
Archivo Edición Vista Comunicación Acciones Ventana Ayuda
Process Options Utilities Help
FM/DB2 (DBAI) Table Browse 1 of 2
Command ===> Scroll CSR
TABLE AISDV1.KTPA78T Format TABL
CDCCP78T CTSEC78T INOCP78T TCTCP78T CDORD78T CDCCH78T TCTCH78T INMCHIJO
Ñ1 Ñ2 Ñ3 Ñ4 Ñ5 Ñ6 Ñ7 Ñ8
CH(10) DEC(5,0) CH(2) CH(2) CH(2) CH(10) CH(1) CH(2)
<UN-+----> <U--+> <U <UN <U <-N-+----> - N <>N
0000006619 1 01 CL 01 0000006178 R
0000006619 1 01 CL 02 N
*** End of data ***
F1=Help F2=Zoom F3=Exit F4=CRetriev F5=RFind F6=RChange
F7=Up F8=Down F9=Swap F10=Left F11=Right F12=Cancel
MA a A < 04/015
Conectado a un sistema principal/servidor remoto 192.168.1.1 utilizando una agrupación/lu TCAI0081 y un puerto 23
R1
R2

Figure 5a

Figure 5b

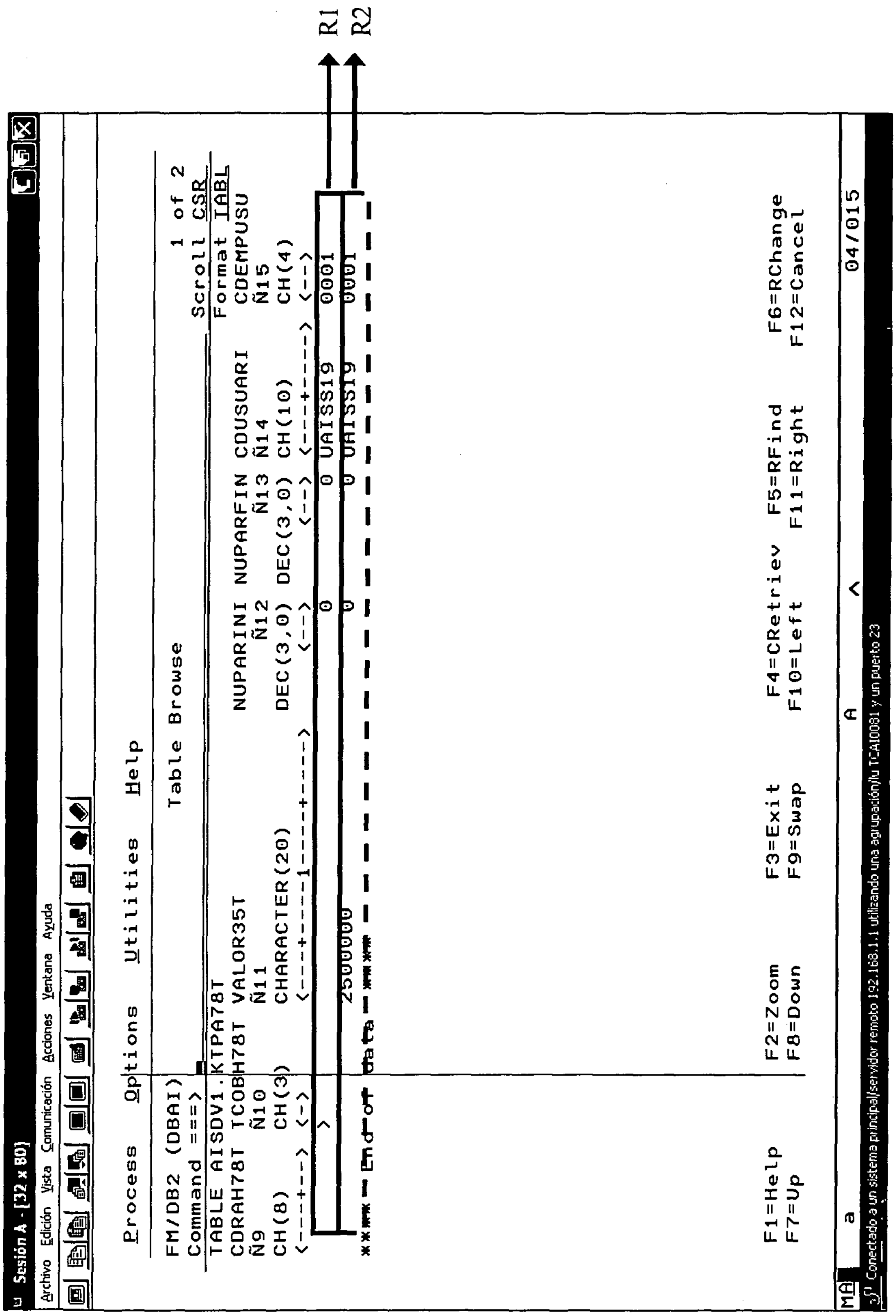
Sesión A - [32 x 80]
Archivo Edición Vista Comunicación Acciones Ventana Ayuda
Process Options Utilities Help
FM/DB2 (DBAI) Table Browse 1 of 2
Command ===> Scroll CSR
TABLE AISDV1.KTPA78T Format TABL
CDRAH78T TCOBH78T VALOR35T NUPARINI NUPARFIN CDUSUARI CDEMPUSU
Ñ9 Ñ10 Ñ11 Ñ12 Ñ13 Ñ14 Ñ15
CH(8) CH(3) CHARACTER(20) DEC(3,0) DEC(3,0) CH(10) CH(4)
0 0 UAISS19 0001
25000000 0 0 UAISS19 0001
** End of data **
F1=Help F2=Zoom F3=Exit F4=CRetriev F5=RFind F6=RChange
F7=Up F8=Down F9=Swap F10=Left F11=Right F12=Cancel
MA a a 04/015
Conectado a un sistema principal/servidor remoto 192.168.1.1 utilizando una agrupación/lu TCAI0081 y un puerto 23
R1
R2

# Figure 6

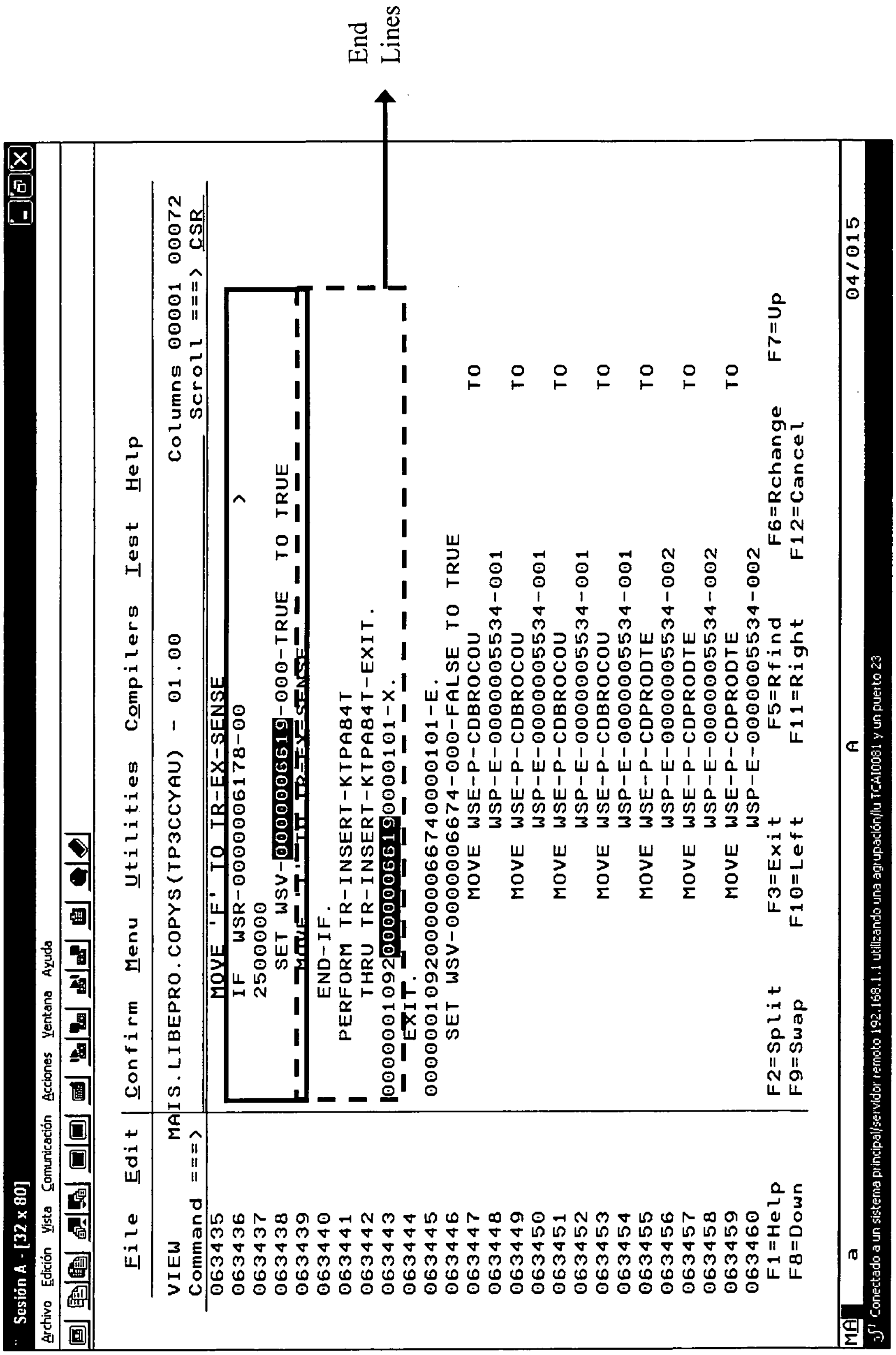
End Lines
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TP3CCYAU) - 01.00 Columns 00001 00072
Command ===> Scroll ===> CSR
063435 MOVE 'F' TO TR-EX-SENSE
063436 IF WSR-0000006178-00 >
063437 2500000
063438 SET WSV-0000006619-000-TRUE TO TRUE
063439 MOVE 'T' TO TR-EX-SENSE
063440 END-IF.
063441 PERFORM TR-INSERT-KTPA84T
063442 THRU TR-INSERT-KTPA84T-EXIT.
063443 00000010920000006619000101-X.
063444 EXIT.
063445 00000010920000006674000101-E.
063446 SET WSV-0000006674-000-FALSE TO TRUE
063447 MOVE WSE-P-CDBROCOU TO
063448 WSP-E-0000005534-001
063449 MOVE WSE-P-CDBROCOU TO
063450 WSE-E-0000005534-001
063451 MOVE WSE-P-CDBROCOU TO
063452 WSP-E-0000005534-001
063453 MOVE WSE-P-CDBROCOU TO
063454 WSP-E-0000005534-001
063455 MOVE WSE-P-CDPRODTE TO
063456 WSP-E-0000005534-002
063457 MOVE WSE-P-CDPRODTE TO
063458 WSP-E-0000005534-002
063459 MOVE WSE-P-CDPRODTE TO
063460 WSP-E-0000005534-002
F1=Help F2=Split F3=Exit F5=Rfind F6=Rchange F7=Up
F8=Down F9=Swap F10=Left F11=Right F12=Cancel
04/015
Conectado a un sistema principal/servidor remoto 192.168.1.1 utilizando una agrupación/lu TCAI0081 y un puerto 23

Figure 7a

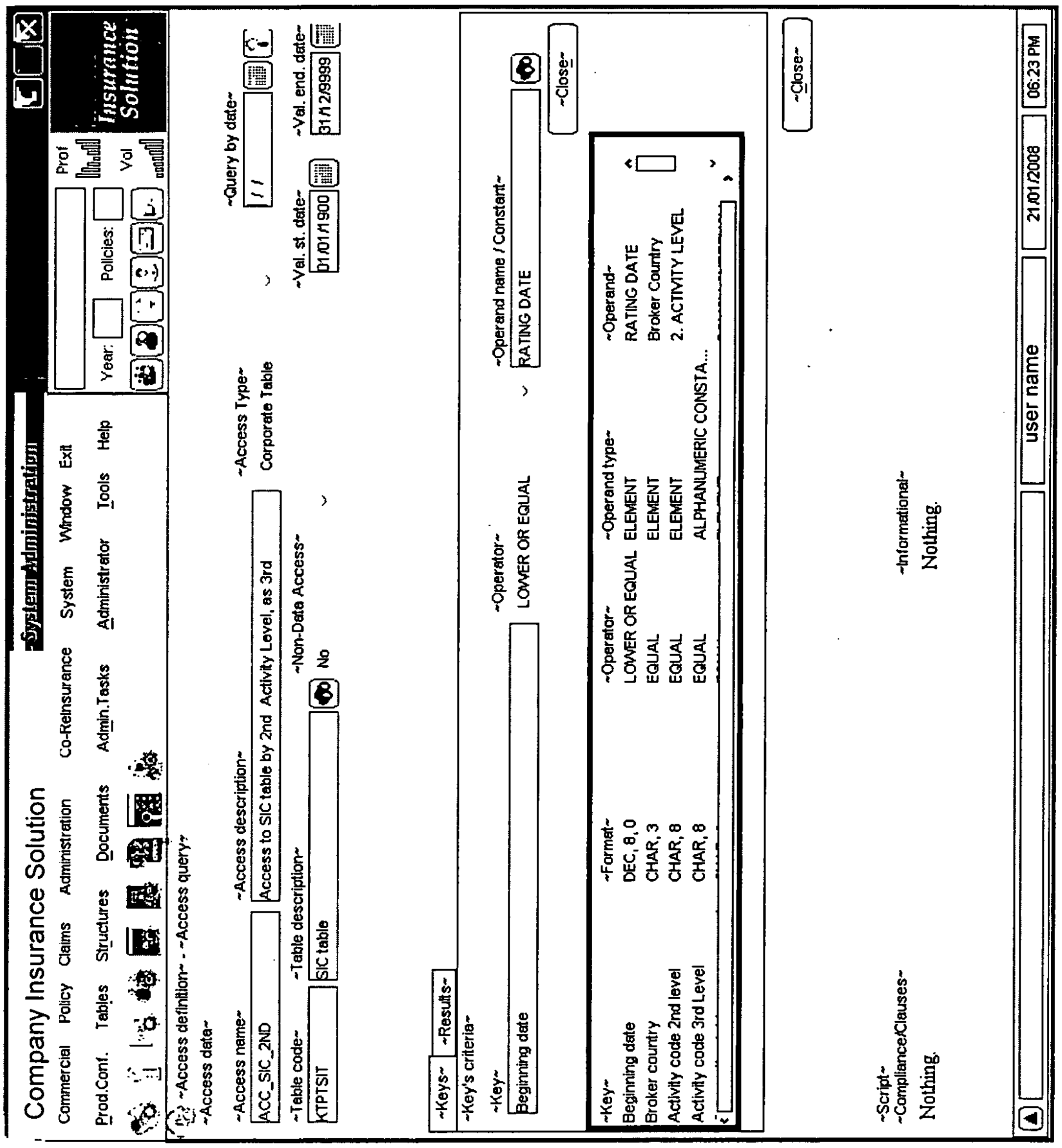

Company Insurance Solution
System Administration
Commercial Policy Claims Administration Co-Reinsurance System Window Exit
Prod.Conf. Tables Structures Documents Admin.Tasks Administrator Tools Help
Year: Policies:
Prof
Vol
Insurance Solution
~Access definition~ - ~Access query~
~Access date~
~Access name~
ACC_SIC_2ND
~Access description~
Access to SIC table by 2nd Activity Level, as 3rd
~Access Type~
Corporate Table
~Query by date~
/ /
~Table code~
KTPTSIT
~Table description~
SIC table
~Non-Date Access~
No
~Val. st. date~
01/01/1900
~Val. end. date~
31/12/9999
~Keys~
~Results~
~Key's criteria~
~Key~
Beginning date
~Operator~
LOWER OR EQUAL
~Operand name / Constant~
RATING DATE
~Close~
~Key~ ~Format~ ~Operator~ ~Operand type~ ~Operand~
Beginning date DEC, 8, 0 LOWER OR EQUAL ELEMENT RATING DATE
Broker country CHAR, 3 EQUAL ELEMENT Broker Country
Activity code 2nd level CHAR, 8 EQUAL ELEMENT 2. ACTIVITY LEVEL
Activity code 3rd Level CHAR, 8 EQUAL ALPHANUMERIC CONSTA...
~Script~
~Compliance/Clauses~
Nothing.
~Informational~
Nothing.
~Close~
user name
21/01/2008
06:23 PM

Figure 7b

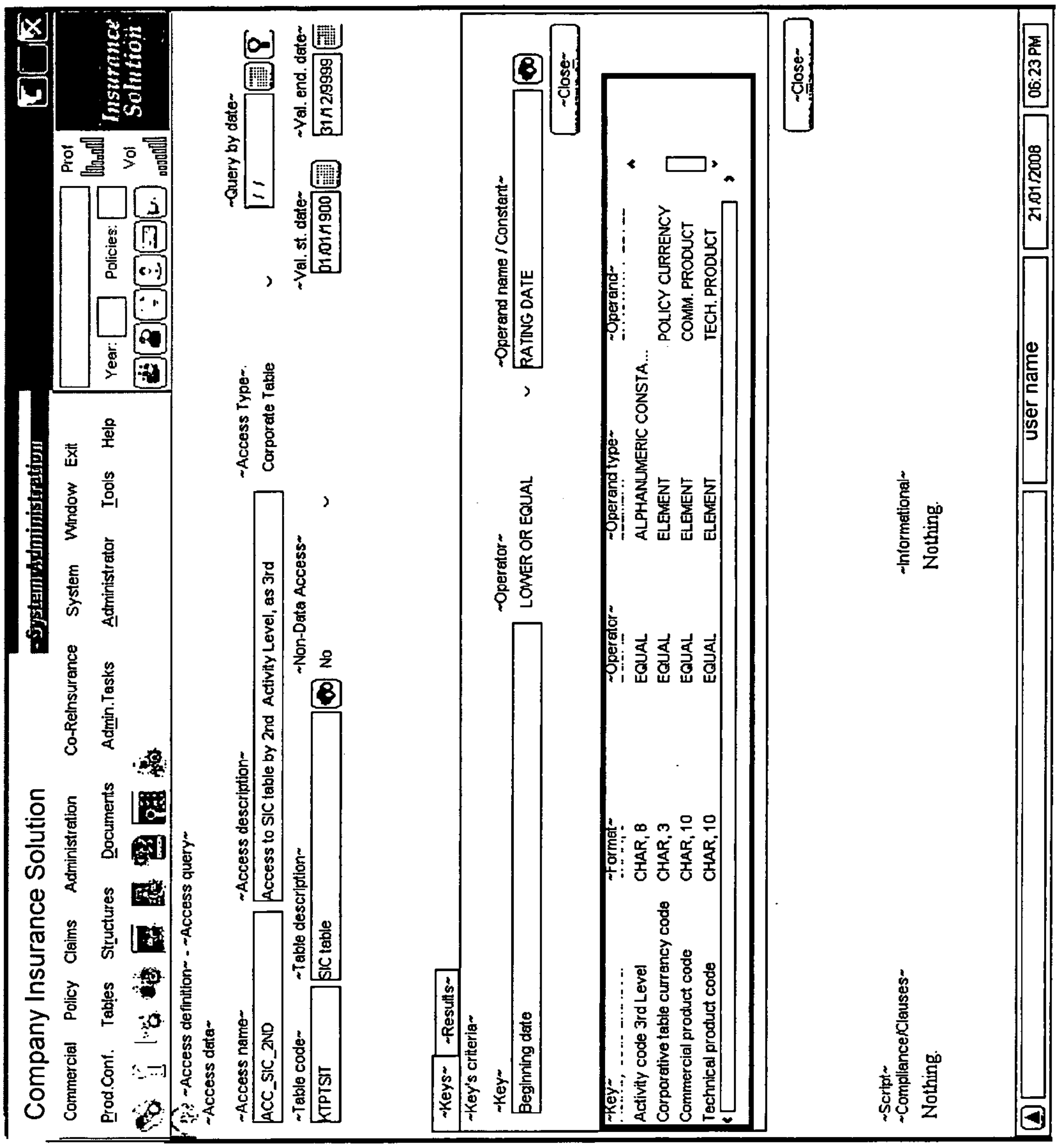
Company Insurance Solution
Commercial Policy Claims Administration Co-Reinsurance System Window Exit
Prod.Conf. Tables Structures Documents Admin.Tasks Administrator Tools Help
System Administration
Year: Policies: Prof Vol
Insurance Solution
~Access definition~ - ~Access query~
~Access data~
~Access name~
ACC_SIC_2ND
~Access description~
Access to SIC table by 2nd Activity Level, as 3rd
~Access Type~
Corporate Table
~Query by date~
/ /
~Table code~
KTPTSIT
~Table description~
SIC table
~Non-Date Access~
No
~Val. st. date~
01/01/1900
~Val. end. date~
31/12/9999
~Keys~ ~Results~
~Key's criteria~
~Key~
Beginning date
~Operator~
LOWER OR EQUAL
~Operand name / Constant~
RATING DATE
~Close~
~Key~ ~Format~ ~Operator~ ~Operand type~ ~Operand~
Activity code 3rd Level CHAR, 8 EQUAL ALPHANUMERIC CONSTA...
Corporative table currency code CHAR, 3 EQUAL ELEMENT POLICY CURRENCY
Commercial product code CHAR, 10 EQUAL ELEMENT COMM. PRODUCT
Technical product code CHAR, 10 EQUAL ELEMENT TECH. PRODUCT
~Close~
~Script~
~Compliance/Clauses~
Nothing.
~Informational~
Nothing.
user name
21/01/2008
06:23 PM

Figure 8a

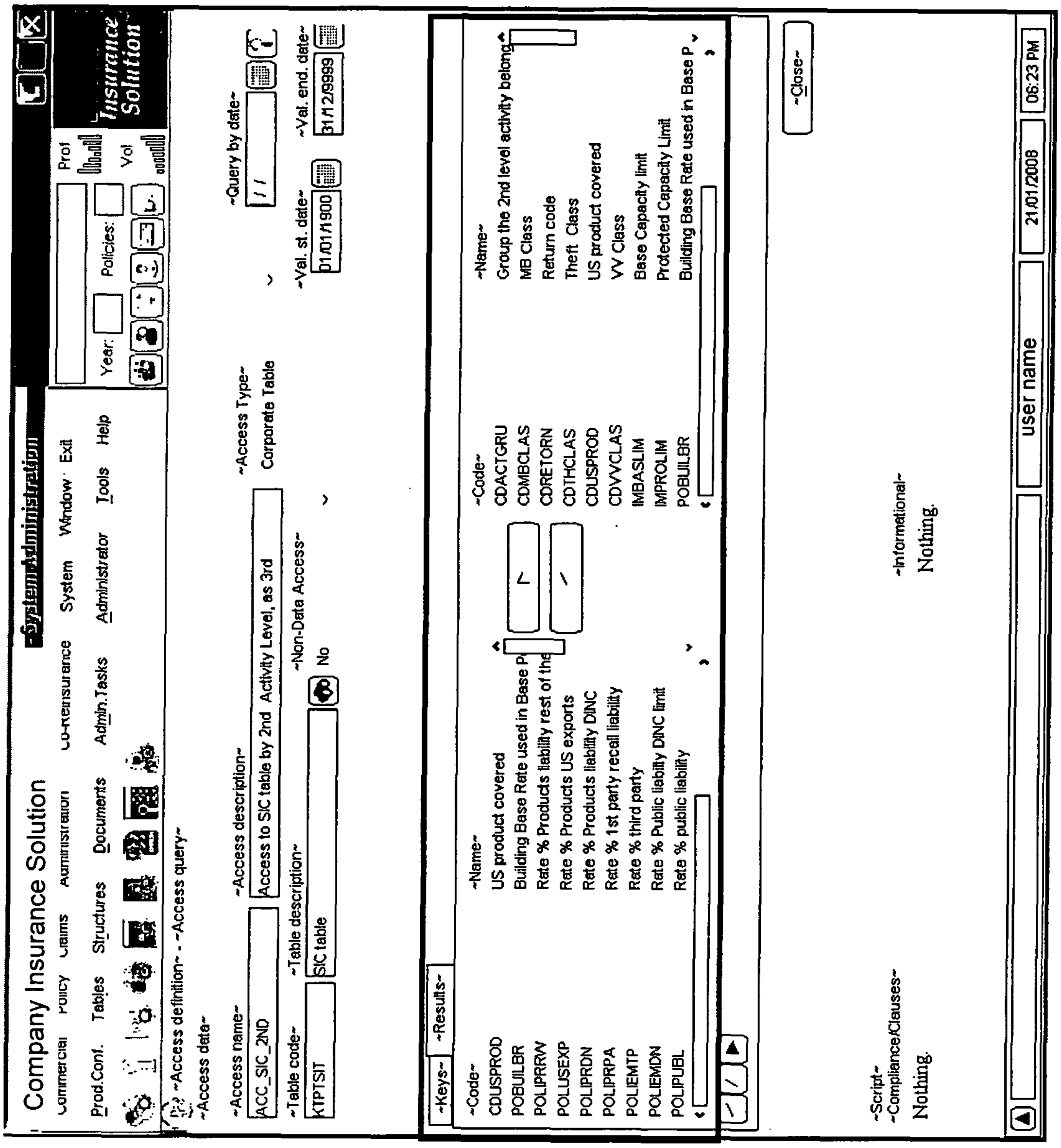
Company Insurance Solution
Commercial Policy Claims Administration Co-Reinsurance System Window Exit
Prod.Conf. Tables Structures Documents Admin.Tasks Administrator Tools Help
~System Administration~
Year: Policies: Prof Vol
Insurance Solution
~Access definition~ - ~Access query~
~Access date~
~Access name~
ACC_SIC_2ND
~Access description~
Access to SIC table by 2nd Activity Level, as 3rd
~Access Type~
Corporate Table
~Query by date~
/ /
~Table code~
KTPTSIT
~Table description~
SIC table
~Non-Data Access~
No
~Val. st. date~
01/01/1900
~Val. end. date~
31/12/9999
~Keys~ ~Results~
~Code~ ~Name~
CDUSPROD US product covered
POBUILBR Building Base Rate used in Base P
POLIPRRW Rate % Products liability rest of the
POLUSEXP Rate % Products US exports
POLIPRDN Rate % Products liability DINC
POLIPRPA Rate % 1st party recall liability
POLIEMTP Rate % third party
POLIEMDN Rate % Public liability DINC limit
POLIPUBL Rate % public liability
~Code~ ~Name~
CDACTGRU Group the 2nd level activity belong
CDMBCLAS MB Class
CDRETORN Return code
CDTHCLAS Theft Class
CDUSPROD US product covered
CDVVCLAS VV Class
IMBASLIM Base Capacity limit
IMPROLIM Protected Capacity Limit
POBUILBR Building Base Rate used in Base P
~Script~
~Compliance/Clauses~
Nothing.
~Informational~
Nothing.
~Close~
user name
21/01/2008
06:23 PM

Figure 8b

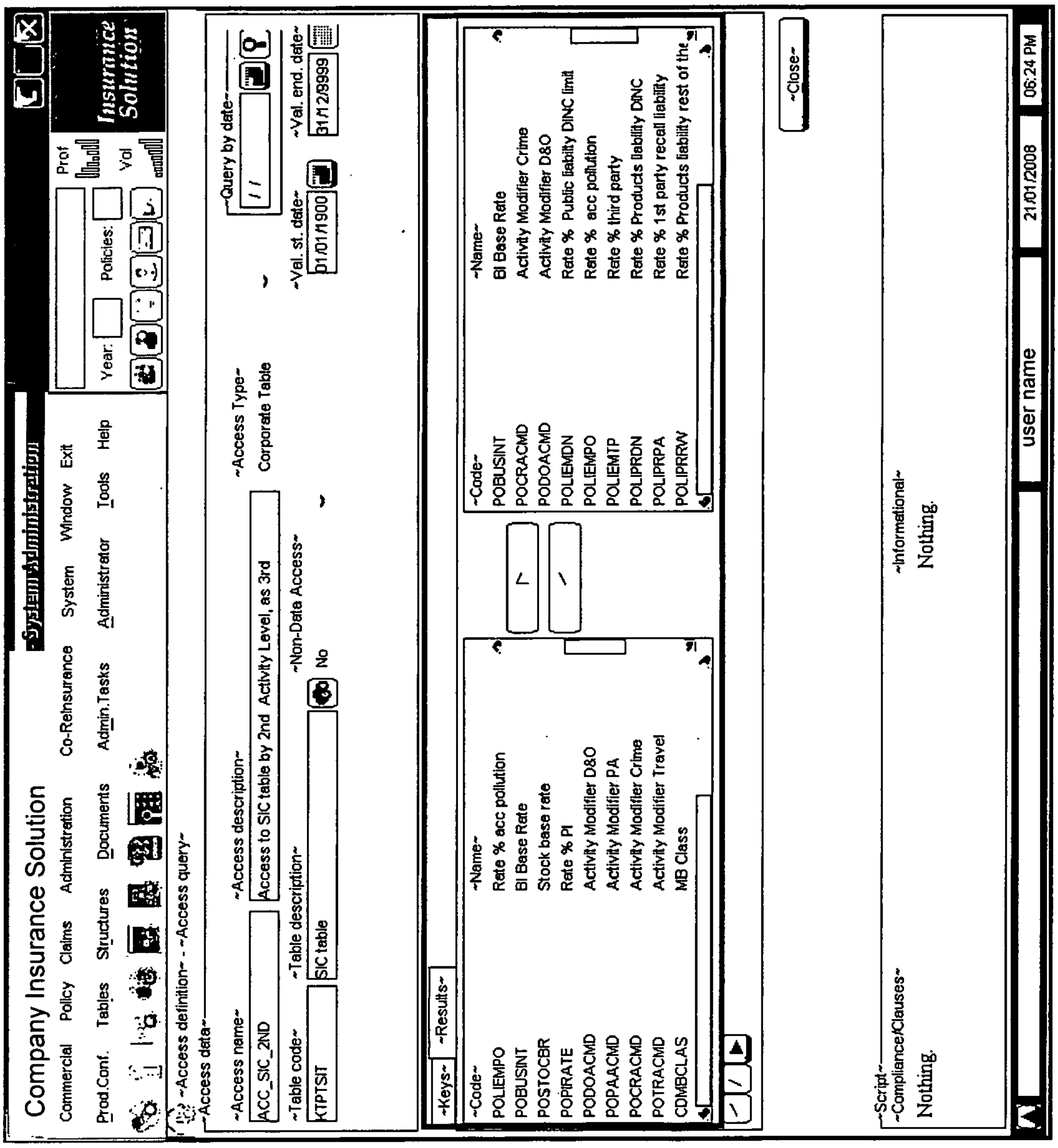
Company Insurance Solution
System Administration
Commercial Policy Claims Administration Co-Reinsurance System Window Exit
Prod.Conf. Tables Structures Documents Admin.Tasks Administrator Tools Help
Year: Policies:
Prof
Vol
Insurance Solution
~Access definition~ - ~Access query~
~Access data~
~Access name~
ACC_SIC_2ND
~Access description~
Access to SIC table by 2nd Activity Level, as 3rd
~Access Type~
Corporate Table
~Query by date~
/ /
~Table code~
KTPTSIT
~Table description~
SIC table
~Non-Data Access~
No
~Val. st. date~
01/01/1900
~Val. end. date~
31/12/9999
~Keys~ ~Results~
~Code~
POLIEMPO
POBUSINT
POSTOCBR
POPIRATE
PODOACMD
POPAACMD
POCRACMD
POTRACMD
CDMBCLAS
~Name~
Rate % acc pollution
BI Base Rate
Stock base rate
Rate % PI
Activity Modifier D&O
Activity Modifier PA
Activity Modifier Crime
Activity Modifier Travel
MB Class
~Code~
POBUSINT
POCRACMD
PODOACMD
POLIEMDN
POLIEMPO
POLIEMTP
POLIPRDN
POLIPRPA
POLIPRRW
~Name~
BI Base Rate
Activity Modifier Crime
Activity Modifier D&O
Rate % Public liability DINC limit
Rate % acc pollution
Rate % third party
Rate % Products liability DNC
Rate % 1st party recall liability
Rate % Products liability rest of the
~Close~
~Script~
~Compliance/Clauses~
Nothing.
~Informational~
Nothing.
user name
21/01/2008
06:24 PM

Figure 9

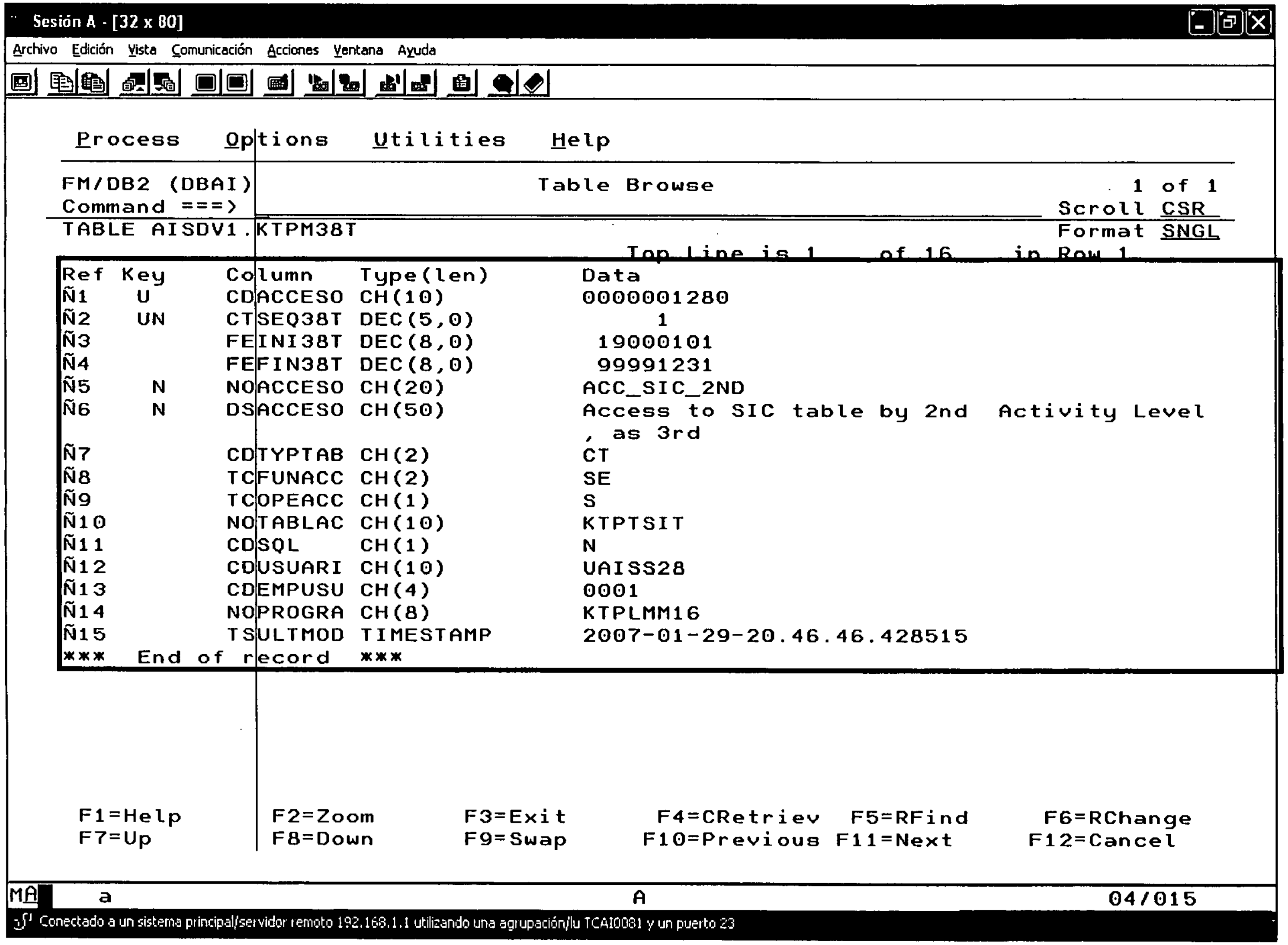
Sesión A - [32 x 80]
Archivo Edición Vista Comunicación Acciones Ventana Ayuda
Process Options Utilities Help
FM/DB2 (DBAI) Table Browse 1 of 1
Command ===> Scroll CSR
TABLE AISDV1.KTPM38T Format SNGL
Top Line is 1 of 16 in Row 1
Ref Key Column Type(len) Data
Ñ1 U CDACCESO CH(10) 0000001280
Ñ2 UN CTSEQ38T DEC(5,0) 1
Ñ3 FEINI38T DEC(8,0) 19000101
Ñ4 FEFIN38T DEC(8,0) 99991231
Ñ5 N NOACCESO CH(20) ACC_SIC_2ND
Ñ6 N DSACCESO CH(50) Access to SIC table by 2nd Activity Level
, as 3rd
Ñ7 CDTYPTAB CH(2) CT
Ñ8 TCFUNACC CH(2) SE
Ñ9 TCOPEACC CH(1) S
Ñ10 NOTABLAC CH(10) KTPTSIT
Ñ11 CDSQL CH(1) N
Ñ12 CDUSUARI CH(10) UAISS28
Ñ13 CDEMPUSU CH(4) 0001
Ñ14 NOPROGRA CH(8) KTPLMM16
Ñ15 TSULTMOD TIMESTAMP 2007-01-29-20.46.46.428515
*** End of record ***
F1=Help F2=Zoom F3=Exit F4=CRetriev F5=RFind F6=RChange
F7=Up F8=Down F9=Swap F10=Previous F11=Next F12=Cancel
MA a A 04/015
Conectado a un sistema principal/servidor remoto 192.168.1.1 utilizando una agrupación/lu TCAI0081 y un puerto 23

Figure 10a

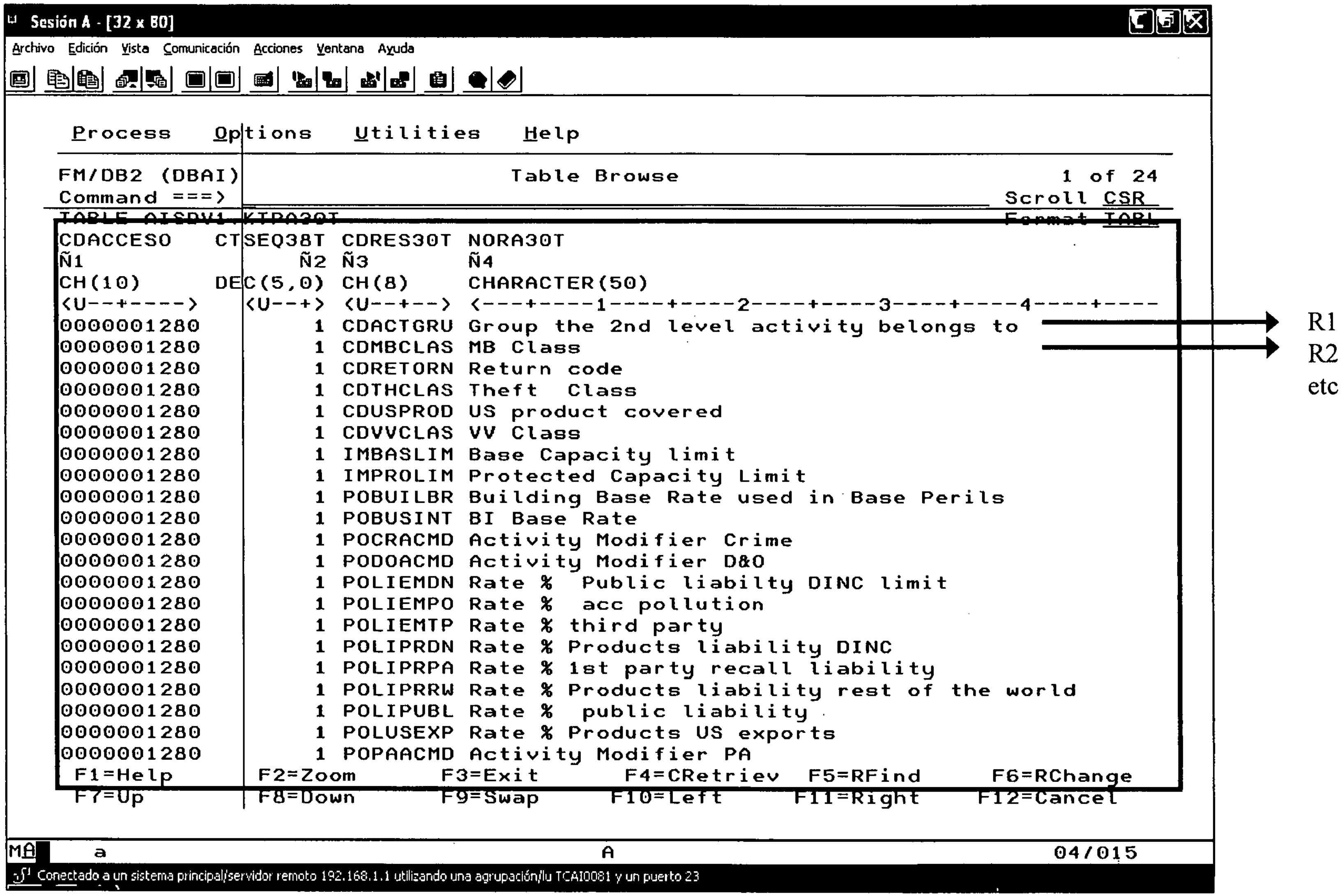
Sesión A - [32 x 80]
Archivo Edición Vista Comunicación Acciones Ventana Ayuda
Process Options Utilities Help
FM/DB2 (DBAI) Table Browse 1 of 24
Command ===> Scroll CSR
CDACCESO CTSEQ38T CDRES30T NORA30T
Ñ1 Ñ2 Ñ3 Ñ4
CH(10) DEC(5,0) CH(8) CHARACTER(50)
<U--+----> <U--+> <U--+--> <---+----1----+----2----+----3----+----4----+----
0000001280 1 CDACTGRU Group the 2nd level activity belongs to
0000001280 1 CDMBCLAS MB Class
0000001280 1 CDRETORN Return code
0000001280 1 CDTHCLAS Theft Class
0000001280 1 CDUSPROD US product covered
0000001280 1 CDVVCLAS VV Class
0000001280 1 IMBASLIM Base Capacity limit
0000001280 1 IMPROLIM Protected Capacity Limit
0000001280 1 POBUILBR Building Base Rate used in Base Perils
0000001280 1 POBUSINT BI Base Rate
0000001280 1 POCRACMD Activity Modifier Crime
0000001280 1 PODOACMD Activity Modifier D&O
0000001280 1 POLIEMDN Rate % Public liabilty DINC limit
0000001280 1 POLIEMPO Rate % acc pollution
0000001280 1 POLIEMTP Rate % third party
0000001280 1 POLIPRDN Rate % Products liability DINC
0000001280 1 POLIPRPA Rate % 1st party recall liability
0000001280 1 POLIPRRW Rate % Products liability rest of the world
0000001280 1 POLIPUBL Rate % public liability
0000001280 1 POLUSEXP Rate % Products US exports
0000001280 1 POPAACMD Activity Modifier PA
F1=Help F2=Zoom F3=Exit F4=CRetriev F5=RFind F6=RChange
F7=Up F8=Down F9=Swap F10=Left F11=Right F12=Cancel
MA a A 04/015
Conectado a un sistema principal/servidor remoto 192.168.1.1 utilizando una agrupación/lu TCAI0081 y un puerto 23
R1
R2
etc

Figure 10b

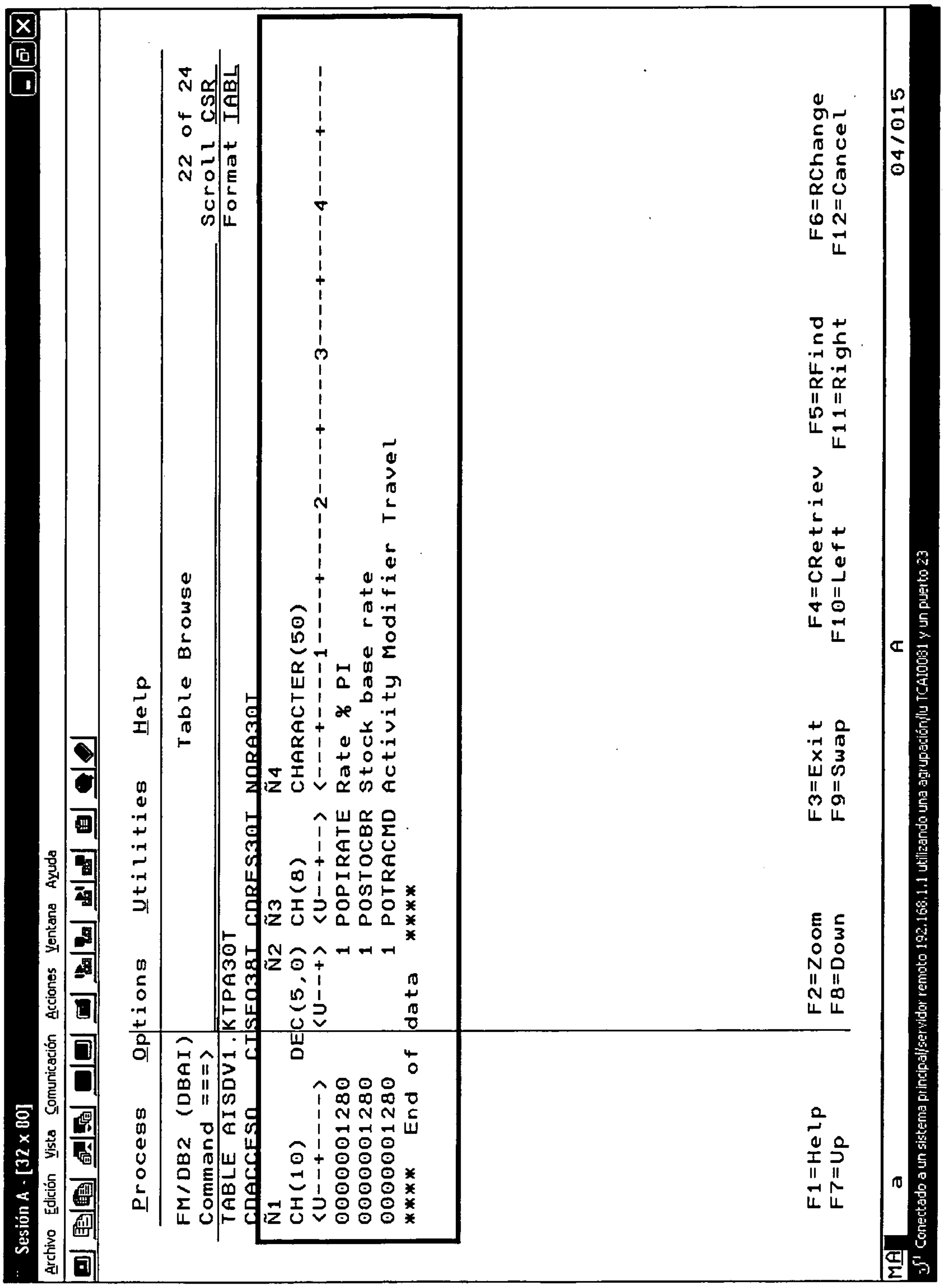
Sesión A - [32 x 80]
Archivo Edición Vista Comunicación Acciones Ventana Ayuda
Process Options Utilities Help
FM/DB2 (DBAI) Table Browse 22 of 24
Command ===> Scroll CSR
TABLE AISDV1.KTPA30T Format TABL
CDACCESO CTSEQ38T CDRES30T NORA30T
Ñ1 Ñ2 Ñ3 Ñ4
CH(10) DEC(5,0) CH(8) CHARACTER(50)
<U--+----> <U--+> <U--+--> <---+----1----+----2----+----3----+----4----+----
0000001280 1 POPIRATE Rate % PI
0000001280 1 POSTOCBR Stock base rate
0000001280 1 POTRACMD Activity Modifier Travel
**** End of data ****
F1=Help F2=Zoom F3=Exit F4=CRetriev F5=RFind F6=RChange
F7=Up F8=Down F9=Swap F10=Left F11=Right F12=Cancel
MA a A 04/015
Conectado a un sistema principal/servidor remoto 192.168.1.1 utilizando una agrupación/lu TCAI0081 y un puerto 23

Figure 11a

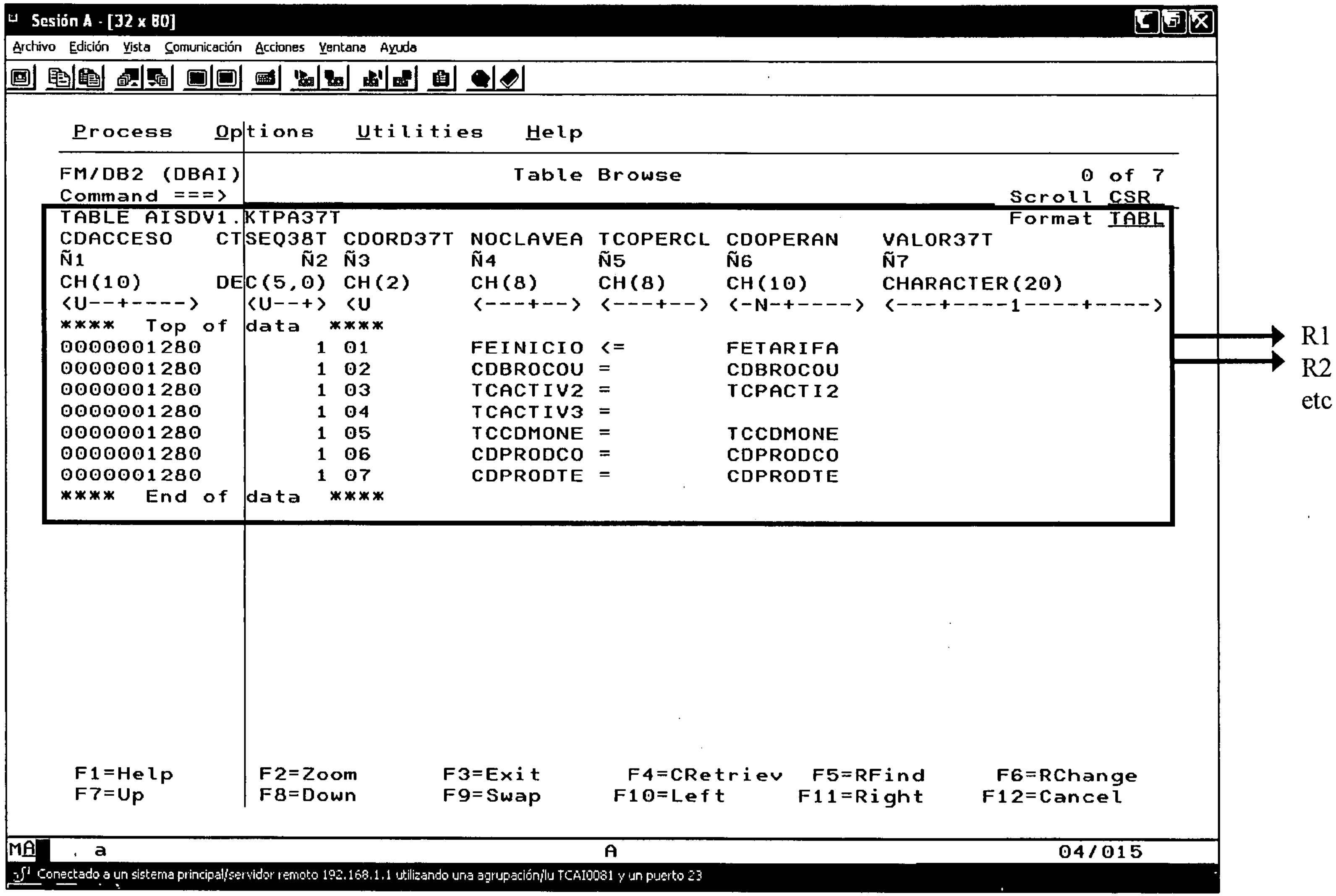
Sesión A - [32 x 80]
Archivo Edición Vista Comunicación Acciones Ventana Ayuda
Process Options Utilities Help
FM/DB2 (DBAI) Table Browse 0 of 7
Command ===> Scroll CSR
TABLE AISDV1.KTPA37T Format TABL
CDACCESO CTSEQ38T CDORD37T NOCLAVEA TCOPERCL CDOPERAN VALOR37T
Ñ1 Ñ2 Ñ3 Ñ4 Ñ5 Ñ6 Ñ7
CH(10) DEC(5,0) CH(2) CH(8) CH(8) CH(10) CHARACTER(20)
<U--+-----> <U--+> <U <---+--> <---+--> <-N-+----> <---+----1----+---->
**** Top of data ****
0000001280 1 01 FEINICIO <= FETARIFA
0000001280 1 02 CDBROCOU = CDBROCOU
0000001280 1 03 TCACTIV2 = TCPACTI2
0000001280 1 04 TCACTIV3 =
0000001280 1 05 TCCDMONE = TCCDMONE
0000001280 1 06 CDPRODCO = CDPRODCO
0000001280 1 07 CDPRODTE = CDPRODTE
**** End of data ****
F1=Help F2=Zoom F3=Exit F4=CRetriev F5=RFind F6=RChange
F7=Up F8=Down F9=Swap F10=Left F11=Right F12=Cancel
MA . a A 04/015
Conectado a un sistema principal/servidor remoto 192.168.1.1 utilizando una agrupación/lu TCAI0081 y un puerto 23
R1
R2
etc

Figure 11b

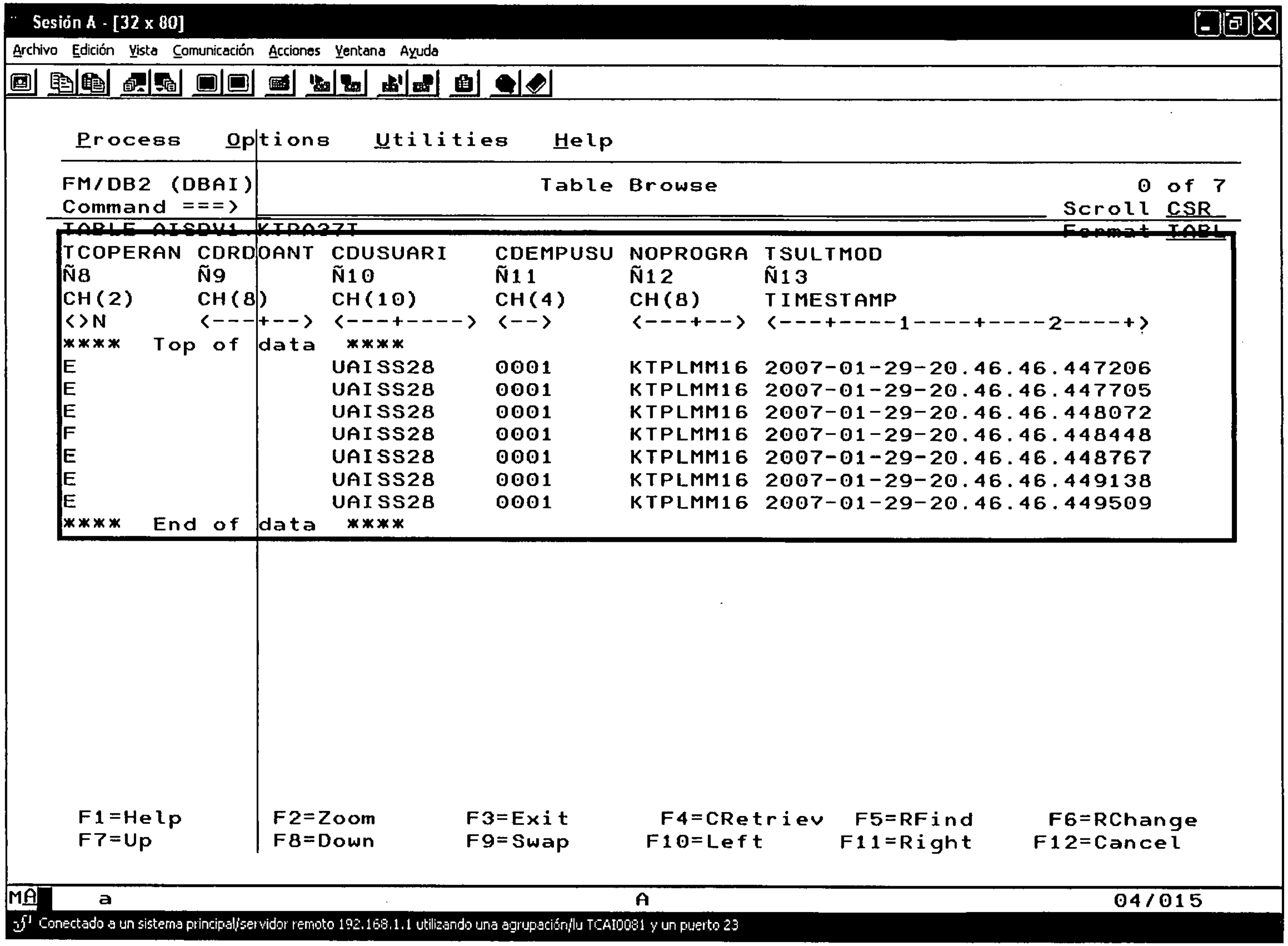
Sesión A - [32 x 80]
Archivo Edición Vista Comunicación Acciones Ventana Ayuda
Process Options Utilities Help
FM/DB2 (DBAI) Table Browse 0 of 7
Command ===> Scroll CSR
TCOPERAN CDRDOANT CDUSUARI CDEMPUSU NOPROGRA TSULTMOD
Ñ8 Ñ9 Ñ10 Ñ11 Ñ12 Ñ13
CH(2) CH(8) CH(10) CH(4) CH(8) TIMESTAMP
<>N <---+--> <---+----> <--> <---+--> <---+----1----+----2----+>
**** Top of data ****
E UAISS28 0001 KTPLMM16 2007-01-29-20.46.46.447206
E UAISS28 0001 KTPLMM16 2007-01-29-20.46.46.447705
E UAISS28 0001 KTPLMM16 2007-01-29-20.46.46.448072
F UAISS28 0001 KTPLMM16 2007-01-29-20.46.46.448448
E UAISS28 0001 KTPLMM16 2007-01-29-20.46.46.448767
E UAISS28 0001 KTPLMM16 2007-01-29-20.46.46.449138
E UAISS28 0001 KTPLMM16 2007-01-29-20.46.46.449509
**** End of data ****
F1=Help F2=Zoom F3=Exit F4=CRetriev F5=RFind F6=RChange
F7=Up F8=Down F9=Swap F10=Left F11=Right F12=Cancel
MA a A 04/015
Conectado a un sistema principal/servidor remoto 192.168.1.1 utilizando una agrupación/lu TCAI0081 y un puerto 23

Figure 12a

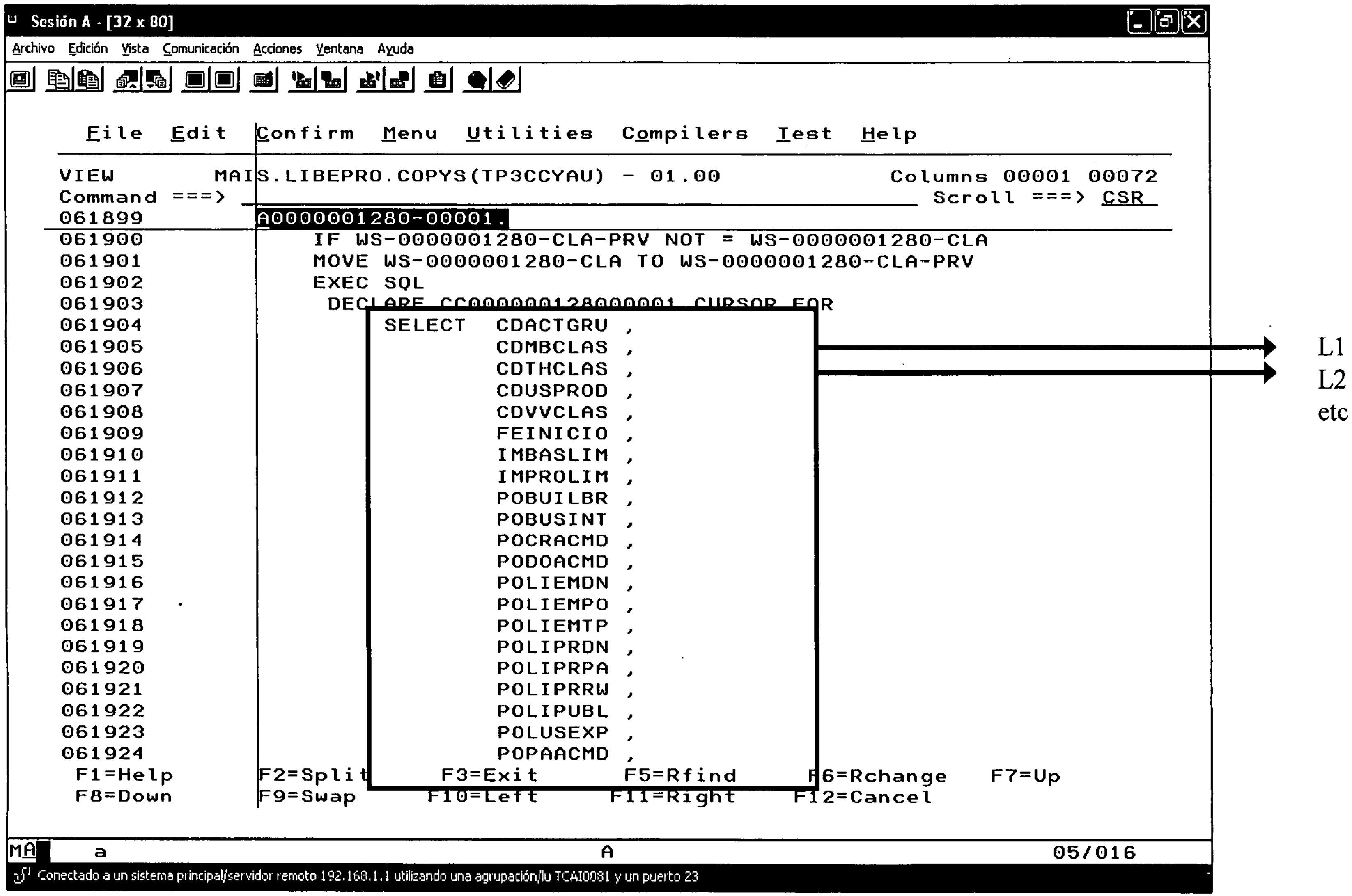
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TP3CCYAU) - 01.00 Columns 00001 00072
Command ===> Scroll ===> CSR
061899 A0000001280-00001.
061900 IF WS-0000001280-CLA-PRV NOT = WS-0000001280-CLA
061901 MOVE WS-0000001280-CLA TO WS-0000001280-CLA-PRV
061902 EXEC SQL
061903 DECLARE CC000000128000001 CURSOR FOR
061904 SELECT CDACTGRU ,
061905 CDMBCLAS ,
061906 CDTHCLAS ,
061907 CDUSPROD ,
061908 CDVVCLAS ,
061909 FEINICIO ,
061910 IMBASLIM ,
061911 IMPROLIM ,
061912 POBUILBR ,
061913 POBUSINT ,
061914 POCRACMD ,
061915 PODOACMD ,
061916 POLIEMDN ,
061917 POLIEMPO ,
061918 POLIEMTP ,
061919 POLIPRDN ,
061920 POLIPRPA ,
061921 POLIPRRW ,
061922 POLIPUBL ,
061923 POLUSEXP ,
061924 POPAACMD ,
F1=Help F2=Split F3=Exit F5=Rfind F6=Rchange F7=Up
F8=Down F9=Swap F10=Left F11=Right F12=Cancel
MA a A 05/016
Conectado a un sistema principal/servidor remoto 192.168.1.1 utilizando una agrupación/lu TCAI0081 y un puerto 23
L1
L2
etc

Figure 12b

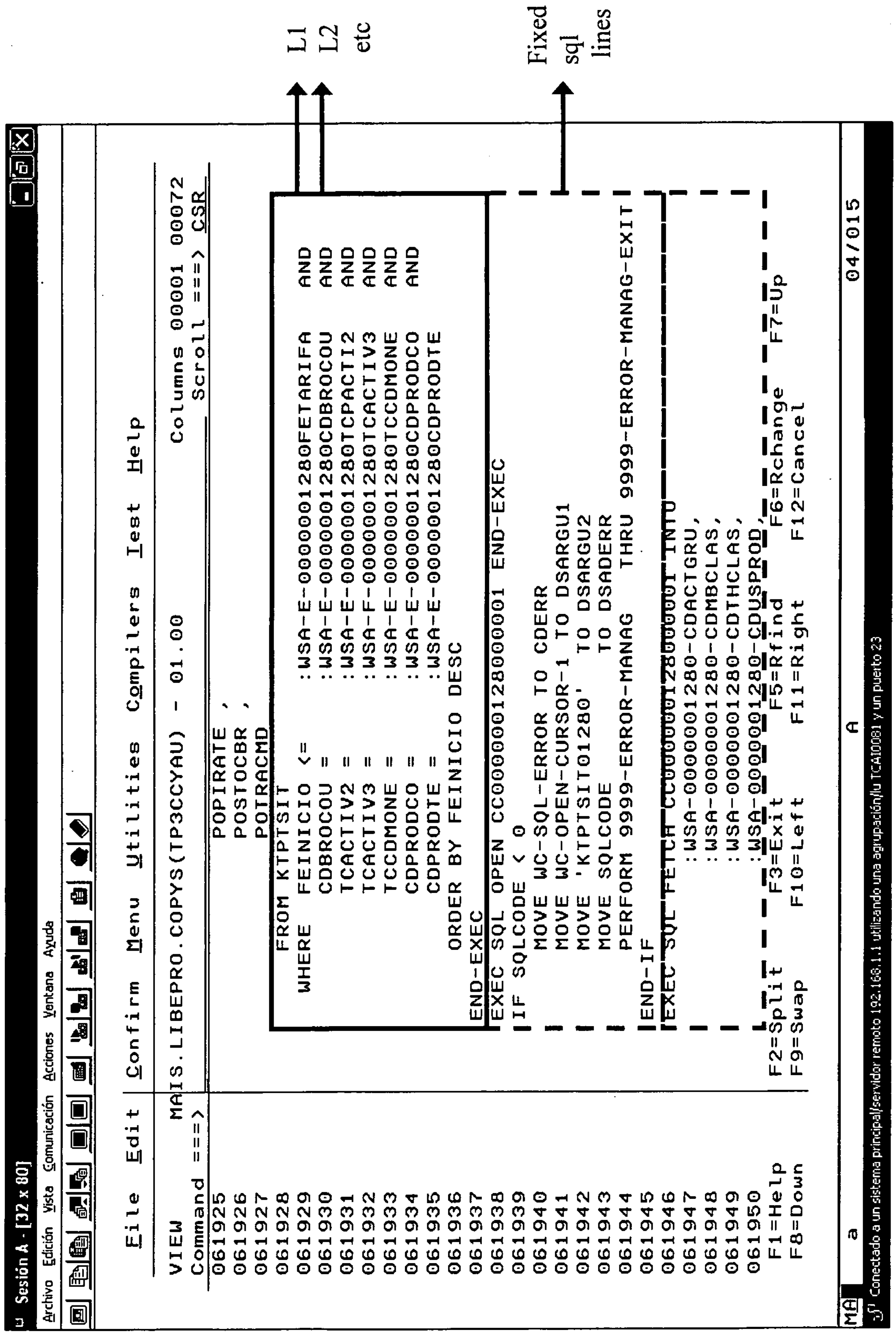
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TP3CCYAU) - 01.00 Columns 00001 00072
Command ===> Scroll ===> CSR
061925 POPIRATE ,
061926 POSTOCBR ,
061927 POTRACMD
061928 FROM KTPTSIT
061929 WHERE FEINICIO <= :WSA-E-000000128OFETARIFA AND
061930 CDBROCOU = :WSA-E-000000128OCDBROCOU AND
061931 TCACTIV2 = :WSA-E-000000128OTCPACTI2 AND
061932 TCACTIV3 = :WSA-F-000000128OTCACTIV3 AND
061933 TCCDMONE = :WSA-E-000000128OTCCDMONE AND
061934 CDPRODCO = :WSA-E-000000128OCDPRODCO AND
061935 CDPRODTE = :WSA-E-000000128OCDPRODTE
061936 ORDER BY FEINICIO DESC
061937 END-EXEC
061938 EXEC SQL OPEN CC00000001280000001 END-EXEC
061939 IF SQLCODE < 0
061940 MOVE WC-SQL-ERROR TO CDERR
061941 MOVE WC-OPEN-CURSOR-1 TO DSARGU1
061942 MOVE 'KTPTSIT01280' TO DSARGU2
061943 MOVE SQLCODE TO DSADERR
061944 PERFORM 9999-ERROR-MANAG THRU 9999-ERROR-MANAG-EXIT
061945 END-IF
061946 EXEC SQL FETCH CC00000001280000001 INTO
061947 :WSA-0000001280-CDACTGRU,
061948 :WSA-0000001280-CDMBCLAS,
061949 :WSA-0000001280-CDTHCLAS,
061950 :WSA-0000001280-CDUSPROD,
F1=Help F2=Split F3=Exit F5=Rfind F6=Rchange F7=Up
F8=Down F9=Swap F10=Left F11=Right F12=Cancel
MA a A 04/015
Conectado a un sistema principal/servidor remoto 192.168.1.1 utilizando una agrupación/lu TCA10081 y un puerto 23
L1
L2
etc
Fixed
sql
lines

Figure 12c

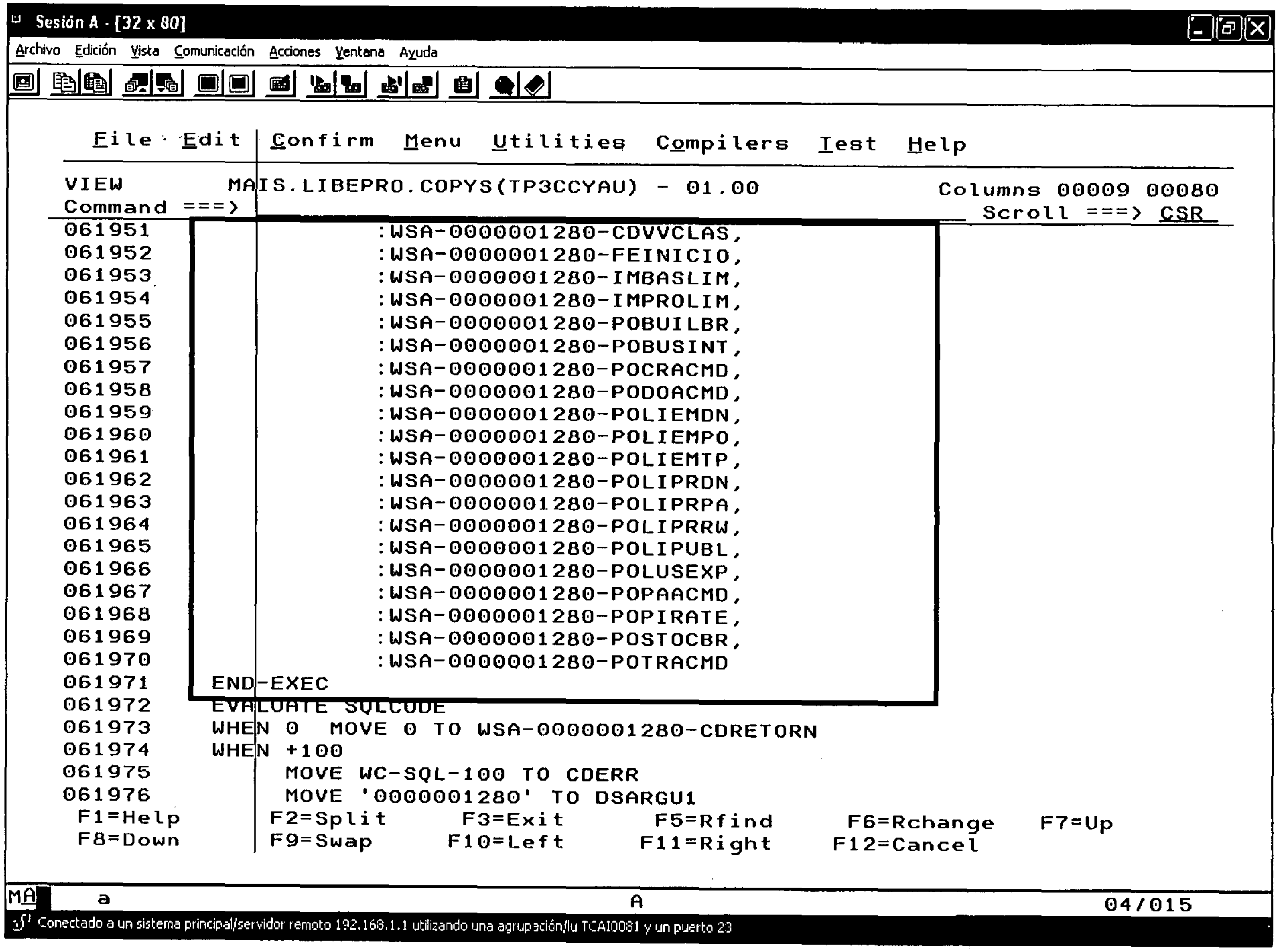
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TP3CCYAU) - 01.00 Columns 00009 00080
Command ===> Scroll ===> CSR
061951 :WSA-0000001280-CDVVCLAS,
061952 :WSA-0000001280-FEINICIO,
061953 :WSA-0000001280-IMBASLIM,
061954 :WSA-0000001280-IMPROLIM,
061955 :WSA-0000001280-POBUILBR,
061956 :WSA-0000001280-POBUSINT,
061957 :WSA-0000001280-POCRACMD,
061958 :WSA-0000001280-PODOACMD,
061959 :WSA-0000001280-POLIEMDN,
061960 :WSA-0000001280-POLIEMPO,
061961 :WSA-0000001280-POLIEMTP,
061962 :WSA-0000001280-POLIPRDN,
061963 :WSA-0000001280-POLIPRPA,
061964 :WSA-0000001280-POLIPRRW,
061965 :WSA-0000001280-POLIPUBL,
061966 :WSA-0000001280-POLUSEXP,
061967 :WSA-0000001280-POPAACMD,
061968 :WSA-0000001280-POPIRATE,
061969 :WSA-0000001280-POSTOCBR,
061970 :WSA-0000001280-POTRACMD
061971 END-EXEC
061972 EVALUATE SQLCODE
061973 WHEN 0 MOVE 0 TO WSA-0000001280-CDRETORN
061974 WHEN +100
061975 MOVE WC-SQL-100 TO CDERR
061976 MOVE '0000001280' TO DSARGU1
F1=Help F2=Split F3=Exit F5=Rfind F6=Rchange F7=Up
F8=Down F9=Swap F10=Left F11=Right F12=Cancel
MA a A 04/015
Conectado a un sistema principal/servidor remoto 192.168.1.1 utilizando una agrupación/lu TCAI0081 y un puerto 23

Figure 12d

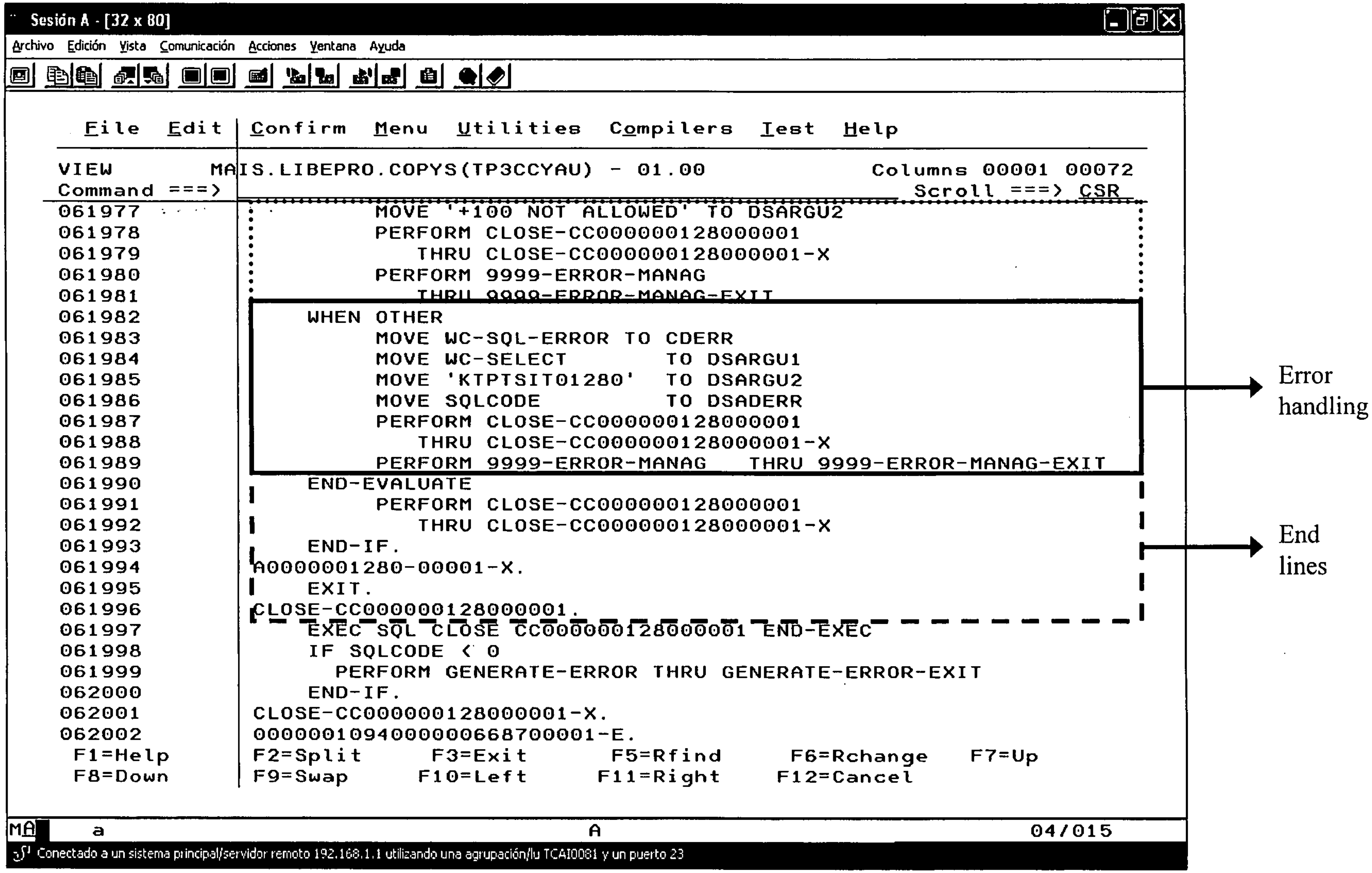
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TP3CCYAU) - 01.00 Columns 00001 00072
Command ===> Scroll ===> CSR
061977 MOVE '+100 NOT ALLOWED' TO DSARGU2
061978 PERFORM CLOSE-CC000000128000001
061979 THRU CLOSE-CC000000128000001-X
061980 PERFORM 9999-ERROR-MANAG
061981 THRU 9999-ERROR-MANAG-EXIT
061982 WHEN OTHER
061983 MOVE WC-SQL-ERROR TO CDERR
061984 MOVE WC-SELECT TO DSARGU1
061985 MOVE 'KTPTSIT01280' TO DSARGU2
061986 MOVE SQLCODE TO DSADERR
061987 PERFORM CLOSE-CC000000128000001
061988 THRU CLOSE-CC000000128000001-X
061989 PERFORM 9999-ERROR-MANAG THRU 9999-ERROR-MANAG-EXIT
061990 END-EVALUATE
061991 PERFORM CLOSE-CC000000128000001
061992 THRU CLOSE-CC000000128000001-X
061993 END-IF.
061994 A0000001280-00001-X.
061995 EXIT.
061996 CLOSE-CC000000128000001.
061997 EXEC SQL CLOSE CC000000128000001 END-EXEC
061998 IF SQLCODE < 0
061999 PERFORM GENERATE-ERROR THRU GENERATE-ERROR-EXIT
062000 END-IF.
062001 CLOSE-CC000000128000001-X.
062002 000000109400000066870001-E.
F1=Help F2=Split F3=Exit F5=Rfind F6=Rchange F7=Up
F8=Down F9=Swap F10=Left F11=Right F12=Cancel
MA a A 04/015
Conectado a un sistema principal/servidor remoto 192.168.1.1 utilizando una agrupación/lu TCAI0081 y un puerto 23
Error handling
End lines

Figure 13

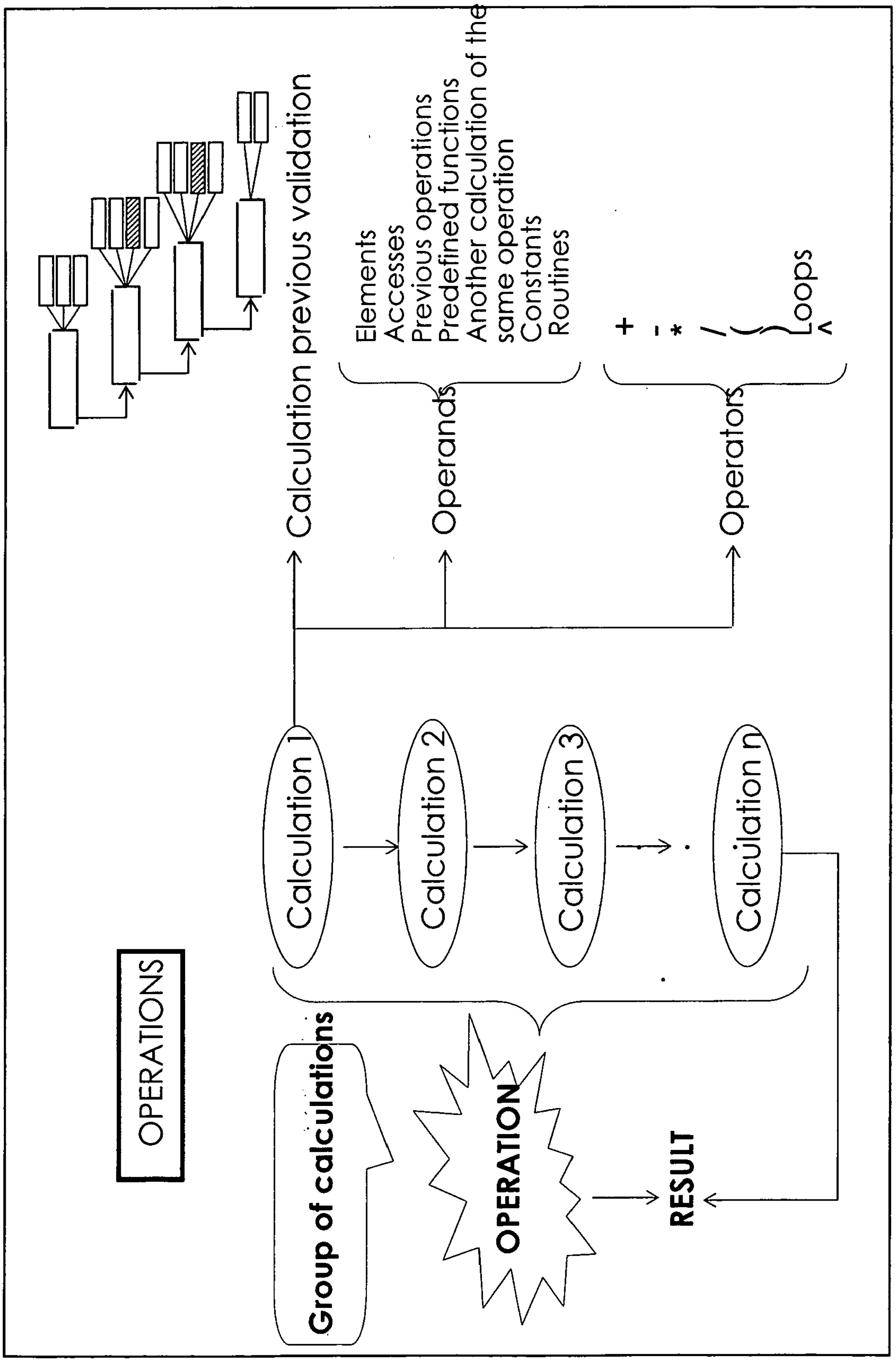
OPERATIONS
Group of calculations
OPERATION
RESULT
Calculation 1
Calculation 2
Calculation 3
Calculation n
Calculation previous validation
Operands
Elements
Accesses
Previous operations
Predefined functions
Another calculation of the same operation
Constants
Routines
Operators
+
-
*
/
(
)
Loops
^

Figure 14a

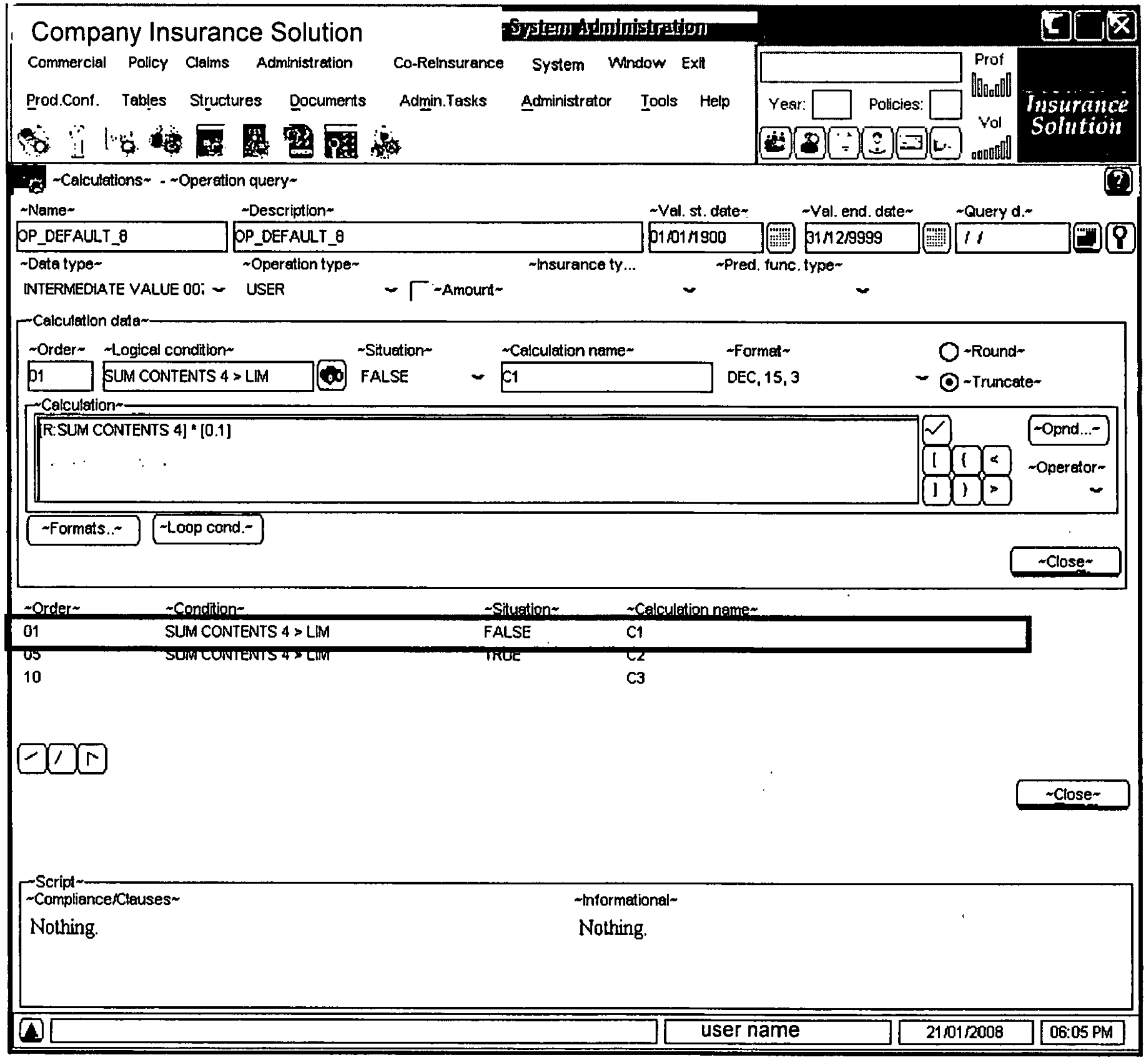
Company Insurance Solution
System Administration
Commercial Policy Claims Administration Co-Reinsurance System Window Exit
Prod.Conf. Tables Structures Documents Admin.Tasks Administrator Tools Help
Year: Policies:
Prof
Vol
Insurance Solution
~Calculations~ - ~Operation query~
~Name~
OP_DEFAULT_8
~Description~
OP_DEFAULT_8
~Val. st. date~
01/01/1900
~Val. end. date~
31/12/9999
~Query d.~
/ /
~Data type~
INTERMEDIATE VALUE 00
~Operation type~
USER
~Amount~
~Insurance ty...
~Pred. func. type~
Calculation data~
~Order~
01
~Logical condition~
SUM CONTENTS 4 > LIM
~Situation~
FALSE
~Calculation name~
C1
~Format~
DEC, 15, 3
~Round~
~Truncate~
~Calculation~
R:SUM CONTENTS 4] * [0.1]
~Opnd...~
~Operator~
~Formats..~
~Loop cond.~
~Close~
~Order~ ~Condition~ ~Situation~ ~Calculation name~
01 SUM CONTENTS 4 > LIM FALSE C1
05 SUM CONTENTS 4 > LIM TRUE C2
10 C3
~Close~
~Script~
~Compliance/Clauses~
Nothing.
~Informational~
Nothing.
user name
21/01/2008
06:05 PM

Figure 14b

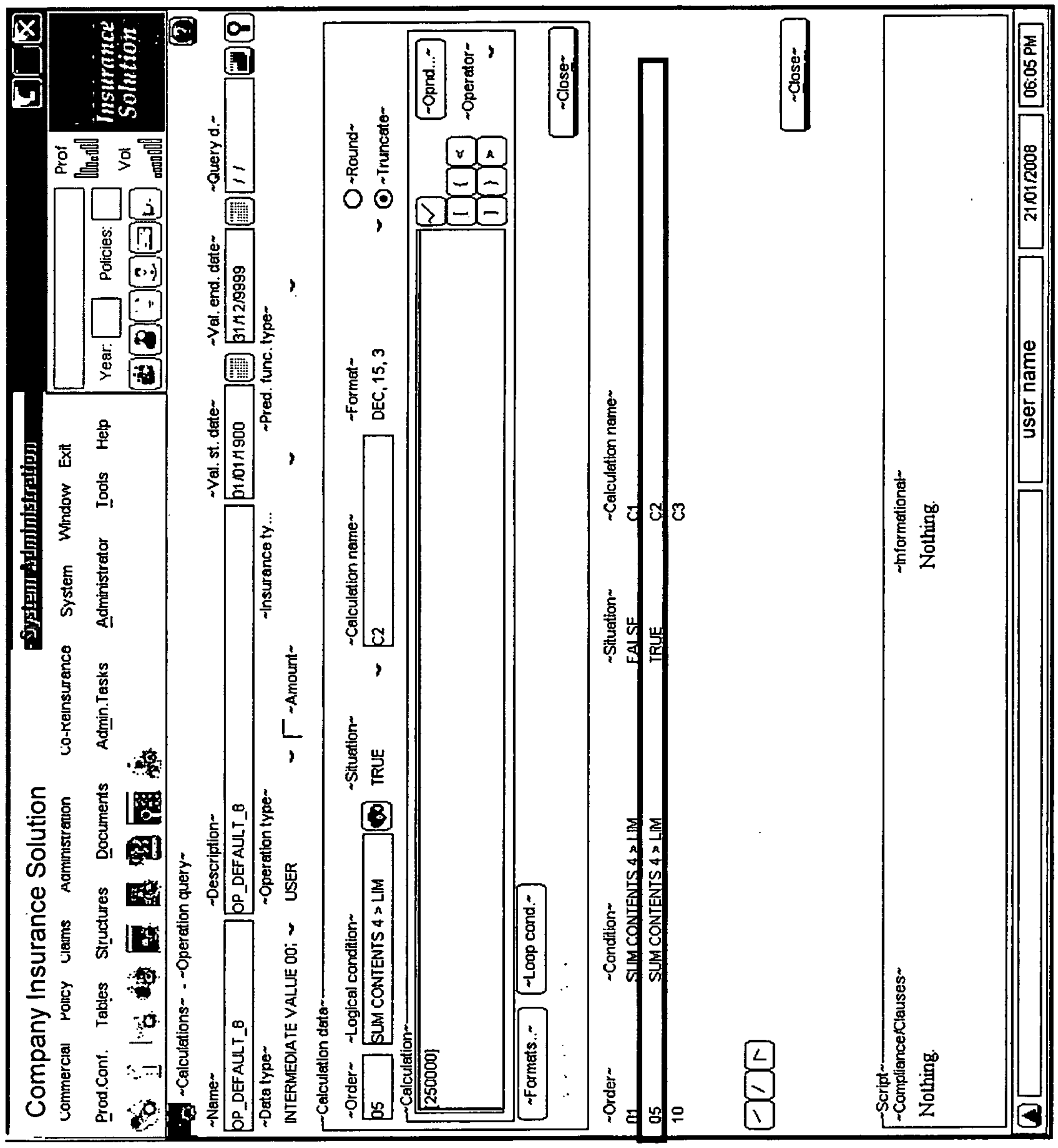
Company Insurance Solution
System Administration
Commercial Policy Claims Administration Co-Reinsurance System Window Exit
Prod.Conf. Tables Structures Documents Admin.Tasks Administrator Tools Help
Year: Policies:
Prof
Vol
Insurance Solution
~Calculations~ - ~Operation query~
~Name~
OP_DEFAULT_8
~Description~
OP_DEFAULT_8
~Val. st. date~
01/01/1900
~Val. end. date~
31/12/9999
~Query d.~
/ /
~Data type~
INTERMEDIATE VALUE 00
~Operation type~
USER
~Amount~
~Insurance ty...
~Pred. func. type~
~Calculation data~
~Order~
05
~Logical condition~
SUM CONTENTS 4 > LIM
~Situation~
TRUE
~Calculation name~
C2
~Format~
DEC, 15, 3
~Round~
~Truncate~
~Calculation~
[250000]
~Opnd...~
~Operator~
~Formats...~
~Loop cond.~
~Close~
~Order~
~Condition~
~Situation~
~Calculation name~
01 SUM CONTENTS 4 > LIM FALSE C1
05 SUM CONTENTS 4 > LIM TRUE C2
10 C3
~Close~
~Script~
~Compliance/Clauses~
Nothing.
~Informational~
Nothing.
user name
21/01/2008
06:05 PM

Figure 14c

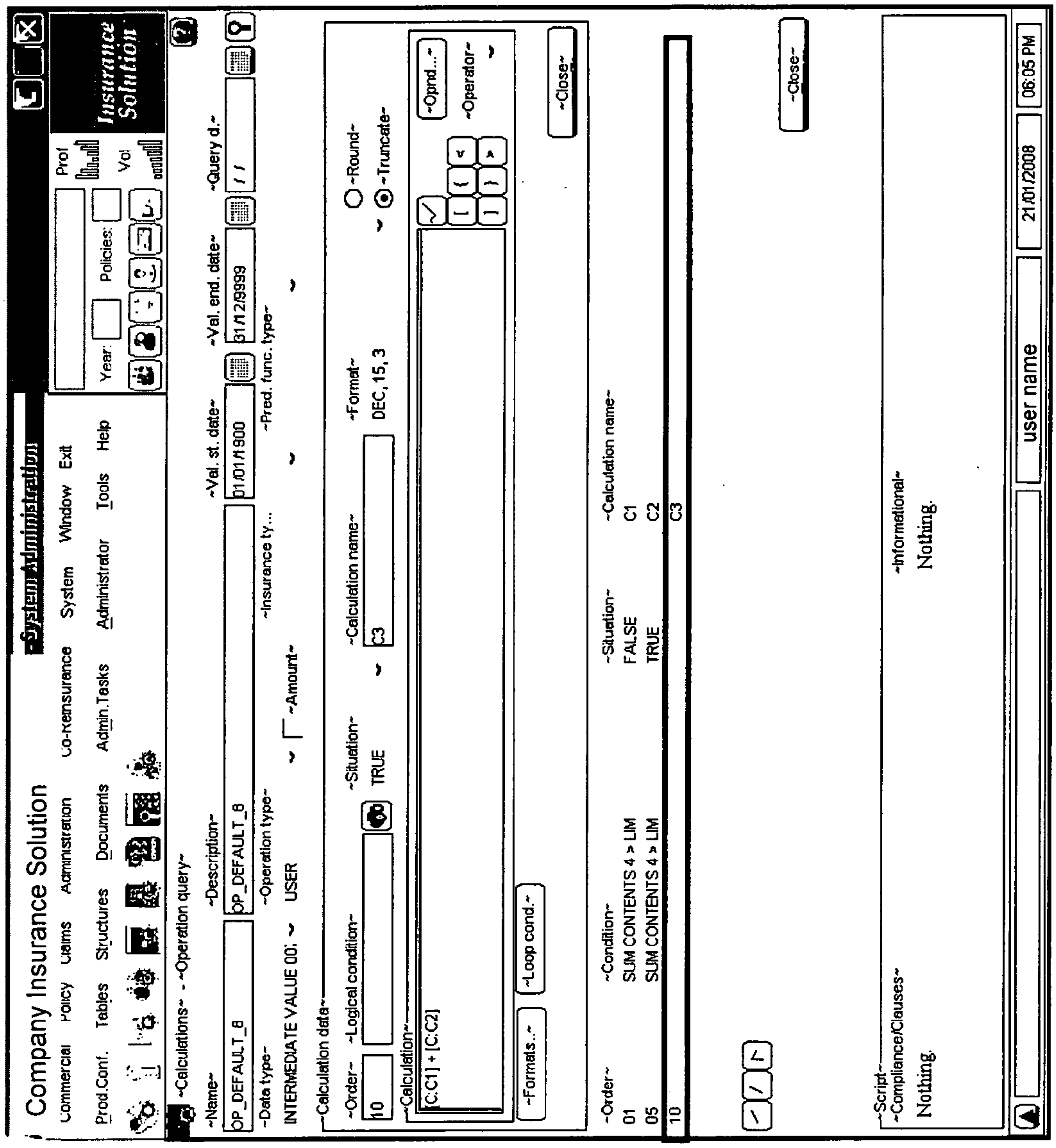
Company Insurance Solution
Commercial Policy Claims Administration Co-Reinsurance System Administration
Prod.Conf. Tables Structures Documents Admin.Tasks Administrator Tools Help
System Window Exit
Year: Policies: Prof Vol
Insurance Solution
-Calculations- - -Operation query-
-Name- OP_DEFAULT_8
-Description- OP_DEFAULT_8
-Val. st. date- 01/01/1900
-Val. end. date- 31/12/9999
-Query d.- / /
-Data type- INTERMEDIATE VALUE 00:
-Operation type- USER
-Amount-
-Insurance ty...
-Pred. func. type-
-Calculation data-
-Order- 10
-Logical condition-
-Situation- TRUE
-Calculation name- C3
-Format- DEC, 15, 3
-Round-
-Truncate-
-Calculation- [C:C1] + [C:C2]
-Opnd...-
-Operator-
-Formats..-
-Loop cond.-
-Close-
-Order- -Condition- -Situation- -Calculation name-
01 SUM CONTENTS 4 > LIM FALSE C1
05 SUM CONTENTS 4 > LIM TRUE C2
10 C3
-Close-
-Script-
-Compliance/Clauses- Nothing.
-Informational- Nothing.
user name
21/01/2008
06:05 PM

Figure 14d

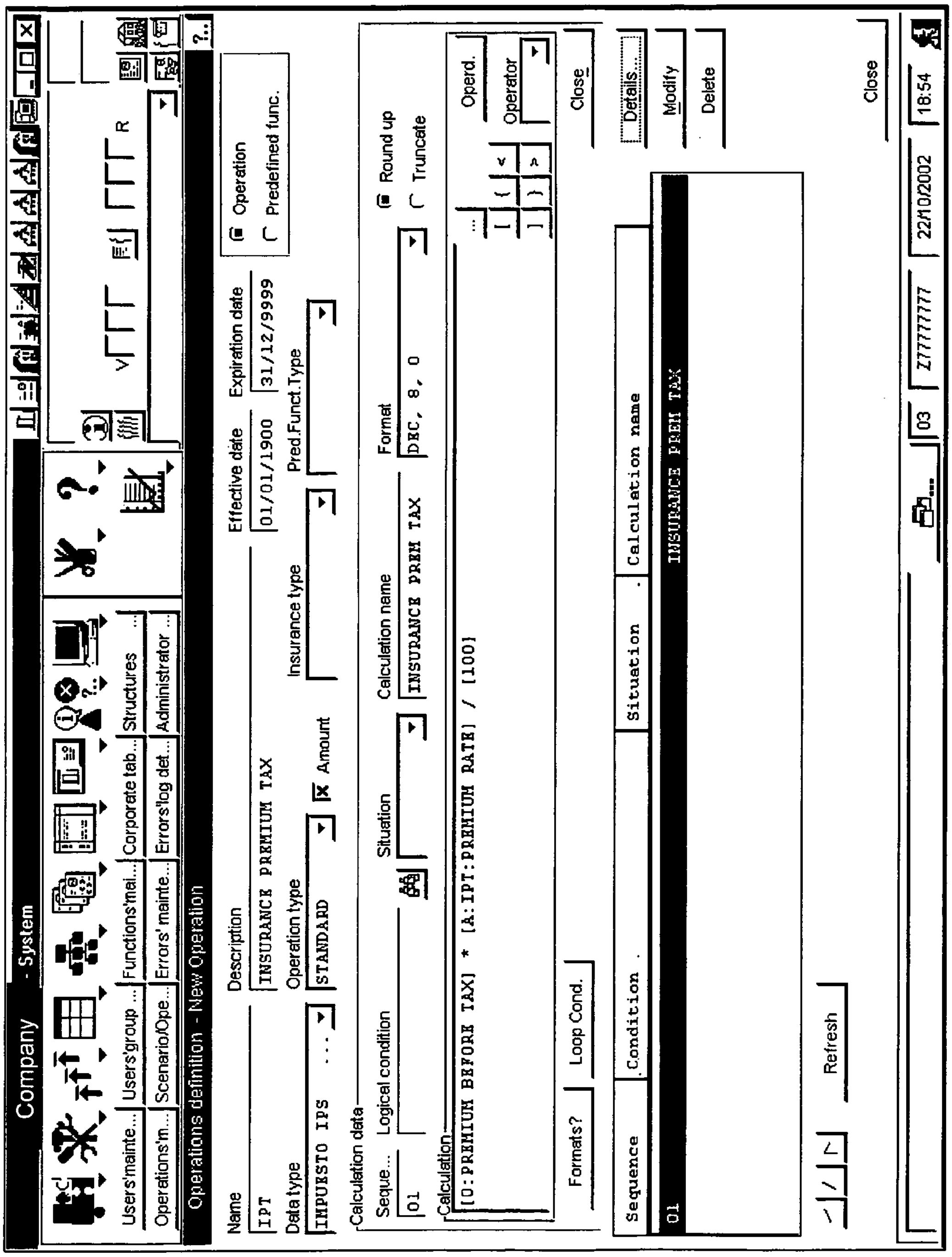
Company - System
Users'mainte... Users'group ... Functions'mai... Corporate tab... Structures
Operations'm... Scenario/Ope... Errors' mainte... Errors'log det... Administrator
Operations definition - New Operation
Name
IPT
Description
INSURANCE PREMIUM TAX
Effective date
01/01/1900
Expiration date
31/12/9999
Operation
Predefined func.
Data type
IMPUESTO IPS
Operation type
STANDARD
Amount
Insurance type
Pred.Funct.Type
Calculation data
Seque...
01
Logical condition
Situation
Calculation name
INSURANCE PREM TAX
Format
DEC, 8, 0
Round up
Truncate
Calculation
[O:PREMIUM BEFORE TAX] * [A:IPT:PREMIUM RATE] / [100]
Operd.
Operator
Formats?
Loop Cond.
Close
Sequence
Condition
Situation
Calculation name
01
INSURANCE PREM TAX
Details...
Modify
Delete
Refresh
Close
03
Z7777777
22/10/2002
18:54

Figure 15

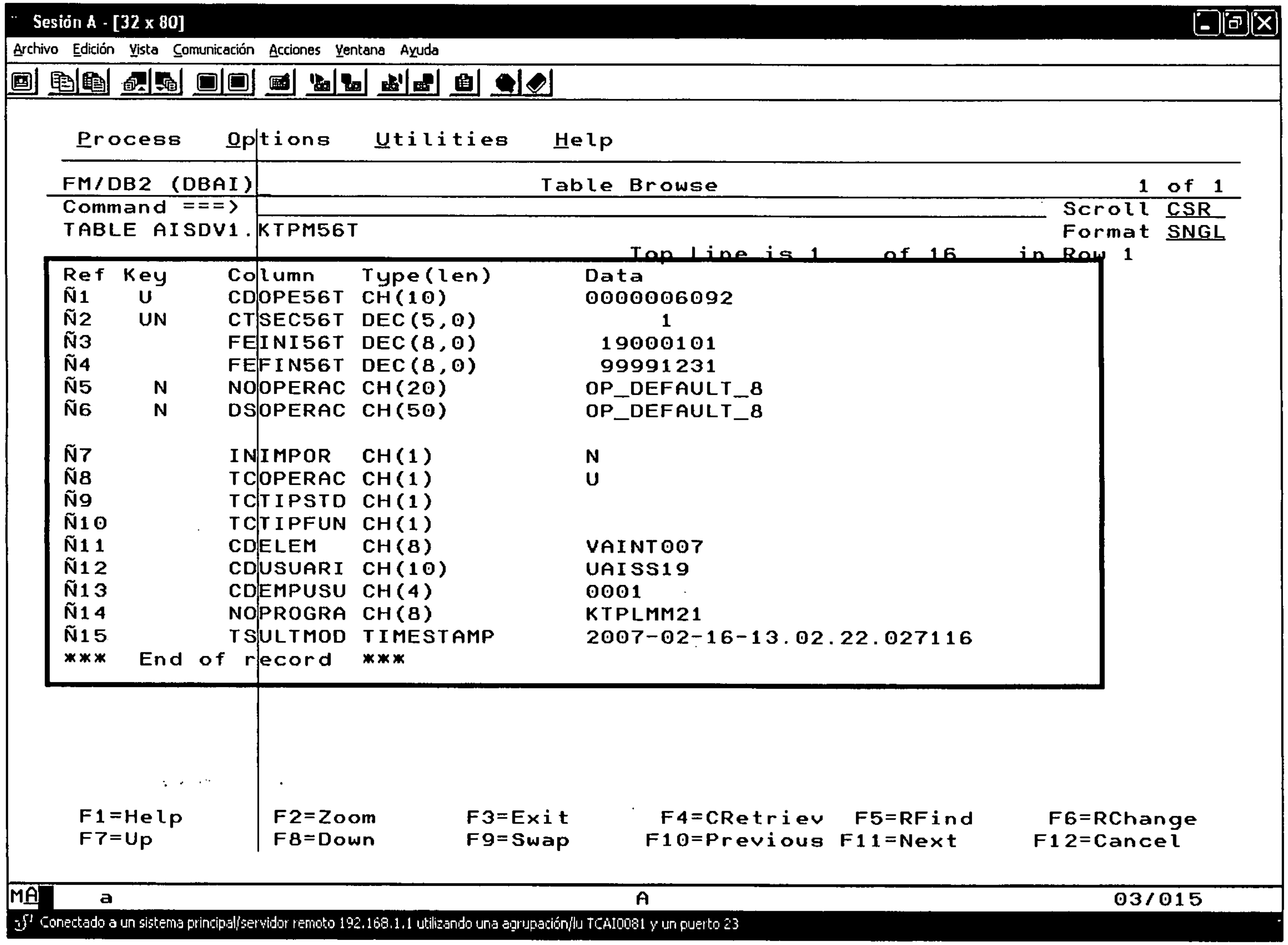
Sesión A - [32 x 80]
Archivo Edición Vista Comunicación Acciones Ventana Ayuda
Process Options Utilities Help
FM/DB2 (DBAI) Table Browse 1 of 1
Command ===> Scroll CSR
TABLE AISDV1.KTPM56T Format SNGL
Top Line is 1 of 16 in Row 1
Ref Key Column Type(len) Data
Ñ1 U CDOPE56T CH(10) 0000006092
Ñ2 UN CTSEC56T DEC(5,0) 1
Ñ3 FEINI56T DEC(8,0) 19000101
Ñ4 FEFIN56T DEC(8,0) 99991231
Ñ5 N NOOPERAC CH(20) OP_DEFAULT_8
Ñ6 N DSOPERAC CH(50) OP_DEFAULT_8
Ñ7 INIMPOR CH(1) N
Ñ8 TCOPERAC CH(1) U
Ñ9 TCTIPSTD CH(1)
Ñ10 TCTIPFUN CH(1)
Ñ11 CDELEM CH(8) VAINT007
Ñ12 CDUSUARI CH(10) UAISS19
Ñ13 CDEMPUSU CH(4) 0001
Ñ14 NOPROGRA CH(8) KTPLMM21
Ñ15 TSULTMOD TIMESTAMP 2007-02-16-13.02.22.027116
*** End of record ***
F1=Help F2=Zoom F3=Exit F4=CRetriev F5=RFind F6=RChange
F7=Up F8=Down F9=Swap F10=Previous F11=Next F12=Cancel
MA a A 03/015
Conectado a un sistema principal/servidor remoto 192.168.1.1 utilizando una agrupación/lu TCAI0081 y un puerto 23

Figure 16a

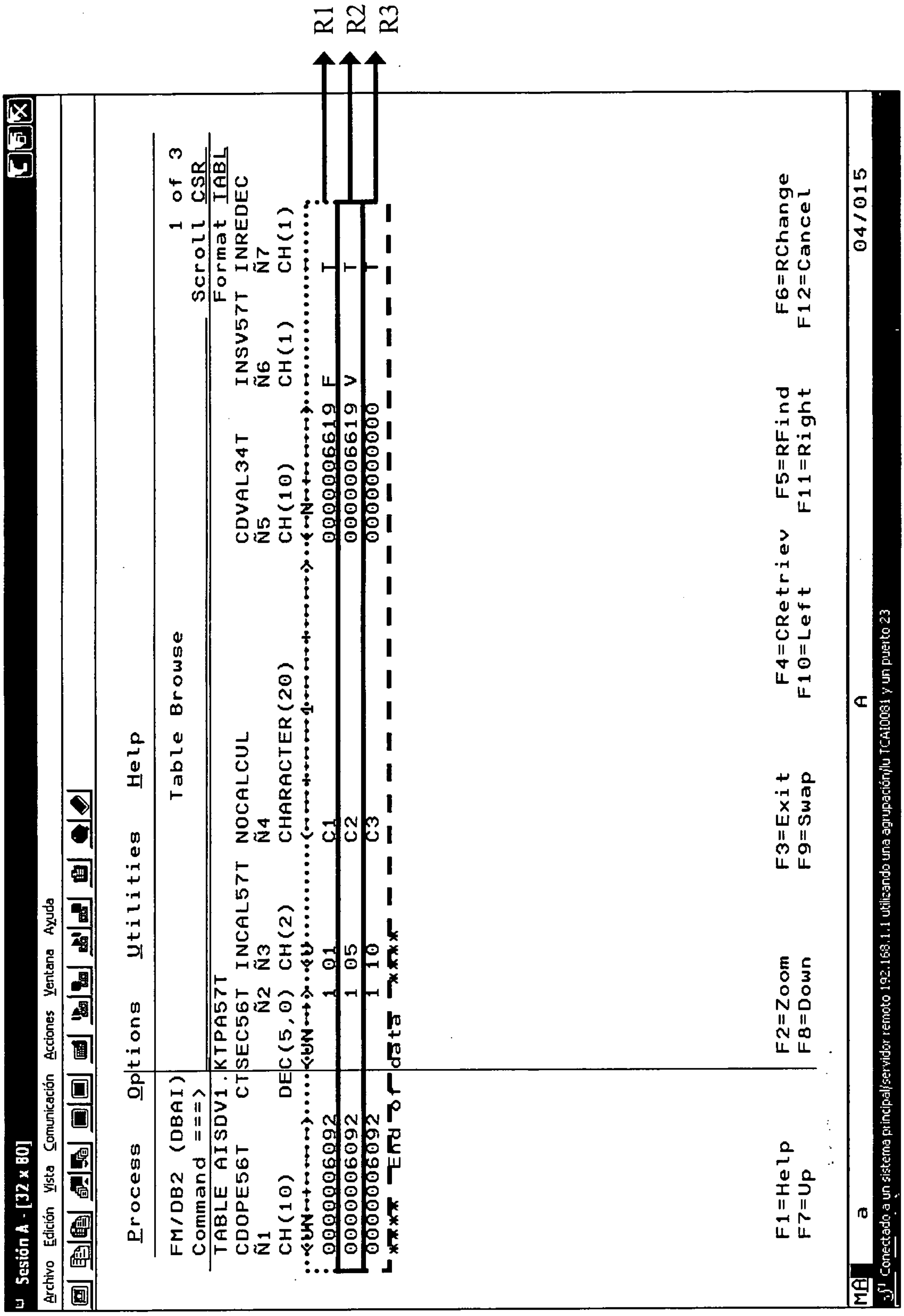

Sesión A - [32 x 80]
Archivo Edición Vista Comunicación Acciones Ventana Ayuda
Process Options Utilities Help
FM/DB2 (DBAI) Table Browse 1 of 3
Command ===> Scroll CSR
TABLE AISDV1.KTPA57T Format TABL
CDOPE56T CTSEC56T INCAL57T NOCALCUL CDVAL34T INSV57T INREDEC
Ñ1 Ñ2 Ñ3 Ñ4 Ñ5 Ñ6 Ñ7
CH(10) DEC(5,0) CH(2) CHARACTER(20) CH(10) CH(1) CH(1)
0000006092 1 01 C1 0000006619 F T
0000006092 1 05 C2 0000006619 V T
0000006092 1 10 C3 0000000000
**** End of data ****
F1=Help F2=Zoom F3=Exit F4=CRetriev F5=RFind F6=RChange
F7=Up F8=Down F9=Swap F10=Left F11=Right F12=Cancel
MA a A 04/015
Conectado a un sistema principal/servidor remoto 192.168.1.1 utilizando una agrupación/lu TCAI0081 y un puerto 23
R1
R2
R3

Figure 16b

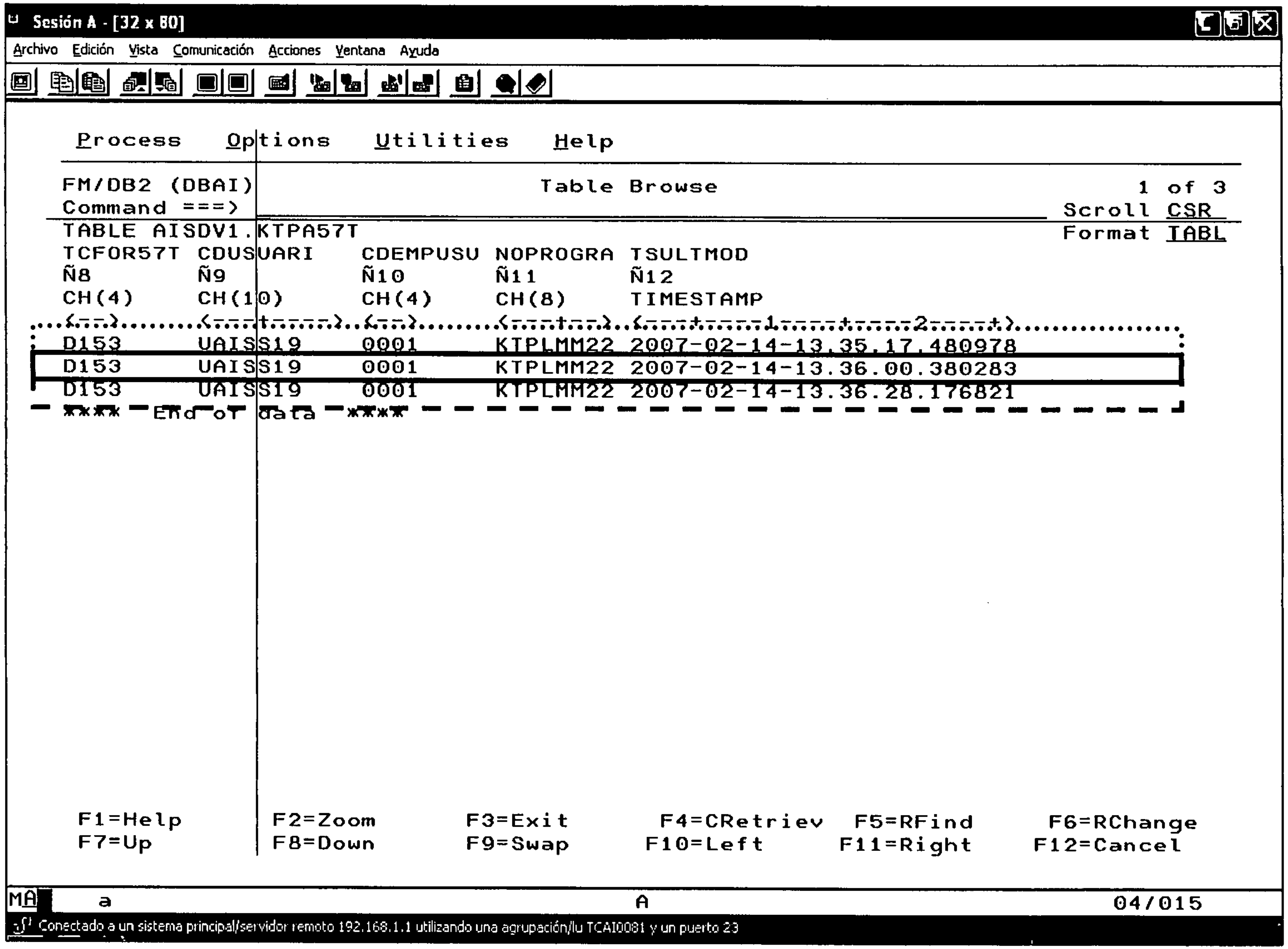
Sesión A - [32 x 80]
Archivo Edición Vista Comunicación Acciones Ventana Ayuda
Process Options Utilities Help
FM/DB2 (DBAI) Table Browse 1 of 3
Command ===> Scroll CSR
TABLE AISDV1.KTPA57T Format TABL
TCFOR57T CDUSUARI CDEMPUSU NOPROGRA TSULTMOD
Ñ8 Ñ9 Ñ10 Ñ11 Ñ12
CH(4) CH(10) CH(4) CH(8) TIMESTAMP
D153 UAISS19 0001 KTPLMM22 2007-02-14-13.35.17.480978
D153 UAISS19 0001 KTPLMM22 2007-02-14-13.36.00.380283
D153 UAISS19 0001 KTPLMM22 2007-02-14-13.36.28.176821
**** End of data ****
F1=Help F2=Zoom F3=Exit F4=CRetriev F5=RFind F6=RChange
F7=Up F8=Down F9=Swap F10=Left F11=Right F12=Cancel
MA a A 04/015
Conectado a un sistema principal/servidor remoto 192.168.1.1 utilizando una agrupación/lu TCAI0081 y un puerto 23

Figure 17a

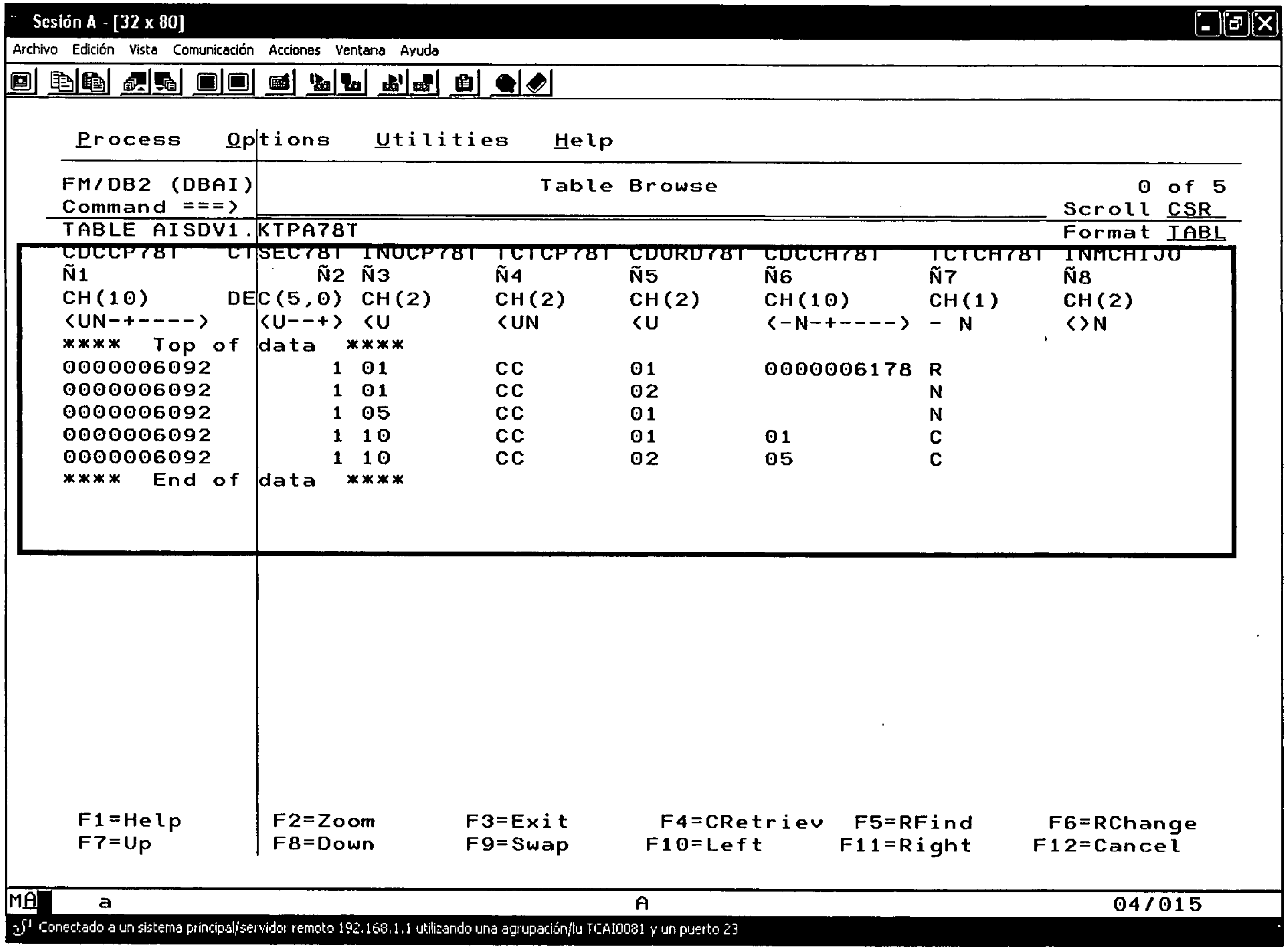
Sesión A - [32 x 80]
Archivo Edición Vista Comunicación Acciones Ventana Ayuda
Process Options Utilities Help
FM/DB2 (DBAI) Table Browse 0 of 5
Command ===> Scroll CSR
TABLE AISDV1.KTPA78T Format TABL
CDCCP78T CTSEC78T INOCP78T TCTCP78T CDORD78T CDCCH78T TCTCH78T INMCHIJO
Ñ1 Ñ2 Ñ3 Ñ4 Ñ5 Ñ6 Ñ7 Ñ8
CH(10) DEC(5,0) CH(2) CH(2) CH(2) CH(10) CH(1) CH(2)
<UN-+----> <U--+> <U <UN <U <-N-+----> - N <>N
**** Top of data ****
0000006092 1 01 CC 01 0000006178 R
0000006092 1 01 CC 02 N
0000006092 1 05 CC 01 N
0000006092 1 10 CC 01 01 C
0000006092 1 10 CC 02 05 C
**** End of data ****
F1=Help F2=Zoom F3=Exit F4=CRetriev F5=RFind F6=RChange
F7=Up F8=Down F9=Swap F10=Left F11=Right F12=Cancel
MA a A 04/015
Conectado a un sistema principal/servidor remoto 192.168.1.1 utilizando una agrupación/lu TCAI0081 y un puerto 23

Figure 17b

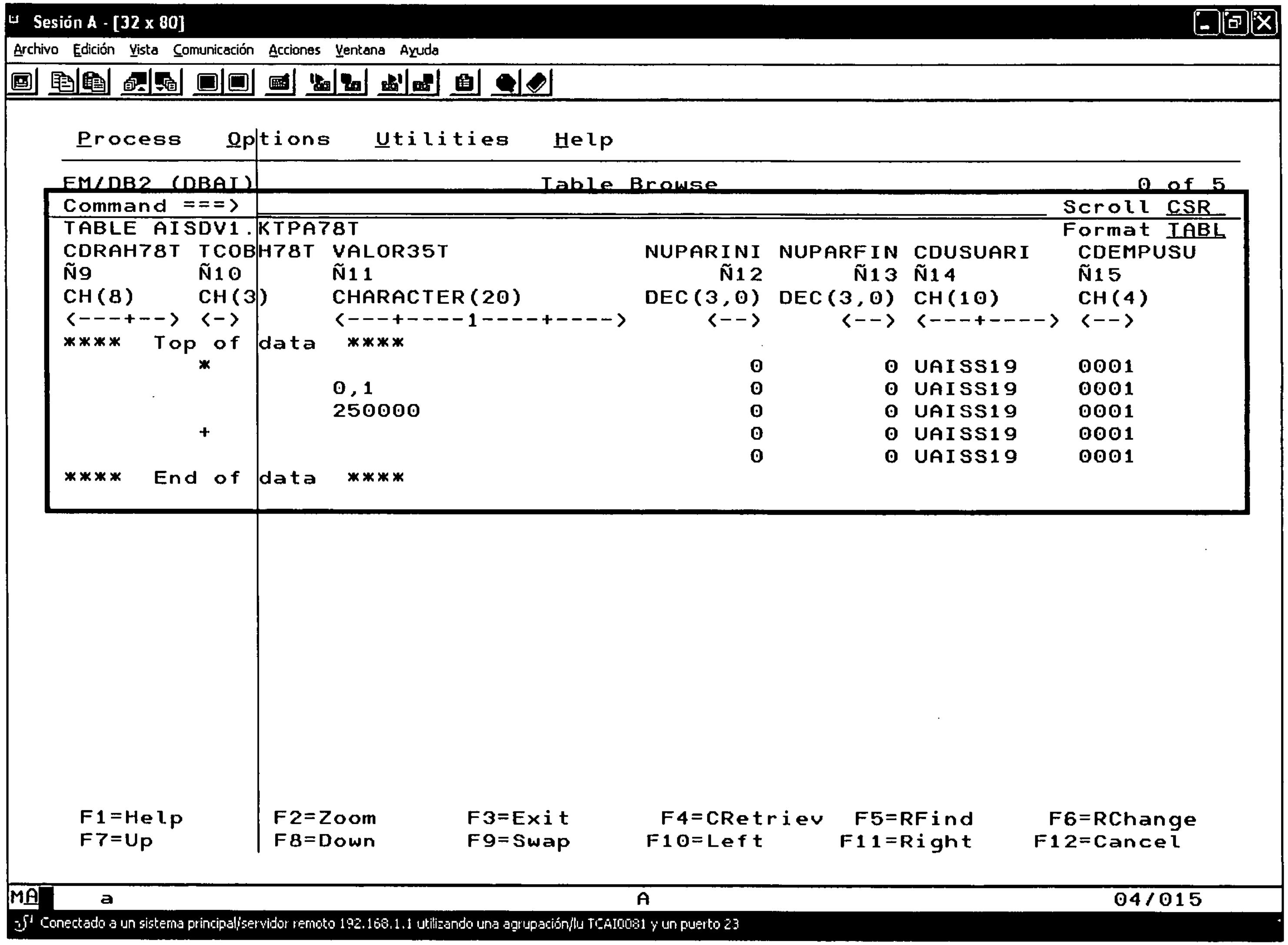
Sesión A - [32 x 80]
Archivo Edición Vista Comunicación Acciones Ventana Ayuda
Process Options Utilities Help
EM/DB2 (DBAI) Table Browse 0 of 5
Command ===> Scroll CSR
TABLE AISDV1.KTPA78T Format TABL
CDRAH78T TCOBH78T VALOR35T NUPARINI NUPARFIN CDUSUARI CDEMPUSU
Ñ9 Ñ10 Ñ11 Ñ12 Ñ13 Ñ14 Ñ15
CH(8) CH(3) CHARACTER(20) DEC(3,0) DEC(3,0) CH(10) CH(4)
<---+--> <-> <---+----1----+----> <--> <--> <---+----> <-->
**** Top of data ****
* 0 0 UAISS19 0001
0,1 0 0 UAISS19 0001
250000 0 0 UAISS19 0001
+ 0 0 UAISS19 0001
0 0 UAISS19 0001
**** End of data ****
F1=Help F2=Zoom F3=Exit F4=CRetriev F5=RFind F6=RChange
F7=Up F8=Down F9=Swap F10=Left F11=Right F12=Cancel
MA a A 04/015
Conectado a un sistema principal/servidor remoto 192.168.1.1 utilizando una agrupación/lu TCAI0081 y un puerto 23

Figure 18a

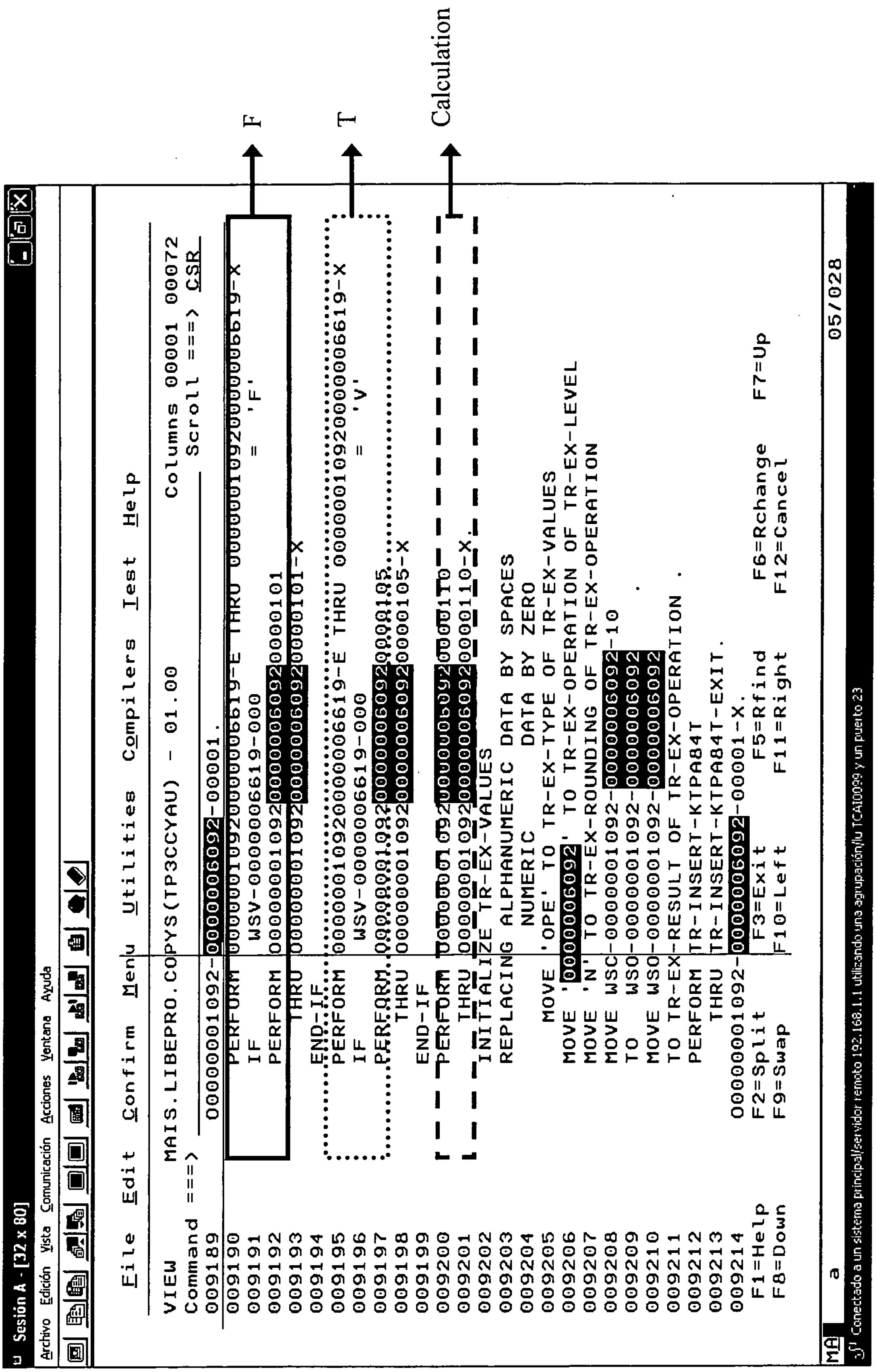
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TP3CCYAU) - 01.00 Columns 00001 00072
Command ===> Scroll ===> CSR
009189 0000000001092-0000006092-00001.
009190 PERFORM 0000000001092000000006619-E THRU 0000000001092000000006619-X
009191 IF WSV-0000006619-000 = 'F'
009192 PERFORM 0000000001092000000060920000101
009193 THRU 0000000001092000000060920000101-X
009194 END-IF
009195 PERFORM 0000000001092000000006619-E THRU 0000000001092000000006619-X
009196 IF WSV-0000006619-000 = 'V'
009197 PERFORM 0000000001092000000060920000105
009198 THRU 0000000001092000000060920000105-X
009199 END-IF
009200 PERFORM 0000000001092000000060920000110
009201 THRU 0000000001092000000060920000110-X.
009202 INITIALIZE TR-EX-VALUES
009203 REPLACING ALPHANUMERIC DATA BY SPACES
009204 NUMERIC DATA BY ZERO
009205 MOVE 'OPE' TO TR-EX-TYPE OF TR-EX-VALUES
009206 MOVE '0000006092' TO TR-EX-OPERATION OF TR-EX-LEVEL
009207 MOVE 'N' TO TR-EX-ROUNDING OF TR-EX-OPERATION
009208 MOVE WSC-0000001092-0000006092-10
009209 TO WSO-0000001092-0000006092
009210 MOVE WSO-0000001092-0000006092
009211 TO TR-EX-RESULT OF TR-EX-OPERATION .
009212 PERFORM TR-INSERT-KTPA84T
009213 THRU TR-INSERT-KTPA84T-EXIT.
009214 0000000001092-0000006092-000001-X.
F1=Help F2=Split F3=Exit F5=Rfind F6=Rchange F7=Up
F8=Down F9=Swap F10=Left F11=Right F12=Cancel
MA a 05/028
Conectado a un sistema principal/servidor remoto 192.168.1.1 utilizando una agrupación/lu TCA10099 y un puerto 23
F
T
Calculation

Figure 18b

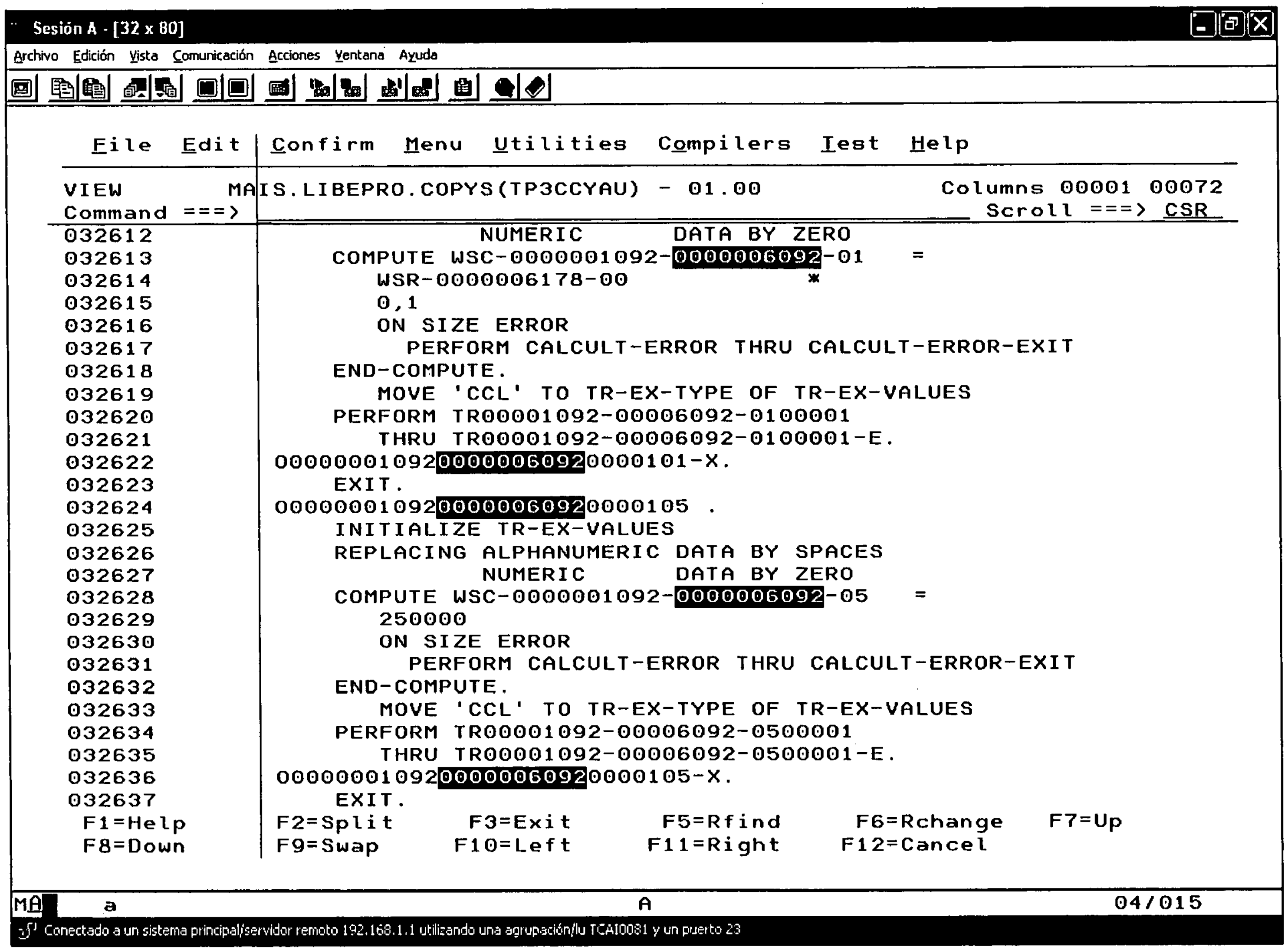
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TP3CCYAU) - 01.00 Columns 00001 00072
Command ===> Scroll ===> CSR
032612 NUMERIC DATA BY ZERO
032613 COMPUTE WSC-0000001092-0000006092-01 =
032614 WSR-0000006178-00 *
032615 0,1
032616 ON SIZE ERROR
032617 PERFORM CALCULT-ERROR THRU CALCULT-ERROR-EXIT
032618 END-COMPUTE.
032619 MOVE 'CCL' TO TR-EX-TYPE OF TR-EX-VALUES
032620 PERFORM TR00001092-00006092-0100001
032621 THRU TR00001092-00006092-0100001-E.
032622 000000010920000006092000010 1-X.
032623 EXIT.
032624 00000001092000000609200000105 .
032625 INITIALIZE TR-EX-VALUES
032626 REPLACING ALPHANUMERIC DATA BY SPACES
032627 NUMERIC DATA BY ZERO
032628 COMPUTE WSC-0000001092-0000006092-05 =
032629 250000
032630 ON SIZE ERROR
032631 PERFORM CALCULT-ERROR THRU CALCULT-ERROR-EXIT
032632 END-COMPUTE.
032633 MOVE 'CCL' TO TR-EX-TYPE OF TR-EX-VALUES
032634 PERFORM TR00001092-00006092-0500001
032635 THRU TR00001092-00006092-0500001-E.
032636 00000001092000000609200000105-X.
032637 EXIT.
F1=Help F2=Split F3=Exit F5=Rfind F6=Rchange F7=Up
F8=Down F9=Swap F10=Left F11=Right F12=Cancel
MA a A 04/015
Conectado a un sistema principal/servidor remoto 192.168.1.1 utilizando una agrupación/lu TCA10081 y un puerto 23

Figure 18c

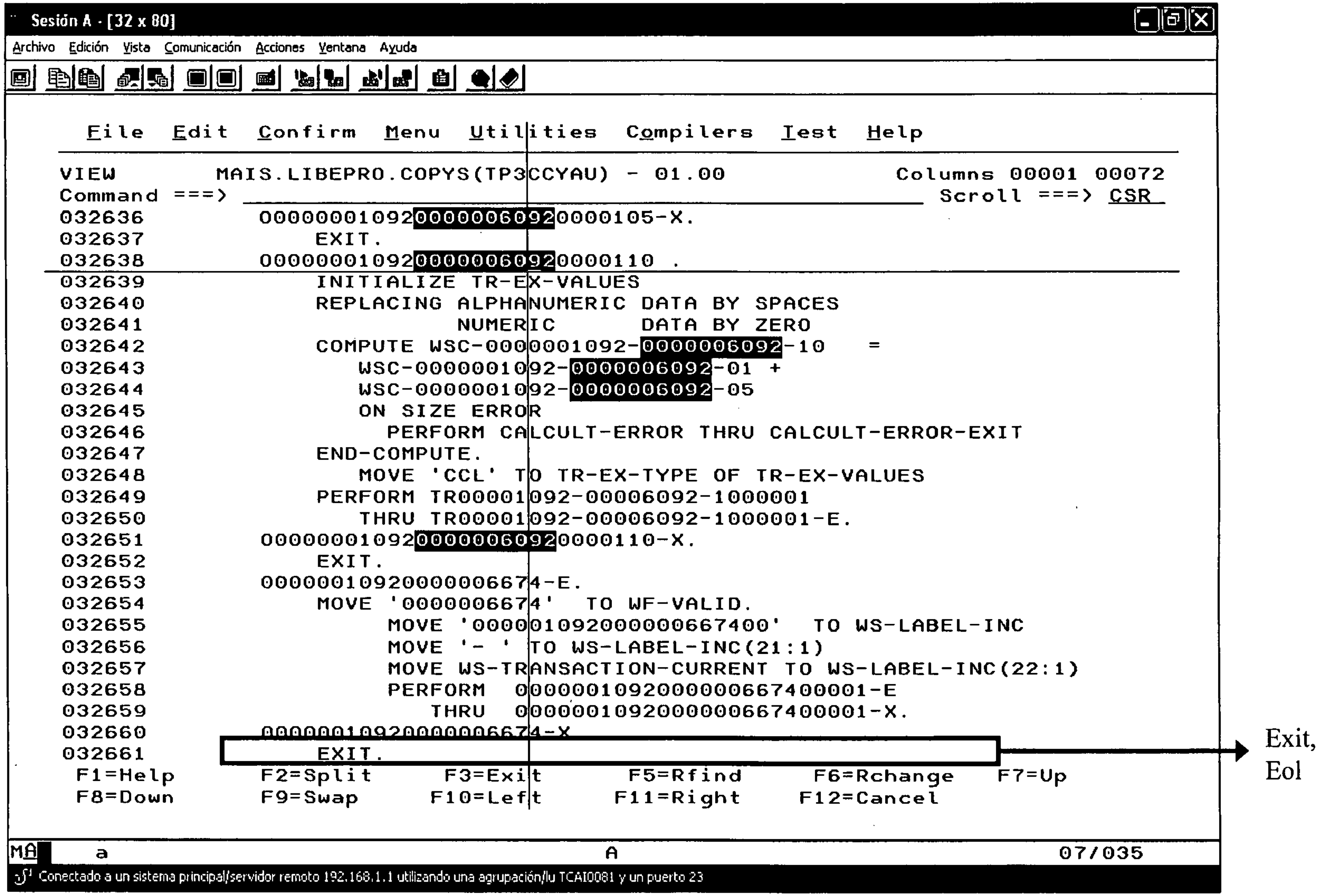
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TP3CCYAU) - 01.00 Columns 00001 00072
Command ===> Scroll ===> CSR
032636 000000010920000006092000105-X.
032637 EXIT.
032638 000000010920000006092000110 .
032639 INITIALIZE TR-EX-VALUES
032640 REPLACING ALPHANUMERIC DATA BY SPACES
032641 NUMERIC DATA BY ZERO
032642 COMPUTE WSC-0000001092-0000006092-10 =
032643 WSC-0000001092-0000006092-01 +
032644 WSC-0000001092-0000006092-05
032645 ON SIZE ERROR
032646 PERFORM CALCULT-ERROR THRU CALCULT-ERROR-EXIT
032647 END-COMPUTE.
032648 MOVE 'CCL' TO TR-EX-TYPE OF TR-EX-VALUES
032649 PERFORM TR00001092-00006092-1000001
032650 THRU TR00001092-00006092-1000001-E.
032651 000000010920000006092000110-X.
032652 EXIT.
032653 000000010920000006674-E.
032654 MOVE '0000006674' TO WF-VALID.
032655 MOVE '000001092000000667400' TO WS-LABEL-INC
032656 MOVE '- ' TO WS-LABEL-INC(21:1)
032657 MOVE WS-TRANSACTION-CURRENT TO WS-LABEL-INC(22:1)
032658 PERFORM 000000109200000066740001-E
032659 THRU 000000109200000066740001-X.
032660 000000010920000006674-X
032661 EXIT.
F1=Help F2=Split F3=Exit F5=Rfind F6=Rchange F7=Up
F8=Down F9=Swap F10=Left F11=Right F12=Cancel
MA a A 07/035
Conectado a un sistema principal/servidor remoto 192.168.1.1 utilizando una agrupación/lu TCAI0081 y un puerto 23
Exit,
Eol

Figure 19

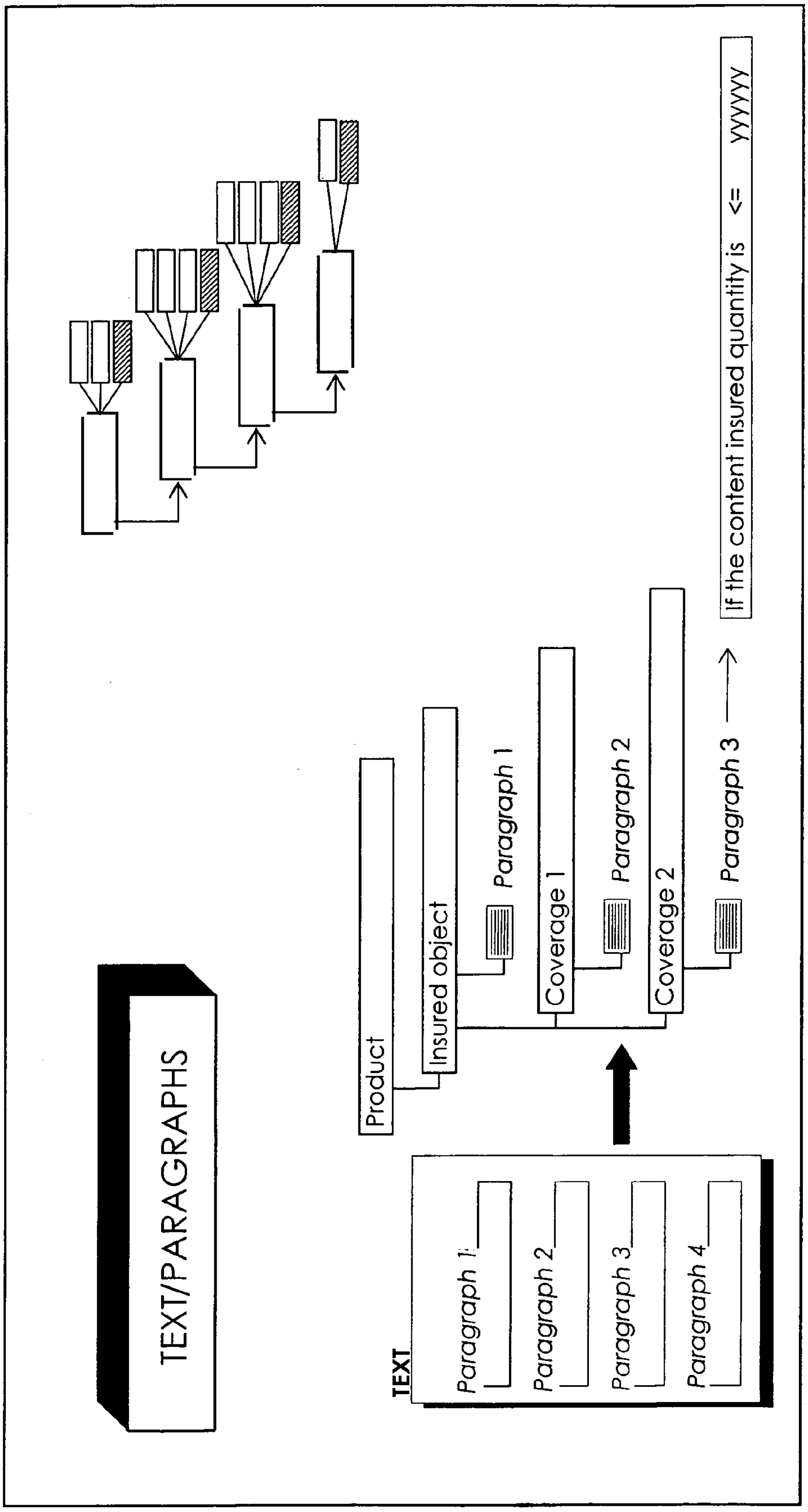
TEXT/PARAGRAPHS
TEXT
Paragraph 1
Paragraph 2
Paragraph 3
Paragraph 4
Product
Insured object
Coverage 1
Coverage 2
Paragraph 1
Paragraph 2
Paragraph 3
If the content insured quantity is <= YYYYYY

# Figure 20a

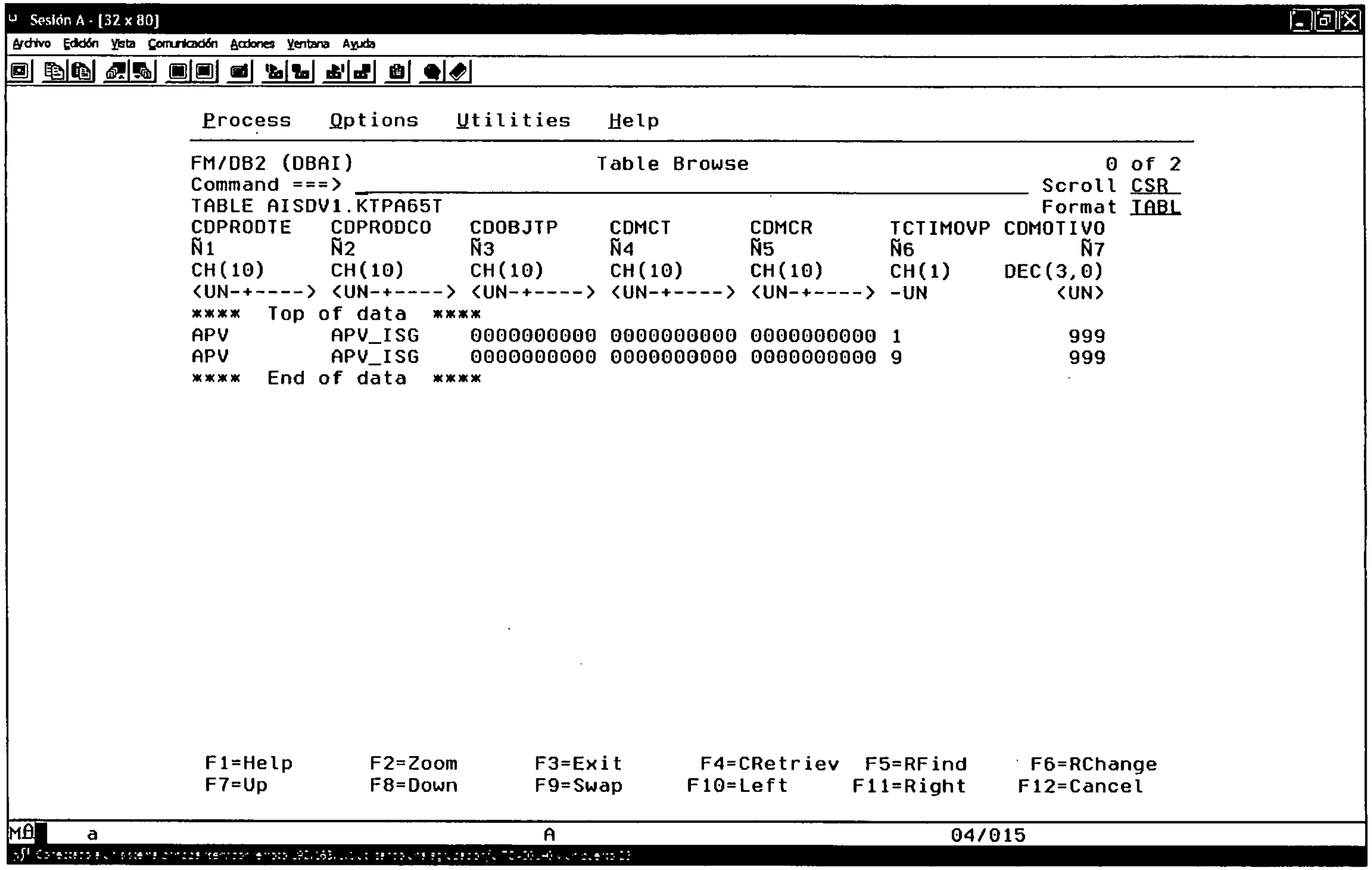
Sesión A - [32 x 80]
Archivo Edición Vista Comunicación Acciones Ventana Ayuda
Process Options Utilities Help
FM/DB2 (DBAI) Table Browse 0 of 2
Command ===> Scroll CSR
TABLE AISDV1.KTPA65T Format TABL
CDPRODTE CDPRODCO CDOBJTP CDMCT CDMCR TCTIMOVP CDMOTIVO
Ñ1 Ñ2 Ñ3 Ñ4 Ñ5 Ñ6 Ñ7
CH(10) CH(10) CH(10) CH(10) CH(10) CH(1) DEC(3,0)
<UN-+----> <UN-+----> <UN-+----> <UN-+----> <UN-+----> -UN <UN>
**** Top of data ****
APV APV_ISG 0000000000 0000000000 0000000000 1 999
APV APV_ISG 0000000000 0000000000 0000000000 9 999
**** End of data ****
F1=Help F2=Zoom F3=Exit F4=CRetriev F5=RFind F6=RChange
F7=Up F8=Down F9=Swap F10=Left F11=Right F12=Cancel
MA a A 04/015

Figure 20b

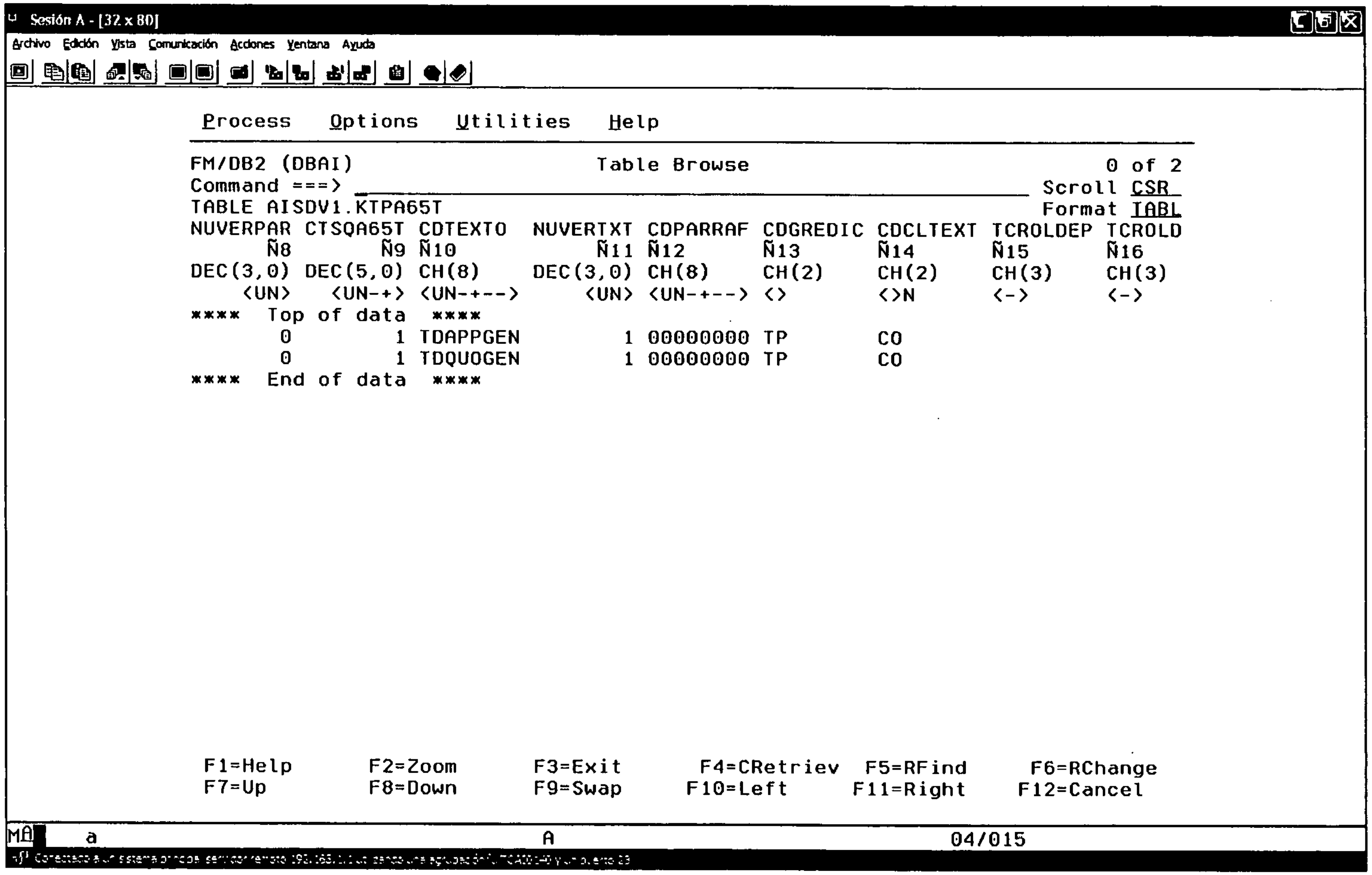
Sesión A - [32 x 80]
Archivo Edición Vista Comunicación Acciones Ventana Ayuda
Process Options Utilities Help
FM/DB2 (DBAI) Table Browse 0 of 2
Command ===> Scroll CSR
TABLE AISDV1.KTPA65T Format TABL
NUVERPAR CTSQA65T CDTEXTO NUVERTXT CDPARRAF CDGREDIC CDCLTEXT TCROLDEP TCROLD
Ñ8 Ñ9 Ñ10 Ñ11 Ñ12 Ñ13 Ñ14 Ñ15 Ñ16
DEC(3,0) DEC(5,0) CH(8) DEC(3,0) CH(8) CH(2) CH(2) CH(3) CH(3)
<UN> <UN-+> <UN-+--> <UN> <UN-+--> <> <>N <-> <->
**** Top of data ****
0 1 TDAPPGEN 1 00000000 TP CO
0 1 TDQUOGEN 1 00000000 TP CO
**** End of data ****
F1=Help F2=Zoom F3=Exit F4=CRetriev F5=RFind F6=RChange
F7=Up F8=Down F9=Swap F10=Left F11=Right F12=Cancel
MA a A 04/015

Figure 20c

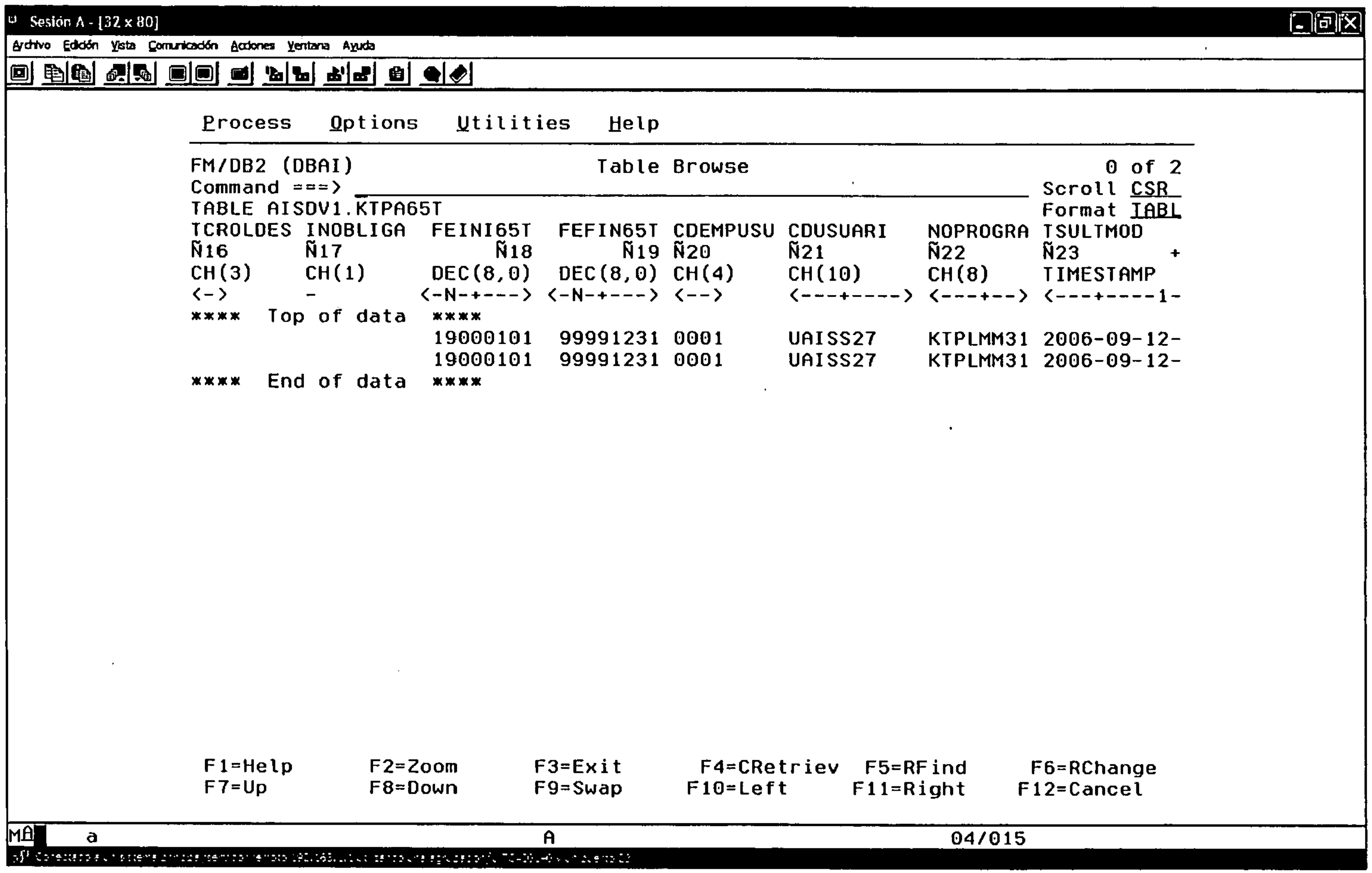
Sesión A - [32 x 80]
Archivo Edición Vista Comunicación Acciones Ventana Ayuda
Process Options Utilities Help
FM/DB2 (DBAI) Table Browse 0 of 2
Command ===> Scroll CSR
TABLE AISDV1.KTPA65T Format TABL
TCROLDES INOBLIGA FEINI65T FEFIN65T CDEMPUSU CDUSUARI NOPROGRA TSULTMOD
Ñ16 Ñ17 Ñ18 Ñ19 Ñ20 Ñ21 Ñ22 Ñ23 +
CH(3) CH(1) DEC(8,0) DEC(8,0) CH(4) CH(10) CH(8) TIMESTAMP
<-> - <-N-+---> <-N-+---> <--> <---+----> <---+--> <---+----1-
**** Top of data ****
19000101 99991231 0001 UAISS27 KTPLMM31 2006-09-12-
19000101 99991231 0001 UAISS27 KTPLMM31 2006-09-12-
**** End of data ****
F1=Help F2=Zoom F3=Exit F4=CRetriev F5=RFind F6=RChange
F7=Up F8=Down F9=Swap F10=Left F11=Right F12=Cancel
MA a A 04/015

Figure 21a

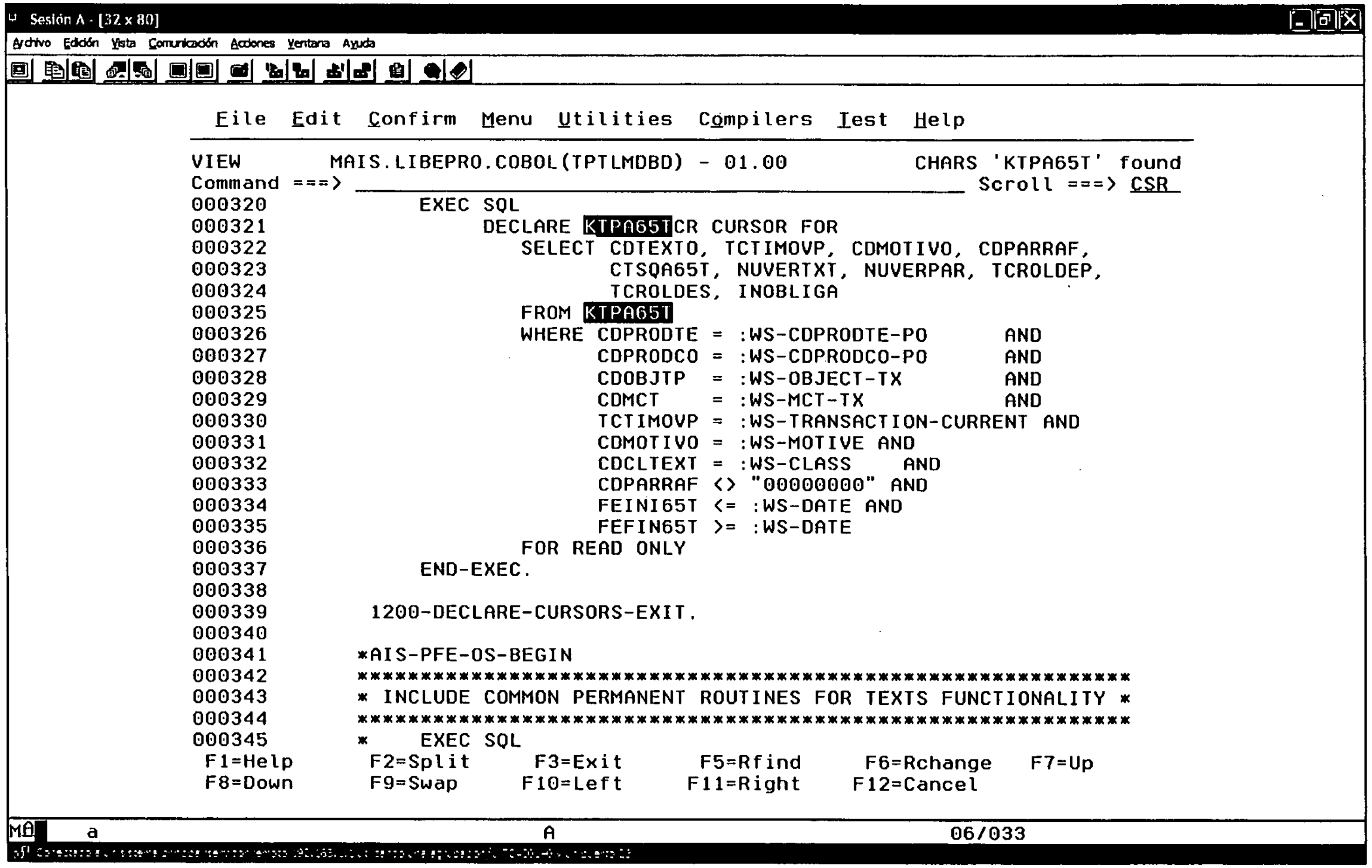
Sesión A - [32 x 80]
Archivo Edición Vista Comunicación Acciones Ventana Ayuda
File Edit Confirm Menu Utilities Compilers Test Help
VIEW MAIS.LIBEPRO.COBOL(TPTLMDBD) - 01.00 CHARS 'KTPA65T' found
Command ===> Scroll ===> CSR
000320 EXEC SQL
000321 DECLARE KTPA65TCR CURSOR FOR
000322 SELECT CDTEXTO, TCTIMOVP, CDMOTIVO, CDPARRAF,
000323 CTSQA65T, NUVERTXT, NUVERPAR, TCROLDEP,
000324 TCROLDES, INOBLIGA
000325 FROM KTPA65T
000326 WHERE CDPRODTE = :WS-CDPRODTE-PO AND
000327 CDPRODCO = :WS-CDPRODCO-PO AND
000328 CDOBJTP = :WS-OBJECT-TX AND
000329 CDMCT = :WS-MCT-TX AND
000330 TCTIMOVP = :WS-TRANSACTION-CURRENT AND
000331 CDMOTIVO = :WS-MOTIVE AND
000332 CDCLTEXT = :WS-CLASS AND
000333 CDPARRAF <> "00000000" AND
000334 FEINI65T <= :WS-DATE AND
000335 FEFIN65T >= :WS-DATE
000336 FOR READ ONLY
000337 END-EXEC.
000338
000339 1200-DECLARE-CURSORS-EXIT.
000340
000341 *AIS-PFE-OS-BEGIN
000342 ***************************************************************
000343 * INCLUDE COMMON PERMANENT ROUTINES FOR TEXTS FUNCTIONALITY *
000344 ***************************************************************
000345 * EXEC SQL
F1=Help F2=Split F3=Exit F5=Rfind F6=Rchange F7=Up
F8=Down F9=Swap F10=Left F11=Right F12=Cancel
a A 06/033

Figure 21b

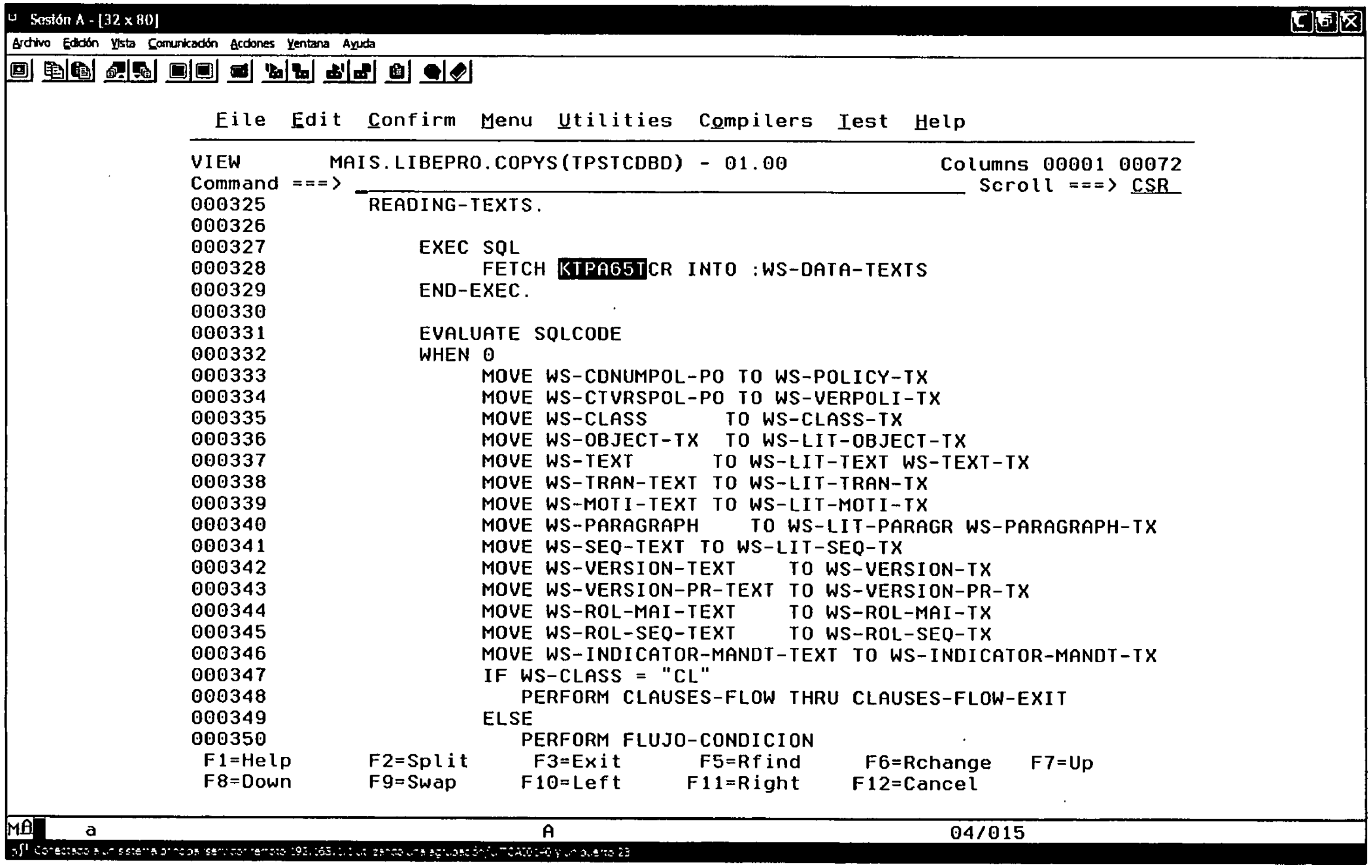
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TPSTCDBD) - 01.00 Columns 00001 00072
Command ===> Scroll ===> CSR
000325 READING-TEXTS.
000326
000327 EXEC SQL
000328 FETCH KTPA651CR INTO :WS-DATA-TEXTS
000329 END-EXEC.
000330
000331 EVALUATE SQLCODE
000332 WHEN 0
000333 MOVE WS-CDNUMPOL-PO TO WS-POLICY-TX
000334 MOVE WS-CTVRSPOL-PO TO WS-VERPOLI-TX
000335 MOVE WS-CLASS TO WS-CLASS-TX
000336 MOVE WS-OBJECT-TX TO WS-LIT-OBJECT-TX
000337 MOVE WS-TEXT TO WS-LIT-TEXT WS-TEXT-TX
000338 MOVE WS-TRAN-TEXT TO WS-LIT-TRAN-TX
000339 MOVE WS-MOTI-TEXT TO WS-LIT-MOTI-TX
000340 MOVE WS-PARAGRAPH TO WS-LIT-PARAGR WS-PARAGRAPH-TX
000341 MOVE WS-SEQ-TEXT TO WS-LIT-SEQ-TX
000342 MOVE WS-VERSION-TEXT TO WS-VERSION-TX
000343 MOVE WS-VERSION-PR-TEXT TO WS-VERSION-PR-TX
000344 MOVE WS-ROL-MAI-TEXT TO WS-ROL-MAI-TX
000345 MOVE WS-ROL-SEQ-TEXT TO WS-ROL-SEQ-TX
000346 MOVE WS-INDICATOR-MANDT-TEXT TO WS-INDICATOR-MANDT-TX
000347 IF WS-CLASS = "CL"
000348 PERFORM CLAUSES-FLOW THRU CLAUSES-FLOW-EXIT
000349 ELSE
000350 PERFORM FLUJO-CONDICION
F1=Help F2=Split F3=Exit F5=Rfind F6=Rchange F7=Up
F8=Down F9=Swap F10=Left F11=Right F12=Cancel
a A 04/015

Figure 22

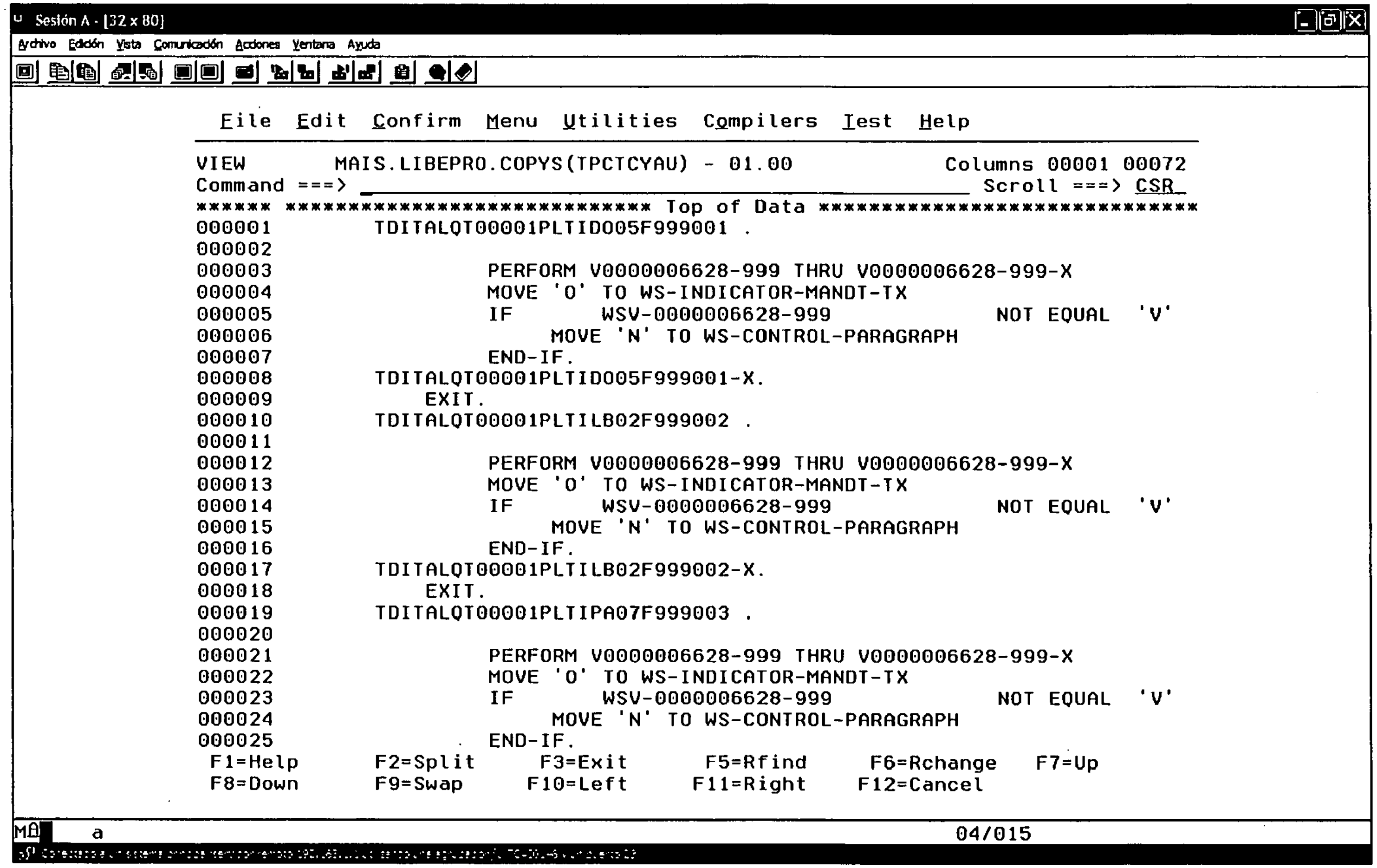
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TPCTCYAU) - 01.00 Columns 00001 00072
Command ===> Scroll ===> CSR
****** ***************************** Top of Data ******************************
000001 TDITALQT00001PLTID005F999001 .
000002
000003 PERFORM V0000006628-999 THRU V0000006628-999-X
000004 MOVE 'O' TO WS-INDICATOR-MANDT-TX
000005 IF WSV-0000006628-999 NOT EQUAL 'V'
000006 MOVE 'N' TO WS-CONTROL-PARAGRAPH
000007 END-IF.
000008 TDITALQT00001PLTID005F999001-X.
000009 EXIT.
000010 TDITALQT00001PLTILB02F999002 .
000011
000012 PERFORM V0000006628-999 THRU V0000006628-999-X
000013 MOVE 'O' TO WS-INDICATOR-MANDT-TX
000014 IF WSV-0000006628-999 NOT EQUAL 'V'
000015 MOVE 'N' TO WS-CONTROL-PARAGRAPH
000016 END-IF.
000017 TDITALQT00001PLTILB02F999002-X.
000018 EXIT.
000019 TDITALQT00001PLTIPA07F999003 .
000020
000021 PERFORM V0000006628-999 THRU V0000006628-999-X
000022 MOVE 'O' TO WS-INDICATOR-MANDT-TX
000023 IF WSV-0000006628-999 NOT EQUAL 'V'
000024 MOVE 'N' TO WS-CONTROL-PARAGRAPH
000025 END-IF.
F1=Help F2=Split F3=Exit F5=Rfind F6=Rchange F7=Up
F8=Down F9=Swap F10=Left F11=Right F12=Cancel
MA a 04/015

Figure 23

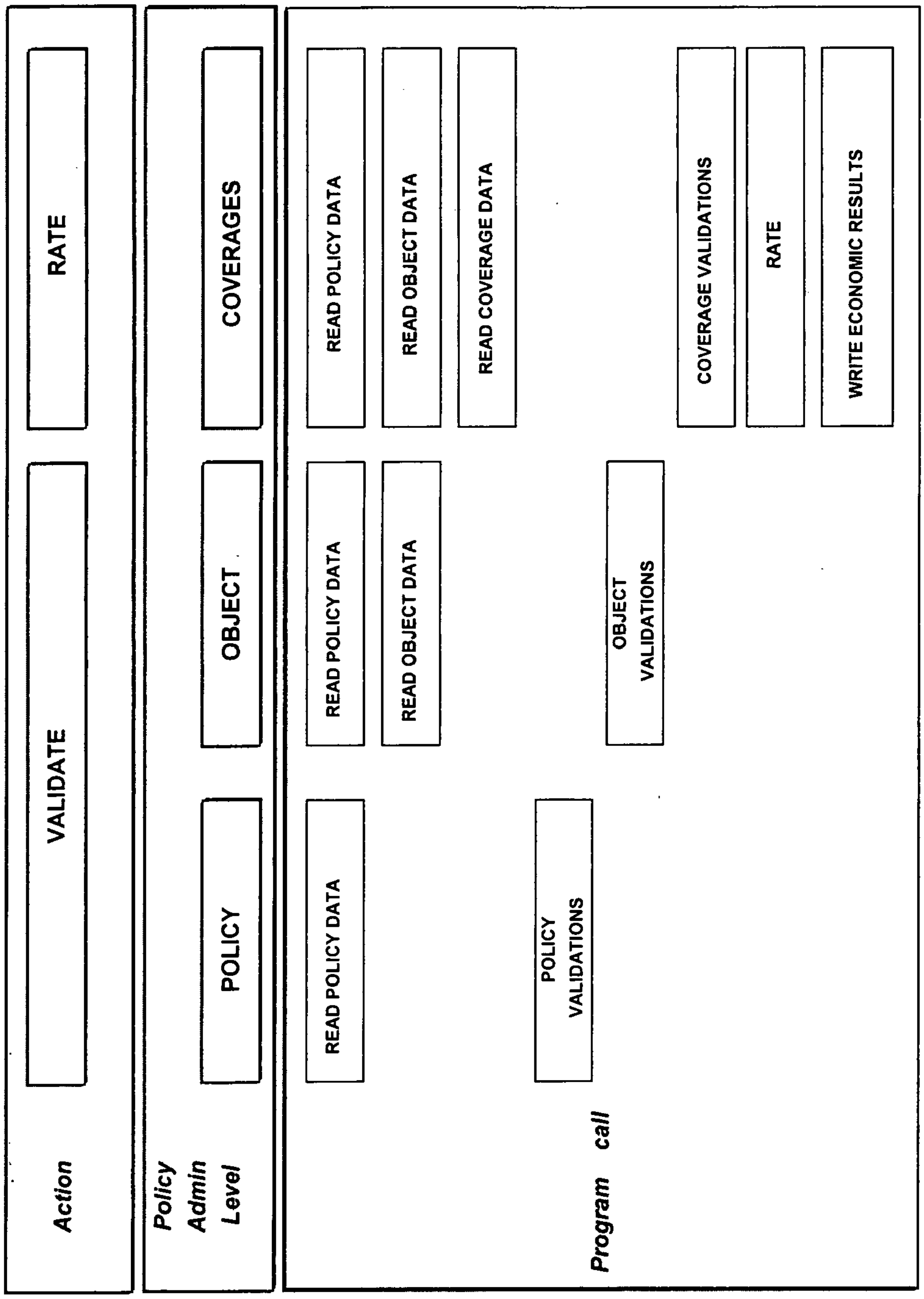
Action
VALIDATE
RATE
Policy Admin Level
POLICY
OBJECT
COVERAGES
Program call
READ POLICY DATA
POLICY VALIDATIONS
READ POLICY DATA
READ OBJECT DATA
OBJECT VALIDATIONS
READ POLICY DATA
READ OBJECT DATA
READ COVERAGE DATA
COVERAGE VALIDATIONS
RATE
WRITE ECONOMIC RESULTS

Figure 24

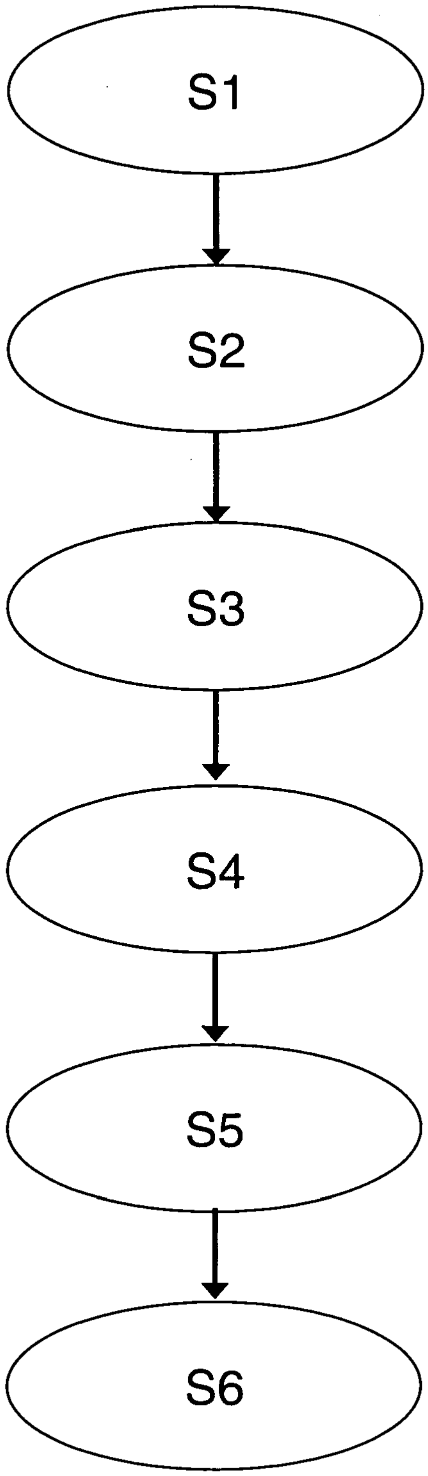

Figure 25

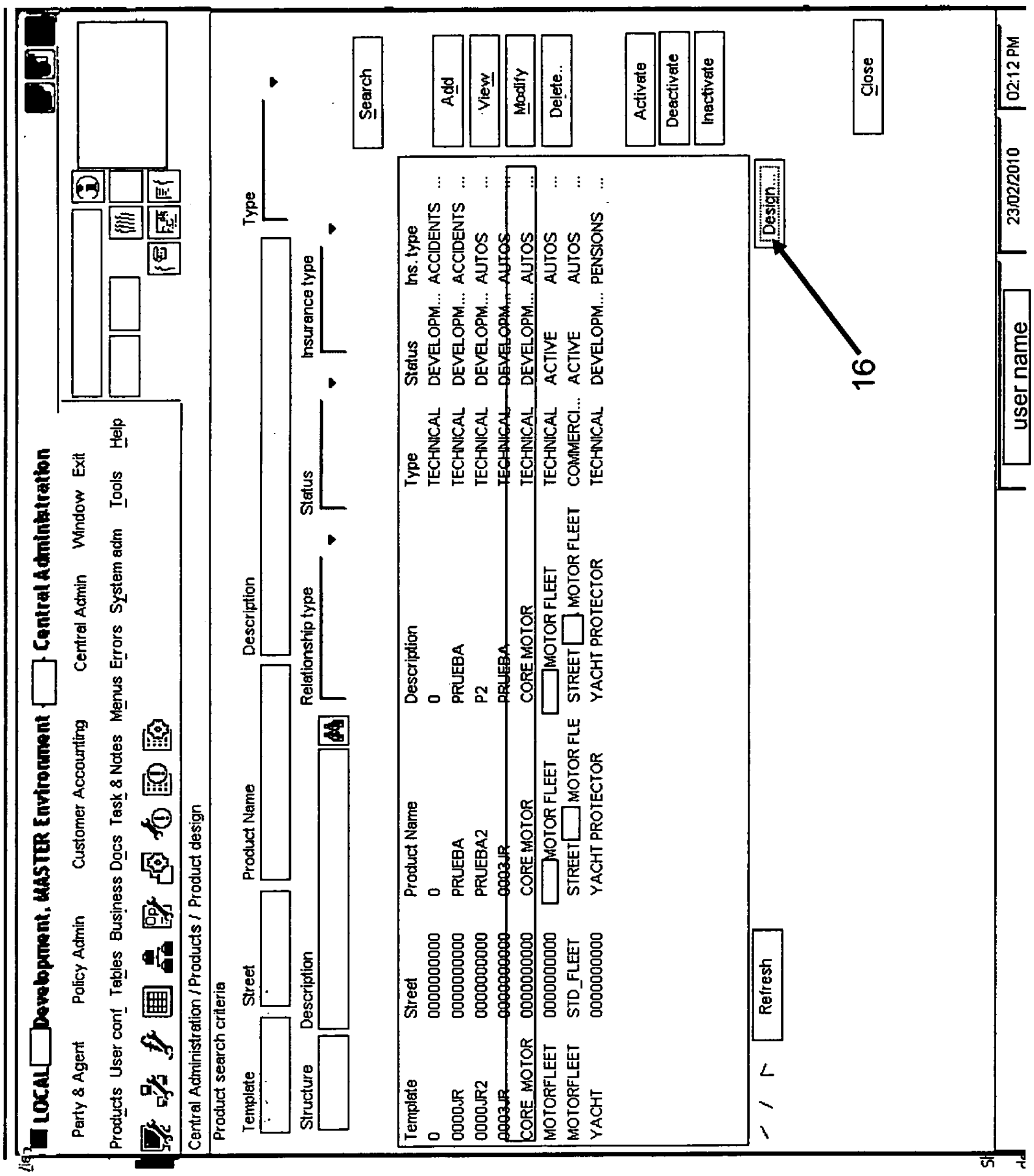
LOCAL
Development, MASTER Environment
Central Administration
Party & Agent
Policy Admin
Customer Accounting
Central Admin
Window
Exit
Products
User conf
Tables
Business Docs
Task & Notes
Menus
Errors
System adm
Tools
Help
Central Administration / Products / Product design
Product search criteria
Template
Street
Product Name
Description
Type
Structure
Description
Relationship type
Status
Insurance type
Search
Template Street Product Name Description Type Status Ins. type
0 0000000000 0 0 TECHNICAL DEVELOPM... ACCIDENTS
0000JR 0000000000 PRUEBA PRUEBA TECHNICAL DEVELOPM... ACCIDENTS
0000JR2 0000000000 PRUEBA2 P2 TECHNICAL DEVELOPM... AUTOS
0003JR 0000000000 0003JR PRUEBA TECHNICAL DEVELOPM... AUTOS
CORE_MOTOR 0000000000 CORE MOTOR CORE MOTOR TECHNICAL DEVELOPM... AUTOS
MOTORFLEET 0000000000 MOTOR FLEET MOTOR FLEET TECHNICAL ACTIVE AUTOS
MOTORFLEET STD_FLEET STREET MOTOR FLE STREET MOTOR FLEET COMMERCI... ACTIVE AUTOS
YACHT 0000000000 YACHT PROTECTOR YACHT PROTECTOR TECHNICAL DEVELOPM... PENSIONS
Add
View
Modify
Delete..
Activate
Deactivate
Inactivate
Design...
Refresh
Close
16
user name
23/02/2010
02:12 PM

Figure 26

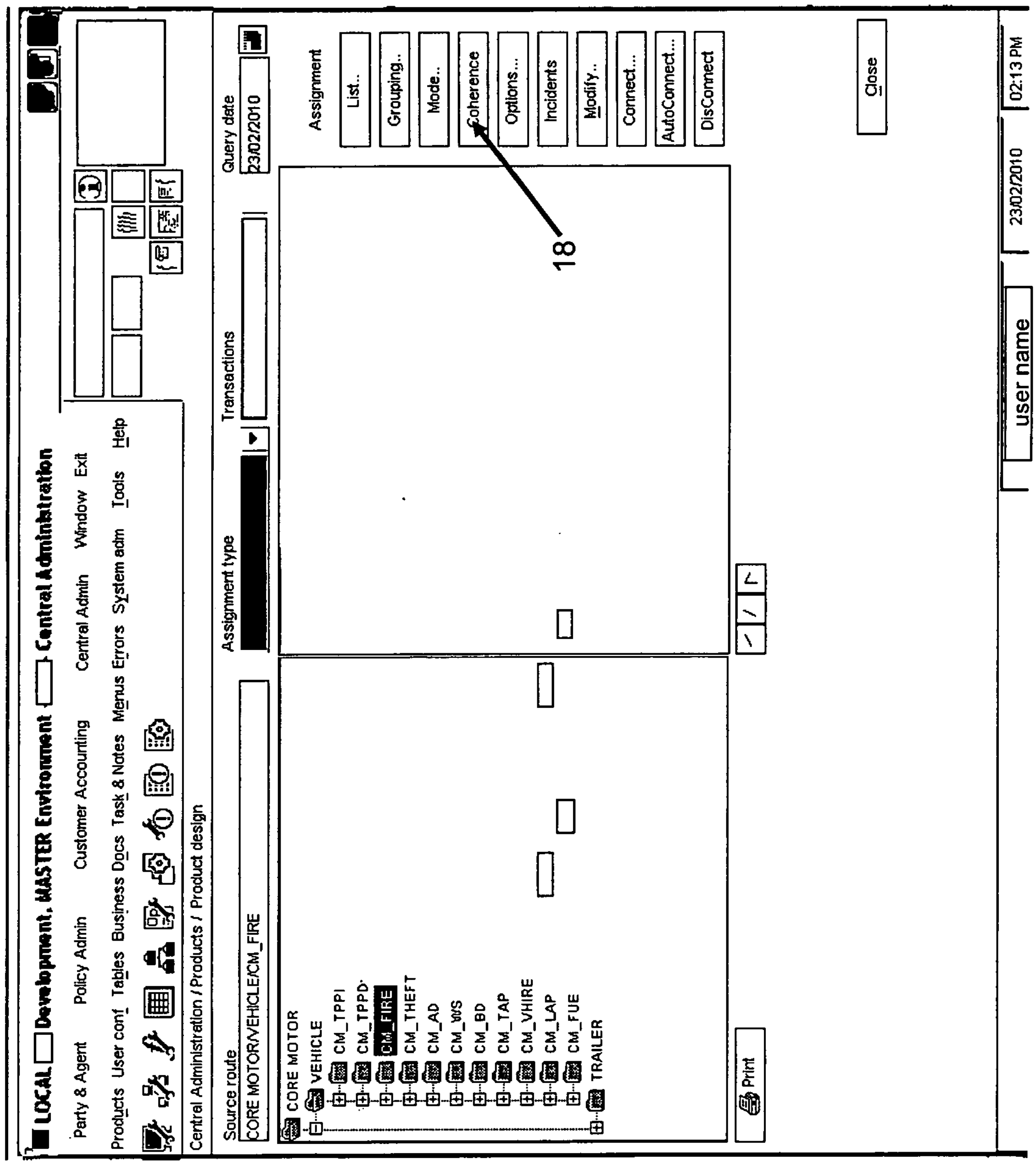
LOCAL Development, MASTER Environment Central Administration
Party & Agent Policy Admin Customer Accounting Central Admin Window Exit
Products User conf Tables Business Docs Task & Notes Menus Errors System adm Tools Help
Central Administration / Products / Product design
Source route
CORE MOTOR/VEHICLE/CM_FIRE
Assignment type
Transactions
Query date
23/02/2010
CORE MOTOR
VEHICLE
CM_TPPI
CM_TPPD
CM_FIRE
CM_THEFT
CM_AD
CM_WS
CM_BD
CM_TAP
CM_VHIRE
CM_LAP
CM_FUE
TRAILER
Print
Assignment
List..
Grouping..
Mode..
Coherence
Options...
Incidents
Modify..
Connect...
AutoConnect...
DisConnect
Close
18
user name
23/02/2010
02:13 PM

Figure 27a

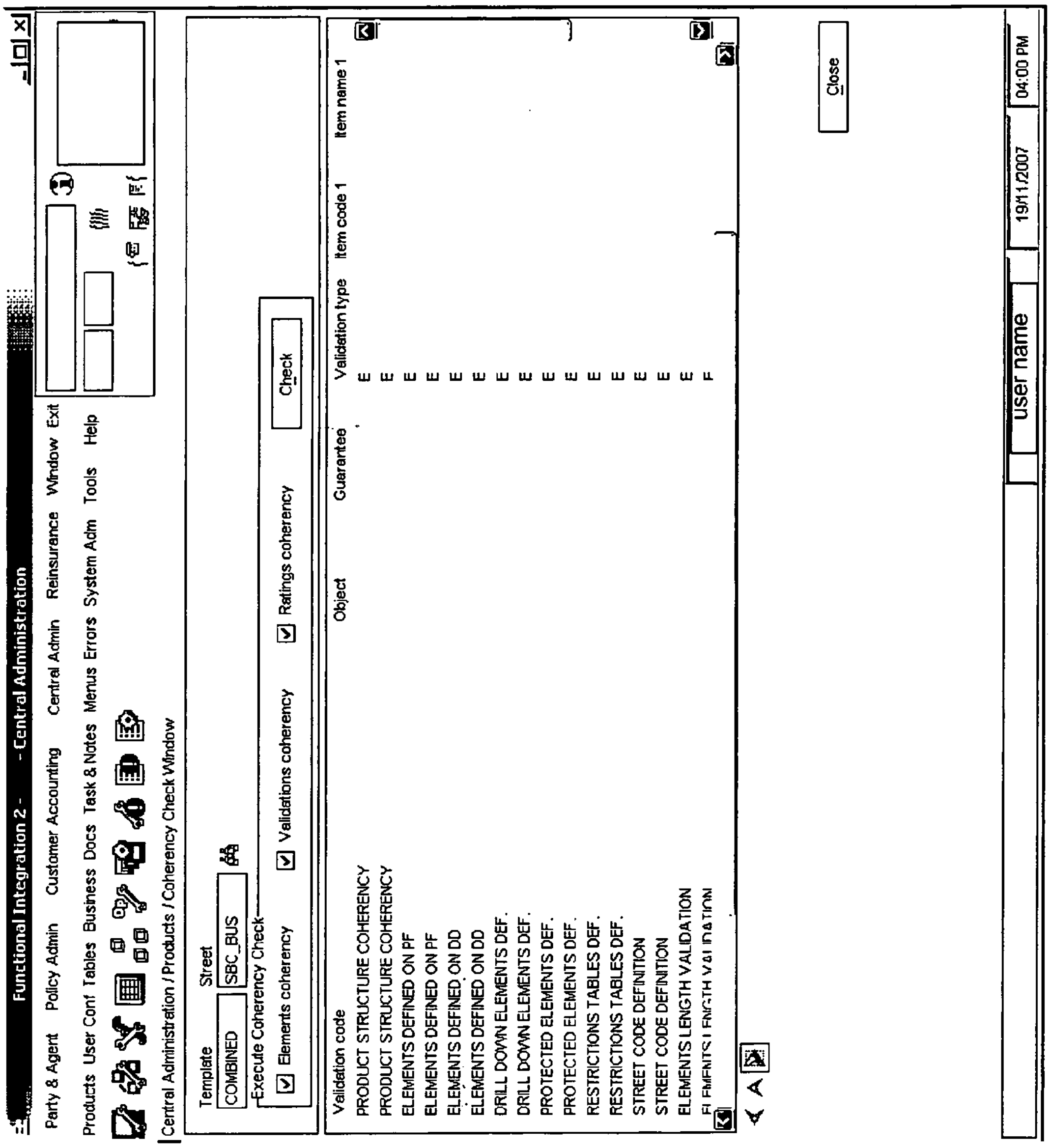
Functional Integration 2 - - Central Administration
Party & Agent Policy Admin Customer Accounting Central Admin Reinsurance Window Exit
Products User Conf Tables Business Docs Task & Notes Menus Errors System Adm Tools Help
Central Administration / Products / Coherency Check Window
Template
COMBINED
Street
SBC_BUS
Execute Coherency Check
Elements coherency
Validations coherency
Ratings coherency
Check
Validation code
Object
Guarantee
Validation type
Item code 1
Item name 1
PRODUCT STRUCTURE COHERENCY
PRODUCT STRUCTURE COHERENCY
ELEMENTS DEFINED ON PF
ELEMENTS DEFINED ON PF
ELEMENTS DEFINED ON DD
ELEMENTS DEFINED ON DD
DRILL DOWN ELEMENTS DEF.
DRILL DOWN ELEMENTS DEF.
PROTECTED ELEMENTS DEF.
PROTECTED ELEMENTS DEF.
RESTRICTIONS TABLES DEF.
RESTRICTIONS TABLES DEF.
STREET CODE DEFINITION
STREET CODE DEFINITION
ELEMENTS LENGTH VALIDATION
E
E
E
E
E
E
E
E
E
E
E
E
E
E
E
Close
user name
19/11/2007
04:00 PM

Figure 27b

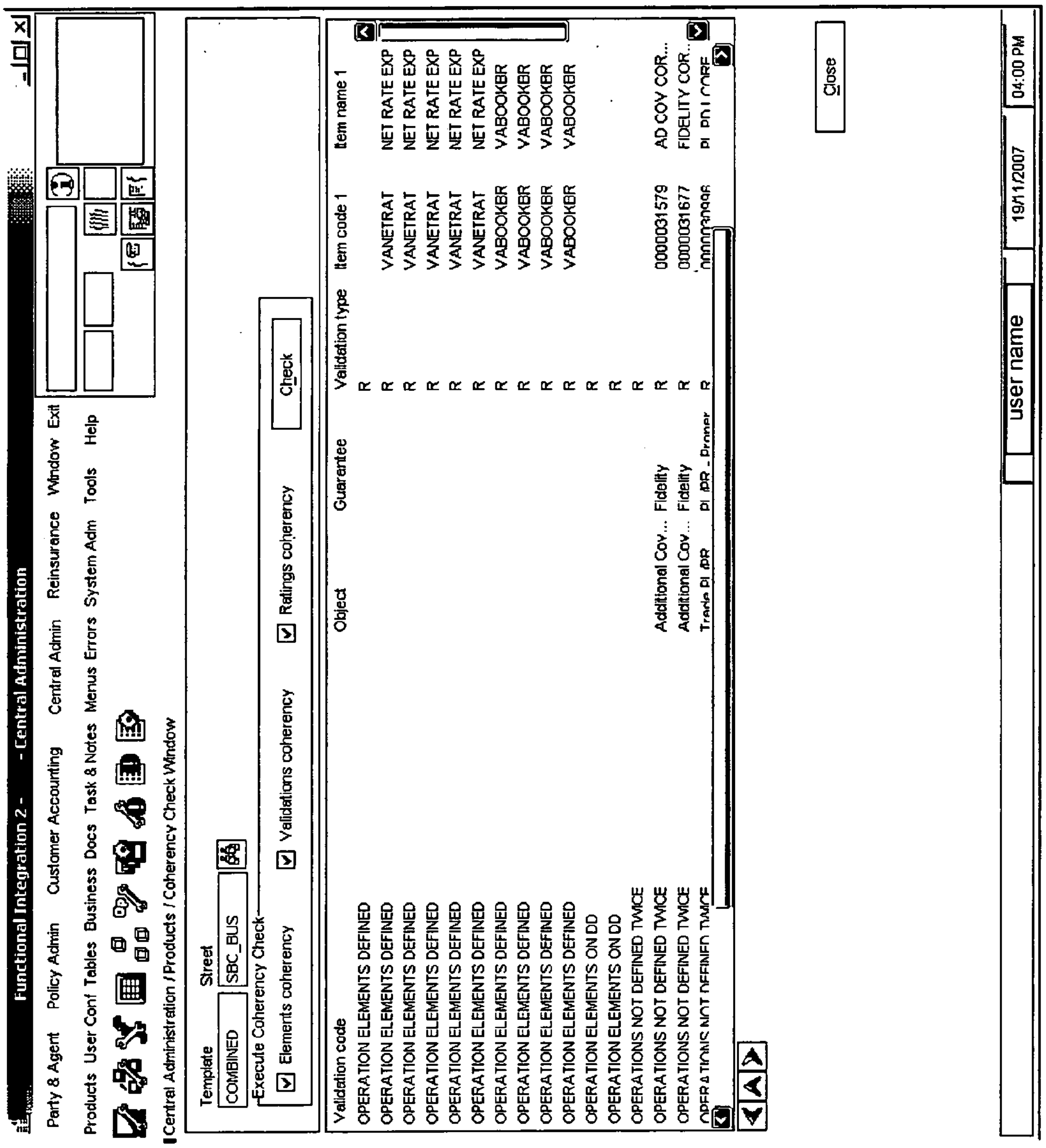
Functional Integration 2 - - Central Administration
Party & Agent
Policy Admin
Customer Accounting
Central Admin
Reinsurance
Window
Exit
Products
User Conf
Tables
Business Docs
Task & Notes
Menus
Errors
System Adm
Tools
Help
Central Administration / Products / Coherency Check Window
Template
Street
COMBINED
SBC_BUS
Execute Coherency Check
Elements coherency
Validations coherency
Ratings coherency
Check
Validation code
Object
Guarentee
Validation type
Item code 1
Item name 1
OPERATION ELEMENTS DEFINED
R
VANETRAT
NET RATE EXP
VABOOKBR
OPERATION ELEMENTS ON DD
OPERATIONS NOT DEFINED TWICE
Additional Cov...
Fidelity
0000031579
AD COV COR...
0000031677
FIDELITY COR...
Close
user name
19/11/2007
04:00 PM

Figure 27c

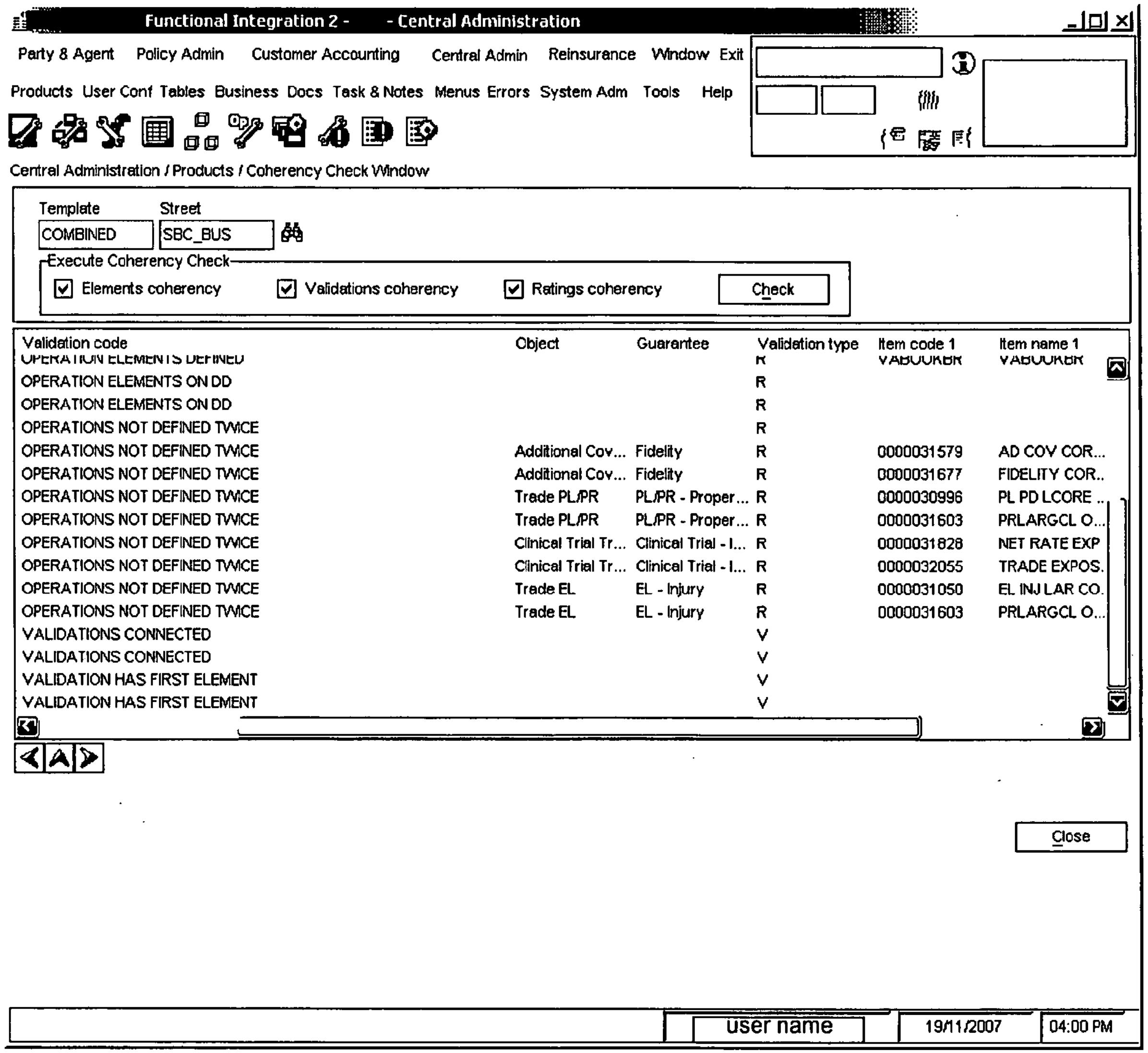
Functional Integration 2 - - Central Administration
Party & Agent Policy Admin Customer Accounting Central Admin Reinsurance Window Exit
Products User Conf Tables Business Docs Task & Notes Menus Errors System Adm Tools Help
Central Administration / Products / Coherency Check Window
Template
Street
COMBINED
SBC_BUS
Execute Coherency Check
Elements coherency
Validations coherency
Ratings coherency
Check
Validation code
Object
Guarantee
Validation type
Item code 1
Item name 1
OPERATION ELEMENTS DEFINED R VABUOKBR VABUOKBR
OPERATION ELEMENTS ON DD R
OPERATION ELEMENTS ON DD R
OPERATIONS NOT DEFINED TWICE R
OPERATIONS NOT DEFINED TWICE Additional Cov... Fidelity R 0000031579 AD COV COR...
OPERATIONS NOT DEFINED TWICE Additional Cov... Fidelity R 0000031677 FIDELITY COR..
OPERATIONS NOT DEFINED TWICE Trade PL/PR PL/PR - Proper... R 0000030996 PL PD LCORE ..
OPERATIONS NOT DEFINED TWICE Trade PL/PR PL/PR - Proper... R 0000031603 PRLARGCL O...
OPERATIONS NOT DEFINED TWICE Clinical Trial Tr... Clinical Trial - I... R 0000031828 NET RATE EXP
OPERATIONS NOT DEFINED TWICE Clinical Trial Tr... Clinical Trial - I... R 0000032055 TRADE EXPOS.
OPERATIONS NOT DEFINED TWICE Trade EL EL - Injury R 0000031050 EL INJ LAR CO.
OPERATIONS NOT DEFINED TWICE Trade EL EL - Injury R 0000031603 PRLARGCL O...
VALIDATIONS CONNECTED V
VALIDATIONS CONNECTED V
VALIDATION HAS FIRST ELEMENT V
VALIDATION HAS FIRST ELEMENT V
Close
user name
19/11/2007
04:00 PM

Figure 28

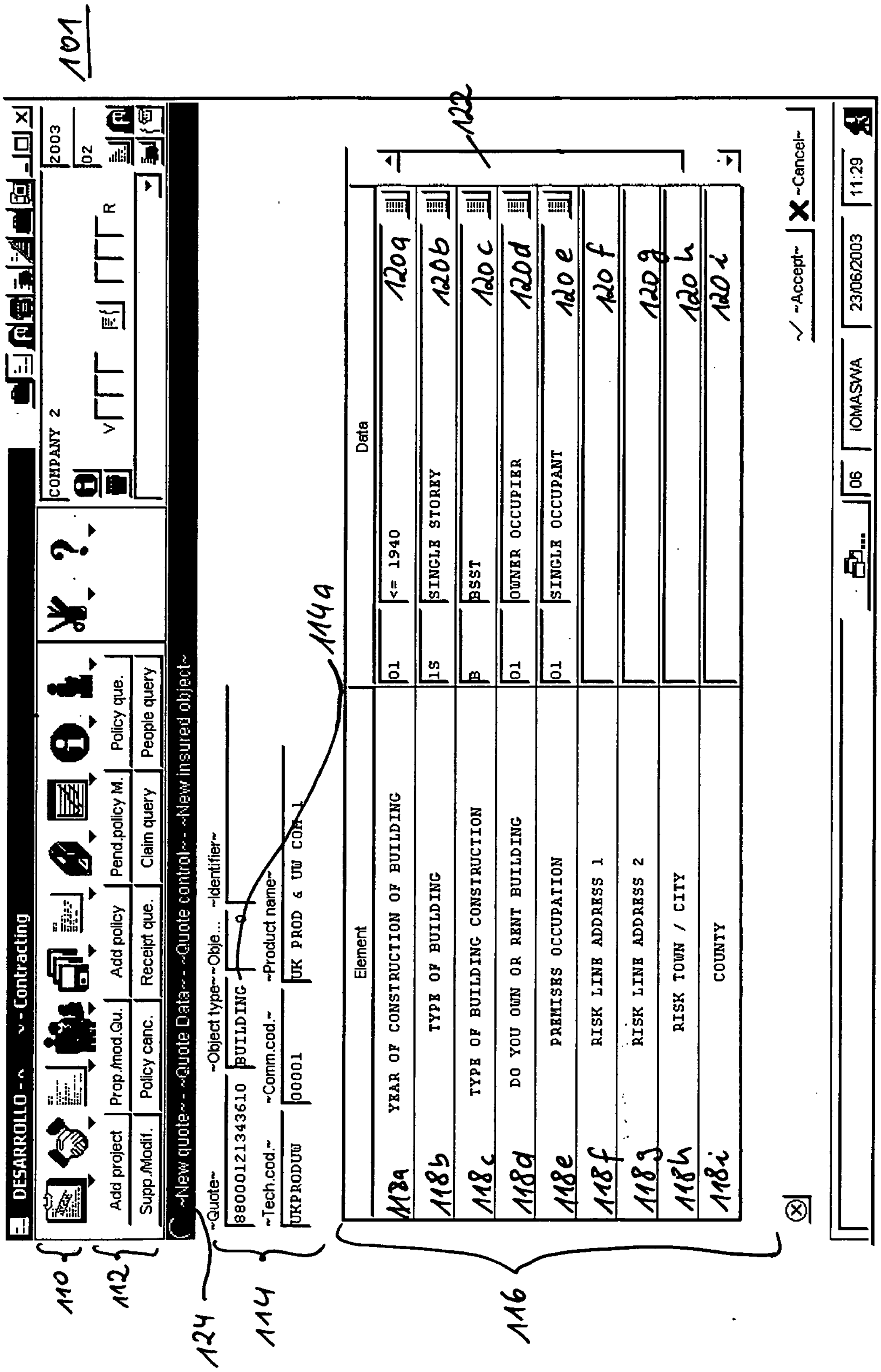
101
DESARROLLO - ^ v - Contracting
Add project
Prop./mod.Qu.
Add policy
Pend.policy M.
Policy que.
Supp./Modif.
Policy canc.
Receipt que.
Claim query
People query
COMPANY 2
2003
02
~New quote~ - ~Quote Data~ - ~Quote control~ - ~New insured object~
~Quote~
~Object type~
~Obje...
~Identifier~
880001213436l0
BUILDING
0
~Tech.cod.~
~Comm.cod.~
~Product name~
UKPRODUW
00001
UK PROD & UW COM 1
Element
Data
YEAR OF CONSTRUCTION OF BUILDING
01
<= 1940
TYPE OF BUILDING
1S
SINGLE STORY
TYPE OF BUILDING CONSTRUCTION
B
BSST
DO YOU OWN OR RENT BUILDING
01
OWNER OCCUPIER
PREMISES OCCUPATION
01
SINGLE OCCUPANT
RISK LINE ADDRESS 1
RISK LINE ADDRESS 2
RISK TOWN / CITY
COUNTY
~Accept~
~Cancel~
06
IOMASWA
23/06/2003
11:29
110
112
124
114
114a
116
118a
118b
118c
118d
118e
118f
118g
118h
118i
120a
120b
120c
120d
120e
120f
120g
120h
120i
122

Figure 29

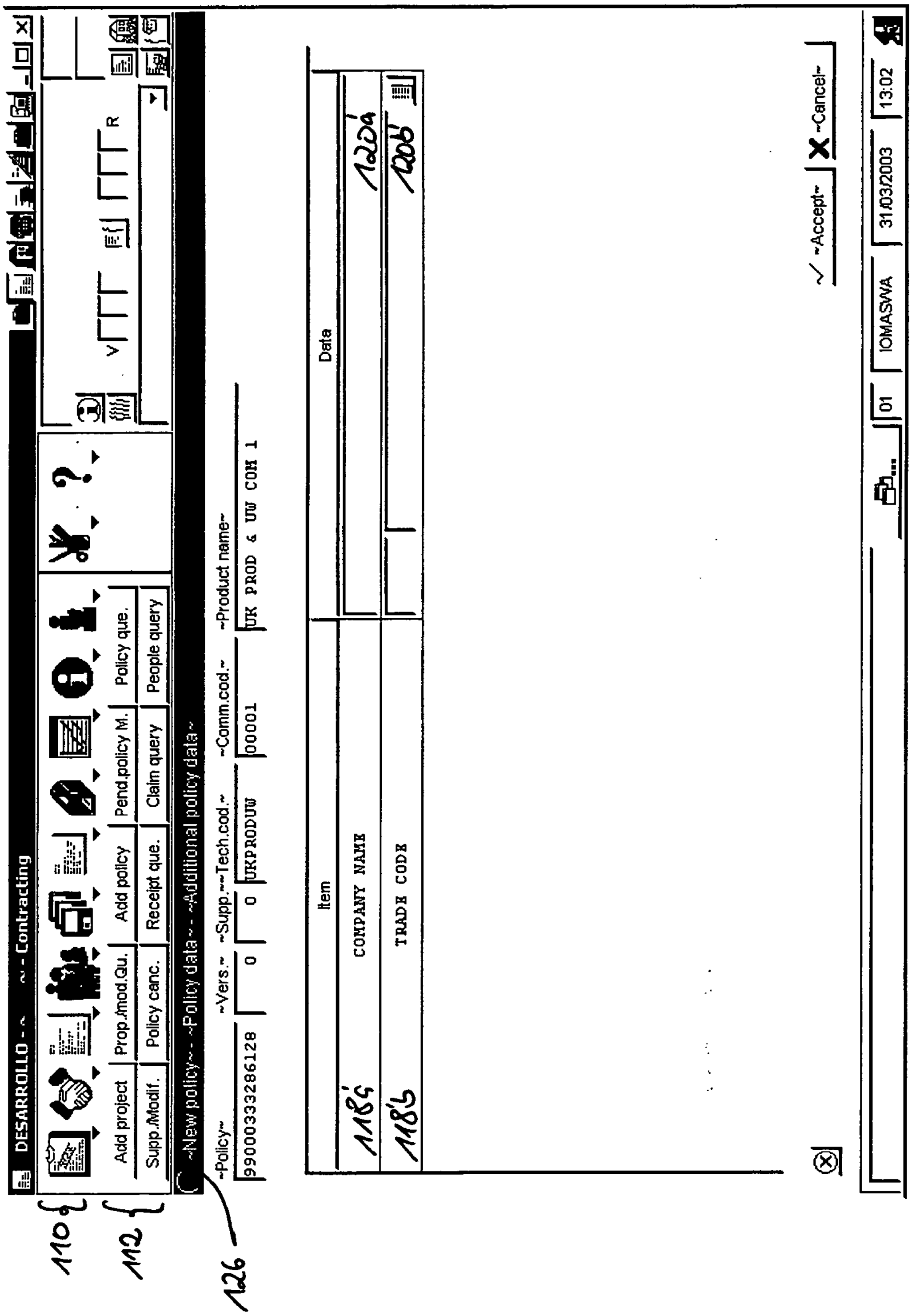
DESARROLLO
Contracting
Add project
Prop./mod.Qu.
Add policy
Pend.policy M.
Policy que.
Supp./Modif.
Policy canc.
Receipt que.
Claim query
People query
~New policy~ - ~Policy data~ - ~Additional policy data~
~Policy~
~Vers.~
~Supp.~
~Tech.cod.~
~Comm.cod.~
~Product name~
99000333286128
0
0
UKPRODUW
00001
UK PROD & UW COM 1
Item
Data
COMPANY NAME
TRADE CODE
~Accept~
~Cancel~
01
IOMASWA
31/03/2003
13:02
110
112
126

Figure 30

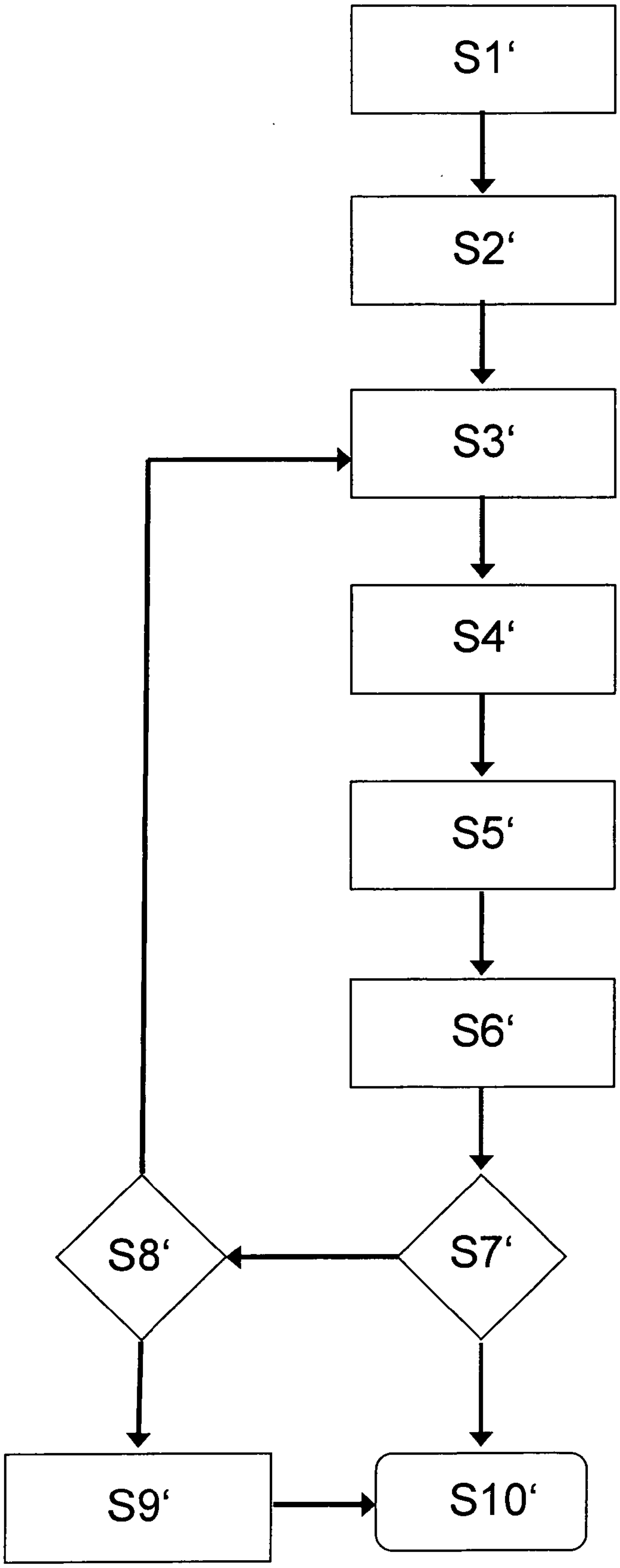

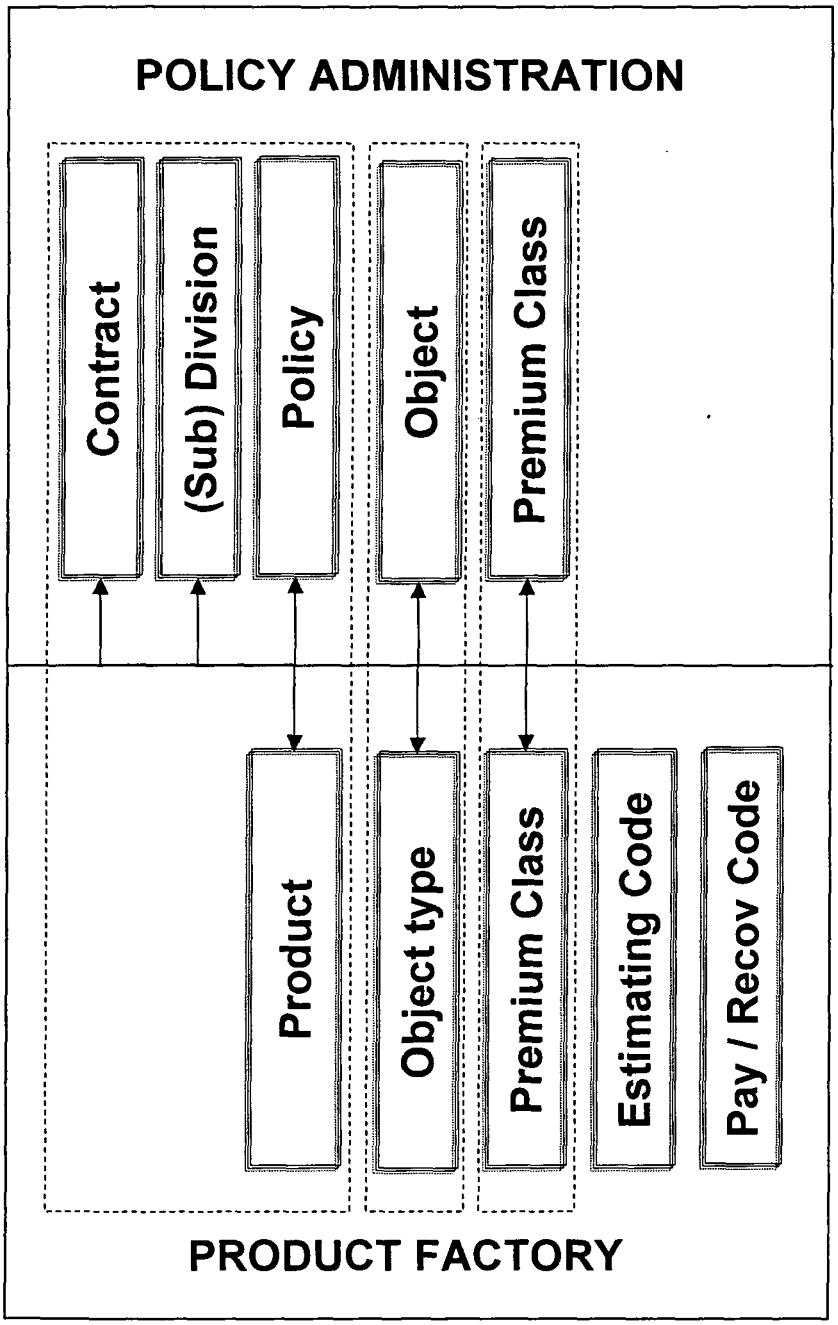
POLICY ADMINISTRATION
Contract
(Sub) Division
Policy
Object
Premium Class
Product
Object type
Premium Class
Estimating Code
Pay / Recov Code
PRODUCT FACTORY

Figure 31

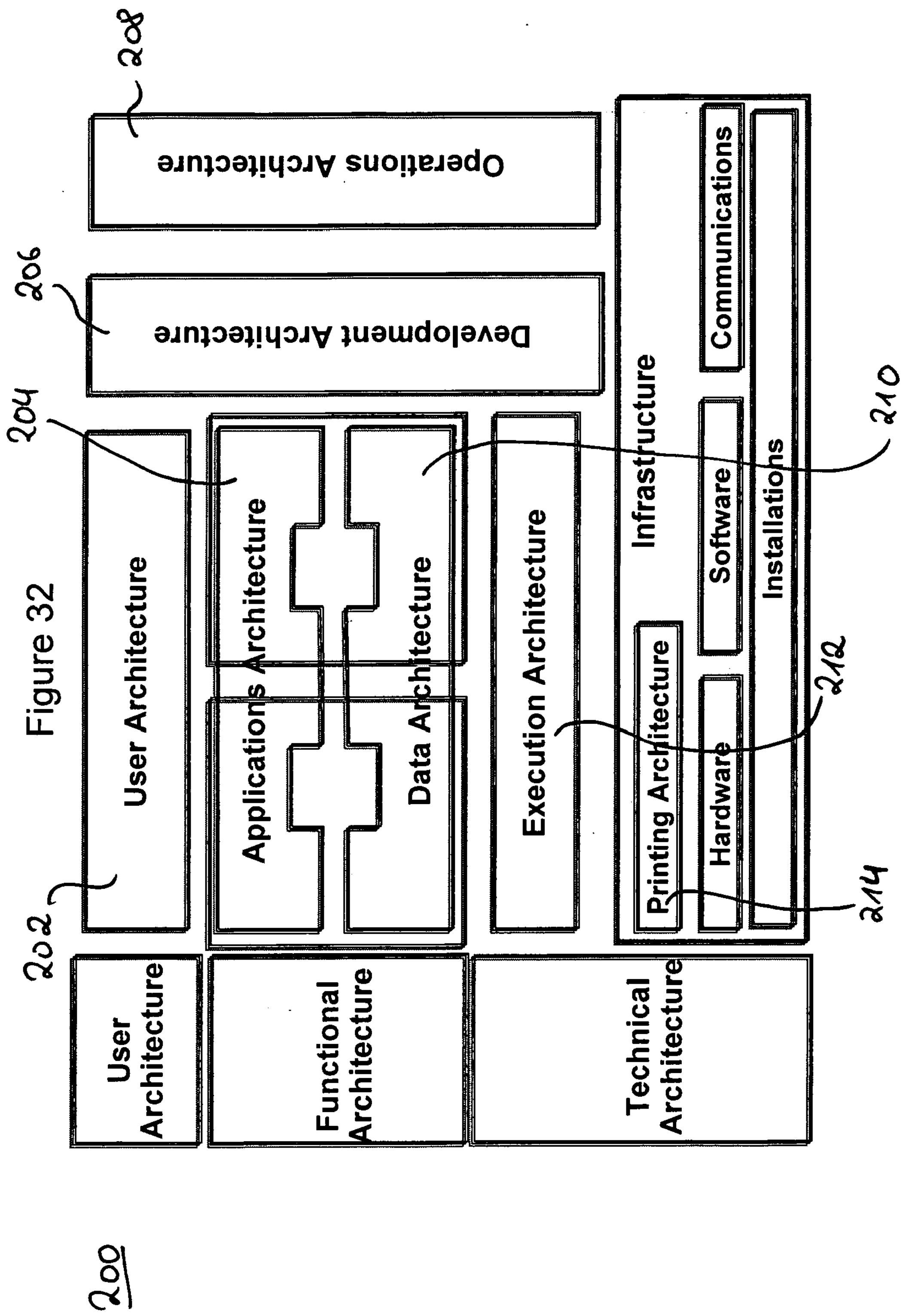
200
202
204
206
208
210
212
214
Operations Architecture
Development Architecture
User Architecture
Applications Architecture
Data Architecture
Execution Architecture
Infrastructure
Communications
Software
Installations
Printing Architecture
Hardware
User Architecture
Functional Architecture
Technical Architecture

Figure 32

Figure 33

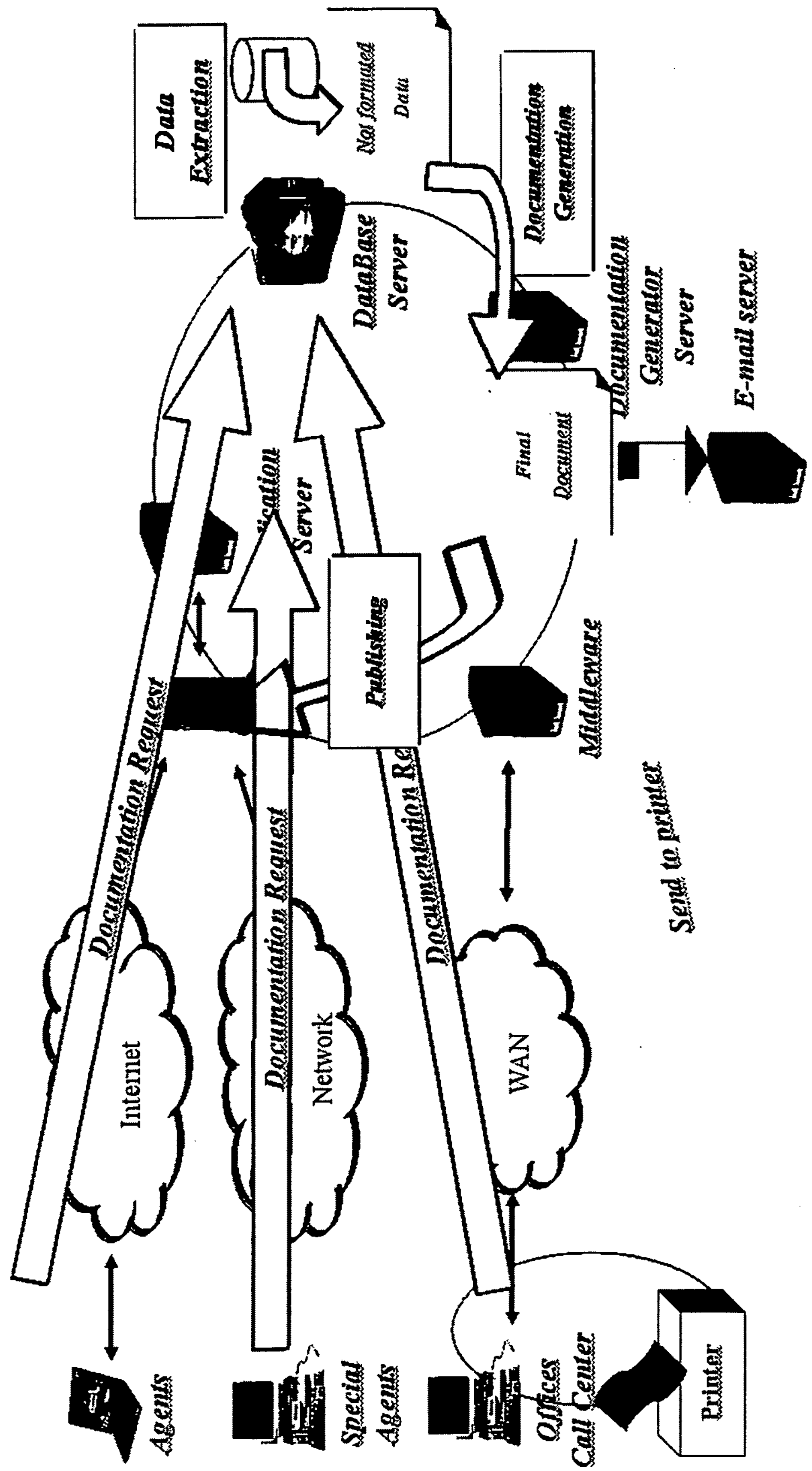
Data Extraction
Not formated Data
Documentation Generation
DataBase Server
Documentation Generator Server
E-mail server
Final Document
Server
Publishing
Middleware
Send to printer
Documentation Request
Documentation Request
Documentation Re
Internet
Network
WAN
Agents
Special Agents
Offices Call Center
Printer

Figure 34

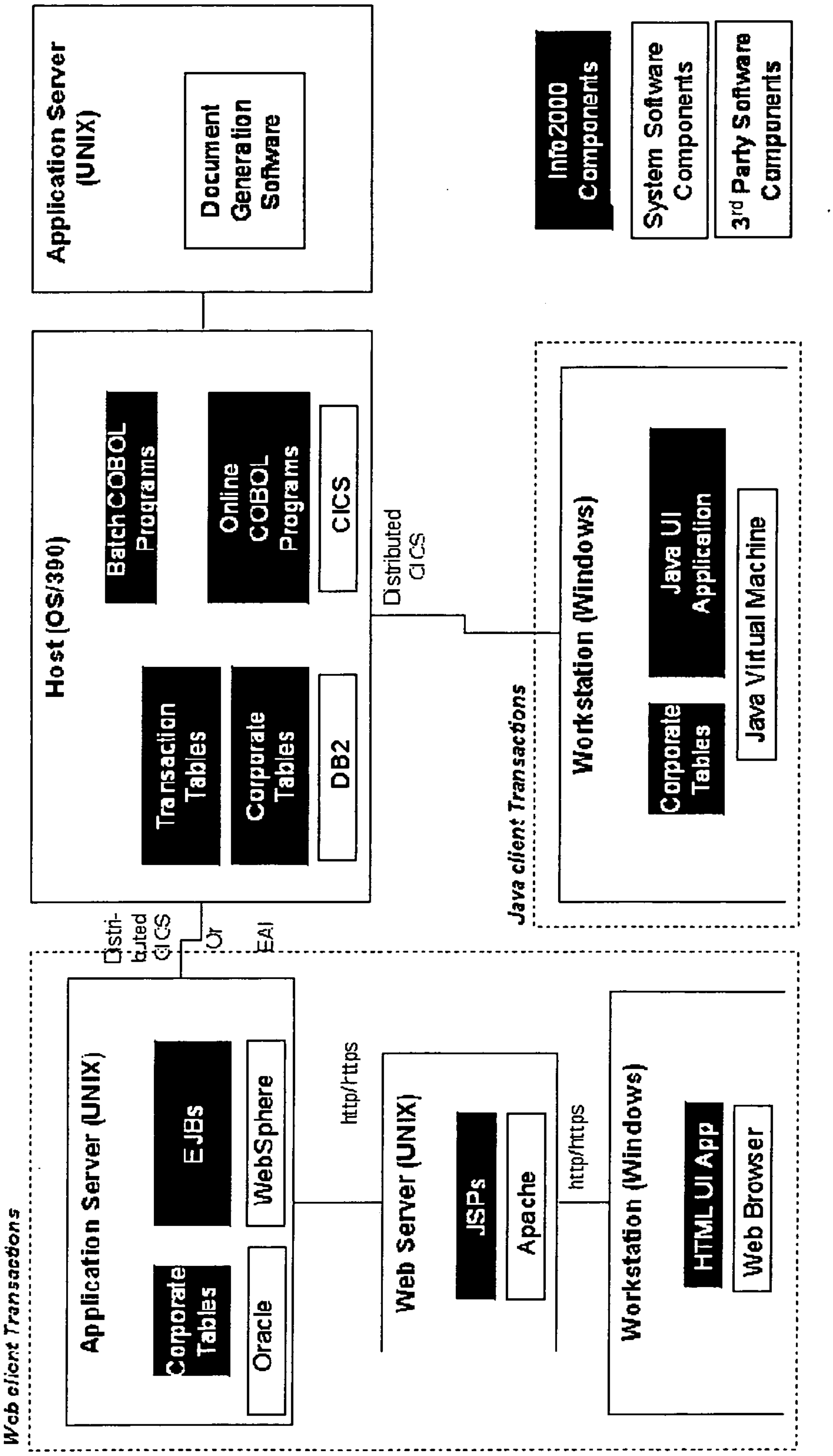
Application Server (UNIX)
Document Generation Software
Host (OS/390)
Transaction Tables
Corporate Tables
DB2
Batch COBOL Programs
Online COBOL Programs
CICS
Distributed CICS
Info2000 Components
System Software Components
3rd Party Software Components
Java client Transactions
Workstation (Windows)
Corporate Tables
Java UI Application
Java Virtual Machine
Distri-buted CICS
Or
EAI
Web client Transactions
Application Server (UNIX)
Corporate Tables
Oracle
EJBs
WebSphere
http/https
Web Server (UNIX)
JSPs
Apache
http/https
Workstation (Windows)
HTML UI App
Web Browser

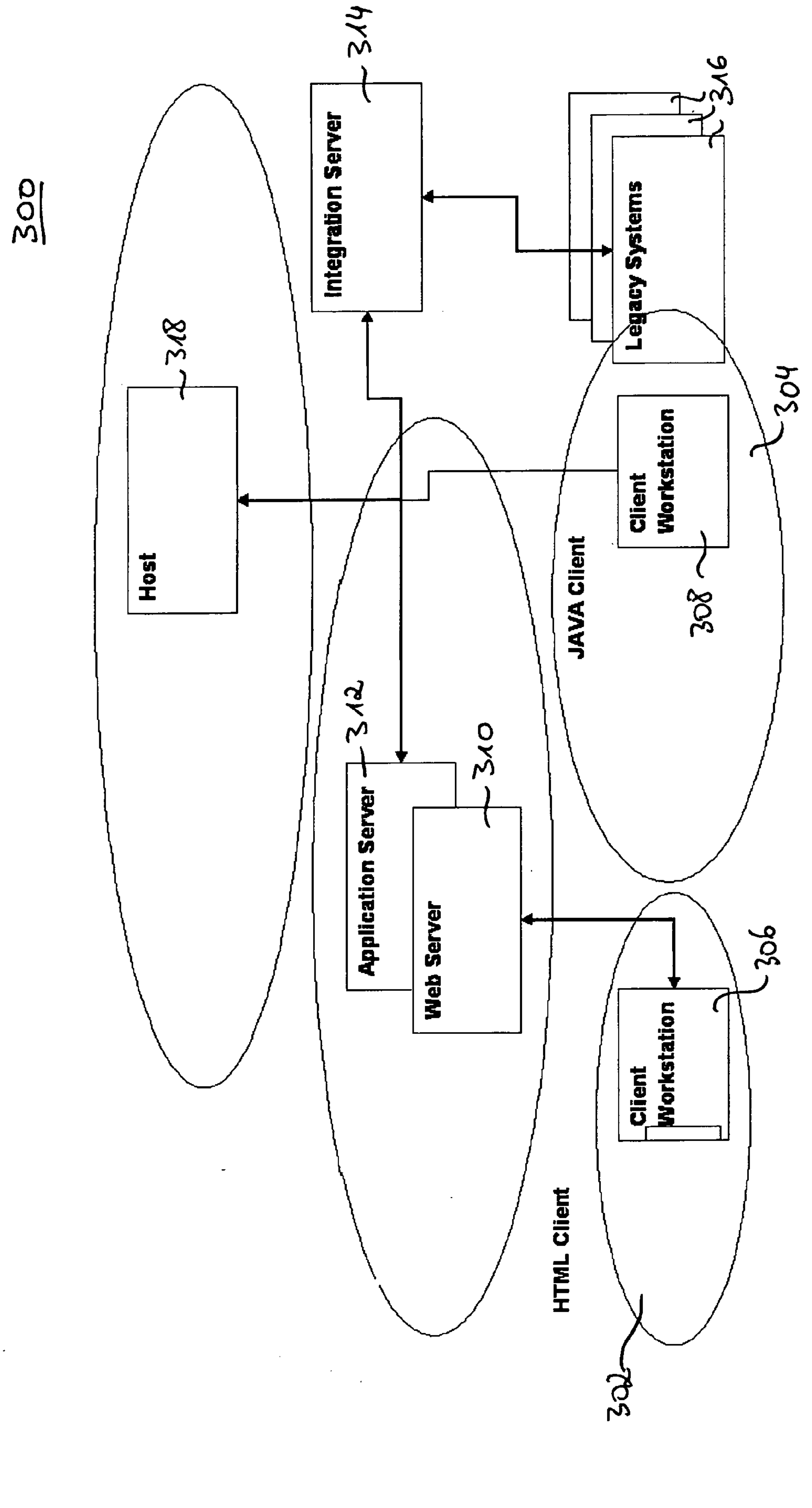
300
Integration Server
314
Legacy Systems
316
Host
318
Client Workstation
JAVA Client
308
304
Application Server
312
Web Server
310
Client Workstation
306
HTML Client
302

Figure 35

Figure 36

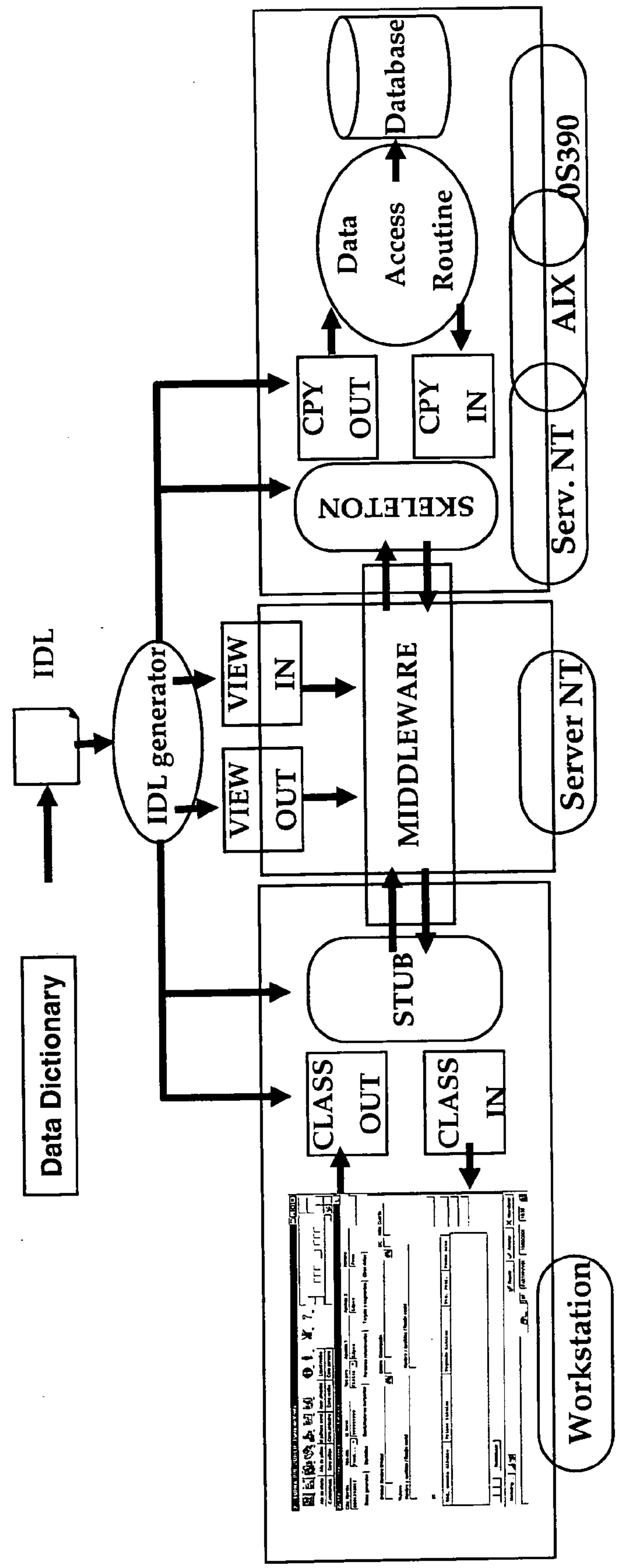
Data Dictionary
IDL
IDL generator
CLASS OUT
CLASS IN
STUB
Workstation
VIEW OUT
VIEW IN
MIDDLEWARE
Server NT
SKELETON
CPY OUT
CPY IN
Data Access Routine
Database
Serv. NT
AIX
OS390

Figure 37

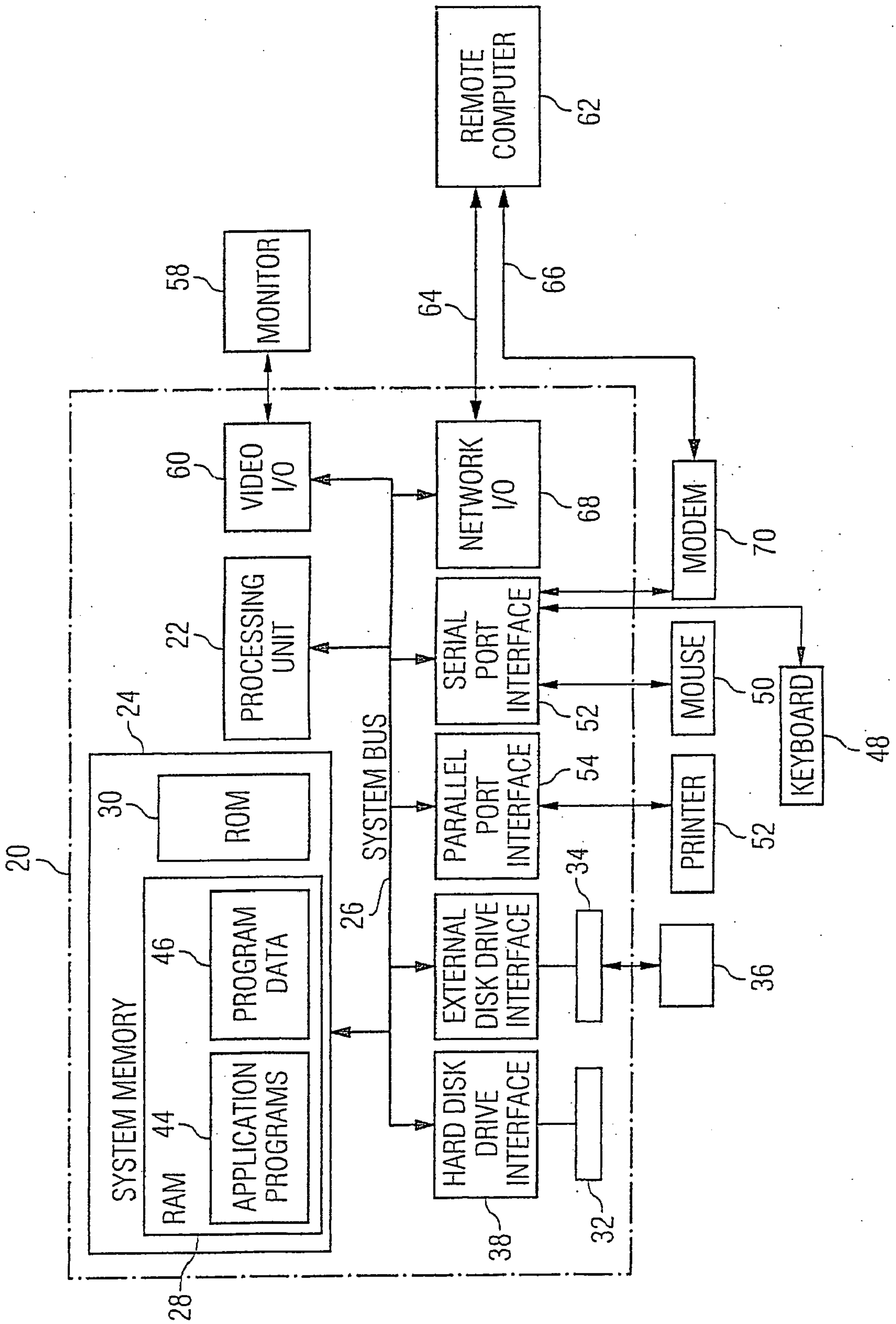

REMOTE COMPUTER
62
MONITOR
58
64
66
VIDEO I/O
60
NETWORK I/O
68
MODEM
70
PROCESSING UNIT
22
SERIAL PORT INTERFACE
52
MOUSE
50
KEYBOARD
48
24
SYSTEM BUS
PARALLEL PORT INTERFACE
54
PRINTER
52
20
30
ROM
26
EXTERNAL DISK DRIVE INTERFACE
34
36
SYSTEM MEMORY
46
PROGRAM DATA
44
APPLICATION PROGRAMS
RAM
HARD DISK DRIVE INTERFACE
38
32
28

Europäisches Patentamt
European Patent Office
Office européen des brevets

# EUROPEAN SEARCH REPORT

Application Number
EP 08 38 0266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/172367 A1 (KANNENBERG ROBERT [US]) 11 September 2003 (2003-09-11)<br>* abstract *<br>* paragraphs [0013] - [0019]; figures 1,5-11,24 *<br>* paragraphs [0054] - [0234]; claims 1-132 * | 1-13 | INV.<br>G06F9/44 |
| X | WO 00/60458 A (UNIV GRIFFITH [AU]; PARR SHAWN [AU]; DROMEY GEOFF [AU] CALYTRIX TECHNO) 12 October 2000 (2000-10-12)<br>* abstract *<br>* page 3, line 16 - page 6, line 20 *<br>* page 7, line 24 - page 17, column 29; claims 1-18; figures 1-19,22 * | 1-13 | |
| A | WO 02/44854 A (CORTICON TECHNOLOGIES INC [US]; ABRARI PEDRAM [US]; ALLEN MARK J F [US) 6 June 2002 (2002-06-06)<br>* abstract *<br>* page 2, line 27 - page 6, line 7 *<br>* page 6, line 25 - page 19, line 33 *<br>* claims 1-52; figures 1-5 * | 1-13 | |
| A | WO 2008/021777 A (NAT INSTR CORP [US]; KORNERUP JACOB [US]; PASSMORE GRANT O [US]) 21 February 2008 (2008-02-21)<br>* abstract *<br>* paragraphs [0012] - [0027] *<br>* paragraphs [0070] - [0112]; claims 1-26; figures 2a,2b,5 * | 1-13 | |

TECHNICAL FIELDS SEARCHED (IPC)
G06F

The present search report has been drawn up for all claims

| Place of search | Date of completion of the search | Examiner |
|---|---|---|
| The Hague | 12 November 2008 | Wierzejewski, Piotr |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 08 38 0266

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2008

| Patent document cited in search report | | Publication date | Patent family member(s) | | | Publication date |
|---|---|---|---|---|---|---|
| US 2003172367 | A1 | 11-09-2003 | NONE | | | |
| WO 0060458 | A | 12-10-2000 | US | 2002095653 | A1 | 18-07-2002 |
| WO 0244854 | A | 06-06-2002 | AU | 2867902 | A | 11-06-2002 |
| | | | EP | 1337952 | A2 | 27-08-2003 |
| | | | US | 2006129978 | A1 | 15-06-2006 |
| | | | US | 2002120917 | A1 | 29-08-2002 |
| WO 2008021777 | A | 21-02-2008 | NONE | | | |

EPO FORM P0459

For more details about this annex : see Official Journal of the European Patent Office, No. 12/82